# EUROPÄISCHE PATENTSCHRIFT

(11) **EP 4 248 383 B1**
(45) Veröffentlichungstag und Bekanntmachung des Hinweises auf die Patenterteilung: **18.11.2026**
(21) Anmeldenummer: 21816390.5
(22) Anmeldetag: 19.11.2021
(51) Int. Cl.: G06Q 10/04, G06Q 10/08

(54) **VERFAHREN, DEPOTEINRICHTUNG UND SYSTEM ZUR ÜBERGABE EINER VIELZAHL VON PAKETEN AN MEHRERE EMPFÄNGER UND/ODER ZUR ENTGEGENNAHME EINER VIELZAHL VON PAKETEN VON MEHREREN EINLIEFERERN**
METHOD, DEPOT FACILITY AND SYSTEM FOR DELIVERING MULTIPLE PACKAGES TO MULTIPLE RECIPIENT AND/OR RECEIVING MULTIPLE PACKAGES FROM MULTIPLE POSTER
PROCEDE, INSTALLATION DE DEPOT ET SYSTEME PERMETTANT DE LIVRER DE MULTIPLES COLIS A PLUSIEURS DESTINATAIRES ET/OU DE RECEVOIR DE MULTIPLES COLIS A PARTIR D'UNE MULTIPLE AFFICHE

(30) Priorität: 20.11.2020 DE 102020214660; 23.12.2020 DE 102020216560; 23.12.2020 DE 102020216558; 03.02.2021 DE 102021200970; 08.02.2021 DE 102021201155; 18.02.2021 DE 102021103926; 02.03.2021 DE 102021104973; 02.03.2021 DE 102021201964; 16.07.2021 DE 102021207620; 16.07.2021 DE 102021207617
(43) Veröffentlichungstag der Anmeldung: 27.09.2023
(73) Patentinhaber: Innovative Robot Delivery GmbH, 53121 Bonn (DE)
(72) Erfinder: BORGER, Christian, 53121 Bonn (DE); MAYER, Boris, 53129 Bonn (DE); SCHARES, Christof, 53127 Bonn (DE)
(74) Vertreter: Jostarndt Patentanwalts-AG
(86) Internationale Anmeldenummer: PCT/EP2021/082263
(87) Internationale Veröffentlichungsnummer: WO 2022/106598

(56) Entgegenhaltungen:
- WO-A1-2017/164914
- WO-A1-2018/050334
- DE-A1- 102017 011 550
- US-A1- 2019 114 564
- US-A1- 2019 285 424
- US-A1- 2020 026 281
- US-A1- 2020 039 766
- US-A1- 2020 090 121

## Beschreibung

Die vorliegende Erfindung betrifft ein Verfahren und ein System zur Übergabe einer Vielzahl von Paketen an mehrere Empfänger und/oder zur Entgegennahme einer Vielzahl von Paketen von mehreren Einlieferern.

### Darstellung des Standes der Technik

Im Stand der Technik sind Systeme bekannt, welche es ermöglichen, eine Vielzahl von Paketen an eine Vielzahl von Empfängern auszuliefern bzw. Pakete von einer Vielzahl von Versendern entgegenzunehmen.

Aus zahlreichen Presse-Veröffentlichungen ist bekannt, dass die Zustellung hierbei nicht immer reibungslos funktioniert. Vielmehr erreicht ein Großteil der Pakete beim ersten Zustellversuch durch einen Logistik-Dienstleister nicht den tatsächlichen Empfänger. Dies bedeutet zusätzlichen Aufwand für den Empfänger eines Pakets und zeitgleich zusätzliche Kosten für den Logistik-Dienstleister. Zudem kommen Pakete abhanden oder werden erst mit erheblicher Verspätung zugestellt.

Aus der Europäischen Patentschrift EP 1 438 641 B1 ist eine elektronische Paketfachanlage mit einer Vielzahl von elektronischen Paketfächern bekannt, wobei jeweils mehreren elektronischen Paketfächern eine Bedienungseinheit zugeordnet ist.

Diese bekannte elektronische Paketfachanlage zeichnet sich dadurch aus, dass eine Zentralsteuereinheit zur Steuerung der Bedienungseinheiten vorgesehen ist, wobei die Zentralsteuereinheit ein Mittel zu einer veränderbaren Zuordnung der Paketfächer zu den Bedienungseinheiten enthält.

WO 2017/164914 A1 offenbart ein computergestütztes Logistiksystem, bestehend aus einem Fahrzeug mit einer Karosserie, einer abnehmbaren Kabine ("cab"), die an der Karosserie befestigt werden kann, und einem Frachtbewegungs-Subsystem, das so angeordnet ist, dass es die Fracht von der Kabine zu einer von außerhalb des Fahrzeugs zugänglichen Position des Fahrzeugs bewegen kann und ein Computersystem mit einem Prozessor und einem Speicher, wobei die Rechenvorrichtung programmiert ist, um eine Anforderung zu empfangen, die in der Kabine gelagerte Ladung zu liefern, wobei die Anforderung eine Zeit und einen Ort für die Lieferung der Ladung enthält und um auf der Grundlage der Anforderung mindestens ein Fahrzeugbewegungs-Subsystem zu aktivieren, um das Fahrzeug zu bewegen, und um das Frachtbewegungs-Subsystem zu bewegen, die Fracht von der Kabine zu einer von außerhalb des Fahrzeugs zugänglichen Position des Fahrzeugs zu bewegen.

### Kurzdarstellung der Erfindung

Der Erfindung liegt die Aufgabe zu Grunde, ein Verfahren und ein System zur Übergabe einer Vielzahl von Paketen bereitzustellen, so dass die Pakete schnell und zuverlässig bearbeitet werden können.

Erfindungsgemäß wird diese Aufgabe durch die unabhängigen Ansprüchen gelöst.

Hierdurch wird ein Verfahren bereitgestellt, mit dem eine Vielzahl von Paketen an eine Vielzahl von Empfängern effizient, zuverlässig und flexibel übergeben werden können. Ferner wird erfindungsgemäß ein für die Durchführung dieses Verfahrens geeignetes System bereitgestellt.

Vorteilhafte Weiterbildungen der Erfindung sind Gegenstand der abhängigen Ansprüche.

### Gliederung

Darstellung der Erfindung
Abbildungsverzeichnis
Erläuterung der Abbildungen
   Einleitung
   Logik gemeinsamer optimierter Übergabepunkte
      Abbildung 1
      Abbildung 2
      Abbildung 3
      Abbildungen 4a, 4b, 4c und 4d
   Gesamtüberblick Logistiksystem und Logistikprozesse
      Paketidentifikationsmerkmal
      Priorisierung von Sendungen
      Abbildung 5
         Einleitung
         Bestellsystem 5010
         Logistiksystem 5020
         Verknüpfungsschnittstelle 5015
         Steuerkomponente 5012 des Logistiksystems
         Benutzer-App 5021, 5022
         Benutzerdatenbank 5023 der Benutzer-App
         Netzkonfigurationsmodul 5024 und Netzkonfigurations-Tool 5025
         Steuerungsmodul Transport mobiler Depoteinrichtungen 5026
         Benachrichtigungskomponente 5027
         Bearbeitungsvorgänge von Paketen 5100
         Paket-Bearbeitung in Verteilzentren 5110
         Auswahl von Übergabepunkten 5120
         Beladungsvorbereitung der Depoteinrichtungen 5130
         Beladung der Depoteinrichtungen 5140
         Lagereinrichtungen 5342
         Transport und Aufstellung der Depoteinrichtungen an Standorten 5150
         Übergabe Pakete an Empfänger 5160
         (Lokale) Steuereinheit zur Übergabe von Paketen 5170
         Übergabe von Paketen an individuellen Übergabepunkten 5175
         Anforderungseinheit für Übergabe an individuellen Übergabepunkten 5180
         Einlieferung von Paketen 5190
         Rücktransport der Depoteinrichtung und Auslagerung 5195 der Pakete
      Übergabe von Waren
      Lokale Logistik
Standort-Auswahlverfahren im Detail
   Abbildung 6
      Beschreibung Verfahren
      Mittel zur Erreichung des Oberziels
         A. Filterverfahren
         B. Maximierungsverfahren
         C. Nebenbedingungen
      LPS - Lernendes Paketmobil System
   Abbildung 7
Logistikfahrzeug & mobile Depoteinrichtung
   Abbildung 8
   Abbildung 9
   Abbildung 10
   Abbildungen 11a - 11d
   Abbildungen 14, 15
Transporteinheit
   Abbildung 12
   Abbildung 13
   Abbildungen 16a, 16b
Sortieren im Verteilzentrum, Beladungsvorbereitung &: Beladung
   Sortierung
      Abbildung 17
      Abbildung 20, 20a und 20b
      Abbildung 20a
      Abbildung 21
      Abbildung 21a
   Beladungsvorbereitung
      Abbildung 18
   Beladung
      Abbildung 19
   Übergabe
      Überblick
      Abbildung 16 (c und d)
      Abbildung 22 (a und b)
   Entladung im Verteilzentrum
      Überblick
      Abbildung 27
      Abbildung 28
      Abbildung 29
      Abbildung 31
      Abbildung 31a
   Be- und Entlademodi im Detail
      Überblick
   Spezielle Ausgestaltungsformen
      Individuelle Übergabepunkte
   Alternative Belademöglichkeit für Depoteinrichtung
      Abbildung 23
   Paternostersysteme als alternative Depoteinrichtungen
      Abbildungen 24 und 25
   Multiple Depoteinrichtungen
      Abbildung 26
   Verteilzentren der Zukunft
      Abbildungen 32, 34, 36 und 37
      Abbildung 30
      Abbildungen 39 und 40
      Abbildung 41
   Flexible Regalsysteme
      Abbildungen 43, 43a und 43b
   Logistiklösung für Wareneinlagerung
      Abbildung 44
   Label & Identcodes
      Abbildung 30
      Abbildung 38 bis 42
   Zuordnung von Paketen zu Empfängern auf Grundlage von Empfängerattributen
      Abbildung 45
      Abbildung 46
      Abbildung 47

### Darstellung der Erfindung

Die vorliegende Anmeldung ist Teil eines übergreifenden Konzepts, dessen Ziel es ist, Bearbeitungsvorgänge von Paketen möglichst automatisiert und vorzugsweise auch kontaktlos und/oder autonom und mit möglichst geringem ökologischem Fußabdruck durchzuführen.

Als Bestandteil dieses Konzepts werden Verfahren, Depoteinrichtungen und Logistiksysteme zur Übergabe einer Vielzahl von Paketen an mehrere Empfänger und/oder zur Entgegennahme von Paketen mehrerer Einlieferer offenbart.

Der Begriff Logistiksystem bezeichnet in dieser Anmeldung ein System, das wenigstens einen der folgenden Bearbeitungsvorgänge an Gegenständen, insbesondere Paketen vornehmen kann:
- Übergabe, insbesondere Einlieferung und/oder Ausgabe
- Transport
- Sortierung
- Lagerung
- Kommissionierung.

Vorzugsweise handelt es sich um ein Logistiksystem, mit mehreren Logistikknoten, an denen logistische Bearbeitungsvorgänge erfolgen können.

In dieser Anmeldung werden unter Paketen beliebige körperliche Gegenstände verstanden, die transportiert werden können und vorzugsweise bestimmte Abmessungen und/oder ein bestimmtes Gewicht nicht überschreiten.

Dabei kommen Gegenstände des täglichen Bedarfs wie Verbrauchsmaterialien oder Lebensmittel ebenso in Frage wie technische Gegenstände und Gerätschaften. Bei den Paketen handelt es sich um unverpackte Gegenstände, verpackte Gegenstände und umverpackte Gegenstände, wobei bei verpackten und umverpackten Gegenständen das Paket die Verpackung bzw. Umverpackung und den darin verpackten Gegenstand umfasst. Ebenso ist es zweckmäßig, unverpackte Gegenstände, insbesondere Warenobjekte erfindungsgemäß zu bearbeiten. Briefsendungen sowie Werbematerialien und -prospekte sind gegebenenfalls auch Pakete im Sinne dieser Anmeldung.

Sofern Pakete in der vorliegenden Anmeldung nicht ausdrücklich als Datenpakete oder virtuelle Pakete bezeichnet werden, handelt es bei den in dieser Anmeldung dargestellten Paketen um physische Pakete.

Warenobjekte sind physische Gegenstände, auf die zunächst physisch von dem Logistiksystem oder einer Komponente des Logistiksystems eingewirkt werden kann und die dann in einen physischen Zugriff einer anderen Entität übergeben werden. Die andere Entität kann ein Empfänger der Ware sein oder eine physische Einrichtung, die so ausgestaltet ist, dass sie für den Empfänger physische Einwirkungsmöglichkeiten ausüben kann. In verschiedenen Ausführungsformen der Erfindung, insbesondere in Ausgestaltungen der in dieser Anmeldung dargestellten Depoteinrichtungen als Verkaufseinrichtungen, ist es zweckmäßig, dass der Übergang der physischen Verfügbarkeit über das Warenobjekt dann erfolgt, wenn zuvor der Empfänger das Warenobjekt erworben hat.

Es ist möglich, in den Depoteinrichtungen als Pakete beliebige Gegenstände für eine Übergabe an Empfänger bereitzuhalten, wobei es sich sowohl um Empfänger handelt, denen die jeweiligen Gegenstände bereits bei oder vor ihrer Einlagerung in die jeweilige Depoteinrichtungen zugeordnet waren, als auch Gegenstände bereit zu halten, die erst nach ihrer Einlagerung in der Depoteinrichtung, gegebenenfalls auch erst unmittelbar vor ihrer Ausgabe einem Empfänger zugeordnet werden.

Die vorliegende Erfindung eignet sich sowohl für einen Einsatz mit individualisierten Paketen, bei denen es relevant ist, dass ein Paket mit einem vorher definierten Inhalt an einen Empfänger übermittelt wird, als auch für einen Einsatz für die Ausgabe von Waren, insbesondere von Massenwaren einschließlich solcher Waren, für die es vor einer oder nach einer Einlagerung, gegebenenfalls sogar bei der Ausgabe keinen definierten Empfänger gibt, sondern bei denen auch eine nicht identifizierte Person Empfänger sein kann, insbesondere bei der Ausgestaltung der Depoteinrichtung als Verkaufseinrichtung.

Um eine Ausgabe der Warenobjekte zu ermöglichen, ist es gleichfalls möglich, die Warenobjekte - vorzugsweise unter Einsatz einer erfindungsgemäßen Depoteinrichtung - zu transportieren. Bei der Ausgabe von Warenobjekte können in Abhängigkeit der jeweiligen Abmessung der Warenobjekte innerhalb einer Lagerposition mehrere Pakete bereitgestellt werden. Bei einem derartigen Einsatz ist es zweckmäßig, Produktcodes, die auf einer Vielzahl von Warenobjekte bereits aufgebracht werden, als Paketidentifikationsmerkmale einzusetzen.

Die vorliegende Erfindung ist jedoch nicht auf Ausführungsformen beschränkt, in denen die Warenobjekte dauerhaft auf Empfänger übertragen werden, sondern beinhaltet auch Ausführungsformen, in denen die Warenobjekte rückgebbar Empfängern zur Verfügung gestellt werden, wobei der Zeitraum fest oder variabel sein kann. Insbesondere solche Warenobjekte können erfindungsgemäß gleichfalls als Pakete gehandhabt werden.

Die Übergabe der Pakete, insbesondere der Vielzahl von Paketen erfolgt insbesondere als eine Einlieferung und/oder als eine Ausgabe der Pakete.

Die vorliegende Anmeldung betrifft Übergaben von Paketen an Empfänger und/oder Übergaben von Paketen durch Einlieferer. Sofern nicht jeweils spezifiziert ist, dass es sich um eine Übergabe an einen Empfänger handelt sind auch Übergaben von einem Einlieferer mit umfasst. Ebenso ist dann, wenn nicht jeweils spezifiziert ist, dass es sich um eine Übergabe durch einen Einlieferer handelt, auch eine Übergabe an einen Empfänger mit umfasst. Übergaben durch einen Einlieferer werden in der vorliegenden Anmeldung auch als Einlieferung oder als Annahme bezeichnet, Übergaben an Empfänger auch als Auslieferung.

Empfänger im Sinne der vorliegenden Erfindung sind Einheiten, an die das Logistiksystem beziehungsweise eine Komponente des Logistiksystems Pakete oder sonstige Gegenstände übergibt, beziehungsweise übergeben kann. Sowohl natürliche Personen als auch technische Einheiten können Empfänger im Kontext der vorliegenden Anmeldung sein.

Einlieferer im Sinne der vorliegenden Anmeldung sind Einheiten, die Pakete oder sonstige Gegenstände an das Logistiksystem beziehungsweise eine Komponente des Logistiksystems übergeben, beziehungsweise übergeben können. Sowohl natürliche Personen als auch technische Einheiten können Einlieferer im Kontext der vorliegenden Anmeldung sein. Natürliche Personen oder technische Einheiten, die Pakete für einen Transportvorgang an das Logistiksystem übergeben, werden im Kontext der vorliegenden Anmeldung auch als Versender bezeichnet. Versender bezeichnet insbesondere solche Einlieferer, die einen Transport von Paketen, gegebenenfalls einschließlich einer Abholung, beauftragen. Die vorliegende Anmeldung umfasst Ausführungsformen, bei denen die Einlieferer von Paketen Versender sind, mit.

Zur Erreichung des Ziels, Bearbeitungsvorgänge von Paketen möglichst automatisiert und vorzugsweise auch kontaktlos und/oder autonom und mit möglichst geringem ökologischem Fußabdruck durchzuführen, werden in dieser Anmeldung mehrere Maßnahmen vorgeschlagen, die bereits bei ihrer einzelnen Anwendung Vorteile beinhalten, deren synergetische Zusammenwirkung jedoch besonders vorteilhaft ist.

Es ist besonders zweckmäßig, dass für mehrere Pakete aus einer Vielzahl möglicher räumlich voneinander getrennter Übergabepunkte unter Berücksichtigung wenigstens eines Aufwandsparameters wenigstens eines jeweiligen Empfängers und/oder wenigstens eines jeweiligen Einlieferers ein gemeinsamer optimierter Übergabepunkt für die Übergabe an die jeweiligen Empfänger und/oder Einlieferer innerhalb eines bestimmten Übergabezeitraums ermittelt wird.

Durch den Aufwandsparameter erfolgt eine Berücksichtigung des Aufwandes für die jeweiligen Empfänger und/oder Einlieferer von Paketen für eine Übergabe des jeweiligen Paketes, insbesondere für Übergaben an gemeinsamen optimierten Übergabepunkten.

Die vorliegende Erfindung schlägt zahlreiche Ausführungsformen vor, bei denen der Aufwandsparameter für die Empfänger und/oder Einlieferer verringert, insbesondere begrenzt wird, wobei ein möglichst geringer, insbesondere ein möglichst begrenzter, Aufwandsparameter für möglichst viele Empfänger und/oder Einlieferer von Paketen besonders vorteilhaft ist.

Die Berücksichtigung des Aufwandparameters kann direkt oder indirekt erfolgen. Eine indirekte Berücksichtigung des Aufwandparameters erfolgt insbesondere über einen der in dieser Anmeldung dargestellten Scoringwerte. Bei den Scoringwerten handelt es sich vorzugsweise um Werte mit unterschiedlichen Dimensionen wie insbesondere der Quantifizierung eines Aufwandes, die mit dem Hilfsmittel des Scorings auf eine Kennzahl reduziert werden können.

Der Aufwandsparameter beinhaltet vorzugsweise eine oder mehrere der folgenden Komponenten des Aufwandes für die jeweiligen Empfänger und/oder Einlieferer von Paketen:
- Zusätzliche Wegstrecke für ein Erreichen des gemeinsamen optimierten Übergabepunktes;
- Zusätzlicher Zeitaufwand für das Erreichen des gemeinsamen optimierten Übergabepunktes;
- Wahrscheinlichkeit, dass der Empfänger beziehungsweise Einlieferer des Pakets sich in der Nähe des Übergabepunktes befindet;
- Aufwand, ein Paket bestimmter Größe oder eines bestimmten Gewichtes vom Übergabepunkt, insbesondere vom gemeinsamen optimierten Übergabepunkt zur Heimatadresse und/oder einem Ort der Verwendung (des Pakets) zu verbringen.

Besonders bevorzugt ist die Optimierung für jeden einzelnen der Übergabezeiträume, so dass für unterschiedliche Übergabezeiträume unterschiedliche Übergabepunkte, insbesondere mindestens teilweise unterschiedliche gemeinsame optimierte Übergabepunkte für die Übergaben der Pakete eingesetzt werden können.

Während in bekannten Logistiksystemen eine Definierung alternativer Zieladressen für den Fall erfolgt, dass eine Übergabe an einem gewünschten Übergabepunkt nicht möglich ist, sieht die Erfindung eine Einbeziehung weiterer Parameter, insbesondere der Aufwandsparameter, vor. Durch die Einbeziehung der Aufwandsparameter wird nicht nur der Aufwand für die Übergabe der Pakete verringert, sondern auch gegenüber einem Verfahren ohne Berücksichtigung des Aufwandsparameter die Wahrscheinlichkeit einer erfolgreichen Übergabe erhöht.

Ein besonders bevorzugter Bestandteil des Aufwandsparameter ist bei einer vorteilhaften Weiterbildung der Erfindung die Berücksichtigung von Wahrscheinlichkeiten, dass der Empfänger des Pakets sich innerhalb eines Übergabezeitraumes an einem der Übergabepunkte oder in Nähe eines der Übergabepunkte befindet und/oder von einem erwarteten Zusatzaufwand des Empfängers für die Erreichung des Übergabepunktes und gegebenenfalls bei einer vorteilhaften Weiterbildung der Erfindung auch für einen Transport des Pakets von dem Übergabepunkt zu einem von dem Empfänger gewünschten Zielort.

In der vorliegenden Anmeldung wird die Bezeichnung Übergabepunkt für einen geografisch präzise definierbareren Ort gewählt, der sich besonders gut dafür eignet, dass an ihm wenigstens ein Paket übergeben werden kann. Übergabepunkte sind Orte, an denen Übergaben von Paketen erfolgen können. Gemeinsame Übergabepunkte sind Orte, an denen Übergaben mehrerer Pakete erfolgen können, insbesondere innerhalb eines Übergabezeitraums. Übergabepunkte, die durch einen Benutzer und/oder das Logistiksystem ausgewählt werden, werden als ausgewählte Übergabepunkte bezeichnet. Die Auswahl kann unmittelbar und/oder mittelbar, insbesondere unter Berücksichtigung der in dieser Anmeldung offenbarten Auswahlverfahren für Übergabepunkt erfolgen. Ausgewählte Übergabepunkte können insbesondere folgende der in dieser Anmeldung offenbarten Übergabepunkte sein:
- individuelle Übergabepunkte
- gemeinsame Übergabepunkte
- gemeinsame optimierte Übergabepunkte.

Individuelle Übergabepunkte sind insbesondere Orte, an denen eine Übergabe eines Pakets für einen einzelnen Empfänger und/oder für einen einzelnen Einlieferer eines Pakets erfolgt. Individuelle Übergabepunkte sind somit Übergabepunkte für einen einzelnen Empfänger und/oder Einlieferer eines Pakets.

Grundsätzlich ist es möglich, individuelle Übergabepunkte nacheinander durch eine mobile Depoteinrichtung anzufahren und dort Übergaben von Paketen durchzuführen. Eine derartige Übergabe ist grundsätzlich möglich, jedoch umfasst die vorliegende Erfindung auch Ausführungsformen, die gegenüber einer derartigen Implementation einen erheblich geringeren Ressourcenbedarf und/oder einen erheblich geringeren CO2 - Fußabdruck aufweisen.

Es ist besonders zweckmäßig, die Erfindung so weiterzubilden, dass die Transporteinheit von einem Standort der Depoteinrichtung ausgehend autonom einen Transport als Übergabeeinheit zu dem individuellen Übergabepunkt für den einzelnen Empfänger oder den einzelnen Einlieferer durchführen kann und an dem individuellen Übergabepunkt die Ausgabe des Pakets an den Empfänger und/oder die Annahme des Pakets von dem Einlieferer durchführen kann.

Bei dieser Fortbildung der Erfindung ist es besonders zweckmäßig, dass in der Depoteinrichtung gelagerte Pakete durch Übergabeeinheiten zu Empfängern der Pakete transportiert und den Empfängern der Pakete zugänglich gemacht werden.

Eine andere, hiermit jedoch kombinierbare Lösung der Aufgabe, Übergaben von Paketen auch an Übergabepunkten und/oder in Übergabezeiträumen, in denen eine Übergabe von nur wenigen Paketen erfolgt, zu realisieren, besteht darin, dass die Depoteinrichtung nacheinander verschiedene gemeinsame optimierte Übergabepunkte für die Übergabe von Paketen und/oder individuelle Übergabepunkte anfährt.

Gegenüber Verfahren zur Routenoptimierung zur sequentiellen Übergabe von i.d.R. einzelner Pakete an einzelne Empfänger an unterschiedlichen Standorten, vorzugsweise deren Privatadressen, sieht eine bevorzugte Weiterbildung der Erfindung insbesondere vor, für eine Vielzahl von Empfängern gemeinsame optimierte Übergabepunkte für die Übergabe von Paketen zu ermitteln, wobei in der Regel an den Übergabepunkten jeweils eine Übergabe der Vielzahl von Paketen an den Paketen zugeordnete Empfänger erfolgt, wobei die Übergabe vorzugsweise mindestens teilweise unter Nutzung mobiler Depoteinrichtungen für die Pakete erfolgt, wie sie in der vorliegenden Anmeldung offenbart werden.

Es ist möglich, die in dieser Anmeldung dargestellten Übergabepunkte als individuelle Übergabepunkte zu nutzen. Als individuelle Übergabepunkte sind auch Übergabepunkte möglich, an denen Übergaben von Paketen für einen definierbaren Personenkreis von Empfängern und/oder Einlieferern erfolgen.

Beispiele für einen Einsatz individueller Übergabepunkte sind Standorte für Depoteinrichtungen, die so eingerichtet sind, dass Übergaben von Paketen ausschließlich für einen definierbaren Personenkreis von Empfängern und/oder Einlieferern erfolgen.

Definierbare Personenkreise können - insbesondere durch den Einsatz der Steuerkomponente - variabel festgelegt werden. So ist es möglich, Depoteinrichtungen bereitzustellen, die nur einer begrenzten Anzahl von Einlieferern, einschließlich eines einzelnen Einlieferers, der Depoteinrichtung und/oder vom Logistiksystem ausschließlich ihm zugeordneten Einlieferern und/oder Empfängern zugänglich gemacht werden.

Ferner ist es möglich, die Depoteinrichtung als ein Warenoutlet einzusetzen, mittels dessen Warenobjekte an Empfänger übergeben werden. Dies geschieht in einer bevorzugten Ausführungsform der Erfindung dadurch, dass Warenobjekte in die Depoteinrichtung eingeliefert, eingelagert und als Pakete an Empfänger übergeben werden.

In der vorliegenden Anmeldung wird die Bezeichnung gemeinsamer Übergabepunkt für einen geografisch präzise definierbareren Ort gewählt, der sich besonders gut dafür eignet, dass an ihm mehrere Pakete übergeben werden können. Wegen der Möglichkeit der Übergabe mehrerer Pakete wird dieser Übergabepunkt als ein gemeinsamer Übergabepunkt bezeichnet.

Gemeinsame optimierte Übergabepunkte sind gemeinsame Übergabepunkte an denen Übergaben mehrerer Pakete so erfolgen können, dass wenigstens ein Aufwandsparameter insbesondere für Einlieferer und/oder Empfänger der Pakete optimiert wird.

Der gemeinsame optimierte Übergabepunkt kann auf verschiedene Weise ausgewählt und/oder festgelegt werden. Insbesondere eignen sich hierfür die in dieser Anmeldung dargestellten Auswahlverfahren für die Ermittlung des gemeinsamen optimierten Übergabepunktes.

Die zusätzliche Charakterisierung eines gemeinsamen Übergabepunktes als optimierter gemeinsamer Übergabepunkt bedeutet, dass der Ort für die Übergabe von Paketen besonders geeignet ist. Insbesondere handelt es sich hierbei um einen Übergabepunkt, der mithilfe eines des in dieser Anmeldung dargestellten Auswahlverfahrens optimiert wurde. Insbesondere sind gemeinsame optimierte Übergabepunkte Orte, die sich für eine Übergabe möglichst vieler Pakete von möglichst vielen Einlieferern und/oder an möglichst viele Empfänger eignen, wobei ein Aufwand für die jeweiligen Einlieferer und/oder Empfänger möglichst gering ist.

Vorzugsweise wird wenigstens ein Teil der Pakete an den in dieser Anmeldung dargestellten gemeinsamen optimierten Übergabepunkten übergeben. Die in dieser Anmeldung offenbarten vorteilhaften Bearbeitungsvorgänge von Paketen und Bearbeitungssysteme von Paketen sind jedoch nicht auf Ausführungsformen der Bearbeitung von Paketen beschränkt, bei denen Übergabe von Paketen an gemeinsamen optimierten Übergabepunkten erfolgen.

Es ist besonders vorteilhaft, Verfahren, Depoteinrichtungen und Logistiksysteme zur Übergabe einer Vielzahl von Paketen an mehrere Empfänger und/oder zur Entgegennahme von Paketen so auszugestalten, dass die Ermittlung des gemeinsamen optimierten Übergabepunktes durch eine Auswahl aus der Vielzahl möglicher räumlich voneinander getrennter Übergabepunkte mit wenigstens einem Auswahlschritt erfolgt, wobei der Auswahlschritt Aufwandsparameter für die Empfänger und/oder die Einlieferer berücksichtigt, bei denen innerhalb eines Übergabezeitraums für die Pakete mindestens ein Aufwandsparameter für die jeweiligen Empfänger und/oder Einlieferer verringert ist.

Es ist besonders vorteilhaft, eine Dauer des Übergabezeitraumes an dem gemeinsamen optimierten Übergabepunkt in Abhängigkeit von einer Anzahl von in dem Übergabezeitraum an dem gemeinsamen optimierten Übergabepunkt zu übergebenden Paketen festzulegen.

Es ist besonders zweckmäßig, die Dauer des Übergabezeitraumes an dem jeweiligen gemeinsamen optimierten Übergabepunkt in Abhängigkeit von einer Relation zwischen der Anzahl der in dem Übergabezeitraum an dem jeweiligen gemeinsamen optimierten Übergabepunkt zu übergebenden Paketen und der Gesamtzahl der sich an dem betreffenden Tag in der Depoteinrichtung insgesamt befindlichen Pakete festzulegen.

Bei einer derartigen Optimierung ist zu berücksichtigen, dass der Übergabezeitraum einen gewissen Mindestzeitraum umfassen sollte, um eine Flexibilität der Übergaben von Paketen für die jeweiligen Empfänger und/oder Einlieferer zu ermöglichen.

Die Erfindung eignet sich jedoch auch für Anwendungsfälle, bei denen innerhalb eines Übergabezeitraums an einem Übergabepunkt, insbesondere einem gemeinsamen optimierten Übergabepunkt oder einem individuellen Übergabepunkt für einen einzelnen Empfänger und/oder Einlieferer eines Pakets eine Übergabe des Pakets erfolgt.

Die Anwendungsfälle, bei denen innerhalb eines Übergabezeitraums an einem Übergabepunkt, insbesondere einem gemeinsamen optimierten Übergabepunkt oder einem individuellen Übergabepunkt für einen einzelnen Empfänger und/oder Einlieferer eines Pakets eine individuelle Übergabe des Pakets erfolgt, sind mit den weiteren in dieser Anmeldung dargestellten Verfahren zur Übergabe von Paketen kombinierbar.

Die vorliegende Anmeldung offenbart mehrere vorteilhafte Ausgestaltungen, die sich dadurch auszeichnen, dass die gemeinsamen optimierten Übergabepunkte durch ein Optimierungsverfahren aus einer Vielzahl von möglichen Standorten für Depoteinrichtungen für die Pakete für die Übergabe der Pakete an die Empfänger ermittelt werden.

Hierbei ist es besonders vorteilhaft, dass das Optimierungsverfahren für voneinander verschiedene Übergabezeiträume jeweils separat durchgeführt wird, so dass sich für einen ersten Übergabezeitraum insbesondere an einem ersten Tag wenigstens teilweise andere gemeinsame optimierte Übergabepunkte ergeben, als für einen anderen Übergabezeitraum insbesondere an einem anderen Tag.

Es ist besonders bevorzugt, dass wenigstens ein Teil der Depoteinrichtungen als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist, dass vor den Übergabezeiträumen für die Übergabe innerhalb des Übergabezeitraums vorgesehene Pakete in die Depoteinrichtungen transferiert werden und dass die Übergabe an die Empfänger und/oder von den Einlieferern an dem zugeordneten gemeinsamen optimierten Übergabepunkt innerhalb des vorgesehenen Übergabezeitraums erfolgt.

Depoteinrichtungen im Sinne der vorliegenden Erfindung sind alle Einrichtungen, die eine Bereitstellung von Paketen für eine Übergabe der Pakete an Empfänger und/oder von Einlieferern ermöglichen. Vorzugsweise enthält die Depoteinrichtung ein Mittel zur Lagerung der Pakete, insbesondere innerhalb des vorgesehenen Übergabezeitraums, und wenigstens ein Mittel zur Übergabe der Pakete. Mittel zur Lagerung der Pakete sind vorzugsweise schließfachartig ausgebaute Depoteinrichtungen. Ein wichtiger Vorteil der schließfachartig ausgebauten Depoteinrichtungen ist die Kombination einer sicheren und zuverlässigen Lagerung der Pakete und einer verbesserten Auffindbarkeit der Pakete, insbesondere während des vorgesehenen Übergabezeitraums. Mittel zur Lagerung der Pakete können jedoch auch andere Einrichtungen sein, die eine sichere und geschützte Lagerung der Pakete gewährleisten. Vorzugsweise enthalten diese Einrichtungen Mittel zum Schutz der Pakete vor einer unbefugten Entnahme. Beispiele für diese anderen Einrichtungen sind Büro- oder Geschäftsräume, öffentliche Gebäude und Einrichtungen, Ladenlokale, Privatwohnungen, Privathäuser, Container, Fahrzeuge, insbesondere Lastenfahrräder. Mittel zur Übergabe der Pakete (Übergabemittel) sind insbesondere auch die in dieser Anmeldung dargestellten Übergabeeinheiten.

Ein Fahrzeug, das eine der in dieser Anmeldung dargestellten Depoteinrichtungen enthält, wird nachfolgend auch als Paketmobil beziehungsweise als Logistikfahrzeug bezeichnet.

Die Depoteinrichtungen sind vorzugsweise jeweils als ein Modul ausgestaltet. Vorzugsweise bedeutet dies, dass die Depoteinrichtungen separierbare Komponenten eines Logistiksystems sind.

Die Depoteinrichtung kann selbst als Übergabeeinrichtung ausgebildet sein oder Funktionen einer Übergabeeinrichtung realisieren oder auch eine Übergabeeinrichtung aufweisen, die insbesondere in einem Betriebszustand der Depoteinrichtung als eine Schleuse ausgebildet sein kann.

Der Begriff mobile Depoteinrichtung umfasst auch Depoteinrichtungen, die teils stationär und teils mobil eingerichtet sind und sich insbesondere über einen variablen Zeitraum von wenigen Minuten bis gegebenenfalls mehreren Jahren an einem Standort befinden, jedoch von diesem Standort wieder entfernt werden können, indem sie lösbar mit einem festen Bezugspunkt verbunden sind. Vorzugsweise bezeichnet der Begriff mobile Depoteinrichtung solche Depoteinrichtungen, die besonders leicht von einem Standort zu einem anderen Standort verfahrbar sind, insbesondere mittels eines Transportmittels und/oder dadurch, dass ein Logistikfahrzeug die Depoteinrichtung enthält.

Je mehr Empfänger und/oder Einlieferer sich ohnehin in der Nähe gemeinsamer optimierter Übergabepunkte befinden, beziehungsweise von bestehenden Routen mit möglichst geringem Aufwand realisierbare Ausweichrouten nutzen können oder eine Routenplanung mit möglichst geringem Aufwand ändern können, umso mehr Pakete können an dem Übergabepunkt übergeben werden. Bei einer entsprechend großen Anzahl von in einem Übergabezeitraum zu übergebenden Paketen ist ein Einsatz entsprechend großer Depoteinrichtungen und/oder mehrerer Depoteinrichtungen an einem gemeinsamen optimierten Übergabepunkt vorteilhaft.

Große Depoteinrichtungen, insbesondere in der Größenordnung von LKWs, beziehungsweise Sattelauflieger von LKWs und noch größere Depoteinrichtungen werden insbesondere dort eingesetzt, wo eine entsprechend hohe Anzahl von Übergaben von Paketen in den jeweiligen Übergabezeiträumen erfolgt und/oder von dem System ermittelt wird.

Wie bereits zuvor dargestellt, ist es vorteilhaft, dass die Ermittlung des gemeinsamen optimierten Übergabepunktes durch eine Auswahl aus der Vielzahl möglicher räumlich voneinander getrennter Übergabepunkte mit wenigstens einem Auswahlschritt erfolgt.

Es ist besonders vorteilhaft, dass der Auswahlschritt für einen vorher festlegbaren hohen Anteil, vorzugsweise über 80%, insbesondere 95%, der Pakete für die Übergabe an den gemeinsamen optimierten Übergabepunkten so durchgeführt wird, dass ein jeweiliger Aufwandsparameter eine festgelegte Grenze nicht überschreitet.

Eine bevorzugte Weiterbildung der Erfindung zeichnet sich dadurch aus, dass für möglichst viele Empfänger und/oder Einlieferer der Pakete, für die Übergaben innerhalb des jeweils vorgesehenen Übergabezeitraums eine Summe von zusätzlichen Zeitbedarfen für zusätzliche Wege von ohnehin-Wegstrecken und/oder ohnehin-Orten zu dem gemeinsamen optimierten Übergabepunkt beschränkt wird, indem der Aufwandsparameter diese Zeitbedarfe berücksichtigt.

Eine ohnehin-Wegstrecke bezeichnet eine Wegstrecke, die der Empfänger beziehungsweise der Einlieferer aus anderen Gründen als der Übergabe eines Pakets ("ohnehin") zurücklegt.

Ein ohnehin-Ort bezeichnet einen Ort, an dem der Empfänger beziehungsweise der Einlieferer sich aus anderen Gründen als der Übergabe eines Pakets ("ohnehin") aufhält.

Vorzugsweise erfolgen die Ermittlung der möglichen Übergabepunkte und eines oder mehrerer möglicher Übergabezeiträume unter wechselseitiger Berücksichtigung von Aufenthaltsorten, Wegstrecken und Aufenthaltszeiten einer Vielzahl von Empfängern, die entweder dem System bekannt sind oder (aus vorhandenen Daten) abgeschätzt werden.

Besonders geeignete Bezugspunkte für die Ermittlung des Aufwandsparameters für einen Empfänger, einen der in dieser Erfindung vorgeschlagenen Übergabepunkte, insbesondere einen der gemeinsamen optimierten Übergabepunkte zu erreichen, sind die ohnehin-Wegstrecken beziehungsweise die ohnehin-Orte.

Die vorliegende Anmeldung schlägt zahlreiche Ansätze zur Ermittlung dieser Wegstrecken beziehungsweise Aufenthaltsorte vor, wobei es besonders zweckmäßig ist, bei der Ermittlung der Wegstrecken und/oder Aufenthaltsorte in dem Umfang Lokalisierungsinformationen zu nutzen, in dem jeweilige Datenschutzerfordernisse des Empfängers, beziehungsweise Einlieferers beziehungsweise der Rechtsordnung des Gebietes in dem die Übergabepunkte liegen, berücksichtigt werden. Im Hoheitsgebiet der Bundesrepublik Deutschland ist dies insbesondere die Datenschutz-Grundverordnung und in anderen Mitgliedstaaten der europäischen Union entsprechende Datenschutzregeln.

Zur datenschutzkonformen Berücksichtigung der Wegstrecken, welche der jeweilige Empfänger beziehungsweise Einlieferer ohnehin zurücklegt, beziehungsweise der Aufenthaltsorte, an denen er sich ohnehin aufhält, werden Komponenten des Systems, insbesondere die dargestellten Steuerkomponenten so programmiert, dass sie diese Lokalisierungsinformationen nur in dem Umfang für die dargestellten logistischen Vorgänge einschließlich der Auswahlvorgänge eingesetzt werden, in dem zuvor festgestellt wurde, dass eine entsprechende datenschutzrechtliche Ermächtigung des Empfängers beziehungsweise Einlieferers vorliegt.

Die Berücksichtigung dieser Datenschutzregelungen ist keine rein administrative Tätigkeit, da sie eine unmittelbare Berücksichtigung einschließlich Auswahl und insbesondere Nicht - Auswahl von gemeinsamen optimierten Übergabepunkten beinhaltet. So wird insbesondere vermieden, dass Übergaben an Übergabepunkten für einen Empfänger beziehungsweise Einlieferer initiiert werden, obwohl der jeweilige Empfänger beziehungsweise Einlieferer an diesem auszuschließenden Übergabepunkt eine Übergabe nicht wünscht.

Eine zweckmäßige Ausgestaltung der Erfindung sieht vor, dass die Auswahl des gemeinsamen optimierten Übergabepunktes nicht nur unter Einbeziehung des Aufwandparameters für den jeweiligen Empfänger/Einlieferer, sondern auch unter Einbeziehung von Aufwandparametern für weitere Empfänger/Einlieferer erfolgt.

Eine bevorzugte Weiterbildung der Erfindung zeichnet sich dadurch aus, dass für die Auswahl des gemeinsamen optimierten Übergabepunktes für mindestens einen Teil der Empfänger und/oder Einlieferer ein oder mehrere für die Übergabe wenigstens eines Pakets von dem Empfänger und/oder Einlieferer angegebene Aufenthaltsorte und/oder eine oder mehrere Wegstrecken des Empfängers und/oder Einlieferers berücksichtigt werden.

Weitere gemeinsame optimierte Übergabepunkte können dadurch ermittelt werden, dass untersucht wird, welche Übergabepunkte sich in der Nähe der hinterlegten Zustelladressen oder bekannten Wegstrecken des Empfängers befinden.

Eine zweckmäßige Ausgestaltung der der Erfindung sieht vor, dass durch ein selbstlernendes System erwartete Aufenthaltsorte und/oder Wegstrecken der Empfänger/Einlieferer ermittelt werden, die für die Auswahl des gemeinsamen optimierten Übergabepunktes für wenigstens einen Teil der Empfänger und/oder Einlieferer berücksichtigt werden.

Diese Berücksichtigung erfolgt insbesondere durch eine Implementierung eines lernenden beziehungsweise selbstlernenden Systems. Das selbstlernende System wird vorzugsweise durch ein neuronales Netz realisiert. Kalibrierungen, insbesondere Lernvorgänge des neuronalen Netzes erfolgen insbesondere unter Einbeziehung der in dem Artikel "Drei nützliche Instrumente, um Ihr maschinell lernendes System zu evaluieren" https://medium.com/@turicodeag/drei-n%C3%BCtzliche-instrumente-um-ihr-maschinell-lernendes-system-zu-evaluieren-cd8fa92d82a1
dargestellten Evaluationsinstrumente. Die in diesem Artikel dargestellten relevanten Datenpunkte entsprechen vorzugsweise den gemeinsamen optimierten Übergabepunkten im Sinne dieser Anmeldung.

Eine bevorzugte Weiterbildung der Erfindung zeichnet sich dadurch aus, dass die Auswahl des gemeinsamen optimierten Übergabepunktes und die Übergabe an den jeweiligen Empfänger und/oder die Übergabe durch die Einlieferer, wobei mehrere der Empfänger und/oder Einlieferer in einem ersten und einem zweiten Übergabezeitraum andere Aufenthaltsorte haben und/oder andere Wegstrecken zurücklegen, unter Berücksichtigung einer Wegstrecke zwischen den angegebenen Aufenthaltsorten erfolgt, die vom Empfänger und/oder vom Einlieferer vorab mitgeteilt wurde oder durch einen Routenalgorithmus abgeschätzt wird.

Insbesondere, wenn an einzelnen Übergabepunkten eine Übergabe von deutlich weniger Paketen, als es der Gesamtzahl der sich am betreffenden Tag in der Depoteinrichtung insgesamt befindlichen Pakete entspricht, erfolgt, ist es zweckmäßig, dass der Übergabezeitraum kürzer als ein Tag ist, so dass eine tägliche oder sogar untertägige Optimierung der gemeinsamen optimierten Übergabepunkte ermöglicht wird.

Auch bei dieser Optimierung ist es vorteilhaft, dass der Übergabezeitraum einen gewissen Mindestzeitraum umfassen sollte, um eine Flexibilität von Übergabezeiträumen für die Übergabe der Pakete für die jeweiligen Empfänger und/oder Einlieferer zu ermöglichen.

Eine bevorzugte Weiterbildung der Erfindung zeichnet sich dadurch aus, dass die Ermittlung des gemeinsamen optimierten Übergabepunktes als ein mehrstufiger Prozess mit mehreren Auswahlschritten erfolgt und dass vor einem Auswahlschritt, der Aufwandsparameter für die Empfänger und/oder die Einlieferer berücksichtigt, mindestens ein anderer Auswahlschritt unter Berücksichtigung mindestens eines Eignungsparameters erfolgt und dass mindestens ein weiterer Auswahlschritt erfolgt.

Vorteilhafte Weiterbildungen der Erfindung beinhalten eine Berücksichtigung weiterer Parameter, insbesondere eines Eignungsparameters für die Auswahl des gemeinsamen optimierten Übergabepunktes. Der Eignungsparameter ist ein quantifizierter Parameter, der Insbesondere eine Geeignetheit, insbesondere Verfügbarkeit des gemeinsamen optimierten Übergabepunktes berücksichtigt und insbesondere einen Aufwand quantifiziert, an dem Übergabepunkt eine Depoteinrichtung bereitzustellen, insbesondere während des bestimmten Übergabezeitraums.

Eine zweckmäßige Ausgestaltung der der Erfindung sieht vor, dass eine Steuerkomponente das Verfahren steuert.

Die Steuerkomponente ist insbesondere eine zentrale Komponente eines der in dieser Anmeldung dargestellten Logistiksysteme. Vorzugsweise ist die Steuerkomponente so ausgestaltet, dass sie möglichst viele oder sogar sämtliche der Bearbeitungsvorgänge der Pakete steuert. Es ist jedoch gleichfalls möglich, dass die Steuerkomponente lediglich einzelne der in dieser Anmeldung dargestellten Verfahrensschritte steuert.

Die Steuerkomponente des Logistiksystems kann so ausgestaltet sein, dass die Steuerkomponente einzelne oder mehrere oder sogar sämtliche der in dieser Anmeldung dargestellten Verfahren durchführen kann.

Eine bevorzugte Weiterbildung der Erfindung zeichnet sich dadurch aus, dass mindestens einer der weiteren Auswahlschritte einen Aufwand eines Betreibers des Logistiksystems zu einer Bereitstellung einer Depoteinrichtung an jeweiligen Standorten berücksichtigt. Ein Vorteil dieses Systems ist, dass Aufwände für Empfänger und/oder Einlieferer sowie für einen Betreiber des Logistiksystems reduziert werden.

Eine zweckmäßige Ausgestaltung der der Erfindung sieht vor, dass an dem gemeinsamen optimierten Übergabepunkt eine Depoteinrichtung für eine gemeinsame Lagerung der mehreren Pakete und für die Übergabe der mehreren Pakete an die jeweiligen Empfänger der mehreren Pakete und/oder für die Einlieferung durch die jeweiligen Einlieferer der mehreren Pakete an dem zugeordneten gemeinsamen optimierten Übergabepunkt innerhalb des vorgesehenen Übergabezeitraums bereitgestellt wird.

Eine bevorzugte Weiterbildung der Erfindung zeichnet sich dadurch aus, dass im Bereich einer Depoteinrichtung eine zusätzliche lokalen Logistik vorgesehen ist, so dass zusätzlich zu den für die Übergabe an den gemeinsamen Übergabepunkten vorgesehenen Paketen Warenobjekte in die Depoteinrichtung eingeliefert, eingelagert und als Pakete an Empfänger übergeben werden können. Hierdurch erfolgt eine zusätzliche Integration einer lokalen Logistik.

Bei einer vorteilhaften Integration einer lokalen Logistik im Bereich einer Depoteinrichtung können Übergabezeiträume in Abhängigkeit von erwarteten Bestellaufträgen festgelegt werden.

So ist es insbesondere zweckmäßig, eine Vorabbefüllung der Depoteinrichtung mit Warenobjekten vorzunehmen, bei denen eine Mindestwahrscheinlichkeit besteht, dass Bestellaufträge für eine Mindestanzahl der Warenobjekte innerhalb des Übergabezeitraums erfolgen.

In einer gleichfalls vorteilhaften Ausführungsform der Erfindung kann wenigstens ein Teil der Bestellaufträge über ein Bestellsystem erfolgen, wobei das Bestellsystem insbesondere ein System zur Beauftragung von Einlieferungen von Paketen und/oder Abholungen von Paketen ist.

In einer besonders bevorzugten Ausführungsform der Erfindung kann ein erster Teil der Bestellaufträge über ein Bestellsystem erfolgen und ein zweiter Teil der Bestellaufträge kann unmittelbar im Bereich der Depoteinrichtung erfolgen.

Eine bevorzugte Weiterbildung der Erfindung zeichnet sich dadurch aus, dass die mobilen Depoteinrichtungen die Pakete zu den ihnen zugeordneten gemeinsamen optimierten Übergabepunkten transportieren und dass während des vorgesehenen Übergabezeitraums die Pakete in den mobilen Depoteinrichtungen gelagert und für die Übergabe an die Empfänger der Pakete unter Einsatz der Depoteinrichtungen bereitgestellt werden.

Eine zweckmäßige Ausgestaltung der der Erfindung sieht vor, dass mehrere für die Übergabe an einem der gemeinsamen optimierten Übergabepunkte vorgesehene Pakete zu einer Transfereinrichtung transportiert und im Bereich der Transfereinrichtung als einzelne Pakete zu den mobilen Depoteinrichtungen transportiert und als einzelne Pakete so in eine der mobilen Depoteinrichtungen eingebracht werden, dass eine Einlagerung der Pakete in Lagerpositionen einer Lagereinrichtung der Depoteinrichtung unter Berücksichtigung von Paketidentifikationsmerkmalen erfolgt.

Transfereinrichtungen im Sinne der vorliegenden Anmeldung sind alle Einrichtungen, die ausgestaltet sind, einen Transport von Paketen zwischen einem Verteilzentrum und wenigstens einer Depoteinrichtung bewirken zu können.

Der Begriff Verteilzentrum beinhaltet insbesondere große Umschlagsplätze eines Logistik-Dienstleisters für Pakete.

In einer vorteilhaften Implementation umfasst das Logistiksystem wenigstens ein Eingangsverteilzentrum. In dem Eingangsverteilzentrum wird ein Paket nach Eingang vom Versender beim Logistik-Dienstleister erstmalig zum Weitertransport in das Zustellgebiet sortiert.

In einer vorteilhaften Implementation umfasst das Logistiksystem wenigstens ein Ausgangsverteilzentrum. In dem Ausgangsverteilzentrum wird das Paket nach Anlieferung aus dem Eingangsverteilzentrum auf ein bestimmtes Zustelldepot sortiert.

Der Begriff Zustelldepot umfasst insbesondere Einrichtungen eines Logistik-Dienstleisters, in der Pakete letztmalig sortiert und für Zustelltouren bereitgestellt werden.

Paketidentifikationsmerkmale dienen zur zuverlässigen Identifizierung von Paketen, vorzugsweise zur eindeutigen Identifizierung von Paketen. Im Kontext der vorliegenden Anmeldung wird in bevorzugten Ausführungsformen der Erfindung zwischen unterschiedlichen Paketidentifikationsmerkmalen mit einer voneinander verschiedenen Eignung zur Identifizierung von Paketen unterschieden. In Abhängigkeit von der Eignung zur Identifizierung der Pakete wird zwischen primären Paketidentifikationsmerkmalen und sekundären Paketidentifikationsmerkmalen unterschieden.

Ein Paketidentifikationsmerkmal ist ein eindeutiges Datenelement, das physisch und/oder virtuell dem Paket zugeordnet ist und seine zuverlässige Identifikation, insbesondere seine eindeutige Identifikation ermöglicht. Die zuverlässige Identifikation kann sich auf einen oder mehrere Verfahrensschritte oder auf den gesamten Logistikprozess von der Einlieferung eines Pakets bis zur Ausgabe des Pakets beziehen. Es ist besonders vorteilhaft, dass das Paketidentifikationsmerkmal sich auf den gesamten logistischen Prozess bezieht, jedoch ist auch der Einsatz des Paketidentifikationsmerkmals in weniger Verfahrensschritten als dem Gesamtverfahren von der Erfindung mit umfasst.

Ein Paketidentifikationsmerkmal beinhaltet vorzugsweise ein oder mehrere Merkmale, die alleine oder in Kombination miteinander und/oder in Kombination mit Informationen über einen oder mehrere Bearbeitungsvorgänge eines Pakets eine zuverlässige Identifikation des Pakets erlauben.

Paketidentifikationsmerkmale sind insbesondere
- Paketidentifikationscodes;
- Produktcodes;
- Versenderidentifikationsmerkmale;
- Einliefereridentifikationsmerkmale;
- Empfängeridentifikationsmerkmale;
- Gewicht des Pakets;
- Abmaße des Pakets;
- Form des Pakets;
- Farbe des Pakets bzw. der einzelnen Seiten des Paketes;
- Abbildung des Pakets, einschließlich eines durch eine Kameraeinheit aufgenommen Bildes des Pakets.

Ein besonders bevorzugter Einsatz des Paketidentifikationsmerkmals unterscheidet sich signifikant von dem im Stand der Technik bekannten Einsatz von Zustellinformationen, insbesondere von Empfängeradressattributen. Die im Stand der Technik bekannten Zustellinformationen werden für die Steuerung von Bearbeitungsprozessen von Paketen eingesetzt. Insbesondere wird ein Paket, das in Hamburg aufgegeben wird und das für einen Empfänger in Aachen bestimmt ist, zwischen dem Abgabeort und dem Ausgabeort anhand der Zustellinformation so gesteuert, dass es insbesondere bei einem in der Nähe von Hamburg befindlichen Paketzentrum so sortiert wird, dass es in ein Transportmittel verbracht wird, das zu einem in der Nähe von Aachen befindliches Paketzentrum transportiert wird.

Ein besonders bevorzugter Einsatz von Paketidentifikationsmerkmalen geht hierüber weit hinaus. In einem Bearbeitungsvorgang, insbesondere bei einem Sortiervorgang oder mehreren Bearbeitungsvorgängen, gegebenenfalls sogar bei allen Verfahrensschritten, erfolgt eine Bearbeitung des Pakets unter Einbeziehung des Paketidentifikationsmerkmals. Das Paketidentifikationsmerkmal kann hierbei innerhalb von mehreren Stellen des Logistiksystems eingesetzt werden, so dass insbesondere bei einem Sortiervorgang in dem in der Nähe von Hamburg befindlichen Paketzentrum festgestellt wird, dass in einem von dem Empfänger gewünschten Übergabezeitraums der Empfänger sich in der Nähe von Frankfurt befindet. In diesem Fall erfolgt eine Bearbeitung des Pakets, insbesondere ein Sortiervorgang anhand des Paketidentifikationsmerkmals, insbesondere für einen möglichst schnellen und sicheren Transport zu einem der Übergabepunkte insbesondere in der Nähe von Frankfurt.

Insbesondere bei Ausführungsformen, bei dem mehrere Bearbeitungsvorgänge des Pakets erfolgen, ist es zweckmäßig, wenn das Paketidentifikationsmerkmal sowohl physisch als auch virtuell dem Paket zugeordnet ist.

Zur Erleichterung, beziehungsweise Ermöglichung der autonomen Handhabung von Paketen sind vorzugsweise einzelne, mehrere und besonders bevorzugt möglichst viele der in dieser Anmeldung dargestellten Bearbeitungseinheiten, insbesondere Depoteinrichtungen oder Transfereinrichtungen mit einem Mittel zum Erfassen von Paketidentifikationsmerkmalen der Pakete und zur Handhabung der Pakete entsprechend der Paketidentifikationsmerkmale ausgestattet.

Insbesondere die Handhabung der Pakete entsprechend der Paketidentifikationsmerkmale, und dabei insbesondere eine Einlagerung der Pakete in Lagerpositionen einer Lagereinrichtung der Depoteinrichtung unter Berücksichtigung der Paketidentifikationsmerkmale unterstützt eine autonome Handhabung der Pakete. Es ist insbesondere besonders vorteilhaft, die Transfereinrichtungen so auszugestalten, dass sie die autonome Handhabung der Pakete durchführen können. Zweckmäßige Maßnahmen zur autonomen Handhabung der Pakete betreffen insbesondere:
- Transport,
- Routing,
- Sortierung,
- Lagerung und
- Kommissionierung.

So ist es insbesondere möglich, einzelne, mehrere, besonders viele und gegebenenfalls sogar sämtliche der folgenden Bearbeitungsvorgänge autonom durchzuführen:
- kontaktlose Übergabe von Paketen;
- Handhabung von Paketen auf der Grundlage wenigstens eines Paketidentifikationsmerkmals;
- Übergabe mehrerer Pakete an einem gemeinsamen optimierten Übergabepunkt innerhalb eines Übergabezeitraums;
- Auswahlverfahren (Ermittlungsverfahren) für die Ermittlung des gemeinsamen optimierten Übergabepunktes;
- Einsatz von Depoteinrichtungen für die Lagerung von Paketen;
- Einsatz von Depoteinrichtungen für die Zwischenlagerung von Paketen, insbesondere auch in Verteilzentren;
- Einsatz von Depoteinrichtungen für die Kommissionierung von Paketen;
- Einsatz von Depoteinrichtungen als Verkaufseinrichtungen.

Eine bevorzugte Weiterbildung der Erfindung zeichnet sich dadurch aus, dass ein vereinzelter Transfer der Pakete mittels wenigstens einer verfahrbaren Transporteinheit erfolgt, wobei die verfahrbare Transporteinheit so steuerbar ist, dass sie die vereinzelten Pakete in die Lagerpositionen der Lagereinrichtung der Depoteinrichtungen unter Berücksichtigung der Paketidentifikationsmerkmale transferieren kann.

Ein Paketidentifikationscode ist insbesondere ein Code, der zur Identifikation des Pakets eingesetzt wird und der insbesondere physisch und/oder virtuell mit dem Paket verbunden ist, wobei es besonders vorteilhaft ist, wenn der Paketidentifikationscode auch physisch mit dem Paket verbunden ist. Dies gilt insbesondere dann, wenn der Paketidentifikationscode als ein Paketidentifikationsmerkmal beziehungsweise als eines der Paketidentifikationsmerkmale eingesetzt wird.

Eine zweckmäßige Ausgestaltung der der Erfindung sieht vor, dass während eines Aufenthaltes der Depoteinrichtung im Bereich der Transfereinrichtung zu den im Bereich der Transfereinrichtung als einzelne Pakete transferierten Paketen jeweils folgende Datenelemente an die Depoteinrichtung übermittelt werden:
- Wenigstens eines der Paketidentifikationsmerkmale, das geeignet ist, eine zuverlässige Identifikation eines jeweiligen Pakets zu ermöglichen und
- eine Information zu einer Identifizierung der Lagerposition innerhalb der Lagereinrichtung der Depoteinrichtung, insbesondere für die Einlagerung des jeweiligen Pakets.

Eine bevorzugte Weiterbildung der Erfindung zeichnet sich dadurch aus, dass Pakete, die an dem gemeinsamen optimierten Übergabepunkt während des ursprünglichen Übergabezeitraums nicht abgeholt werden, nach Ablauf des Übergabezeitraums zu einer Transfereinrichtung transportiert werden.

Eine zweckmäßige Ausgestaltung der der Erfindung sieht vor, dass in einer der Depoteinrichtungen gelagerte Pakete auf eine empfangene Ausgabeaufforderung hin innerhalb der Depoteinrichtung durch eine Transporteinheit in eine Übergabeeinrichtung transportiert und dort den Empfängern der Pakete zugänglich gemacht werden und/oder mittels einer Übergabeeinheit zu jeweiligen Empfängern transportiert werden und dass die Pakete durch die Übergabeeinheit den jeweiligen Empfängern zugänglich gemacht werden.

Eine bevorzugte Weiterbildung der Erfindung zeichnet sich dadurch aus, dass eine Einlieferung eines Pakets durch einen Einlieferer in die Depoteinrichtung folgende Verfahrensschritte beinhaltet:
- Erfassen wenigstens eines Paketidentifikationsmerkmals, gegebenenfalls auch durch eine Benutzerkomponente;
- Aktivierung einer Übergabeeinrichtung;
- Zuordnung einer Lagerposition einer Lagereinrichtung der Depoteinrichtung zu dem Paket unter Berücksichtigung des Paketidentifikationsmerkmals;
- Transport des Pakets in eine Lagerposition einer Lagereinrichtung der Depoteinrichtung.

Eine zweckmäßige Ausgestaltung der der Erfindung sieht vor, dass eine Einlieferung eines Paketes durch einen Einlieferer an einer Übergabeeinheit folgende Verfahrensschritte beinhaltet:
- Aktivierung der Übergabeeinheit;
- Erfassen wenigstens eines Paketidentifikationsmerkmals, gegebenenfalls auch durch eine Benutzerkomponente;
- Übergabe des Pakets an die Übergabeeinheit;
- Transport des Pakets zu der Depoteinrichtung;
- Zuordnung einer Lagerposition einer Lagereinrichtung der Depoteinrichtung zu dem Paket unter Berücksichtigung des Paketidentifikationsmerkmals;
- Transport des Pakets in die Lagerposition der Lagereinrichtung der Depoteinrichtung.

Eine bevorzugte Weiterbildung der Erfindung zeichnet sich dadurch aus, dass wenigstens eine Depoteinrichtung eingesetzt wird, wobei die Depoteinrichtung eine Lagereinrichtung mit wenigstens einem Lagerregal aufweist und wobei Fächer des Lagerregals Lagerpositionen der Depoteinrichtung bilden und dass eine Anzahl und/oder wenigstens eine Abmessung der Fächer variabel ist und wobei die Anzahl und/oder die Abmessung der Fächer in Abhängigkeit von einer Anzahl und/oder einer Abmessung von in die Depoteinrichtung einzuliefernden und einzulagernden Pakete variabel angepasst wird.

Eine zweckmäßige Ausgestaltung der der Erfindung sieht vor, dass die variable Anpassbarkeit der Anzahl und/oder der Abmessungen der Fächer von Depoteinrichtungen bei einer Ermittlung gemeinsamer optimierter Übergabepunkte für eine Übergabe der Pakete an die jeweiligen Empfänger und/oder für die Einlieferung von den Einlieferern der Pakete innerhalb eines bestimmten Übergabezeitraums berücksichtigt wird.

Die entsprechende Anpassung eines Faches umfasst insbesondere eine Anpassung seiner Abmessungen, insbesondere durch Vergrößerung und/oder Verkleinerung seiner Abmessungen beziehungsweise des aus den Abmessungen des jeweils einzulagernden Paktes resultierenden Volumens. Insbesondere kann die Breite des Faches verkleinert und zeitgleich damit die Höhe des Faches vergrößert werden, beziehungsweise umgekehrt.

Eine bevorzugte Weiterbildung der Erfindung zeichnet sich dadurch aus, dass von einem Bestellsystem zur Bearbeitung von Bestellaufträgen von Kunden eine Bestellung einer Ware wenigstens eines der Kunden als Bestellauftrag angenommen wird, dass auf Grundlage des Bestellauftrages von dem Bestellsystem ein Auftrag zur Durchführung einer Übergabe des Pakets an einen Empfänger an eine Steuerkomponente eines Logistiksystems übermittelt wird, dass der Bestellauftrag ein dem Empfänger zugeordnetes Empfängeridentifikationsmerkmal beinhaltet, dass die Steuerkomponente überprüft, ob zu dem Empfängeridentifikationsmerkmal ein Empfängerdatensatz mit Lokalisierungsinformationen vorliegt und dass bei Vorliegen des Empfängerdatensatzes mit Lokalisierungsinformationen wenigstens ein Bearbeitungsvorgang des Logistiksystems unter Berücksichtigung der Lokalisierungsinformationen erfolgt.

Anders als im Stand der Technik, bei dem auch bei Integration von Bestellschnittstellen in Logistiksysteme der Bestellprozess so abläuft, dass der Besteller eines Pakets einen Übergabepunkt auswählt und dass anschließend der Transportprozess des Pakets so gesteuert wird, dass der Transport zu dem ausgewählten Übergabepunkt erfolgt, ermöglicht die vorliegende Erfindung eine flexible Auswahl eines gemeinsamen optimierten Übergabepunktes für das Paket, wobei mehrere Pakete für eine Vielzahl von Empfängern innerhalb des Übergabezeitraumes an einem gemeinsamen optimierten Übergabepunkt bereitgestellt werden.

Anders als bei bekannten Bestellprozessen und Bestellplattformen können bei der Erfindung durch ein Logistiksystem ausgewählte gemeinsame optimierte Übergabepunkte - vorzugsweise mindestens teilweise anstelle von ursprünglich vom Empfänger vorgegebenen Übergabepunkten - berücksichtigt werden. Während der Empfänger im Stand der Technik bei der Bestellung eines Pakets einen hinterlegten Zustellort selbst auswählen muss, sieht eine vorteilhafte Weiterbildung der Erfindung vor, dass das Logistiksystem den optimalen Übergabepunkt, insbesondere als Standort einer in dieser Patentanmeldung beschriebenen Depoteinrichtung auswählt.

Eine zweckmäßige Ausgestaltung der der Erfindung sieht vor, dass bei der Ermittlung des gemeinsamen optimierten Übergabepunktes über einen Tag verteilt unterschiedliche Standorte für eine Depoteinrichtung optimiert werden und dass die Depoteinrichtung über den Tag verteilt an den unterschiedlichen Standorten im Einsatz ist.

Eine bevorzugte Weiterbildung der Erfindung zeichnet sich dadurch aus, dass eine variable Anpassbarkeit der Anzahl und/oder der Abmessungen von Fächern von Depoteinrichtungen bei einer Ermittlung gemeinsamer optimierter Übergabepunkte für eine Übergabe der Pakete an die jeweiligen Empfänger und/oder für die Einlieferung von den Einlieferern der Pakete innerhalb eines bestimmten Übergabezeitraums berücksichtigt wird.

Eine zweckmäßige Ausgestaltung der der Erfindung sieht vor, dass sich die Auswahlschritte auf unterschiedliche Zeiträume für eine Optimierung des gemeinsamen Übergabepunktes beziehen.

Eine bevorzugte Weiterbildung der Erfindung zeichnet sich dadurch aus, dass in dem ersten Auswahlschritt allgemeine Standorteigenschaften berücksichtigt werden, dass durch den Auswahlschritt eine Long List aller potenziellen Standorte in eine Liste der für die Übergabe von Paketen grundsätzlich qualifizierten Standorte transformiert wird und dass in dem sich an den ersten Auswahlschritt anschließenden weiteren Auswahlschritt diejenigen Übergabepunkte, insbesondere Standorte für Depoteinrichtungen ermittelt werden, bei denen innerhalb eines als Optimierungszeitraum ermittelten Übergabezeitraums für die Pakete ein jeweiliger Aufwandsparameter für die Inbetriebnahme der Depoteinrichtungen möglichst niedrig ist.

Eine zweckmäßige Ausgestaltung der der Erfindung sieht vor, dass in einem anderen Auswahlschritten vorangehenden Auswahlschritt, insbesondere in dem ersten Auswahlschritt, Standorte, an denen die jeweilige Depoteinrichtung geparkt werden kann, ermittelt und berücksichtigt werden.

Eine bevorzugte Weiterbildung der Erfindung zeichnet sich dadurch aus, dass in einem dritten Auswahlschritt diejenigen Übergabepunkte ermittelt werden, bei denen innerhalb eines als Optimierungszeitraum vorzugsweise ermittelten Übergabezeitraums für die Pakete ein jeweiliger Aufwandsparameter für die Einlieferer und/oder Empfänger von Paketen an den Depoteinrichtungen gering ist.

Eine zweckmäßige Ausgestaltung der der Erfindung sieht vor, dass die einzelnen Pakete vor ihrem Transfer in die Lagerpositionen so gedreht werden, dass sie eine definierte Ausrichtung aufweisen.

Eine bevorzugte Weiterbildung der Erfindung zeichnet sich dadurch aus, dass die einzelnen Pakete während eines Aufenthaltes auf einer Transferplattform einer Transporteinheit gedreht werden.

Transferplattform einer Transporteinheit bezeichnet einen Bestandteil der Transporteinheit, der insbesondere geeignet ist, eine Einlagerung in eine Lagerposition einer Lagereinrichtung beziehungsweise eine Auslagerung aus der Lagerposition der Lagereinrichtung zu bewirken.

Eine zweckmäßige Ausgestaltung der Erfindung sieht vor, dass die einzelnen Pakete während eines Aufenthaltes auf einem Transportband, insbesondere einem Transportband der Transfereinrichtung gedreht werden.

Eine bevorzugte Weiterbildung der Erfindung zeichnet sich dadurch aus, dass vorzugsweise für jedes Paket ein Paketidentifikationscode vergeben und/oder erfasst wird und anschließend als primäres Paketidentifikationsmerkmal gespeichert wird, dass dem Paket wenigstens ein von dem primären Paketidentifikationsmerkmal verschiedenes sekundäres Paketidentifikationsmerkmal zugeordnet wird, und dass wenigstens ein Bearbeitungsvorgang des Pakets anhand des sekundären Paketidentifikationsmerkmals durchgeführt wird.

Ein primäres Paketidentifikationsmerkmal im Kontext der vorliegenden Anmeldung ist insbesondere ein Paketidentifikationsmerkmal, das geeignet ist, das Paket, dem es zugeordnet wird, beziehungsweise zugeordnet wird, eindeutig zu identifizieren.

Ein sekundäres Paketidentifikationsmerkmal ist vorzugsweise ein Paketidentifikationsmerkmal, das alleine nicht zu einer Identifikation eines Pakets ausreicht, das aber in Verbindung mit Informationen über einen Bearbeitungsstand des Pakets und/oder wenigstens einem weiteren sekundärem Paketidentifikationsmerkmal und/oder wenigstens einem primären Paketidentifikationsmerkmal zu einer Identifikation des Pakets dient.

Alternativ und/oder zusätzlich ist es möglich, Paketidentifikationsmerkmale hinsichtlich ihres Vorhandenseins bei einer Einlieferung in das Logistiksystem voneinander zu unterscheiden Originäre Paketidentifikationsmerkmale sind vorzugsweise solche Paketidentifikationsmerkmale, die vor Einlieferung des Pakets in das Logistiksystem oder bei einer Einlieferung des Pakets in das Logistiksystem dem Paket zugeordnet werden.

Nicht originäre Paketidentifikationsmerkmale sind Identifikationsmerkmale des Pakets, die nach der Einlieferung des Pakets in das Logistiksystem verändert werden können. Insbesondere können variable Empfängerattribute Bestandteile von nicht originären Paketidentifikationsmerkmalen sein.

Eine zweckmäßige Ausgestaltung der der Erfindung sieht vor, dass der Paketidentifikationscode durch ein Logistiksystem oder eine Steuerkomponente des Logistiksystems aus mindestens einem von dem Versender übermittelten Merkmal des Pakets gebildet wird, wobei dieses Merkmal so beschaffen ist, dass es bei wenigstens einem der Bearbeitungsvorgänge des Pakets erfasst und bei der Bearbeitung des Pakets berücksichtigt wird.

Eine bevorzugte Weiterbildung der Erfindung zeichnet sich dadurch aus, dass der Paketidentifikationscode durch ein Logistiksystem oder eine Steuerkomponente des Logistiksystems aus mindestens zwei von dem Versender übermittelten Merkmalen des Pakets gebildet werden, wobei diese Merkmale so beschaffen sind, dass sie gemeinsam bei wenigstens einem der Bearbeitungsvorgänge des Pakets erfasst werden und dass der Paketidentifikationscode bei mindestens einem Bearbeitungsvorgang des Pakets berücksichtigt wird.

Eine zweckmäßige Ausgestaltung der der Erfindung sieht vor, dass das sekundäre Paketidentifikationsmerkmal leichter und/oder schneller identifizierbar ist als das primäre Paketidentifikationsmerkmal.

Eine bevorzugte Weiterbildung der Erfindung zeichnet sich dadurch aus, dass das sekundäre Paketidentifikationsmerkmal alleine oder in Kombination mit weiteren sekundären Paketidentifikationsmerkmalen zur Kontrolle einer Richtigkeit, dass ein Paket das durch das primäre Paketidentifikationsmerkmal identifizierte Paket ist, und/oder zur Steuerung eines weiteren Bearbeitungsvorganges eingesetzt wird.

Eine zweckmäßige Ausgestaltung der der Erfindung sieht vor, dass das primäre Paketidentifikationsmerkmal für eine Bildung eines digitalen Zwillings des Pakets eingesetzt wird und mindestens eines der sekundären Paketidentifikationsmerkmale einem digitalen Zwilling des Pakets zugeordnet wird.

Eine bevorzugte Weiterbildung der Erfindung zeichnet sich dadurch aus, dass der Paketidentifikationscode ein physischer Code oder eine Kombination von physischen Codes ist, der oder die unmittelbar mit dem Paket verbunden ist/sind und auslesbar ist/sind.

Eine zweckmäßige Ausgestaltung der der Erfindung sieht vor, dass anhand eines mit dem Paket verbundenen auslesbaren Datenträgers eines Versenders ein primäres Paketidentifikationsmerkmal überprüft wird, und dass das primäre Paketidentifikationsmerkmal bei wenigstens einem Bearbeitungsvorgang des Pakets berücksichtigt wird.

Eine bevorzugte Weiterbildung der Erfindung zeichnet sich dadurch aus, dass wenigstens eine der folgenden Eigenschaften eines Pakets als sekundäres Paketidentifikationsmerkmal erfasst und bei der Durchführung wenigstens eines Bearbeitungsvorgangs berücksichtigt wird:
- Gewicht des Pakets;
- Abmaße des Pakets;
- Form des Pakets;
- Versenderidentifikationsmerkmale;
- Abbildung des Pakets;
- Farbe des Pakets;
- Dateninhalte eines auslesbaren Datenträgers;
- Informationen über eine oder mehrere abgeschlossene Bearbeitungsvorgänge;
- spektroskopischer Response des Pakets.

Eine zweckmäßige Ausgestaltung der der Erfindung sieht vor, dass wenigstens einer der nachfolgend genannten Bearbeitungsvorgänge der Pakete unter Berücksichtigung von wenigstens zwei voneinander verschiedenen Paketidentifikationsmerkmalen durchgeführt wird:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots;
- Beladung von Depoteinrichtungen:
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme/Einlieferung mehrerer Pakete an einem gemeinsamen optimierten Übergabepunkt innerhalb eines Übergabezeitraums;
- Annahme/Einlieferung von Paketen an individuellen Übergabepunkten;
- Einsatz von Depoteinrichtungen für die Lagerung von Paketen;
- Einsatz von Depoteinrichtungen für die Annahme von Paketen;
- Einsatz von Depoteinrichtungen für die Kommissionierung von Paketen;
- Einsatz von Depoteinrichtungen für die Ausgabe von Paketen und
- Einsatz von Depoteinrichtungen als Verkaufseinrichtungen.

Routing im Sinne der vorliegenden Erfindung bezeichnet insbesondere eine Bestimmung einer besonders geeigneten Transportverbindung zwischen Ausgangspunkten (insbesondere aktuellen Positionen der jeweiligen Pakete) und Zielpunkten (insbesondere nachfolgende logistische Knoten).

Logistische Knoten sind insbesondere Netzwerkknoten des Logistiksystems.

Netzwerkknoten des Logistiksystems sind vorzugsweise Bestandteile des Logistiksystems, bei denen Entscheidungen über zu erfolgende Bearbeitungsvorgänge der Pakete umgesetzt werden. Die Durchführung der Bearbeitungsvorgänge der Pakete erfolgt insbesondere durch Bearbeitungseinheiten des Logistiksystems, die sich an den logistischen Knoten befinden. Bei den Bearbeitungsvorgängen an den logistischen Knoten handelt es sich insbesondere um
- Sortiervorgänge, die vorzugsweise in Verteilzentren und/oder in Depoteinrichtungen für Pakete erfolgen,
- Lagervorgänge, die vorzugsweise in Verteilzentren für Pakete und/oder in Depoteinrichtungen erfolgen,
- Routing im Bereich eines Knotens des Logistiksystems.

Eine bevorzugte Weiterbildung der Erfindung zeichnet sich dadurch aus, dass wenigstens zwei der nachfolgend genannten Bearbeitungsvorgänge der Pakete unter Berücksichtigung von wenigstens zwei voneinander verschiedenen Paketidentifikationsmerkmalen durchgeführt werden:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots:
- Beladung von Depoteinrichtungen;
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme mehrerer Pakete an einem gemeinsamen optimierten Übergabepunkt innerhalb eines Übergabezeitraums;
- Annahme von Paketen an individuellen Übergabepunkten;
- Einsatz von Depoteinrichtungen für die Lagerung von Paketen;
- Einsatz von Depoteinrichtungen für die Annahme von Paketen;
- Einsatz von Depoteinrichtungen für die Kommissionierung von Paketen;
- Einsatz von Depoteinrichtungen für die Ausgabe von Paketen und
- Einsatz von Depoteinrichtungen als Verkaufseinrichtungen.

Eine zweckmäßige Ausgestaltung der Erfindung sieht vor, dass zwei voneinander verschiedene sekundäre Paketidentifikationsmerkmale für die Identifikation des Pakets eingesetzt werden.

Eine bevorzugte Weiterbildung der Erfindung zeichnet sich dadurch aus, dass eine Einlieferung eines Paketes durch einen Einlieferer wenigstens einen der folgenden Verfahrensschritte beinhaltet:
- Erfassen wenigstens eines der Paketidentifikationsmerkmale, gegebenenfalls auch durch eine Benutzerkomponente;
- Übergabe des Pakets an eine Übergabeeinheit und/oder eine Übergabeeinrichtung;
- Transport des Pakets zu der Depoteinrichtung;
- Transport des Pakets in eine Lagerposition einer Lagereinrichtung der Depoteinrichtung.

Eine zweckmäßige Ausgestaltung der der Erfindung sieht vor, dass nach der Festlegung und/oder Ermittlung des Paketidentifikationscodes oder sonstiger Paketidentifikationsmerkmale, die eine eindeutige/zuverlässige Identifikation eines Paketes erlauben, ein gesteuerter und/oder gemessener Transportweg und/oder Sortierweg des Pakets geplant und/oder nachverfolgt wird, so dass ein nachfolgender Bearbeitungsvorgang des Pakets, insbesondere eine Sortierung des Pakets und/oder ein Transport des Pakets anhand einer Kombination des zuvor festgestellten Paketidentifikationscodes und/oder Paketidentifikationsmerkmals mit einer Ermittlung eines anderen, vorzugsweise leichter und/oder schneller messbaren sekundären Paketidentifikationsmerkmals so präzise durchgeführt wird, wie dies bei einer Ermittlung des Paketidentifikationscodes selbst der Fall ist.

Die Erfindung betrifft ferner eine Depoteinrichtung, insbesondere zur Verwendung in einem der in dieser Anmeldung dargestellten Verfahren und/oder in einem der in dieser Anmeldung dargestellten Logistiksysteme.

Eine bevorzugte Ausgestaltung der Depoteinrichtung zeichnet sich dadurch aus, dass sie als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist, dass die Depoteinrichtung mit einem Zuordnungsmittel für eine Zuordnung von Paketidentifikationsmerkmalen zu den Lagerpositionen verbindbar ist, dass sich in der Depoteinrichtung wenigstens ein Transportweg befindet, wobei sich entlang des Transportweges wenigstens eine Transporteinheit bewegen kann, wobei die Transporteinheit so eingerichtet, dass sie eine Entnahme von Paketen aus einem Sendungsstrom von Paketen insbesondere anhand von Paketidentifikationsmerkmalen unterstützen kann, dass unter Einsatz der Transporteinheit ein Transport der Pakete von dem Sendungsstrom in Lagerpositionen der Depoteinrichtung ermöglicht wird, und dass der Transport der Pakete durch die Transporteinheiten innerhalb der Depoteinrichtung unter Berücksichtigung der den jeweiligen Paketen anhand der Paketidentifikationsmerkmale zugeordneten Lagerpositionen steuerbar ist.

Eine vorteilhafte Weiterbildung der Depoteinrichtung zeichnet sich dadurch aus, dass die Transporteinheit so eingerichtet ist, dass ein Transport von Paketen anhand von Paketidentifikationsmerkmale aus den zugeordneten Lagerpositionen in der Depoteinrichtung zu einer Übergabeeinrichtung ermöglicht wird.

Eine zweckmäßige Ausgestaltung der Erfindung sieht vor, dass die Depoteinrichtung mindestens eine Übergabeeinrichtung für Übergaben von Paketen an gemeinsamen Übergabepunkten und mindestens eine Übergabeeinheit für Übergaben an von den gemeinsamen Übergabepunkten verschiedenen individuellen Übergabepunkten aufweist.

Eine vorteilhafte Weiterbildung der Depoteinrichtung zeichnet sich dadurch aus, dass sie mindestens eine Transporteinheit, die innerhalb und außerhalb der Depoteinrichtung verfahrbar ist, enthält.

Eine zweckmäßige Ausgestaltung der Transfereinrichtung zeichnet sich dadurch aus, dass sie mindestens eine Transporteinheit, die innerhalb der Transfereinrichtung und innerhalb der Depoteinrichtung verfahrbar ist, enthält.

Eine vorteilhafte Weiterbildung der Erfindung sieht vor, dass die Übergabeeinrichtung und/oder eine Übergabeeinheit als eine Ausgabeeinheit für eine Ausgabe von Paketen an Empfänger und/oder als eine Annahmeeinheit für eine Annahme von Paketen eines Einlieferers ausgebildet sind.

Eine vorteilhafte Weiterbildung der Depoteinrichtung zeichnet sich dadurch aus, dass die Transporteinheit von einem Standort der Depoteinrichtung ausgehend autonom einen Transport als Übergabeeinheit zu dem individuellen Übergabepunkt für den einzelnen Empfänger und/oder für den einzelnen Einlieferer durchführen kann und an dem individuellen Übergabepunkt die Ausgabe des Pakets an den Empfänger und/oder die Annahme des Pakets von dem Einlieferer durchführen kann.

Eine zweckmäßige Ausgestaltung der Erfindung sieht vor, dass die Depoteinrichtung für eine Lagerung und Bereitstellung mehrerer Pakete ausgebildet ist und dass sie wenigstens zwei verschiedene Belademodi und/oder wenigstens zwei verschiedene Entlademodi aufweist.

Eine vorteilhafte Weiterbildung der Depoteinrichtung zeichnet sich dadurch aus, dass in einem ersten Belademodus eine unterbrechungsfreie Wegstrecke zwischen einer Umgebung der Depoteinrichtung und einem Innenraum der Depoteinrichtung gebildet ist.

Unterbrechungsfreie Wegstrecke bezeichnet insbesondere eine Konfiguration, bei der ein möglicher Transportweg des Pakets und/oder einer für den Transport des Pakets eingerichteten Transporteinheit nicht unterbrochen wird, das heißt vor allem weder durch eine Schleuse, eine Barriere oder ein sonstiges Hindernis unterbrochen wird.

Eine zweckmäßige Ausgestaltung der Depoteinrichtung sieht vor, dass in einem zweiten Belademodus eine individuelle Einlagerung eines Pakets unter Einsatz einer Schleuse erfolgen kann.

Eine vorteilhafte Weiterbildung der Depoteinrichtung zeichnet sich dadurch aus, dass in einem ersten Entlademodus eine unterbrechungsfreie Wegstrecke zwischen einem Innenraum der Depoteinrichtung und einer Umgebung der Depoteinrichtung gebildet ist.

Eine zweckmäßige Ausgestaltung der Depoteinrichtung sieht vor, dass in einem zweiten Entlademodus eine individuelle Übergabe eines Pakets an einen Empfänger unter Einsatz der Schleuse erfolgen kann.

Eine vorteilhafte Weiterbildung der Depoteinrichtung zeichnet sich dadurch aus, dass die mobile Depoteinrichtung als Logistikfahrzeug ausgebildet ist.

Eine zweckmäßige Ausgestaltung der Depoteinrichtung sieht vor, dass sie eine Tür aufweist, die so weit wie möglich die gesamte Rückseite der Depoteinrichtung einnimmt.

Erfindungsgemäß wird ferner eine Depoteinrichtung, insbesondere eine der in dieser Anmeldung dargestellten Depoteinrichtungen zur Durchführung eines Verfahrens zur Übergabe einer Vielzahl von Paketen an mehrere Empfänger und/ oder zur Entgegennahme einer Vielzahl von Paketen von mehreren Einlieferern, verwendet, wobei für mehrere Pakete aus einer Vielzahl möglicher räumlich voneinander getrennter Übergabepunkte unter Berücksichtigung wenigstens eines Aufwandsparameters ein gemeinsamer optimierter Übergabepunkt für die Übergabe an die jeweiligen Empfänger und für die Entgegennahme von den Einlieferern innerhalb eines bestimmten Übergabezeitraums ermittelt wird, und dass die Übergabe an die Empfänger und/oder die Entgegennahme von den Einlieferern an dem zugeordneten gemeinsamen optimierten Übergabepunkt innerhalb des vorgesehenen Übergabezeitraums erfolgt.

Eine vorteilhafte Weiterbildung der Verwendung der Depoteinrichtung zeichnet sich dadurch aus, dass die Depoteinrichtung im Bereich eines Verteilzentrums und/ oder eines Zustelldepots als Zwischenspeicher für Pakete eingesetzt wird.

Eine bevorzugte Weiterbildung der Verwendung der Depoteinrichtung zeichnet sich dadurch aus, dass die Depoteinrichtung während einer Aufstellung an einem gemeinsamen optimierten Übergabepunkt innerhalb eines vorgesehenen Übergabezeitraums an einem gemeinsamen optimierten Übergabepunkt für eine gemeinsame Lagerung mehrerer Pakete und für die Übergabe an Empfänger und/oder von Einlieferern der mehreren Pakete bereitgestellt wird und dass die Depoteinrichtung während einer Aufstellung im Bereich eines Verteilzentrums und/oder einer Zustelldepot als Zwischenspeicher für Pakete eingesetzt wird.

Die Erfindung betrifft ferner ein System zur Übergabe einer Vielzahl von Paketen an mehrere Empfänger und/oder zur Entgegennahme einer Vielzahl von Paketen von mehreren Einlieferern.

Erfindungsgemäß zeichnet sich das System dadurch aus, dass es zur Durchführung eines Verfahrens zur Übergabe einer Vielzahl von Paketen an mehrere Empfänger und/oder zur Entgegennahme einer Vielzahl von Paketen von mehreren Einlieferern eingerichtet ist, dass für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und/oder für die Entgegennahme von den Einlieferern innerhalb eines bestimmten Übergabezeitraums ermittelt werden kann und dass die Übergabe an die Empfänger und die Entgegennahme von den Einlieferern an dem zugeordneten gemeinsamen optimierten Übergabepunkt innerhalb des vorgesehenen Übergabezeitraums erfolgen kann, und dass das System wenigstens ein Verteilzentrum und/oder wenigstens ein Zustelldepot aufweist und dass das System im Bereich des wenigstens einen Verteilzentrums und/oder des wenigstens einen Zustelldepots wenigstens ein Mittel zum Transfer der Pakete an eine Transfereinrichtung aufweist, dass das System eine Steuerkomponente aufweist, wobei die Steuerkomponente so eingerichtet ist, dass die Steuerkomponente die Transfereinrichtung so steuern kann, dass die Transfereinrichtung den Transport der Pakete entsprechend Steueranweisungen der Steuerkomponente durchführen kann, wobei die Pakete im Bereich der Transfereinrichtung als einzelne Pakete durch Transporteinheiten transportiert werden.

Eine vorteilhafte Weiterbildung des Systems zeichnet sich dadurch aus, dass es eine Vielzahl von Depoteinrichtungen aufweist, wobei wenigstens ein Teil der Depoteinrichtungen als mobile Depoteinrichtungen ausgebildet ist, und dass die Steuerkomponente ferner so eingerichtet ist, dass sie einen Transport der mobilen Depoteinrichtungen von der Transfereinrichtung zu Aufstellorten als gemeinsame optimierte Übergabepunkte für die Übergabe der Pakete steuern kann.

Eine zweckmäßige Ausgestaltung des Systems sieht vor, dass es ein Mittel zur Auswahl eines gemeinsamen optimierten Übergabepunktes aus der Vielzahl der möglichen Übergabepunkte für die Übergabe an die jeweiligen Empfänger und/oder zur Entgegennahme von den jeweiligen Einlieferern innerhalb des vorgesehenen Übergabezeitraums aufweist und dass es eine Depoteinrichtung für eine Übergabe an den Empfänger und/oder zur Entgegennahme von den jeweiligen Einlieferern an dem gemeinsamen optimierten Übergabepunkt innerhalb des vorgesehenen Übergabezeitraums aufweist.

Eine vorteilhafte Weiterbildung des Systems zeichnet sich dadurch aus, dass zusätzlich zu den für die Übergabe an den gemeinsamen Übergabepunkten vorgesehenen Paketen Warenobjekte in die Depoteinrichtung eingeliefert, eingelagert und als Pakete übergeben werden können.

Eine zweckmäßige Ausgestaltung des Systems sieht vor, dass mindestens ein Teil der Warenobjekte an der Depoteinrichtung, an der sie als Pakete übergeben wurden, ausgegeben werden kann.

Eine vorteilhafte Weiterbildung des Systems zeichnet sich dadurch aus, dass es ein Mittel zur Erfassung einer Vielzahl von möglichen Standorten für Depoteinrichtungen, insbesondere mobile Depoteinrichtungen, aufweist, und dass es ein Mittel zur Zuordnung der Depoteinrichtungen, insbesondere der mobilen Depoteinrichtungen, zu den gemeinsamen optimierten Übergabepunkten als Standorte für die Depoteinrichtungen, insbesondere die mobilen Depoteinrichtungen, enthält.

Eine zweckmäßige Ausgestaltung des Systems sieht vor, dass es wenigstens ein Mittel zur Steuerung von der Transfereinrichtungen aufweist, wobei die Transfereinrichtungen so gesteuert werden können, dass die für eine Ausgabe an einem Übergabepunkt, insbesondere an einem gemeinsamen optimierten Übergabepunkt vorgesehenen Pakete in die dem Übergabepunkt, insbesondere dem gemeinsamen optimierten Übergabepunkt zugeordnete mobile Depoteinrichtung transportiert werden.

Eine vorteilhafte Weiterbildung des Systems zeichnet sich dadurch aus, dass es Mittel zur Übermittelung von geographischen Informationen zu den gemeinsamen optimierten Übergabepunkten an die Depoteinrichtungen und/oder ein Transportmittel zum Transport der Depoteinrichtungen enthält, so dass ein Transport der Depoteinrichtungen zu den gemeinsamen optimierten Übergabepunkten unter Berücksichtigung der geographischen Informationen erfolgen kann.

Eine zweckmäßige Ausgestaltung des Systems sieht vor, dass es als Logistiksystem mit zugeordnetem Bestellsystem ausgebildet ist, dass das Bestellsystem so ausgestaltet ist, dass für eine Auswahl der gemeinsamen optimierten Übergabepunkte für die Pakete mehrere Übergabepunkte unter Berücksichtigung eines selbstlernendes Systems ausgewählt werden können, und dass die Übergabe an die jeweiligen Empfänger und/oder die Einlieferung durch die jeweiligen Einlieferer an den gemeinsamen optimierten Übergabepunkten unter Berücksichtigung von durch das selbstlernende System ermittelten erwarteten Aufenthaltsorte und/oder Wegstrecken der Empfänger/Einlieferer erfolgt.

Eine vorteilhafte Weiterbildung des Systems zeichnet sich dadurch aus, dass es eine Benutzerkomponente aufweist, die einen Prozessor zur Steuerung von Funktionen der Benutzerkomponente enthält, dass die Benutzerkomponente wenigstens ein Positionsbestimmungsmittel enthält, wobei das Positionsbestimmungsmittel so eingerichtet ist, dass es Positionen der Benutzerkomponente als Lokalisierungsinformationen eines Benutzers der Benutzerkomponente erfassen kann, dass die Benutzerkomponente ein Mittel zum Übertragen der Lokalisierungsinformationen an das System enthält, dass die Benutzerkomponente mit einem gegen unberechtigte Zugriffe besonders geschützten Speichermittel zur Speicherung von Datenschutzanforderungen eines Benutzers der Benutzerkomponente zusammenwirken kann, dass die Datenschutzanforderungen des Benutzers eine ortsabhängige Festlegung, welche Lokalisierungsinformationen zur Lokalisierung der Benutzerkomponente an das System übermittelt werden, beinhalten, dass der Prozessor eine Auswertung vornimmt, in welchem Umfang und/oder mit welcher Genauigkeit eine Übermittelung der Lokalisierungsinformationen den Datenschutzanforderungen des Benutzers entspricht und dass eine Übermittlung der Lokalisierungsinformationen an das System nur in dem Umfang und/oder mit der Genauigkeit erfolgt, die den Datenschutzanforderungen des Benutzers entspricht.

Eine zweckmäßige Ausgestaltung des Systems sieht vor, dass es eine Benutzer-App aufweist und die Benutzer-App eingerichtet ist, Lokalisierungsinformationen eines Benutzers an eine Steuerkomponente des Systems zu übermitteln, wobei die Benutzer-App mit einem gegen unberechtigte Zugriffe besonders geschützten Speichermittel zur Speicherung von Datenschutzanforderungen des Benutzers zusammenwirken kann, dass die Datenschutzanforderungen des Benutzers eine Festlegung, welche Lokalisierungsinformationen zur Lokalisierung der Benutzerkomponente an das System übermittelt werden, beinhalten, dass der Prozessor eine Auswertung vornimmt, in welchem Umfang und/oder mit welcher Genauigkeit eine Übermittelung der Lokalisierungsinformationen den Datenschutzanforderungen des Benutzers entspricht und dass eine Übermittlung der Lokalisierungsinformationen an das System nur in dem Umfang und/oder mit der Genauigkeit erfolgt, die sowohl den Datenschutzanforderungen des Benutzers als auch dem Umfang entspricht, der erforderlich ist, eine Auswahl gemeinsamer optimierter Übergabepunkte durch Übermittelung der Lokalisierungsinformationen zu unterstützen und/oder eine Paketübergabe in unmittelbarer Nähe eines Übergabemittels zu unterstützen.

Eine vorteilhafte Weiterbildung des Systems zeichnet sich dadurch aus, dass die Steuerkomponente Informationen zu Paketidentifikationsmerkmalen an die Transfereinrichtung weitergibt, so dass die Einlagerung der Pakete in die Lagerpositionen der Lagereinrichtungen der Depoteinrichtungen auf Grundlage der Paketidentifikationsmerkmale erfolgen kann.

Eine zweckmäßige Ausgestaltung des Systems sieht vor, dass die Transporteinheiten der Transfereinrichtung zur Unterstützung einer Einlagerung der Pakete in Lagerpositionen von Lagereinrichtungen der Depoteinrichtungen eingerichtet sind.

Eine vorteilhafte Weiterbildung des Systems zeichnet sich dadurch aus, dass die Steuerkomponente Informationen zu Paketidentifikationsmerkmalen an die Transfereinrichtung weitergibt, so dass eine Einlagerung der Pakete in die Lagerpositionen der Lagereinrichtungen der Depoteinrichtungen auf Grundlage der Paketidentifikationsmerkmale erfolgen kann.

Die Erfindung betrifft ferner ein Logistiksystem zur Übergabe einer Vielzahl von Paketen, vorzugsweise zur Verwendung in einem der in dieser Anmeldung offenbarten Verfahren oder mit einem der in dieser Anmeldung offenbarten Systeme, wobei das Logistiksystem so eingerichtet ist, dass es Pakete mehrerer Versender an mehrere Empfänger übergeben kann und wobei das Logistiksystem ferner so eingerichtet ist, dass es wenigstens einen Bearbeitungsvorgang der Pakete anhand eines jeweils den Paketen zugeordneten Paketidentifikationscodes vornehmen kann.

Erfindungsgemäß zeichnet sich das Logistiksystem, beziehungsweise eine Weiterbildung des Logistiksystems dadurch aus, dass die Pakete jeweils wenigstens ein Empfängerattribut aufweisen, dass eine Steuerkomponente des Logistiksystems eine Schnittstelle zum Empfang von Empfängerattributen der Pakete aufweist, dass die Steuerkomponente ein Mittel aufweist um Positionen der Pakete im Laufe ihres Transportweges zu ermitteln und dass die Steuerkomponente ferner so eingerichtet ist, dass sie den mehreren Paketen im Laufe des Transportweges der jeweiligen Pakete in Abhängigkeit der Positionen der Pakete sich verändernde Anteile von ihnen jeweils zugeordneten festen Empfängerattributen und variablen Empfängerattributen zuordnen kann.

Empfängerattribute sind insbesondere Attribute, die Empfängern im Sinne von Merkmalen zugeordnet werden. Es handelt sich um Merkmale, wobei jeder Empfänger durch einzelne, mehrere oder sämtlicher seiner Attribute identifiziert werden kann. Empfängerattribute sind insbesondere Datenelemente, die zu einer Identifikation eines jeweils vorgesehen Empfängers eines Pakets dienen, wobei es vorteilhaft ist, wenigstens für einen Teil der durch ein erfindungsgemäßes Logistiksystem bearbeiteten Pakete sich in Abhängigkeit von einem Bearbeitungszustand des Pakets verändernde Empfänger und / oder sich in Abhängigkeit von einem Bearbeitungszustand des Pakets verändernde Empfängerkreise vorzusehen.

Während in konventionellen Logistiksystemen bereits vor einer Einlieferung von Paketen in das Logistiksystem, beziehungsweise spätestens bei der Einlieferung von Paketen in das Logistiksystem feststeht, an welchen Empfänger das Paket gerichtet ist und welche Adresse der Empfänger aufweist, ermöglicht eine vorteilhafte Weiterbildung der Erfindung eine erheblich höhere Flexibilität einer Zuordnung zwischen Paketen und Empfängern.

Ein Empfängerattribut wird vorzugsweise dann als fest bezeichnet, wenn es vor oder während nachfolgender Bearbeitungsvorgänge des Pakets nicht mehr verändert wird.

Feste Empfängerattribute sind insbesondere Empfängeradressattribute, die bereits für die Bearbeitung des Pakets auf einem Transportweg zu einem Empfänger berücksichtigt wurden Ein Empfängerattribut wird vorzugsweise dann als variabel bezeichnet, wenn es vor oder während nachfolgender Bearbeitungsvorgänge des Pakets verändert wird beziehungsweise verändert werden kann.

Variable Empfängerattribute sind Empfängerattribute, insbesondere Empfängeradressattribute, die noch nicht für die Bearbeitung des Pakets auf einem Transportweg zu einem Empfänger berücksichtigt wurden und erfindungsgemäß geändert werden können.

Mit der Berücksichtigung in einem Bearbeitungsschritt werden vorzugsweise variable Empfängerattribute zu festen Empfängerattributen verändert. Ebenso vorteilhaft ist es, wenn der Versender zuerst nur wenige Empfängerattribute mitteilt, die bei den ersten Bearbeitungsschritten berücksichtigt werden, und dann vor weiteren Bearbeitungsschritten weitere Empfängerattribute ergänzt.

Ein vorteilhaftes Beispiel eines Empfängerattributs ist ein Empfängeradressattribut, das insbesondere als Attributwert Bestandteile einer physischen Adresse für die Übergabe eines oder mehrerer physischer Pakete enthält.

Empfängerkontaktattribute sind vorzugsweise Bestandteil der Attributwerte von Datenobjekten bezüglich Informationen, die eine Kontaktierung des Empfängers ermöglichen.

Eine Kombination verschiedener Arten von Empfängerattributen ist möglich, so können insbesondere Empfängerkontaktattribute, die eine Kontaktierung des Empfängers ermöglichen, mit Empfängeradressattributen, die ein Routing des Pakets steuern, kombiniert werden.

Beispiele für Empfängerattribute sind:
- die in dieser Anmeldung dargestellten Bestandteile der Adresstiefe, insbesondere Bestandteile einer physischen Adresse eines Empfängers des Pakets, insbesondere
   ∘ Führende Stellen einer Postleitzahl (dies ist auch ein Beispiel für ein Empfängeradressattribut),
   ∘ Weitere Stellen der Postleitzahl (dies ist auch ein Beispiel für ein Empfängeradressattribut),
   ∘ Alternativ oder zusätzlich komplette Postleitzahl (dies ist auch ein Beispiel für ein Empfängeradressattribut),
   ∘ Straße, beziehungsweise Straßenabschnitt (dies ist auch ein Beispiel für ein Empfängeradressattribut),
   ∘ Hausnummer, beziehungsweise Appartementnummer (dies ist auch ein Beispiel für ein Empfängeradressattribut).
- Informationen zu einem gemeinsamen optimierten Übergabepunkt für das Paket (dies ist auch ein Beispiel für ein Empfängeradressattribut);
- Informationen zu einem individuellen Übergabepunkt (dies ist auch ein Beispiel für ein Empfängeradressattribut);
- E-Mail-Adresse des Empfängers (dies ist auch ein Beispiel für ein Empfängerkontaktattribut);
- Telefonnummer des Empfängers (dies ist auch ein Beispiel für ein Empfängerkontaktattribut);
- Benutzername des Empfängers;
- Benutzeridentifikationscode des Empfängers;
- Zahlungskartenidentifikationsnummer, insbesondere Kreditkartenidentifikationsnummer von Kreditkarten:
- Vorhandensein einer geldwerten Information zu einem Zahlungsvorgang (insbesondere einer geldwerten Information, die einen das Paket betreffenden Bezahlvorgang beinhaltet).

Adresstiefe im Sinne der vorliegenden Anmeldung bezeichnet insbesondere die Empfängeradresstiefe, insbesondere die Spezifikation eines physischen Übergabepunktes, insbesondere eines gemeinsamen Übergabepunktes, eines gemeinsamen optimierten Übergabepunktes, eines individuellen Übergabepunktes, insbesondere einer physischen Adresse eines Empfängers.

Empfängerattribute im Sinne der vorliegenden Anmeldung werden insbesondere mit Paketidentifikationsmerkmalen verknüpft, wobei die Verknüpfung insbesondere durch eine Steuerkomponente erfolgt. Die Verknüpfungen zwischen Paketen und Empfängern ermöglichen es dem Logistiksystem und/oder wenigstens einer Komponente des Logistiksystems, ein Paket zu einem Empfänger zuzuordnen.

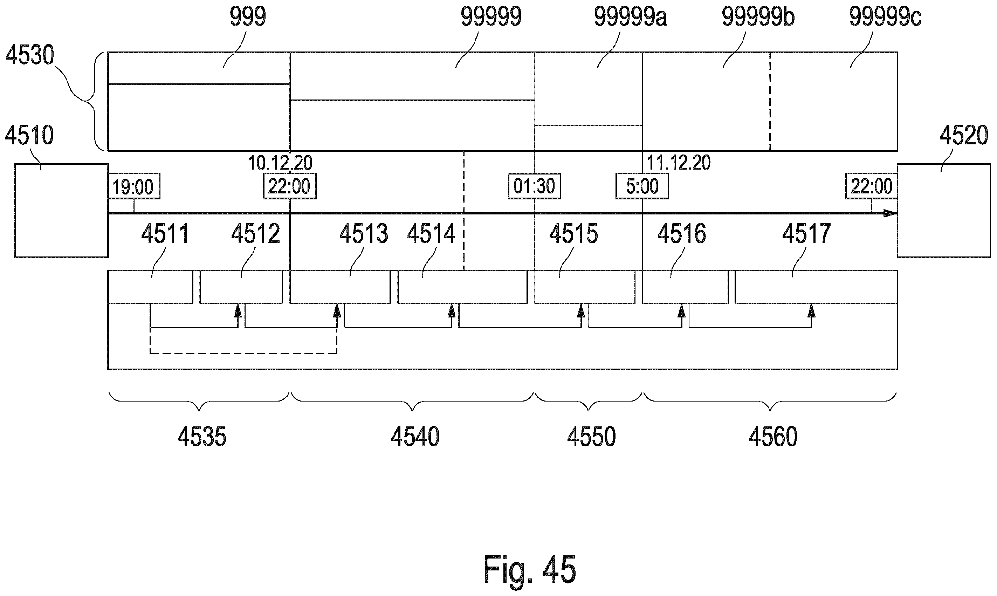

Es ist besonders vorteilhaft, wenn viele Pakete, insbesondere möglichst viele Pakete von dem Versender beziehungsweise den Versendern mit Paketidentifikationsmerkmalen und/oder Empfängerattributen verknüpft werden. Besonders bevorzugte Ausführungsformen des Einsatzes von Paketidentifikationsmerkmalen und/oder Empfängerattributen sind insbesondere in dem Abschnitt Paketidentifikationsmerkmal und anhand der Abbildungen 45 bis 47 erläutert.

Obwohl Empfängeradressattribute und Empfängerkontaktattribute besonders bevorzugte Ausführungsformen der Erfindung sind, ist die vorliegende Erfindung nicht auf diese Ausführungsformen von Empfängerattributen beschränkt.

Eine vorteilhafte Weiterbildung des Logistiksystems zeichnet sich dadurch aus, dass mehreren Paketen im Laufe eines Transportweges sich verändernde Anteile von ihnen jeweils zugeordneten festen Empfängerattributen und variablen Empfängerattributen zugeordnet werden.

Anteile von Empfängerattributen sind insbesondere Bestandteile der Empfängerattribute, insbesondere Stellen einer Postleitzahl.

Eine zweckmäßige Ausgestaltung des Logistiksystems sieht vor, dass wenigstens ein Teil der Empfängerattribute Bestandteile einer Empfängeradresstiefe sind, wobei der Anteil der in der Empfängeradresstiefe berücksichtigten, den Paketen jeweils zugeordneten festen Empfängerattribute in einer zeitlichen Abfolge von einzelnen Produktionsstufen eines Logistikunternehmens von einer Übergabe durch den Versender bis zu einer finalen Übergabe an den Empfänger veränderbar ist.

Eine vorteilhafte Weiterbildung des Logistiksystems zeichnet sich dadurch aus, dass Bestandteile der Empfängeradresstiefe führende Stelle einer Postleitzahl und weitere Stellen der Postleitzahl sind.

Eine zweckmäßige Ausgestaltung des Logistiksystems sieht vor, dass eine Straße und/oder ein Straßenabschnitt beziehungsweise eine Hausnummer und/ oder eine Appartementnummer Bestandteile der Empfängeradresstiefe sind.

Eine vorteilhafte Weiterbildung des Logistiksystems zeichnet sich dadurch aus, dass gemeinsame optimierte Übergabepunkte Bestandteile der Empfängeradresstiefe sind.

Eine zweckmäßige Ausgestaltung des Logistiksystems sieht vor, dass individuelle Übergabepunkte Bestandteile der Empfängeradresstiefe sind.

Eine vorteilhafte Weiterbildung des Logistiksystems zeichnet sich dadurch aus, dass eine Steuerkomponente des Logistiksystems über eine Schnittstelle zum Empfang von Anweisungen der Versender Anweisungen der Versender erhält, dass die Anweisungen der jeweiligen Versender jeweils wenigstens eine Anweisung zur Festlegung weiterer oder veränderter variabler Empfängerattribute wenigstens eines ausgewählten Pakets enthalten und dass das Logistiksystem wenigstens einen Bearbeitungsvorgang des ausgewählten Pakets unter Berücksichtigung der dem ausgewählten Paket zugeordneten weiteren oder veränderten variablen Empfängerattribute vornimmt, die dadurch zu festen Empfängerattributen werden.

Eine zweckmäßige Ausgestaltung des Logistiksystems sieht vor, dass ein Paketidentifikationscode zur Identifikation des ausgewählten Pakets eingesetzt wird, und dass wenigstens ein nachfolgender Bearbeitungsvorgang des Pakets sowohl unter Berücksichtigung des dem ausgewählten Paket zugeordneten weiteren oder veränderten Empfängerattributs als auch unter Berücksichtigung des Paketidentifikationscodes durchgeführt wird.

Eine vorteilhafte Weiterbildung des Logistiksystems zeichnet sich dadurch aus, dass der Paketidentifikationscode wenigstens eine Versenderidentifikationsangabe enthält, wobei die Versenderidentifikationsangabe den Versender identifiziert.

Eine zweckmäßige Ausgestaltung des Logistiksystems sieht vor, dass der Paketidentifikationscode als primäres Paketidentifikationsmerkmal gespeichert wird, dass dem Paket wenigstens ein von dem primären Paketidentifikationsmerkmal verschiedenes sekundäres Paketidentifikationsmerkmal zugeordnet wird, und dass wenigstens ein Bearbeitungsvorgang des Pakets anhand des sekundären Paketidentifikationsmerkmals durchgeführt wird.

Eine vorteilhafte Weiterbildung des Logistiksystems zeichnet sich dadurch aus, das sekundäre Paketidentifikationsmerkmal leichter und/oder schneller identifizierbar ist als das primäre Paketidentifikationsmerkmal.

Eine zweckmäßige Weiterbildung des Logistiksystems zeichnet sich dadurch aus, dass sowohl der Paketidentifikationscode als auch wenigstens ein festes Empfängerattribut und/oder wenigstens eines der variablen Empfängerattribute einem digitalen Zwilling des Pakets zugeordnet werden.

Eine vorteilhafte Weiterbildung des Logistiksystems zeichnet sich dadurch aus, dass die Bearbeitungsvorgänge durch eine Bereitstellung von Prozessprotokollen, unter Einbeziehung individueller Prozessprotokolle für die einzelne Pakete ergänzt und die Prozessprotokollen für die Steuerung der Bearbeitungsvorgängen eingesetzt werden.

Ein optionaler Einsatz individueller Prozessprotokolle für einzelne Pakete hat den Vorteil, dass Echtzeitanwendungen implementiert werden können, und/oder dass eine Verknüpfung zwischen einzelnen Paketen und ihren jeweiligen digitalen Zwillingen erleichtert wird.

Eine zweckmäßige Weiterbildung des Logistiksystems zeichnet sich dadurch aus, dass wenigstens einer der nachfolgenden Bearbeitungsvorgänge des Pakets unter Berücksichtigung wenigstens eines der variablen Empfängerattribute durchgeführt wird:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots;
- Beladung von Depoteinrichtungen;
- autonomer und/ oder teilautonomer Transport zu gemeinsamen optimierten Übergabepunkten;
- autonomer und/ oder teilautonomer Transport zu individuellen
- Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme mehrerer Pakete an einem gemeinsamen optimierten Übergabepunkt innerhalb eines Übergabezeitraums;
- Annahme von Paketen an individuellen Übergabepunkten;
- Einsatz von Depoteinrichtungen für die Lagerung von Paketen;
- Einsatz von Depoteinrichtungen für die Annahme von Paketen;
- Einsatz von Depoteinrichtungen für die Kommissionierung von Paketen;
- Einsatz von Depoteinrichtungen für die Ausgabe von Paketen und
- Einsatz von Depoteinrichtungen als Verkaufseinrichtungen

Bei den meisten der in diese Anmeldung dargestellten Bearbeitungsvorgänge handelt es sich um logistische Bearbeitungsvorgänge, bei denen die jeweiligen Gegenstände, insbesondere die dargestellten Pakete einschließlich der gleichfalls dargestellten Warenobjekte selbst nicht verändert werden, insbesondere Übergabe, Transport und Sortierung.

Es ist jedoch möglich, zusätzlich Manipulationsvorgänge vorzusehen. Bei einem Manipulationsvorgang wird ein Gegenstand derart bearbeitet, dass sich wenigstens eine seine Eigenschaften verändert. Beispiele für derartige Manipulationsvorgänge, die an sämtlichen der in diese Anmeldung dargestellten Pakete einschließlich der Warenobjekte erfolgen können, sind: Herstellung, Zusammenführung, Reparatur, Zerlegung und Reinigung.

Die Erfindung betrifft ferner eine Verwendung des in dieser Anmeldung dargestellten Logistiksystems zur Durchführung eines der in dieser Anmeldung offenbarten Verfahren zur Übergabe einer Vielzahl von Paketen.

Besonders bevorzugt ist die Verwendung des in dieser Anmeldung offenbarten Logistiksystems zur flexiblen Zuweisung eines finalen Empfängers eines Pakets und/oder eines finalen Übergabepunktes für das Paket.

Die Erfindung kann auch durch nachfolgend dargestellte Merkmale beschrieben werden. Die nachfolgend dargestellten Merkmale können sowohl untereinander als auch mit der darauffolgenden Darstellung bevorzugter Ausführungsbeispiele anhand der Abbildungen kombiniert werden, wobei besonders bevorzugte Merkmalskombinationen durch Verweis auf zuvor dargestellte Merkmalskombinationen hervorgehoben sind.

AA) Verfahren zur Übergabe einer Vielzahl von Paketen an mehrere Empfänger und/oder zur Entgegennahme von Paketen mehrerer Einlieferer, bei dem für mehrere Pakete aus einer Vielzahl möglicher räumlich voneinander getrennter Übergabepunkte unter Berücksichtigung wenigstens eines Aufwandsparameters wenigstens eines jeweiligen Empfängers und/oder wenigstens eines jeweiligen Einlieferers ein gemeinsamer optimierter Übergabepunkt für die Übergabe an die jeweiligen Empfänger und/oder Einlieferer innerhalb eines bestimmten Übergabezeitraums ermittelt wird, die Ermittlung des gemeinsamen optimierten Übergabepunktes durch eine Auswahl aus der Vielzahl möglicher räumlich voneinander getrennter Übergabepunkte mit wenigstens einem Auswahlschritt erfolgt, wobei der Auswahlschritt Aufwandsparameter für die Empfänger und/oder die Einlieferer berücksichtigt, bei denen innerhalb eines Übergabezeitraums für die Pakete ein jeweiliger Aufwandsparameter für die jeweiligen Empfänger und/oder Einlieferer möglichst gering ist, die gemeinsamen optimierten Übergabepunkte durch ein Optimierungsverfahren aus einer Vielzahl von möglichen Standorten für Depoteinrichtungen für die Pakete für die Übergabe der Pakete an die Empfänger ermittelt werden, das Optimierungsverfahren für voneinander verschiedene Übergabezeitraume jeweils separat durchgeführt wird, so dass sich für einen ersten Übergabezeitraum an einem ersten Tag wenigstens teilweise andere gemeinsame optimierte Übergabepunkte ergeben, als für einen anderen Übergabezeitraum an einem anderen Tag, wenigstens ein Teil der Depoteinrichtungen als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist, vor den Übergabezeiträumen für die Übergabe innerhalb des Übergabezeitraums vorgesehene Pakete in die Depoteinrichtungen transferiert werden und die Übergabe an die Empfänger und/oder von den Einlieferern an dem zugeordneten gemeinsamen optimierten Übergabepunkt innerhalb des vorgesehenen Übergabezeitraums erfolgt.

AB) Verfahren zur Übergabe einer Vielzahl von Paketen an mehrere Empfänger und/oder zur Entgegennahme von Paketen mehrerer Einlieferer, bei dem für mehrere Pakete aus einer Vielzahl möglicher räumlich voneinander getrennter Übergabepunkte unter Berücksichtigung wenigstens eines Aufwandsparameters wenigstens eines jeweiligen Empfängers und/oder wenigstens eines jeweiligen Einlieferers ein gemeinsamer optimierter Übergabepunkt für die Übergabe an die jeweiligen Empfänger und/oder Einlieferer innerhalb eines bestimmten Übergabezeitraums ermittelt wird, die Ermittlung des gemeinsamen optimierten Übergabepunktes durch eine Auswahl aus der Vielzahl möglicher räumlich voneinander getrennter Übergabepunkte mit wenigstens einem Auswahlschritt erfolgt, wobei der Auswahlschritt Aufwandsparameter für die Empfänger und/oder die Einlieferer berücksichtigt, bei denen innerhalb eines Übergabezeitraums für die Pakete ein jeweiliger Aufwandsparameter für die jeweiligen Empfänger und/oder Einlieferer beschränkt wird, die gemeinsamen optimierten Übergabepunkte durch ein Optimierungsverfahren aus einer Vielzahl von möglichen Standorten für Depoteinrichtungen für die Pakete für die Übergabe der Pakete an die Empfänger ermittelt werden, das Optimierungsverfahren für voneinander verschiedene Übergabezeitraume jeweils separat durchgeführt wird, so dass sich für einen ersten Übergabezeitraum an einem ersten Tag wenigstens teilweise andere gemeinsame optimierte Übergabepunkte ergeben, als für einen anderen Übergabezeitraum an einem anderen Tag, wenigstens ein Teil der Depoteinrichtungen als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist, vor den Übergabezeiträumen für die Übergabe innerhalb des Übergabezeitraums vorgesehene Pakete in die Depoteinrichtungen transferiert werden und die Übergabe an die Empfänger und/oder von den Einlieferern an dem zugeordneten gemeinsamen optimierten Übergabepunkt innerhalb des vorgesehenen Übergabezeitraums erfolgt.

AC) Verfahren zur Übergabe einer Vielzahl von Paketen an mehrere Empfänger und/oder zur Entgegennahme von Paketen mehrerer Einlieferer vorzugsweise entsprechend AA oder AB, bei dem der Auswahlschritt für einen vorher festlegbaren hohen Anteil, beispielsweise über 80%, der Pakete so durchgeführt wird, dass ein jeweiliger Aufwandsparameter eine festgelegte Grenze nicht überschreitet.

AD) Verfahren zur Übergabe einer Vielzahl von Paketen an mehrere Empfänger und/oder zur Entgegennahme von Paketen mehrerer Einlieferer vorzugsweise entsprechend AA oder AB, bei dem für möglichst viele Empfänger und/oder Einlieferer der Pakete, für die Übergaben innerhalb des jeweils vorgesehenen Übergabezeitraums eine Summe von zusätzlichen Zeitbedarfen für Abweichungen zu ohnehin-Wegstrecken und/oder ohnehin-Orten beschränkt wird, indem der Aufwandsparameter diese Zeitbedarfe berücksichtigt.

AE) Depoteinrichtung , insbesondere zur Verwendung in einem Verfahren vorzugsweise entsprechend AA oder AB, bei dem sie als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist, die Depoteinrichtung mit einem Zuordnungsmittel für eine Zuordnung von Paketidentifikationsmerkmalen zu den Lagerpositionen verbindbar ist, sich in der Depoteinrichtung wenigstens ein Transportweg befindet, wobei sich entlang des Transportweges wenigstens eine Transporteinheit bewegen kann, wobei die Transporteinheit so eingerichtet, dass sie eine Entnahme von Paketen aus einem Sendungsstrom von Paketen insbesondere anhand von Paketidentifikationsmerkmalen unterstützen kann, unter Einsatz der Transporteinheit ein Transport der Pakete von dem Sendungsstrom in Lagerpositionen der Depoteinrichtung ermöglicht wird und der Transport der Pakete durch die Transporteinheiten innerhalb der Depoteinrichtung unter Berücksichtigung der den jeweiligen Paketen anhand der Paketidentifikationsmerkmale zugeordneten Lagerpositionen steuerbar ist.

AF) Depoteinrichtung, vorzugsweise entsprechend AE, bei dem die Transfereinrichtung und/oder die Transporteinheit so eingerichtet sind, dass ein Transport von Paketen anhand von Paketidentifikationsmerkmalen aus den zugeordneten Lagerpositionen in der Depoteinrichtung zu einer Übergabeeinrichtung ermöglicht wird.

AG) Depoteinrichtung, vorzugsweise entsprechend AE, bei dem die Depoteinrichtung mindestens eine Übergabeeinrichtung für Übergaben von Paketen an gemeinsamen Übergabepunkten und mindestens eine Übergabeeinheit für Übergaben an von den gemeinsamen Übergabepunkten verschiedenen individuellen Übergabepunkten aufweist.

AH) System zur Übergabe einer Vielzahl von Paketen an mehrere Empfänger und/oder zur Entgegennahme einer Vielzahl von Paketen von mehreren Einlieferern, welches zur Durchführung eines Verfahrens zur Übergabe einer Vielzahl von Paketen an mehrere Empfänger und zur Entgegennahme einer Vielzahl von Paketen von mehreren Einlieferern eingerichtet ist, bei dem für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und für die Entgegennahme von den Einlieferern innerhalb eines bestimmten Übergabezeitraums ermittelt werden kann und die Übergabe an die Empfänger und die Entgegennahme von den Einlieferern an dem zugeordneten gemeinsamen optimierten Übergabepunkt innerhalb des vorgesehenen Übergabezeitraums erfolgen kann, wobei das System wenigstens ein Verteilzentrum und/oder wenigstens ein Zustelldepot aufweist und im Bereich des Verteilzentrums und/oder Zustelldepots wenigstens ein Mittel zum Transfer der Pakete an eine Transfereinrichtung aufweist, wobei das System eine Steuerkomponente aufweist, wobei die Steuerkomponente so eingerichtet ist, dass die Steuerkomponente die Transfereinrichtung so steuern kann, dass die Transfereinrichtung den Transport der Pakete entsprechend Steueranweisungen der Steuerkomponente durchführen kann, wobei die Pakete im Bereich der Transfereinrichtung als einzelne Pakete durch Transporteinheiten transportiert werden.

AI) System zur Übergabe einer Vielzahl von Paketen an mehrere Empfänger und/oder zur Entgegennahme einer Vielzahl von Paketen von mehreren Einlieferern vorzugsweise entsprechend AH, das eine Vielzahl von Depoteinrichtungen aufweist, wobei wenigstens ein Teil der Depoteinrichtungen als mobile Depoteinrichtungen ausgebildet ist, wobei das System wenigstens ein Verteilzentrum und/oder ein Zustelldepot aufweist und im Bereich des Verteilzentrums und/oder des Zustelldepots wenigstens ein Mittel zum Transfer der Pakete an die Transfereinrichtung aufweist, wobei die Steuerkomponente so eingerichtet ist, dass sie die Transfereinrichtung so steuern kann, dass die Transfereinrichtung den Transport der Pakete zu den Depoteinrichtungen entsprechend Steueranweisungen der Steuerkomponente durchführen kann und dass die Steuerkomponente ferner so eingerichtet ist, dass sie einen Transport der mobilen Depoteinrichtungen von der Transfereinrichtung zu Aufstellorten als gemeinsame optimierte Übergabepunkte für die Übergabe der Pakete steuern kann.

AJ) Verfahren zur Übergabe einer Vielzahl von Paketen an mehrere Empfänger und/oder zur Übergabe einer Vielzahl von Paketen von mehreren Einlieferern, bei dem für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und für die Entgegennahme von den Einlieferern innerhalb eines bestimmten Übergabezeitraums ermittelt wird, die Übergabe an die Empfänger und/oder die Entgegennahme von den Einlieferern an dem zugeordneten gemeinsamen optimierten Übergabepunkt innerhalb des vorgesehenen Übergabezeitraums erfolgt, die Auswahl des gemeinsamen Übergabepunktes nicht nur unter Einbeziehung des Aufwandparameters für den jeweiligen Empfänger, sondern auch unter Einbeziehung von Aufwandparametern für weitere Empfänger erfolgt und für die Auswahl des gemeinsamen Übergabepunktes ein oder mehrere für die Übergabe eines Pakets von dem Empfänger und/oder Einlieferer angegebene oder von dem Logistiksystem abgeschätzte Aufenthaltsorte und/oder eine oder mehrere vom Empfänger und/oder Einlieferer mitgeteilte oder vom Logistiksystem abgeschätzte Wegstrecken berücksichtigt werden.

AK) Verfahren zur Übergabe einer Vielzahl von Paketen an mehrere Empfänger und/ oder zur Entgegennahme einer Vielzahl von Paketen von mehreren Einlieferern, bei dem für mehrere Pakete aus einer Vielzahl möglicher räumlich voneinander getrennter Übergabepunkte unter Berücksichtigung wenigstens eines Aufwandsparameters jeweils ein gemeinsamer Übergabepunkt für die Übergabe an die jeweiligen Empfänger und/oder für die Entgegennahme von den Einlieferern innerhalb eines bestimmten Übergabezeitraums ermittelt wird und die Übergabe an die Empfänger und/oder die Entgegennahme von den Einlieferern an dem zugeordneten gemeinsamen Übergabepunkt innerhalb des vorgesehenen Übergabezeitraums erfolgt.

AL) Verfahren zur Übergabe einer Vielzahl von Paketen an mehrere Empfänger und/oder zur Entgegennahme von Paketen mehrerer Einlieferer, bei dem für mehrere Pakete aus einer Vielzahl möglicher räumlich voneinander getrennter Übergabepunkte unter Berücksichtigung wenigstens eines Aufwandsparameters wenigstens eines jeweiligen Empfängers und/oder wenigstens eines Einlieferers ein gemeinsamer optimierter Übergabepunkt für die Übergabe an die jeweiligen Empfänger und/oder Einlieferer innerhalb eines bestimmten Übergabezeitraums ermittelt wird, die Ermittlung des gemeinsamen optimierten Übergabepunktes durch eine Auswahl aus der Vielzahl möglicher räumlich voneinander getrennter Übergabepunkte mit wenigstens einem Auswahlschritt erfolgt, wobei der Auswahlschritt Aufwandsparameter für die Empfänger und/oder die Einlieferer berücksichtigt, bei denen sich innerhalb eines Übergabezeitraums für die Pakete ein jeweiliger Aufwandsparameter für die jeweiligen Empfängers und/oder Einlieferer möglichst gering ist.

AM) Verfahren zur Übergabe einer Vielzahl von Paketen an mehrere Empfänger und/ oder zur Entgegennahme einer Vielzahl von Paketen von mehreren Einlieferern vorzugsweise entsprechend AK, bei dem für mehrere Pakete an gemeinsamen Übergabepunkten Übergaben an die Empfänger und/oder Entgegennahmen unter Einsatz von Depoteinrichtungen erfolgen, die Depoteinrichtungen für eine gemeinsame Lagerung der mehreren Pakete und für die Übergabe der mehreren Pakete an die jeweiligen Empfänger und/oder zur Entgegennahme von den mehreren Einlieferern bereitgestellt werden, die für die Übergabe an den Übergabepunkten vorgesehenen Pakete in die Depoteinrichtungen eingebracht werden, wenigstens ein Teil der Depoteinrichtungen als mobile Depoteinrichtungen ausgebildet ist und die mobilen Depoteinrichtungen die Pakete zu ihnen zugeordneten gemeinsamen Übergabepunkten, insbesondere gemeinsamen optimierten Übergabepunkten, transportieren und während eines vorgesehenen Übergabezeitraums die Pakete in den mobilen Depoteinrichtungen gelagert und für die Übergabe an die Empfänger der Pakete unter Einsatz der Depoteinrichtungen bereitgestellt werden.

AN) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem die Auswahl des gemeinsamen, insbesondere des gemeinsam optimierten Übergabepunktes nicht nur unter Einbeziehung des Aufwandparameters für den jeweiligen Empfänger, sondern auch unter Einbeziehung von Aufwandparametern für weitere Empfänger erfolgt.

AO) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem für die Auswahl des gemeinsamen optimierten Übergabepunktes ein oder mehrere für die Übergabe wenigstens eines Pakets von dem Empfänger und/oder Einlieferer angegebene Aufenthaltsorte und/oder eine oder mehrere Wegstrecken des Empfängers und/oder Einlieferers berücksichtigt werden.

AP) Verfahren zur Übergabe einer Vielzahl von Paketen an mehrere Empfänger und/ oder zur Entgegennahme einer Vielzahl von Paketen von mehreren Einlieferern vorzugsweise entsprechend AK, bei dem für die Auswahl des gemeinsamen Übergabepunktes für mindestens einen Teil der Empfänger und/oder Einlieferer mehrere für die Übergabe wenigstens eines Pakets von dem Empfänger und/oder Einlieferer angegebene Aufenthaltsorte und/oder eine oder mehrere Wegstrecken des Empfängers und/oder Einlieferers berücksichtigt werden.

AQ) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem für die Auswahl des gemeinsamen optimierten Übergabepunktes für wenigstens einen Teil der Empfänger und/oder Einlieferer jeweils wenigstens ein für die Übergabe eines Pakets an den Empfänger und/oder von dem Einlieferer durch ein selbstlernendes System ermittelter Aufenthaltsort und oder eine ermittelte Wegstrecke berücksichtigt wird und dass die Übergabe an den jeweiligen Empfänger und/oder die Übergabe durch den Einlieferer an den gemeinsamen optimierten Übergabepunkte unter Berücksichtigung der durch das selbstlernende System ermittelten Aufenthaltsorte und oder ermittelten Wegstrecken erfolgt.

AR) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem die Auswahl des gemeinsamen optimierten Übergabepunktes und die Übergabe an den jeweiligen Empfänger und/oder die Übergabe durch die Einlieferer, wobei mehrere der Empfänger und/oder Einlieferer in einem ersten und einem zweiten Übergabezeitraum andere Aufenthaltsorte haben und/oder andere Wegstrecken zurücklegen, unter Berücksichtigung einer Wegstrecke zwischen den angegebenen Aufenthaltsorten erfolgt, die idealerweise vom Empfänger und/oder vom Einlieferer vorab mitgeteilt wurde oder ansonsten durch einen Routenalgorithmus abgeschätzt wird.

AS) Verfahren zur Übergabe einer Vielzahl von Paketen an mehrere Empfänger und/ oder zur Entgegennahme einer Vielzahl von Paketen von mehreren Einlieferern vorzugsweise entsprechend AK oder AL, bei dem der Übergabezeitraum kürzer als ein Tag ist, so dass eine tägliche oder sogar untertägige Optimierung der Übergabepunkte ermöglicht wird.

AT) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem die Ermittlung des gemeinsamen optimierten Übergabepunktes als ein mehrstufiger Prozess mit mehreren Auswahlschritten erfolgt und vor einem Auswahlschritt, der Aufwandsparameter für die Empfänger und/oder die Einlieferer berücksichtigt, mindestens ein anderer Auswahlschritt unter Berücksichtigung mindestens eines Eignungsparameters erfolgt und mindestens ein weiterer Auswahlschritt erfolgt.

AU) Verfahren zur Übergabe einer Vielzahl von Paketen an mehrere Empfänger und/ oder zur Entgegennahme einer Vielzahl von Paketen von mehreren Einlieferern vorzugsweise entsprechend AK oder AL, bei dem das Verfahren durch eine Steuerkomponente gesteuert wird.

AV) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem bei der Auswahl der gemeinsamen optimierten Übergabepunkte berücksichtigt wird, dass mehrere der Empfänger und/oder Einlieferer in einem ersten und einem zweiten Übergabezeitraum andere Aufenthaltsorte haben und/oder andere Wegstrecken zurücklegen.

AW) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem mindestens einer der weiteren Auswahlschritte einen Aufwand eines Betreibers des Logistiksystems zu einer Bereitstellung einer Depoteinrichtung an jeweiligen Standorten berücksichtigt.

AX) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem für mehrere Pakete wenigstens einer der möglichen Übergabepunkte ein Standort ist, der den gemeinsamen optimierten Übergabepunkt für die Übergabe an die jeweiligen Empfänger und/oder durch die jeweiligen Einlieferer bildet und an dem gemeinsamen optimierten Übergabepunkt eine Depoteinrichtung für eine gemeinsame Lagerung der mehreren Pakete und für die Übergabe der mehreren Pakete an die jeweiligen Empfänger der mehreren Pakete und/oder für die Einlieferung durch die jeweiligen Einlieferer der mehreren Pakete an dem zugeordneten gemeinsamen optimierten Übergabepunkt innerhalb des vorgesehenen Übergabezeitraums bereitgestellt wird.

AY) Verfahren zur Übergabe einer Vielzahl von Paketen an mehrere Empfänger und zur Entgegennahme einer Vielzahl von Paketen von mehreren Einlieferern vorzugsweise entsprechend AX, bei dem eine zusätzliche Integration einer lokalen Logistik im Bereich einer Depoteinrichtung dadurch erfolgt, dass zusätzlich zu den für die Übergabe an den gemeinsamen Übergabepunkten vorgesehenen Paketen Warenobjekte in die Depoteinrichtung eingeliefert, eingelagert und als Pakete an Empfänger übergeben werden.

AZ) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem die für die Übergabe an den Übergabepunkten vorgesehenen Pakete in die Depoteinrichtungen eingebracht werden, wenigstens ein Teil der Depoteinrichtungen als mobile Depoteinrichtungen ausgebildet sind und die mobilen Depoteinrichtungen die Pakete zu den ihnen zugeordneten gemeinsamen optimierten Übergabepunkten transportieren und während des vorgesehenen Übergabezeitraums die Pakete in den mobilen Depoteinrichtungen gelagert und für die Übergabe an die Empfänger der Pakete unter Einsatz der Depoteinrichtungen bereitgestellt werden.

BA) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem mehrere für die Übergabe an einem der gemeinsamen optimierten Übergabepunkte vorgesehene Pakete zu einer Transfereinrichtung transportiert und im Bereich der Transfereinrichtung als einzelne Pakete zu den mobilen Depoteinrichtungen transportiert und als einzelne Pakete so in eine der mobilen Depoteinrichtungen eingebracht werden, dass eine Einlagerung der Pakete in Lagerpositionen einer Lagereinrichtung der Depoteinrichtung unter Berücksichtigung von Paketidentifikationsmerkmalen erfolgt.

BB) Verfahren zur Übergabe einer Vielzahl von Paketen an mehrere Empfänger und/ oder zur Entgegennahme einer Vielzahl von Paketen von mehreren Einlieferern vorzugsweise entsprechend BA, bei dem ein vereinzelter Transfer der Pakete mittels wenigstens einer verfahrbaren Transporteinheit erfolgt, wobei die verfahrbare Transporteinheit so steuerbar ist, dass sie die vereinzelten Pakete in die Lagerpositionen der Lagereinrichtung der Depoteinrichtungen unter Berücksichtigung der Paketidentifikationsmerkmale transferieren kann.

BC) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem während eines Aufenthaltes der Depoteinrichtung im Bereich der Transfereinrichtung zu den im Bereich der Transfereinrichtung als einzelne Pakete transferierten Paketen jeweils folgende Datenelemente an die Depoteinrichtung übermittelt werden:
- Wenigstens eines der Paketidentifikationsmerkmale, das geeignet ist, eine zuverlässige Identifikation eines jeweiligen Pakets zu ermöglichen und
- eine Information zu einer Identifizierung der Lagerposition innerhalb der Lagereinrichtung der Depoteinrichtung, insbesondere für die Einlagerung des jeweiligen Pakets.

BD) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem zusätzlich zu den mehreren Paketen, die an dem zugeordneten gemeinsamen optimierten Übergabepunkt innerhalb des vorgesehenen Übergabezeitraums in der Depoteinrichtung bereitgestellt werden, weitere Pakete in die Depoteinrichtung eingeliefert werden.

BE) Verfahren zur Übergabe einer Vielzahl von Paketen an mehrere Empfänger und/ oder zur Entgegennahme einer Vielzahl von Paketen von mehreren Einlieferern vorzugsweise entsprechend AL, bei dem ein Teil der am gemeinsamen optimierten Übergabepunkt, insbesondere in Depoteinrichtungen befindlichen Pakete nach Ablauf des Übergabezeitraums für die mehreren Pakete zu einer Transfereinrichtung transportiert wird, sofern sie während des ursprünglichen Übergabezeitraums nicht abgeholt werden.

BF) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem in der Depoteinrichtung gelagerte Pakete auf eine empfangene Ausgabeaufforderung hin innerhalb der Depoteinrichtung in eine Übergabeeinrichtung transportiert und dort den Empfängern der Pakete zugänglich gemacht werden.

BG) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem in einer der Depoteinrichtungen gelagerte Pakete auf eine empfangene Ausgabeaufforderung hin innerhalb der Depoteinrichtung durch eine Transporteinheit in eine Übergabeeinrichtung transportiert und/oder mittels einer Übergabeeinheit zu jeweiligen Empfängern transportiert werden und dass die Pakete durch die Übergabeeinrichtung und/oder die Übergabeeinheit den jeweiligen Empfängern zugänglich gemacht werden.

BH) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem eine Einlieferung eines Pakets durch einen Einlieferer in die Depoteinrichtung folgende Verfahrensschritte beinhaltet:
- Erfassen wenigstens eines Paketidentifikationsmerkmals, gegebenenfalls auch durch eine Benutzerkomponente;
- Aktivierung einer Übergabeeinrichtung,
- Zuordnung einer Lagerposition einer Lagereinrichtung der Depoteinrichtung zu dem Paket unter Berücksichtigung des Paketidentifikationsmerkmals
- Transport des Pakets in eine Lagerposition einer Lagereinrichtung der Depoteinrichtung.

BI) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem der Transport des Pakets in die Lagerposition der Lagereinrichtung der Depoteinrichtung durch eine Transporteinheit unterstützt wird.

BJ) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem eine Einlieferung eines Paketes in eine Übergabeeinheit durch einen Einlieferer folgende Verfahrensschritte beinhaltet:
- Aktivierung einer Übergabeeinheit;
- Erfassen wenigstens eines Paketidentifikationsmerkmals, gegebenenfalls auch durch eine Benutzerkomponente;
- Übergabe des Pakets an die Übergabeeinheit;
- Transport des Pakets zu der Depoteinrichtung;
- Zuordnung einer Lagerposition einer Lagereinrichtung der Depoteinrichtung zu dem Paket unter Berücksichtigung des Paketidentifikationsmerkmals;
- Transport des Pakets in die Lagerposition der Lagereinrichtung der Depoteinrichtung.

BK) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem wenigstens eine Depoteinrichtung eingesetzt wird, wobei die Depoteinrichtung eine Lagereinrichtung mit wenigstens einem Lagerregal aufweist und wobei Fächer des Lagerregals Lagerpositionen der Depoteinrichtung bilden und eine Anzahl und/oder wenigstens eine Abmessung der Fächer variabel ist und die Anzahl und/oder die Abmessung der Fächer in Abhängigkeit von einer Anzahl und/oder einer Abmessung von in die Depoteinrichtung einzuliefernden und einzulagernden Pakete variabel angepasst wird.

BL) Verfahren zur Übergabe einer Vielzahl von Paketen an mehrere Empfänger und/ oder zur Entgegennahme einer Vielzahl von Paketen von mehreren Einlieferern vorzugsweise entsprechend BK, bei dem die variable Anpassbarkeit der Anzahl und/oder der Abmessungen der Fächer von Depoteinrichtungen bei einer Ermittlung gemeinsamer optimierter Übergabepunkte für eine Übergabe der Pakete an die jeweiligen Empfänger und/oder für die Einlieferung von den Einlieferern der Pakete innerhalb eines bestimmten Übergabezeitraums berücksichtigt wird.

BM) Verfahren zur Übergabe einer Vielzahl von Paketen an mehrere Empfänger und/ oder zur Entgegennahme einer Vielzahl von Paketen von mehreren Einlieferern vorzugsweise entsprechend AX, bei dem die für die Übergabe an den Übergabepunkten vorgesehenen Pakete in die Depoteinrichtungen eingebracht werden, wenigstens ein Teil der Depoteinrichtungen als mobile Depoteinrichtungen ausgebildet sind und die mobilen Depoteinrichtungen die Pakete zu den ihnen zugeordneten gemeinsamen optimierten Übergabepunkten transportieren und während des vorgesehenen Übergabezeitraums die Pakete in den mobilen Depoteinrichtungen gelagert und für die Übergabe an die Empfänger der Pakete unter Einsatz der Depoteinrichtungen bereitgestellt werden.

BN) Verfahren zur Übergabe einer Vielzahl von Paketen an mehrere Empfänger, insbesondere Verfahren vorzugsweise entsprechend AK oder AL, bei dem von einem Bestellsystem zur Bearbeitung von Bestellaufträgen von Kunden, eine Bestellung einer Ware wenigstens eines der Kunden als Bestellauftrag angenommen wird, dass auf Grundlage des Bestellauftrages von dem Bestellsystem ein Auftrag zur Durchführung einer Übergabe des Pakets an einen Empfänger an eine Steuerkomponente eines Logistiksystems übermittelt wird, dass der Bestellauftrag ein dem Empfänger zugeordnetes Empfängeridentifikationsmerkmal beinhaltet, dass die Steuerkomponente überprüft, ob zu dem Empfängeridentifikationsmerkmal ein Empfängerdatensatz mit Lokalisierungsinformationen vorliegt und dass bei Vorliegen des Empfängerdatensatzes mit Lokalisierungsinformationen wenigstens ein Bearbeitungsvorgang des Logistiksystems unter Berücksichtigung der Lokalisierungsinformationen erfolgt.

BO) Depoteinrichtung, insbesondere zur Verwendung in einem Verfahren entsprechend AK oder AL, die als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist.

BP) Depoteinrichtung vorzugsweise entsprechend BO, die sie mindestens eine Transporteinheit, die außerhalb der Depoteinrichtung verfahrbar ist, enthält.

BQ) Depoteinrichtung vorzugsweise entsprechend BO, bei der die Transporteinheit als Transfermittel für einen Transfer von Paketen zwischen der Depoteinrichtung und einer Transfereinrichtung ausgebildet ist.

BR) Depoteinrichtung vorzugsweise entsprechend BO, bei der die Übergabeeinrichtung und/oder eine Übergabeeinheit als eine Ausgabeeinheit für eine Ausgabe von Paketen an Empfänger und/oder als eine Annahmeeinheit für eine Annahme von Paketen eines Einlieferers ausgebildet sind.

BS) Depoteinrichtung, vorzugsweise entsprechend BR, bei der die Übergabeeinheit einen Transport eines Pakets zwischen der Depoteinrichtung und einem individuellen Übergabepunkt für einen einzelnen Empfänger des Paketes und/oder einen einzelnen Einlieferer des Pakets durchführen kann.

BT) Depoteinrichtung, vorzugsweise entsprechend BR, bei der die Übergabeeinheit an dem individuellen Übergabepunkt für den einzelnen Empfänger die Ausgabe des Pakets an den Empfänger und/oder die Annahme des Pakets von dem Einlieferer durchführen kann.

BU) Depoteinrichtung vorzugsweise entsprechend BO, bei der die Transporteinheit von einem Standort der Depoteinrichtung ausgehend autonom einen Transport als Übergabeeinheit zu dem individuellen Übergabepunkt für den einzelnen Empfänger und/oder für den einzelnen Einlieferer durchführen kann und an dem individuellen Übergabepunkt die Ausgabe des Pakets an den Empfänger und/oder die Annahme des Pakets von dem Einlieferer durchführen kann.

BV) Depoteinrichtung vorzugsweise entsprechend BO, die für eine Lagerung und Bereitstellung mehrerer Pakete ausgebildet ist und wenigstens zwei verschiedene Belademodi und/oder wenigstens zwei verschiedene Entlademodi aufweist.

BW) Depoteinrichtung vorzugsweise entsprechend BV, die in einem ersten Belademodus eine unterbrechungsfreie Wegstrecke zwischen einer Umgebung der Depoteinrichtung und einem Innenraum der Depoteinrichtung gebildet ist.

BX) Depoteinrichtung vorzugsweise entsprechend BV, bei der in einem zweiten Belademodus eine individuelle Einlagerung eines Pakets unter Einsatz einer Schleuse erfolgen kann.

BY) Depoteinrichtung vorzugsweise entsprechend BV, bei der in einem ersten Entlademodus eine unterbrechungsfreie Wegstrecke zwischen einem Innenraum der Depoteinrichtung und einer Umgebung der Depoteinrichtung gebildet ist.

BZ) Depoteinrichtung vorzugsweise entsprechend BV, bei der in einem zweiten Entlademodus eine individuelle Übergabe eines Pakets an einen Empfänger unter Einsatz der Schleuse erfolgen kann.

CA) Logistikfahrzeug, das eine Depoteinrichtung, vorzugsweise entsprechend BO enthält.

CB) Verwendung einer Depoteinrichtung, bei der die Depoteinrichtung zur Durchführung eines Verfahrens zur Übergabe einer Vielzahl von Paketen an mehrere Empfänger und/ oder zur Entgegennahme einer Vielzahl von Paketen von mehreren Einlieferern, bereitgestellt wird, in dem für mehrere Pakete aus einer Vielzahl möglicher räumlich voneinander getrennter Übergabepunkte unter Berücksichtigung wenigstens eines Aufwandsparameters ein gemeinsamer optimierter Übergabepunkt für die Übergabe an die jeweiligen Empfänger und für die Entgegennahme von den jeweiligen Einlieferern innerhalb eines bestimmten Übergabezeitraums ermittelt wird und die Übergabe an die Empfänger und/oder die Entgegennahme von den Einlieferern an dem zugeordneten gemeinsamen optimierten Übergabepunkt innerhalb des vorgesehenen Übergabezeitraums erfolgt.

CC) Verwendung einer Depoteinrichtung, bei der die Depoteinrichtung im Bereich eines Verteilzentrums und/ oder eines Zustelldepots als Zwischenspeicher für Pakete eingesetzt wird.

CD) Verwendung einer Depoteinrichtung, bei der die Depoteinrichtung während einer Aufstellung an einem gemeinsamen optimierten Übergabepunkt innerhalb eines vorgesehenen Übergabezeitraums zur Durchführung des Verfahrens entsprechend AA oder AB an einem gemeinsamen optimierten Übergabepunkt für eine gemeinsame Lagerung mehrerer Pakete und für die Übergabe an Empfänger und/oder von Einlieferern der mehreren Pakete bereitgestellt wird und die Depoteinrichtung während einer Aufstellung im Bereich eines Verteilzentrums und/oder eines Zustelldepots als Zwischenspeicher für Pakete eingesetzt wird.

CE) Verwendung einer Depoteinrichtung, bei der eine Beladung der Depoteinrichtung in einem Bereich des Verteilzentrums und/oder des Zustelldepots so erfolgt, dass eine Tür, die möglichst eine vollständige Rückseite des Depoteinrichtung einnimmt, so weit geöffnet wird, dass die Depoteinrichtung schnell beladen und/oder entladen werden kann.

CF) System zur Übergabe einer Vielzahl von Paketen an mehrere Empfänger und/oder zur Entgegennahme einer Vielzahl von Paketen von mehreren Einlieferern, welches zur Durchführung eines Verfahrens zur Übergabe einer Vielzahl von Paketen an mehrere Empfänger und zur Entgegennahme einer Vielzahl von Paketen von mehreren Einlieferern eingerichtet ist, für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und/oder für die Entgegennahme von den Einlieferern innerhalb eines bestimmten Übergabezeitraums ermittelt werden kann und die Übergabe an die Empfänger und die Entgegennahme von den Einlieferern an dem zugeordneten gemeinsamen optimierten Übergabepunkt innerhalb des vorgesehenen Übergabezeitraums erfolgen kann.

CG) System zur Übergabe einer Vielzahl von Paketen an mehrere Empfänger und/oder zur Entgegennahme einer Vielzahl von Paketen von mehreren Einlieferern vorzugsweise entsprechend CF, bei dem es ein Mittel zur Auswahl eines gemeinsamen optimierten Übergabepunktes aus der Vielzahl der möglichen Übergabepunkte für die Übergabe an die jeweiligen Empfänger und/oder zur Entgegennahme von den jeweiligen Einlieferern innerhalb des vorgesehenen Übergabezeitraums aufweist und es eine Depoteinrichtung für eine Übergabe an den Empfänger und/oder zur Entgegennahme von den jeweiligen Einlieferern an dem gemeinsamen optimierten Übergabepunkt innerhalb des vorgesehenen Übergabezeitraums aufweist.

CH) System zur Übergabe einer Vielzahl von Paketen an mehrere Empfänger und/oder zur Entgegennahme einer Vielzahl von Paketen von mehreren Einlieferern vorzugsweise entsprechend CF, bei dem eine zusätzliche Integration einer lokalen Logistik mit Ausgabe und Entgegennahme von Paketen im Bereich einer Depoteinrichtung dadurch erfolgt, dass zusätzlich zu den für die Übergabe an den gemeinsamen Übergabepunkten vorgesehenen Paketen Warenobjekte in die Depoteinrichtung eingeliefert, eingelagert und als Pakete übergeben werden können.

CI) System zur Übergabe einer Vielzahl von Paketen an mehrere Empfänger und/oder zur Entgegennahme einer Vielzahl von Paketen von mehreren Einlieferern vorzugsweise entsprechend CF, bei dem mindestens ein Teil der Warenobjekte an der Depoteinrichtung, an der sie als Pakete übergeben wurden, ausgegeben werden kann.

CJ) System zur Übergabe einer Vielzahl von Paketen an mehrere Empfänger und/oder zur Entgegennahme einer Vielzahl von Paketen von mehreren Einlieferern vorzugsweise entsprechend CF, bei dem es ein Mittel zur Erfassung einer Vielzahl von möglichen Standorten für Depoteinrichtungen, insbesondere mobile Depoteinrichtungen aufweist und es ein Mittel zur Zuordnung der Depoteinrichtungen, insbesondere der mobilen Depoteinrichtungen zu den gemeinsamen optimierten Übergabepunkten als Standorte für die Depoteinrichtungen, insbesondere für die mobilen Depoteinrichtungen, enthält.

CK) System zur Übergabe einer Vielzahl von Paketen an mehrere Empfänger und/oder zur Entgegennahme einer Vielzahl von Paketen von mehreren Einlieferern vorzugsweise entsprechend CF, bei dem es wenigstens ein Mittel zur Steuerung von Transfereinrichtungen aufweist, wobei die Transfereinrichtungen so gesteuert werden können, dass die für eine Übergabe an einem Übergabepunkt, insbesondere an einem gemeinsam optimierten Übergabepunkt, vorgesehenen Pakete in die dem Übergabepunkt, insbesondere dem gemeinsam optimierten Übergabepunkt, zugeordnete mobile Depoteinrichtung transportiert werden.

CL) System zur Übergabe einer Vielzahl von Paketen an mehrere Empfänger und/oder zur Entgegennahme einer Vielzahl von Paketen von mehreren Einlieferern vorzugsweise entsprechend CF, bei dem es Mittel zur Übermittelung von geographischen Informationen zu den gemeinsamen optimierten Übergabepunkten an die Depoteinrichtungen und/oder ein Transportmittel zum Transport der Depoteinrichtungen enthält, so dass ein Transport der Depoteinrichtungen zu den gemeinsamen optimierten Übergabepunkten unter Berücksichtigung der geographischen Informationen erfolgen kann.

CM) System zur Übergabe einer Vielzahl von Paketen an mehrere Empfänger und/oder zur Entgegennahme einer Vielzahl von Paketen von mehreren Einlieferern vorzugsweise entsprechend CF, bei dem es als Logistiksystem mit zugeordnetem Bestellsystem ausgebildet ist, das Bestellsystem so ausgestaltet ist, dass für eine Auswahl der gemeinsamen optimierten Übergabepunkte für die Pakete mehrere Übergabepunkte unter Berücksichtigung eines selbstlernendes Systems ausgewählt werden können und die Übergabe an die jeweiligen Empfänger und/oder die Einlieferung durch die jeweiligen Einlieferer an den gemeinsamen optimierten Übergabepunkten unter Berücksichtigung der durch das selbstlernende System ausgewählten Übergabepunkte erfolgt.

CN) Benutzerkomponente zur Interaktion mit einem System vorzugsweise entsprechend CF, welche einen Prozessor zur Steuerung von Funktionen der Benutzerkomponente enthält, wobei die Benutzerkomponente wenigstens ein Positionsbestimmungsmittel enthält, wobei das Positionsbestimmungsmittel so eingerichtet ist, dass es Positionen der Benutzerkomponente als Lokalisierungsinformationen eines Benutzers der Benutzerkomponente erfassen kann, die Benutzerkomponente ein Mittel zum Übertragen der Lokalisierungsinformationen an das System enthält, die Benutzerkomponente mit einem gegen unberechtigte Zugriffe besonders geschützten Speichermittel zur Speicherung von Datenschutzanforderungen eines Benutzers der Benutzerkomponente zusammenwirken kann, die Datenschutzanforderungen des Benutzers eine ortsabhängige Festlegung, welche Lokalisierungsinformationen zur Lokalisierung der Benutzerkomponente an das System übermittelt werden, beinhalten, der Prozessor eine Auswertung vornimmt, in welchem Umfang und/oder mit welcher Genauigkeit eine Übermittelung der Lokalisierungsinformationen den Datenschutzanforderungen des Benutzers entspricht und eine Übermittlung der Lokalisierungsinformationen an das System nur in dem Umfang und/oder mit der Genauigkeit erfolgt, die den Datenschutzanforderungen des Benutzers entspricht.

CO) Benutzer-App zur Interaktion mit einem System vorzugsweise entsprechend CF, wobei die Benutzer-App eingerichtet ist, Lokalisierungsinformationen eines Benutzers an eine Steuerkomponente des Systems zu übermitteln, wobei die Benutzer-App mit einem gegen unberechtigte Zugriffe besonders geschützten Speichermittel zur Speicherung von Datenschutzanforderungen des Benutzers zusammenwirken kann, wobei die Datenschutzanforderungen des Benutzers eine Festlegung, welche Lokalisierungsinformationen zur Lokalisierung der Benutzerkomponente an das System übermittelt werden, beinhalten, der Prozessor eine Auswertung vornimmt, in welchem Umfang und/oder mit welcher Genauigkeit eine Übermittelung der Lokalisierungsinformationen den Datenschutzanforderungen des Benutzers entspricht und eine Übermittlung der Lokalisierungsinformationen an das System nur in dem Umfang und/oder mit der Genauigkeit erfolgt, die sowohl den Datenschutzanforderungen des Benutzers als auch dem Umfang entspricht, der erforderlich ist, eine Auswahl gemeinsamer optimierter Übergabepunkte durch Übermittelung der Lokalisierungsinformationen zu unterstützen und/oder eine Paketübergabe in unmittelbarer Nähe eines Übergabemittels zu unterstützen.

CP) System zur Übergabe einer Vielzahl von Paketen an mehrere Empfänger und/oder zur Entgegennahme einer Vielzahl von Paketen von mehreren Einlieferern, welches eine Vielzahl möglicher räumlich voneinander getrennter Übergabepunkte aufweist, wobei es ein Mittel zur Auswahl eines gemeinsamen optimierten Übergabepunktes aus der Vielzahl der möglichen Übergabepunkte für die Übergabe an die jeweiligen Empfänger innerhalb des vorgesehenen Übergabezeitraums aufweist und es eine Vielzahl von Depoteinrichtungen für eine Übergabe an die Empfänger und/oder von den Einlieferern an dem gemeinsamen optimierten Übergabepunkt innerhalb des vorgesehenen Übergabezeitraums aufweist und eine Steuerkomponente den Transport der Pakete zu der Depoteinrichtung steuert.

CQ) System zur Übergabe einer Vielzahl von Paketen an mehrere Empfänger und/oder zur Entgegennahme einer Vielzahl von Paketen von mehreren Einlieferern vorzugsweise entsprechend CP, bei dem es eine Vielzahl von Depoteinrichtungen aufweist, wobei wenigstens ein Teil der Depoteinrichtungen als mobile Depoteinrichtungen ausgebildet ist, das System wenigstens ein Verteilzentrum und/oder Zustelldepot aufweist und es im Bereich des Verteilzentrums und/oder oder des Zustelldepots wenigstens ein Mittel zum Transfer der Pakete an eine Transfereinrichtung aufweist, die Steuerkomponente so eingerichtet ist, dass sie die Transfereinrichtung so steuern kann, dass die Transfereinrichtung den Transport der Pakete zu den Depoteinrichtungen entsprechend Steueranweisungen der Steuerkomponente durchführen kann und die Steuerkomponente ferner so eingerichtet ist, dass sie einen Transport der mobilen Depoteinrichtungen von der Transfereinrichtung zu Aufstellorten als gemeinsame optimierte Übergabepunkte für die Übergabe der Pakete steuern kann.

CR) System zur Übergabe einer Vielzahl von Paketen an mehrere Empfänger und/oder zur Entgegennahme einer Vielzahl von Paketen von mehreren Einlieferern vorzugsweise entsprechend CQ, bei dem die Transfereinrichtung Transporteinheiten zur Unterstützung einer Einlagerung der Pakete in Lagerpositionen von Lagereinrichtungen der Depoteinrichtungen aufweist.

CS) System zur Übergabe einer Vielzahl von Paketen an mehrere Empfänger und/oder zur Entgegennahme einer Vielzahl von Paketen von mehreren Einlieferern vorzugsweise entsprechend CQ, bei dem wenigstens ein Teil der Transporteinheiten der Transfereinrichtung in andere Bereiche des Verteilzentrums, beziehungsweise Zustelldepots und/oder der Depoteinrichtungen transportiert werden kann.

CT) System zur Übergabe einer Vielzahl von Paketen an mehrere Empfänger und/oder zur Entgegennahme einer Vielzahl von Paketen von mehreren Einlieferern vorzugsweise entsprechend CP, bei dem die Steuerkomponente Informationen zu Paketidentifikationsmerkmalen an die Transfereinrichtung weitergibt, so dass die Einlagerung der Pakete in die Lagerpositionen der Lagereinrichtungen der Depoteinrichtungen auf Grundlage der Paketidentifikationsmerkmale erfolgen kann.

CU) System zur Übergabe einer Vielzahl von Paketen an mehrere Empfänger und/oder zur Entgegennahme einer Vielzahl von Paketen von mehreren Einlieferern vorzugsweise entsprechend CP, bei dem eine zusätzliche Integration einer lokalen Logistik mit Übergabe und Entgegennahme von Paketen im Bereich einer Depoteinrichtung dadurch erfolgt, zusätzlich zu den für die Übergabe an den gemeinsamen Übergabepunkten vorgesehenen Paketen Warenobjekte in die Depoteinrichtung eingeliefert, eingelagert und als Pakete übergeben werden können.

CV) System zur Übergabe einer Vielzahl von Paketen an mehrere Empfänger und/oder zur Entgegennahme einer Vielzahl von Paketen von mehreren Einlieferern vorzugsweise entsprechend CP, bei dem die Steuerkomponente ein Mittel zur Übermittelung von geographischen Informationen zu den gemeinsamen optimierten Übergabepunkten an die Depoteinrichtungen und/oder zu einem Transportmittel für einen Transport der Depoteinrichtungen enthält, so dass ein Transport der Depoteinrichtungen zu den gemeinsamen optimierten Übergabepunkten unter Berücksichtigung der geographischen Informationen erfolgen kann.

CW) System zur Übergabe einer Vielzahl von Paketen an mehrere Empfänger und/oder zur Entgegennahme einer Vielzahl von Paketen von mehreren Einlieferern vorzugsweise entsprechend CP, bei dem es als Logistiksystem mit zugeordnetem Bestellsystem ausgebildet ist, wobei das Bestellsystem so ausgestaltet ist, dass für eine Auswahl der gemeinsamen optimierten Übergabepunkte für die Pakete mehrere Übergabepunkte unter Berücksichtigung eines selbstlernendes Systems ermittelt werden können und die Übergabe an die jeweiligen Empfänger und/oder die Einlieferung durch die jeweiligen Einlieferer an den gemeinsamen optimierten Übergabepunkten unter Berücksichtigung der durch das selbstlernende System ausgewählten erwarteten Aufenthaltsorte und/oder erwarteten Wegstrecken erfolgt.

CX) System zur Übergabe einer Vielzahl von Paketen an mehrere Empfänger und/oder zur Entgegennahme einer Vielzahl von Paketen von mehreren Einlieferern, welches zur Durchführung eines Verfahrens zur Übergabe einer Vielzahl von Paketen an mehrere Empfänger und zur Entgegennahme einer Vielzahl von Paketen von mehreren Einlieferern eingerichtet ist, wobei für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und für die Entgegennahme von den Einlieferern innerhalb eines bestimmten Übergabezeitraums ermittelt werden kann und die Übergabe an die Empfänger und die Entgegennahme von den Einlieferern an dem zugeordneten gemeinsamen optimierten Übergabepunkt innerhalb des vorgesehenen Übergabezeitraums erfolgen kann.

CY) System zum Transfer einer Vielzahl von Paketen, wobei das System wenigstens ein Verteilzentrum und/oder wenigstens ein Zustelldepot aufweist und das System im Bereich des Verteilzentrum und/oder Zustelldepots wenigstens ein Mittel zum Transfer der Pakete an eine Transfereinrichtung aufweist, das System eine Steuerkomponente aufweist, wobei die Steuerkomponente so eingerichtet ist, dass die Steuerkomponente die Transfereinrichtung so steuern kann, dass die Transfereinrichtung den Transport der Pakete entsprechend Steueranweisungen der Steuerkomponente durchführen kann, wobei die Pakete im Bereich der Transfereinrichtung als einzelne Pakete durch Transporteinheiten transportiert werden.

CZ) System zum Transfer einer Vielzahl von Paketen vorzugsweise entsprechend CY, bei dem es wenigstens ein Mittel zur Steuerung der Transfereinrichtung aufweist, wobei die Transfereinrichtung so gesteuert werden kann, dass für eine Ausgabe an einem Übergabepunkt in eine dem Übergabepunkt zugeordnete mobile Depoteinrichtung transportiert werden.

DA) System zum Transfer einer Vielzahl von Paketen vorzugsweise entsprechend CZ, bei dem es Mittel zur Übermittelung von geographischen Informationen zu gemeinsamen optimierten Übergabepunkten an mehrere Depoteinrichtungen und/oder an Transportmittel zum Transport der Depoteinrichtungen enthält, so dass ein Transport der Depoteinrichtungen zu gemeinsamen optimierten Übergabepunkten unter Berücksichtigung der geographischen Informationen erfolgen kann.

DB) System zum Transfer einer Vielzahl von Paketen vorzugsweise entsprechend CY, bei dem es eine Vielzahl von Depoteinrichtungen aufweist, wobei wenigstens ein Teil der Depoteinrichtungen als mobile Depoteinrichtungen ausgebildet ist, das System wenigstens ein Verteilzentrum und/oder ein Zustelldepot aufweist und es im Bereich des Verteilzentrums und/oder oder des Zustelldepots wenigstens ein Mittel zum Transfer der Pakete an die Transfereinrichtung aufweist, die Steuerkomponente so eingerichtet ist, dass sie die Transfereinrichtung so steuern kann, dass die Transfereinrichtung den Transport der Pakete zu den Depoteinrichtungen entsprechend Steueranweisungen der Steuerkomponente durchführen kann und die Steuerkomponente ferner so eingerichtet ist, dass sie einen Transport der mobilen Depoteinrichtungen von der Transfereinrichtung zu Aufstellorten als gemeinsame optimierte Übergabepunkte für die Übergabe der Pakete steuern kann.

DC) System zum Transfer einer Vielzahl von Paketen vorzugsweise entsprechend DB, bei dem die Transporteinheiten der Transfereinrichtung zur Unterstützung einer Einlagerung der Pakete in Lagerpositionen von Lagereinrichtungen der Depoteinrichtungen eingerichtet sind.

DD) System zum Transfer einer Vielzahl von Paketen vorzugsweise entsprechend CY, bei dem die Steuerkomponente Informationen zu Paketidentifikationsmerkmalen an die Transfereinrichtung weitergibt, so dass eine Einlagerung der Pakete in die Lagerpositionen der Lagereinrichtungen der Depoteinrichtungen auf Grundlage der Paketidentifikationsmerkmale erfolgen kann

DE) Verteilzentrum für Pakete, welches Mittel zum vereinzelten Transport der Pakete enthält, wobei es Transfereinrichtungen zur vereinzelten Ausgabe der Pakete und Mittel zur vereinzelten Ausschleusung der Pakete zu den Transfereinrichtungen enthält.

DF) Bestellsystem zur Bearbeitung von Bestellaufträgen von Kunden, wobei das Bestellsystem so eingerichtet ist, dass jeder Kunde des Bestellsystems die Möglichkeit hat, eine Bestellung einer Ware vorzunehmen und wobei auf Grundlage der Bestellung des Kunden ein Versand der Ware als ein Paket an einen Empfänger erfolgt, wobei es mit einem Logistiksystem verknüpft ist, das eine Vielzahl möglicher räumlich voneinander getrennter Übergabepunkte aufweist, es ein Mittel zur Auswahl eines gemeinsamen optimierten Übergabepunktes aus der Vielzahl der möglichen Übergabepunkte für die Übergabe an die jeweiligen Empfänger innerhalb des vorgesehenen Übergabezeitraums aufweist und dass es eine Depoteinrichtung für eine Übergabe an den Empfänger an dem zugeordneten Übergabepunkt innerhalb des vorgesehenen Übergabezeitraums aufweist.

DG) Verfahren zur Übergabe einer Vielzahl von Paketen an mehrere Empfänger und/ oder zur Übergabe einer Vielzahl von Paketen von mehreren Einlieferern, wobei für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und für die Entgegennahme von den Einlieferern innerhalb eines bestimmten Übergabezeitraums ermittelt wird und die Übergabe an die Empfänger und/oder die Entgegennahme von den Einlieferern an dem zugeordneten gemeinsamen optimierten Übergabepunkt innerhalb des vorgesehenen Übergabezeitraums erfolgt.

DH) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem die Auswahl des gemeinsamen Übergabepunktes nicht nur unter Einbeziehung des Aufwandparameters für den jeweiligen Empfänger und/oder für den jeweiligen Einlieferer, sondern auch unter Einbeziehung von Aufwandparametern für weitere Empfänger und/oder weitere Einlieferer erfolgt.

DI) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem für die Auswahl des gemeinsamen Übergabepunktes ein oder mehrere für die Übergabe eines Pakets von dem Empfänger und/oder Einlieferer angegebene Aufenthaltsorte und/oder eine oder mehrere Wegstrecken des Empfängers und/oder Einlieferers berücksichtigt werden.

DJ) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem für die Auswahl des gemeinsamen optimierten Übergabepunktes für wenigstens einen Teil der Empfänger und/oder Einlieferer jeweils wenigstens ein für die Übergabe eines Pakets an den Empfänger und/oder von dem Einlieferer durch ein selbstlernendes System ausgewählter erwarteter Aufenthaltsort und/oder eine erwartete Wegstrecke berücksichtigt wird und die Übergabe an den jeweiligen Empfänger und/oder die Übergabe durch den Einlieferer an den gemeinsamen optimierten Übergabepunkten unter Berücksichtigung der durch das selbstlernende System ausgewählten erwarteten Aufenthaltsorte und/oder erwarteten Wegstrecken erfolgt.

DK) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem die Auswahl des gemeinsamen optimierten Übergabepunktes und die Übergabe an den jeweiligen Empfänger und/oder die Übergabe durch die Einlieferer unter Berücksichtigung einer Wegstrecke zwischen den angegebenen Aufenthaltsorten erfolgt, die vom Empfänger und/oder vom Einlieferer vorab mitgeteilt wurde oder ansonsten durch einen Routenalgorithmus abgeschätzt wird.

DL) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem der Übergabezeitraum kürzer als ein Tag ist, so dass eine tägliche oder sogar untertägige Optimierung der Übergabepunkte ermöglicht wird.

DM) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem die Ermittlung des gemeinsamen optimierten Übergabepunktes als ein mehrstufiger Prozess mit mehreren Auswahlschritten erfolgt und vor einem Auswahlschritt, der Aufwandsparameter für die Empfänger und/oder die Einlieferer berücksichtigt, mindestens ein anderer Auswahlschritt unter Berücksichtigung mindestens eines Eignungsparameters erfolgt und mindestens ein weiterer Auswahlschritt erfolgt.

DN) Verfahren zur Übergabe einer Vielzahl von Paketen an mehrere Empfänger und/ oder zur Übergabe einer Vielzahl von Paketen von mehreren Einlieferern vorzugsweise entsprechend DM, bei dem mindestens einer der weiteren Auswahlschritte einen Aufwand eines Betreibers des Logistiksystems zu einer Bereitstellung einer Depoteinrichtung an jeweiligen Standorten berücksichtigt.

DO) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem bei der Auswahl der gemeinsamen optimierten Übergabepunkte berücksichtigt wird, dass mehrere der Empfänger und/oder Einlieferer in einem ersten und einem zweiten Übergabezeitraum andere Aufenthaltsorte haben und/oder andere Wegstrecken zurücklegen.

DP) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem bei der Ermittlung des gemeinsamen optimierten Übergabepunktes ein Standort für eine Depoteinrichtung so optimiert wird, dass für möglichst viele Empfänger und/oder Einlieferer von Paketen, insbesondere für alle Empfänger von Paketen aus der jeweiligen Depoteinrichtung und für alle Einlieferer von Paketen in die jeweilige Depoteinrichtung für Übergaben innerhalb des vorgesehenen Übergabezeitraums eine Summe von distanzmäßigen Abweichungen zu ohnehin-Wegstrecken und/oder ohnehin-Orten minimiert wird.

DQ) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem bei der Ermittlung des gemeinsamen optimierten Übergabepunktes ein Standort für eine Depoteinrichtung so optimiert wird, dass für möglichst viele Empfänger und/oder Einlieferer von Paketen, insbesondere für alle Empfänger von Paketen aus der jeweiligen Depoteinrichtung und für alle Einlieferer von Paketen in die jeweilige Depoteinrichtung für Übergaben innerhalb des vorgesehenen Übergabezeitraums eine Summe von zusätzlichen Zeitbedarfen für Abweichungen zu ohnehin-Wegstrecken und/oder ohnehin-Orten minimiert wird.

DR) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem bei der Ermittlung des gemeinsamen optimierten Übergabepunktes ein Standort für eine Depoteinrichtung so ausgewählt wird, dass für einen möglichst hohen Anteil von Empfängern und/oder Einlieferern von Paketen, insbesondere für alle Empfänger von Paketen aus der jeweiligen Depoteinrichtung und für alle Einlieferer von Paketen in die jeweilige Depoteinrichtung, für Übergaben innerhalb des vorgesehenen Übergabezeitraums ein zusätzlicher Zeitbedarf für Wege von ohnehin-Wegstrecken und/oder von ohnehin-Orten zum Übergabepunkt eine bestimmte Grenze nicht überschreitet.

DS) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem bei der Ermittlung des gemeinsamen optimierten Übergabepunktes über einen Tag verteilt unterschiedliche Standorte für eine Depoteinrichtung optimiert werden und die Depoteinrichtung über den Tag verteilt an den unterschiedlichen Standorten im Einsatz ist.

DT) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem eine variable Anpassbarkeit der Anzahl und/oder der Abmessungen von Fächern von Depoteinrichtungen bei einer Ermittlung gemeinsamer optimierter Übergabepunkte für eine Übergabe der Pakete an die jeweiligen Empfänger und/oder für die Einlieferung von den Einlieferern der Pakete innerhalb eines bestimmten Übergabezeitraums berücksichtigt wird.

DU) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem sich die Auswahlschritte auf unterschiedliche Zeiträume für eine Optimierung beziehen.

DV) Verfahren zur Übergabe einer Vielzahl von Paketen an mehrere Empfänger und/ oder zur Übergabe einer Vielzahl von Paketen von mehreren Einlieferern vorzugsweise entsprechend, bei dem in dem ersten Auswahlschritt allgemeine Standorteigenschaften berücksichtigt werden, durch den Auswahlschritt eine Long List aller potenziellen Standorte in eine Liste der für die Übergabe von Paketen grundsätzlich qualifizierten Standorte transformiert wird und in dem sich an den ersten Auswahlschritt anschließenden weiteren Auswahlschritt diejenigen Übergabepunkte, insbesondere Standorte für Depoteinrichtungen ermittelt werden, bei denen innerhalb eines als Optimierungszeitraum ermittelten Übergabezeitraums für die Pakete ein jeweiliger Aufwandsparameter für die Inbetriebnahme der Depoteinrichtungen möglichst niedrig ist.

DW) Verfahren zur Übergabe einer Vielzahl von Paketen an mehrere Empfänger und/ oder zur Übergabe einer Vielzahl von Paketen von mehreren Einlieferern vorzugsweise entsprechend DV, bei dem in einem anderen Auswahlschritten vorangehenden Auswahlschritt, insbesondere in dem ersten Auswahlschritt, Standorte, an denen die jeweilige Depoteinrichtung geparkt werden kann, ermittelt und berücksichtigt werden.

DX) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem in einem dritten Auswahlschritt diejenigen Übergabepunkte ermittelt werden, bei denen innerhalb eines als Optimierungszeitraum vorzugsweise ermittelten Übergabezeitraums für die Pakete ein jeweiliger Aufwandsparameter für die Einlieferer und/oder Empfänger von Paketen an den Depoteinrichtungen gering ist.

EA) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem zusätzlich zu den mehreren Paketen, die an dem zugeordneten gemeinsamen Übergabepunkt innerhalb des vorgesehenen Übergabezeitraums in der Depoteinrichtungen für eine Übergabe an Empfänger bereitgestellt werden, weitere Pakete am Übergabepunkt in die Depoteinrichtungen eingeliefert und eingelagert werden.

EB) Verfahren zur Übergabe einer Vielzahl von Paketen an mehrere Empfänger und/ oder zur Übergabe einer Vielzahl von Paketen von mehreren Einlieferern vorzugsweise entsprechend DG, bei dem für mehrere Pakete wenigstens einer der möglichen Übergabepunkte ein Standort ist, der den gemeinsamen optimierten Übergabepunkt für die Übergabe an die jeweiligen Empfänger und/oder durch die jeweiligen Einlieferer bildet und an dem gemeinsamen optimierten Übergabepunkt eine Depoteinrichtung für eine gemeinsame Lagerung der mehreren Pakete und für die Übergabe der mehreren Pakete an die jeweiligen Empfänger der mehreren Pakete und/oder für die Einlieferung durch die jeweiligen Einlieferer der mehreren Pakete an dem zugeordneten gemeinsamen optimierten Übergabepunkt innerhalb des vorgesehenen Übergabezeitraums bereitgestellt wird.

EC) Verfahren zum Transfer einer Vielzahl von Paketen, wobei mehrere der Pakete zu einer Transfereinrichtung transportiert und im Bereich der Transfereinrichtung als einzelne Pakete durch Transporteinheiten transportiert werden.

ED) Verfahren zum Transfer einer Vielzahl von Paketen vorzugsweise entsprechend EC, bei dem die Pakete transferiert werden.

EE) Verfahren zum Transfer einer Vielzahl von Paketen vorzugsweise entsprechend EC, bei dem der Transport der einzelnen Pakete durch die Transporteinheiten unter Berücksichtigung von Paketidentifikationsmerkmalen der einzelnen Pakete erfolgt.

EF) Verfahren zum Transfer einer Vielzahl von Paketen vorzugsweise entsprechend EC, bei dem die Pakete durch die Transporteinheiten in Lagerpositionen von Depoteinrichtungen und/oder aus Lagerpositionen von Depoteinrichtungen transferiert werden.

EG) Verfahren zum Transfer einer Vielzahl von Paketen vorzugsweise entsprechend EC, bei dem die Pakete in die Depoteinrichtungen eingebracht werden, dass wenigstens ein Teil der Depoteinrichtungen als mobile Depoteinrichtungen ausgebildet ist und dass die mobilen Depoteinrichtungen die Pakete zu Übergabepunkten transportieren und dass die Pakete in den mobilen Depoteinrichtungen gelagert und für die Übergabe an die Empfänger der Pakete unter Einsatz der Depoteinrichtungen bereitgestellt werden.

EH) Verfahren zum Transfer einer Vielzahl von Paketen vorzugsweise entsprechend EC, bei dem die Einlagerung der Pakete in die Lagerpositionen einer Lagereinrichtung der Depoteinrichtung unter Berücksichtigung von Paketidentifikationsmerkmalen erfolgt.

EI) Verfahren zum Transfer einer Vielzahl von Paketen vorzugsweise entsprechend EC, bei dem während eines Aufenthaltes der Depoteinrichtung im Bereich der Transfereinrichtung zu den im Bereich der Transfereinrichtung als einzelne Pakete übergebenen Paketen jeweils folgende Datenelemente an die Depoteinrichtung übermittelt werden:
- Wenigstens ein Paketidentifikationsmerkmal, das geeignet ist, eine zuverlässige Identifikation eines jeweiligen Pakets zu ermöglichen und
- eine Information zu einer Identifizierung des Lagerposition innerhalb der Lagereinrichtung der Depoteinrichtung für die Einlagerung des jeweiligen Pakets.

EJ) Verfahren zum Transfer einer Vielzahl von Paketen vorzugsweise entsprechend EC, bei dem die einzelnen Pakete vor ihrem Transfer in die Lagerpositionen so gedreht werden, dass sie eine definierte Ausrichtung aufweisen.

EK) Verfahren zum Transfer einer Vielzahl von Paketen vorzugsweise entsprechend EC, bei dem die einzelnen Pakete während eines Aufenthaltes auf einer Transferplattform einer Transporteinheit gedreht werden.

EL) Verfahren zum Transfer einer Vielzahl von Paketen vorzugsweise entsprechend EC, bei dem die einzelnen Pakete während eines Aufenthaltes auf einem Transportband gedreht werden.

EM) Verfahren zur Bearbeitung von Bestellaufträgen von Kunden eines Bestellsystems, wobei jeder Kunde des Bestellsystems die Möglichkeit hat, eine Bestellung einer Ware vorzunehmen und wobei auf Grundlage der Bestellung des Kunden ein Versand der Ware als ein Paket an einen Empfänger erfolgt, wobei für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an den jeweiligen Empfänger innerhalb eines bestimmten Übergabezeitraums ermittelt wird und die Übergabe an die Empfänger an dem zugeordneten gemeinsamen optimierten innerhalb des vorgesehenen Übergabezeitraums erfolgt.

EN) Verfahren zur Übergabe einer Vielzahl von Paketen, die von Versendern zu Empfängern durch ein Logistiksystem transportiert werden, wobei mehreren Paketen im Laufe eines Transportweges sich verändernde Anteile von ihnen jeweils zugeordneten festen Empfängerattributen und variablen Empfängerattributen zugeordnet werden.

EO) Verfahren zur Übergabe einer Vielzahl von Paketen, die von Versendern zu Empfängern durch ein Logistiksystem transportiert werden vorzugsweise entsprechend EN, bei dem wenigstens ein Teil der Empfängerattribute Bestandteile einer Empfängeradresstiefe sind, wobei der Anteil der in der Empfängeradresstiefe berücksichtigten, den Paketen jeweils zugeordneten festen Empfängerattribute in einer zeitlichen Abfolge von einzelnen Produktionsstufen eines Logistikunternehmens von einer Übergabe durch den Versender bis zu einer finalen Übergabe an den Empfänger veränderbar ist.

EP) Verfahren zur Übergabe einer Vielzahl von Paketen, die von Versendern zu Empfängern durch ein Logistiksystem transportiert werden, vorzugsweise entsprechend EO, bei dem Bestandteile der Empfängeradresstiefe führende Stelle einer Postleitzahl und weitere Stellen der Postleitzahl sind.

EQ) Verfahren zur Übergabe einer Vielzahl von Paketen, die von Versendern zu Empfängern durch ein Logistiksystem transportiert werden, vorzugsweise entsprechend EO, bei dem eine Straße und/oder ein Straßenabschnitt beziehungsweise eine Hausnummer und/ oder eine Appartementnummer Bestandteile der Empfängeradresstiefe sind.

ER) Verfahren zur Übergabe einer Vielzahl von Paketen, die von Versendern zu Empfängern durch ein Logistiksystem transportiert werden, vorzugsweise entsprechend EO, bei dem gemeinsame optimierte Übergabepunkte Bestandteile der Empfängeradresstiefe sind.

ES) Verfahren zur Übergabe einer Vielzahl von Paketen, die von Versendern zu Empfängern durch ein Logistiksystem transportiert werden vorzugsweise entsprechend EO, bei dem individuelle Übergabepunkte Bestandteile der Empfängeradresstiefe sind.

ET) Verfahren zur Übergabe einer Vielzahl von Paketen, die von Versendern zu Empfängern durch ein Logistiksystem transportiert werden vorzugsweise entsprechend EN, bei dem eine Steuerkomponente des Logistiksystems über eine Schnittstelle zum Empfang von Anweisungen der Versender Anweisungen der Versender erhält, die Anweisungen der jeweiligen Versender jeweils wenigstens eine Anweisung zur Festlegung weiterer oder veränderter variabler Empfängerattribute wenigstens eines ausgewählten Pakets enthalten und das Logistiksystem wenigstens einen Bearbeitungsvorgang des ausgewählten Pakets unter Berücksichtigung der dem ausgewählten Paket zugeordneten weiteren oder veränderten variablen Empfängerattribute vornimmt, die dadurch zu festen Empfängerattributen werden.

EU) Verfahren zur Übergabe einer Vielzahl von Paketen, die von Versendern zu Empfängern durch ein Logistiksystem transportiert werden vorzugsweise entsprechend EN, bei dem ein Paketidentifikationscode zur Identifikation des ausgewählten Pakets eingesetzt wird, und dass wenigstens ein nachfolgender Bearbeitungsvorgang des Pakets sowohl unter Berücksichtigung des dem ausgewählten Paket zugeordneten weiteren oder veränderten Empfängerattributs als auch unter Berücksichtigung des Paketidentifikationscodes durchgeführt wird.

EV) Verfahren zur Übergabe einer Vielzahl von Paketen, die von Versendern zu Empfängern durch ein Logistiksystem transportiert werden vorzugsweise entsprechend EU, bei dem der Paketidentifikationscode wenigstens eine Versenderidentifikationsangabe enthält, wobei die Versenderidentifikationsangabe den Versender identifiziert.

EW) Verfahren zur Übergabe einer Vielzahl von Paketen, die von Versendern zu Empfängern durch ein Logistiksystem transportiert werden vorzugsweise entsprechend EU, bei dem der Paketidentifikationscode als primäres Paketidentifikationsmerkmal gespeichert wird, dass dem Paket wenigstens ein von dem primären Paketidentifikationsmerkmal verschiedenes sekundäres Paketidentifikationsmerkmal zugeordnet wird, und dass wenigstens ein Bearbeitungsvorgang des Pakets anhand des sekundären Paketidentifikationsmerkmals durchgeführt wird.

EX) Verfahren zur Übergabe einer Vielzahl von Paketen, die von Versendern zu Empfängern durch ein Logistiksystem transportiert werden, vorzugsweise entsprechend EU, bei dem das sekundäre Paketidentifikationsmerkmal leichter und/oder schneller identifizierbar ist als das primäre Paketidentifikationsmerkmal.

EY) Verfahren zur Übergabe einer Vielzahl von Paketen, die von Versendern zu Empfängern durch ein Logistiksystem transportiert werden, vorzugsweise entsprechend EU, bei dem sowohl der Paketidentifikationscode als auch wenigstens ein festes Empfängerattribut und/oder wenigstens eines der variablen Empfängerattribute einem digitalen Zwilling des Pakets zugeordnet werden.

EZ) Verfahren zur Übergabe einer Vielzahl von Paketen, die von Versendern zu Empfängern durch ein Logistiksystem transportiert werden, vorzugsweise entsprechend EN, bei dem die Bearbeitungsvorgänge durch eine Bereitstellung von Prozessprotokollen, unter Einbeziehung individueller Prozessprotokolle für die einzelne Pakete ergänzt und die Prozessprotokollen für die Steuerung der Bearbeitungsvorgängen eingesetzt werden

FA) Verfahren zur Übergabe einer Vielzahl von Paketen, die von Versendern zu Empfängern durch ein Logistiksystem transportiert werden vorzugsweise entsprechend EN, bei dem wenigstens einer der nachfolgenden Bearbeitungsvorgänge des Pakets unter Berücksichtigung wenigstens eines der variablen Empfängerattribute durchgeführt wird:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots:
- Beladung von Depoteinrichtungen;
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme mehrerer Pakete an einem gemeinsamen optimierten Übergabepunkt innerhalb eines Übergabezeitraums;
- Annahme von Paketen an einem individuellen Übergabepunkt;
- Einsatz von Depoteinrichtungen für die Lagerung von Paketen;
- Einsatz von Depoteinrichtungen für die Annahme von Paketen;
- Einsatz von Depoteinrichtungen für die Kommissionierung von Paketen;
- Einsatz von Depoteinrichtungen für die Ausgabe von Paketen und
- Einsatz von Depoteinrichtungen als Verkaufseinrichtungen.

FB) Logistiksystem zur Übergabe einer Vielzahl von Paketen, wobei das Logistiksystem so eingerichtet ist, dass es Pakete mehrerer Versender an mehrere Empfänger übergeben kann und wobei das Logistiksystem ferner so eingerichtet ist, dass es wenigstens einen Bearbeitungsvorgang der Pakete anhand eines jeweils den Paketen zugeordneten Paketidentifikationscodes vornehmen kann, wobei die Pakete jeweils wenigstens ein Empfängerattribut aufweisen, eine Steuerkomponente des Logistiksystems eine Schnittstelle zum Empfang von Empfängerattributen der Pakete aufweist, die Steuerkomponente ein Mittel aufweist, um Positionen der Pakete im Laufe ihres Transportweges zu ermitteln, und die Steuerkomponente ferner so eingerichtet ist, dass sie den mehreren Paketen im Laufe des Transportweges der jeweiligen Pakete in Abhängigkeit der Positionen der Pakete sich verändernde Anteile von ihnen jeweils zugeordneten festen Empfängerattributen und variablen Empfängerattributen zuordnen kann.

FC) Verwendung des Logistiksystems vorzugsweise entsprechend FB zur Durchführung eines Verfahrens zur Übergabe einer Vielzahl von Paketen gemäß EN.

FD) Verwendung des Logistiksystems vorzugsweise entsprechend FB zur flexiblen Zuweisung eines finalen Empfängers und/oder eines finalen Übergabepunktes.

FE) Verwendung des Logistiksystems vorzugsweise entsprechend FB, bei der der finale Übergabepunkt ein gemeinsamer optimierter Übergabepunkt für die Übergabe an den finalen Empfänger ist.

FF) Verwendung des Logistiksystems vorzugsweise entsprechend FB, bei der der finale Übergabepunkt ein individueller Übergabepunkt für die Übergabe an den finalen Empfänger ist.

FG) Verfahren zur Übergabe eines Pakets an einen Empfänger und/ oder zur Übergabe durch einen Einlieferer, wobei für das Paket ein Paketidentifikationscode vergeben und/oder erfasst wird und anschließend als primäres Paketidentifikationsmerkmal gespeichert wird, dem Paket wenigstens ein von dem primären Paketidentifikationsmerkmal verschiedenes sekundäres Paketidentifikationsmerkmal zugeordnet wird und wenigstens ein Bearbeitungsvorgang des Pakets anhand des sekundären Paketidentifikationsmerkmals durchgeführt wird.

FH) Verfahren zur Übergabe eines Pakets an einen Empfänger und/ oder zur Übergabe durch einen Einlieferer vorzugsweise entsprechend FG, bei dem der Paketidentifikationscode durch ein Logistiksystem oder eine Steuerkomponente des Logistiksystems aus mindestens einem von dem Versender übermittelten Merkmal des Pakets gebildet wird, wobei dieses Merkmal so beschaffen ist, dass es bei wenigstens einem der Bearbeitungsvorgänge des Pakets erfasst und bei der Bearbeitung des Pakets berücksichtigt wird.

FI) Verfahren zur Übergabe eines Pakets an einen Empfänger und/ oder zur Übergabe durch einen Einlieferer vorzugsweise entsprechend FG, bei dem der Paketidentifikationscode durch ein Logistiksystem oder eine Steuerkomponente des Logistiksystems aus mindestens zwei von dem Versender übermittelten Merkmalen des Pakets gebildet werden, wobei diese Merkmale so beschaffen sind, dass sie gemeinsam bei wenigstens einem der Bearbeitungsvorgänge des Pakets erfasst werden und dass der Paketidentifikationscode bei mindestens einem Bearbeitungsvorgang des Pakets berücksichtigt wird.

FJ) Verfahren zur Übergabe eines Pakets an einen Empfänger und/ oder zur Übergabe durch einen Einlieferer vorzugsweise entsprechend FG, bei dem das sekundäre Paketidentifikationsmerkmal leichter und/oder schneller identifizierbar ist als das primäre Paketidentifikationsmerkmal.

FK) Verfahren zur Übergabe eines Pakets an einen Empfänger und/ oder zur Übergabe durch einen Einlieferer vorzugsweise entsprechend FG, bei dem das sekundäre Paketidentifikationsmerkmal alleine oder in Kombination mit weiteren sekundären Paketidentifikationsmerkmalen zur Kontrolle einer Richtigkeit, dass ein Paket das durch das primäre Paketidentifikationsmerkmal identifizierte Paket ist und/oder zur Steuerung eines weiteren Bearbeitungsvorganges eingesetzt wird.

FL) Verfahren zur Übergabe eines Pakets an einen Empfänger und/ oder zur Übergabe durch einen Einlieferer vorzugsweise entsprechend FG, bei dem das primäre Paketidentifikationsmerkmal für eine Bildung eines digitalen Zwillings des Pakets eingesetzt wird und mindestens eines der sekundären Paketidentifikationsmerkmale einem digitalen Zwilling des Pakets zugeordnet wird.

FM) Verfahren zur Übergabe eines Pakets an einen Empfänger und/ oder zur Übergabe durch einen Einlieferer vorzugsweise entsprechend FG, bei dem der Paketidentifikationscode ein physischer Code oder eine Kombination von physischen Codes ist, der oder die unmittelbar mit dem Paket verbunden ist/sind und auslesbar ist/sind.

FN) Verfahren zur Übergabe eines Pakets an einen Empfänger und/ oder zur Übergabe durch einen Einlieferer vorzugsweise entsprechend FG, bei dem anhand eines mit dem Paket verbundenen auslesbaren Datenträgers eines Versenders ein primäres Paketidentifikationsmerkmal überprüft wird und das primäre Paketidentifikationsmerkmal bei wenigstens einem Bearbeitungsvorgang des Pakets berücksichtigt wird.

FO) Verfahren zur Übergabe eines Pakets an einen Empfänger und/ oder zur Übergabe durch einen Einlieferer vorzugsweise entsprechend FG, bei dem wenigstens eine der folgenden Eigenschaften eines Pakets als sekundäres Paketidentifikationsmerkmal erfasst und bei der Durchführung wenigstens eines Bearbeitungsvorgangs berücksichtigt wird:
- Gewicht des Pakets;
- Abmaße des Pakets;
- Form des Pakets;
- Versenderidentifikationsmerkmale;
- Abbildung des Pakets;
- Farbe des Pakets;
- Dateninhalte eines auslesbaren Datenträgers;
- Informationen über eine oder mehrere abgeschlossene Bearbeitungsvorgänge;
- spektroskopischer Response des Pakets.

FP) Verfahren zur Übergabe eines Pakets an einen Empfänger und/ oder zur Übergabe durch einen Einlieferer vorzugsweise entsprechend FG, bei dem wenigstens einer der nachfolgend genannten Bearbeitungsvorgänge der Pakete unter Berücksichtigung von wenigstens zwei voneinander verschiedenen Paketidentifikationsmerkmalen durchgeführt wird:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots;
- Beladung von Depoteinrichtungen;
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme/Einlieferung mehrerer Pakete an einem gemeinsamen optimierten Übergabepunkt innerhalb eines Übergabezeitraums;
- Annahme/Einlieferung von Paketen an einem individuellen Übergabepunkt;
- Einsatz von Depoteinrichtungen für die Lagerung von Paketen;
- Einsatz von Depoteinrichtungen für die Annahme von Paketen;
- Einsatz von Depoteinrichtungen für die Kommissionierung von Paketen;
- Einsatz von Depoteinrichtungen für die Ausgabe von Paketen und
- Einsatz von Depoteinrichtungen als Verkaufseinrichtungen.

FQ) Verfahren zur Übergabe eines Pakets an einen Empfänger und/ oder zur Übergabe durch einen Einlieferer vorzugsweise entsprechend FG, bei dem wenigstens zwei der nachfolgend genannten Bearbeitungsvorgänge der Pakete unter Berücksichtigung von wenigstens zwei voneinander verschiedenen Paketidentifikationsmerkmalen durchgeführt werden:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots;
- Beladung von Depoteinrichtungen;
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme mehrerer Pakete an einem gemeinsamen optimierten Übergabepunkt innerhalb eines Übergabezeitraums;
- Annahme von Paketen an einem individuellen Übergabepunkt;
- Einsatz von Depoteinrichtungen für die Lagerung von Paketen;
- Einsatz von Depoteinrichtungen für die Annahme von Paketen;
- Einsatz von Depoteinrichtungen für die Kommissionierung von Paketen;
- Einsatz von Depoteinrichtungen für die Ausgabe von Paketen und
- Einsatz von Depoteinrichtungen als Verkaufseinrichtungen.

FR) Verfahren zur Übergabe eines Pakets an einen Empfänger und/ oder zur Übergabe durch einen Einlieferer vorzugsweise entsprechend FG, bei dem zwei voneinander verschiedene sekundäre Paketidentifikationsmerkmale für die Identifikation des Pakets eingesetzt werden.

FS) Verfahren zur Übergabe eines Pakets an einen Empfänger und/ oder zur Übergabe durch einen Einlieferer vorzugsweise entsprechend FG, bei dem eine Einlieferung eines Paketes durch einen Einlieferer wenigstens einen der folgenden Verfahrensschritte beinhaltet:
- Erfassen wenigstens eines der Paketidentifikationsmerkmale, gegebenenfalls auch durch eine Benutzerkomponente;
- Übergabe des Pakets an eine Übergabeeinheit und/oder eine Übergabeeinrichtung;
- Transport des Pakets zu der Depoteinrichtung;
- Transport des Pakets in eine Lagerposition einer Lagereinrichtung der Depoteinrichtung.

FT) Verfahren zur Übergabe eines Pakets an einen Empfänger und/ oder zur Übergabe durch einen Einlieferer vorzugsweise entsprechend FG, bei dem nach der Festlegung und/oder Ermittlung des Paketidentifikationscodes oder sonstiger Paketidentifikationsmerkmale, die eine eindeutige/zuverlässige Identifikation eines Paketes erlauben, ein gesteuerter und/oder gemessener Transportweg und/oder Sortierweg des Pakets geplant und/oder nachverfolgt wird, so dass ein nachfolgender Bearbeitungsvorgang des Pakets, insbesondere eine Sortierung des Pakets und/oder ein Transport des Pakets anhand einer Kombination des zuvor festgestellten Paketidentifikationscodes und/oder Paketidentifikationsmerkmals mit einer Ermittlung eines anderen, vorzugsweise leichter und/oder schneller messbaren sekundären Paketidentifikationsmerkmals so präzise durchgeführt wird, wie dies bei einer Ermittlung des Paketidentifikationscodes selbst der Fall ist.

FU) Verfahren zur Übergabe eines Pakets an einen Empfänger und/ oder zur Übergabe durch einen Einlieferer vorzugsweise entsprechend FG, bei dem anhand wenigstens eines der Paketidentifikationsmerkmale eine Zuordnung der Pakete zu vorherbestimmten Lagerpositionen einer Depoteinrichtung erfolgt.

FV) Verfahren zur Übergabe eines Pakets an einen Empfänger und/ oder zur Übergabe durch einen Einlieferer vorzugsweise entsprechend FG, bei dem wenigstens einzelne der Bearbeitungsvorgänge durch eine Bereitstellung von Prozessprotokollen, vorteilhafterweise unter Einbeziehung individueller Prozessprotokolle für einzelne Pakete ergänzt und/oder bereitgestellten Prozessprotokolle für eine Steuerung von Bearbeitungsvorgängen eingesetzt werden.

FW) Logistiksystem zur Übergabe einer Vielzahl von Paketen an mehrere Empfänger und/oder zur Entgegennahme einer Vielzahl von Paketen von mehreren Einlieferern, das wenigstens einen der folgenden Bearbeitungsvorgänge an Gegenständen, insbesondere Paketen vornehmen kann:
- Übergabe, insbesondere Einlieferung und/oder Ausgabe;
- Transport;
- Sortierung;
- Lagerung;
- Kommissionierung;
wobei das Logistiksystem so eingerichtet ist, dass es den Paketen wenigstens zwei voneinander verschiedene Paketidentifikationsmerkmale zuordnen kann, wobei das Logistiksystem die Bearbeitungsvorgänge der Pakete anhand der Paketidentifikationsmerkmale durchführen kann, das Logistiksystem wenigstens einen Bearbeitungsvorgang der Pakete anhand eines primären Paketidentifikationsmerkmals durchführen kann, und das Logistiksystem wenigstens einen weiteren Bearbeitungsvorgang der Pakete anhand eines sekundären Paketidentifikationsmerkmals durchführen kann.

FX) Logistiksystem zur Übergabe einer Vielzahl von Paketen an mehrere Empfänger und zur Entgegennahme einer Vielzahl von Paketen von mehreren Einlieferern, das wenigstens einen der folgenden Bearbeitungsvorgänge an Gegenständen, insbesondere Paketen vornehmen kann:
- Übergabe, insbesondere Einlieferung und/oder Ausgabe,
- Transport,
- Sortierung,
- Lagerung,
- Kommissionierung;
wobei das Logistiksystem die Bearbeitungsvorgänge der Pakete anhand von Paketidentifikationsmerkmalen durchführen kann, wobei das Logistiksystem so eingerichtet ist, dass es den Paketen jeweils wenigstens einen Paketidentifikationscode zuordnen kann, der Paketidentifikationscode oder mindestens ein Bestandteil des Paketidentifikationscodes zu einer eindeutigen Identifikation des Pakets dient, der Paketidentifikationscode oder wenigstens ein Bestandteil des Paketidentifikationscodes ein primäres Paketidentifikationsmerkmal ist, das Logistiksystem wenigstens einen Bearbeitungsvorgang der Pakete anhand des primären Paketidentifikationsmerkmals durchführen kann und das Logistiksystem wenigstens einen weiteren Bearbeitungsvorgang der Pakete anhand eines sekundären Paketidentifikationsmerkmals durchführen kann.

### Abbildungsverzeichnis

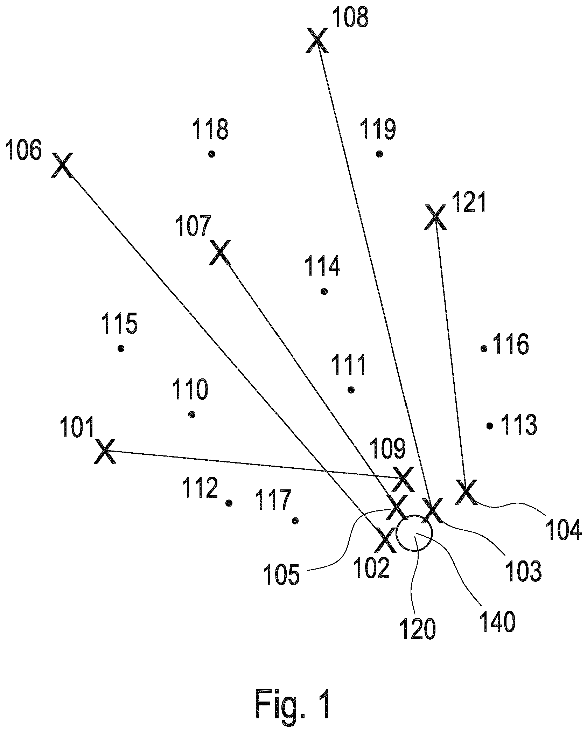

- FIG. 1: eine Prinzipdarstellung von Übergabepunkten für eine erfindungsgemäße Aushändigung von Paketen an Empfänger;

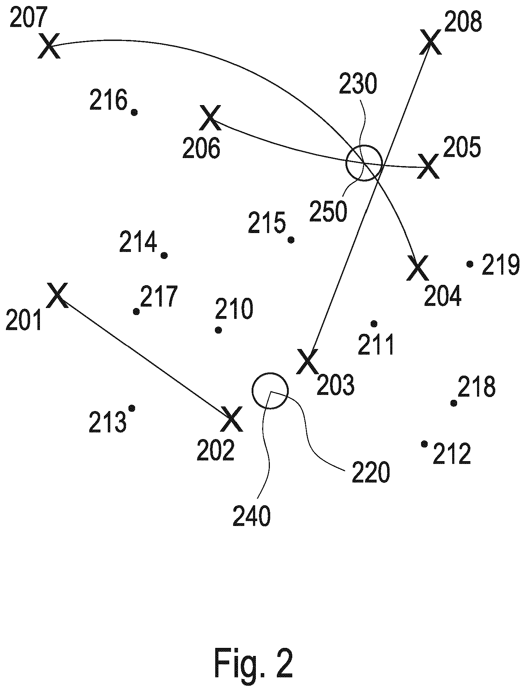

- FIG. 2: eine Prinzipdarstellung von Übergabepunkten für eine erfindungsgemäße Aushändigung von Paketen an Empfänger;

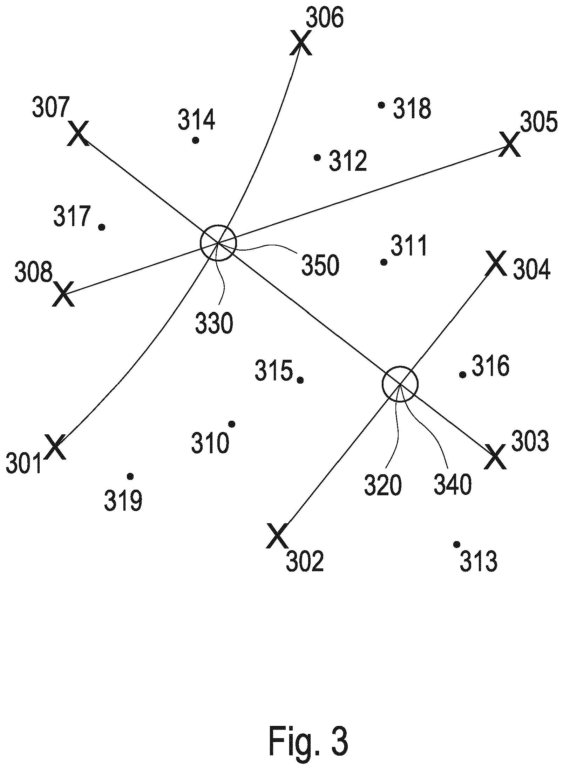

- FIG. 3: eine Prinzipdarstellung von Übergabepunkten für eine erfindungsgemäße Aushändigung von Paketen an Empfänger;

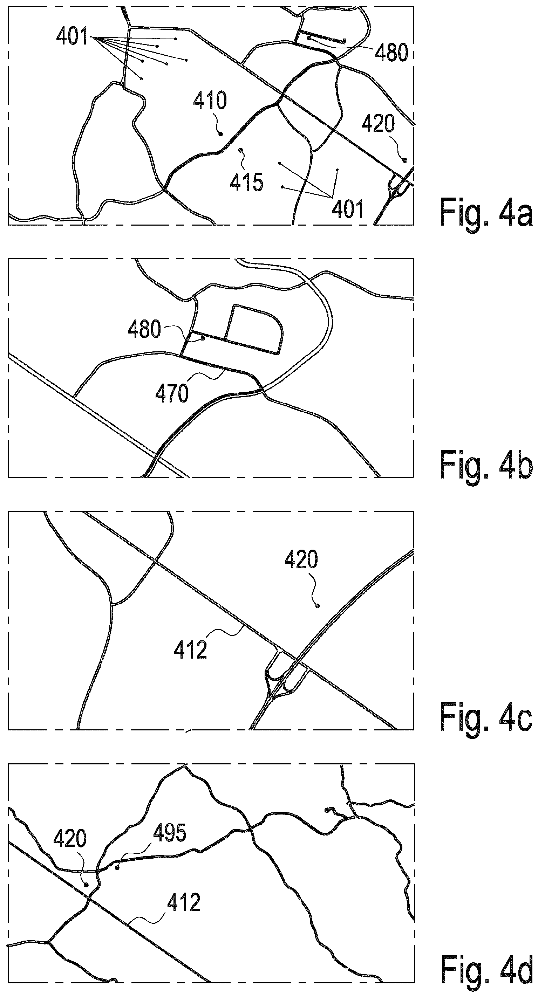

- FIG. 4a, 4b, 4c, 4d: Karten zur Verdeutlichung der geographischen Anordnung der in den Abbildungen 1-3 dargestellten Übergabepunkte;

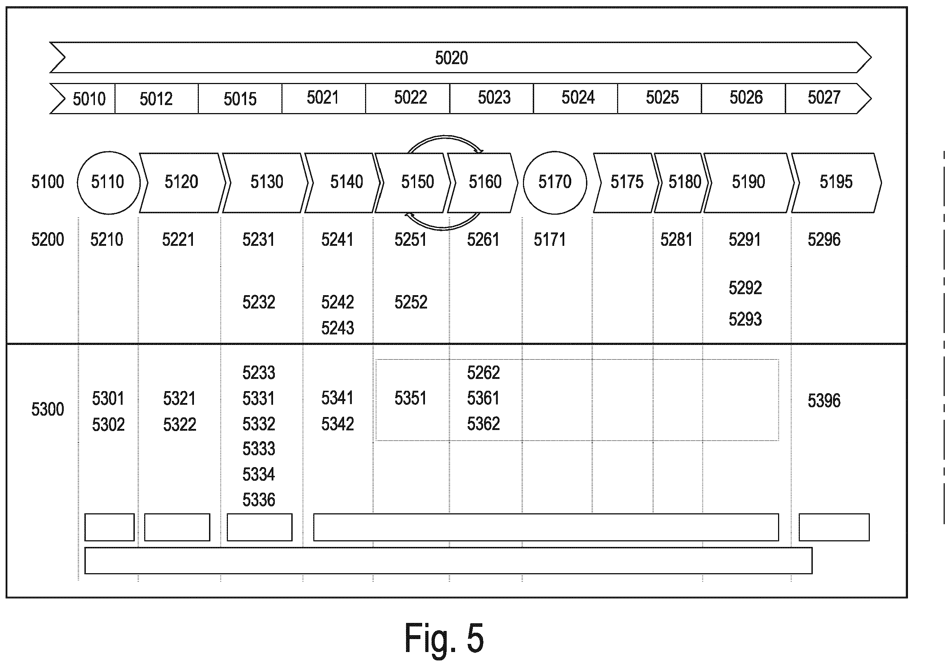

- FIG. 5: eine Prinzipdarstellung eines erfindungsgemäßen Logistiksystems;

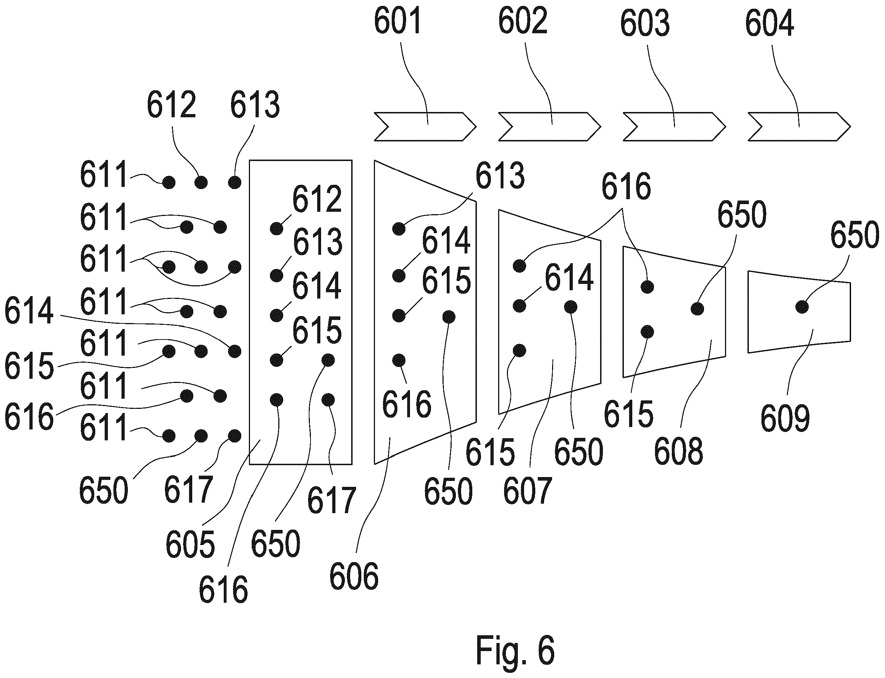

- FIG. 6: eine Prinzipdarstellung eines erfindungsgemäßen Auswahlverfahrens für gemeinsame optimierte Übergabepunkte für mehrere Pakete;

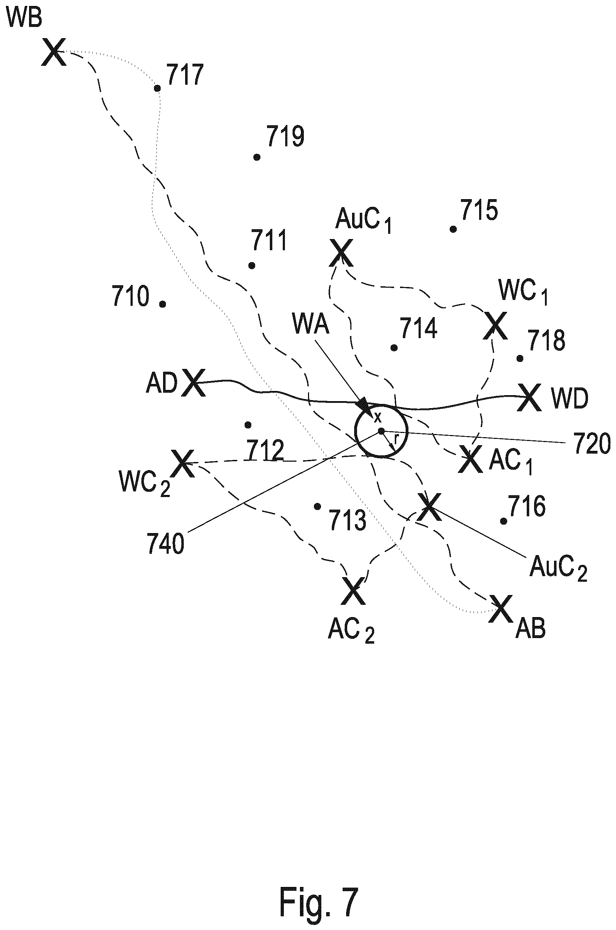

- FIG. 7: eine Prinzipdarstellung von Übergabepunkten für eine erfindungsgemäße Aushändigung von Paketen an Empfänger;

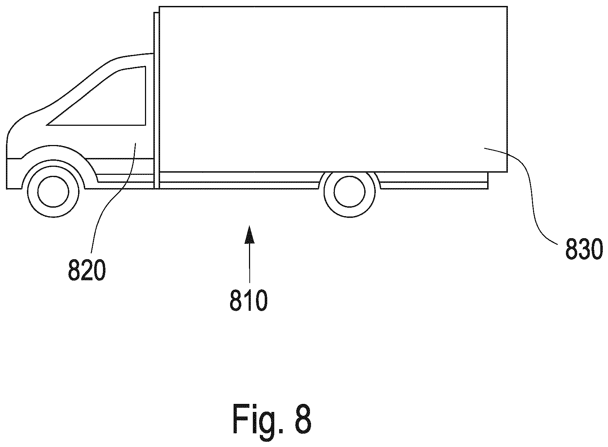

- FIG. 8: ein erfindungsgemäßes Logistikfahrzeug;

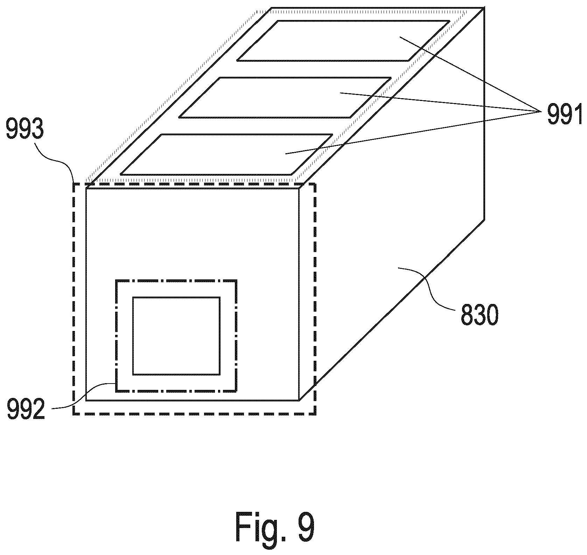

- FIG. 9: eine schematische Darstellung eines Laderaums einer Depoteinrichtung, insbesondere als Teil eines erfindungsgemäßen Logistikfahrzeuges, insbesondere des in Fig. 8 dargestellten Logistikfahrzeugs;

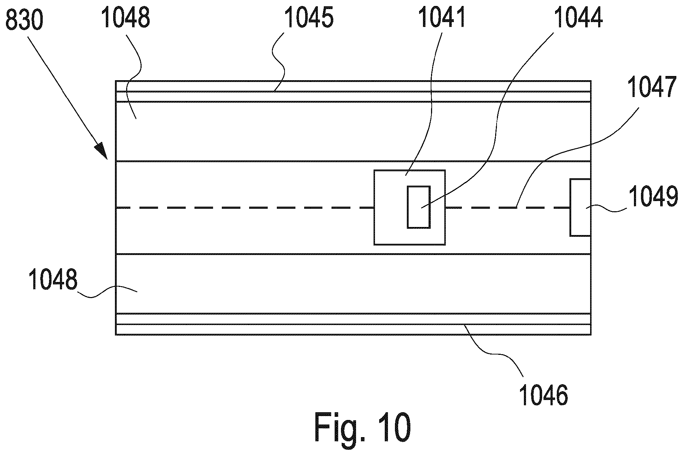

- FIG. 10: eine Aufsicht auf eine horizontale Querschnittsebene des in Abbildung 8 dargestellten Logistikfahrzeuges mit wenigstens zwei Regalen;

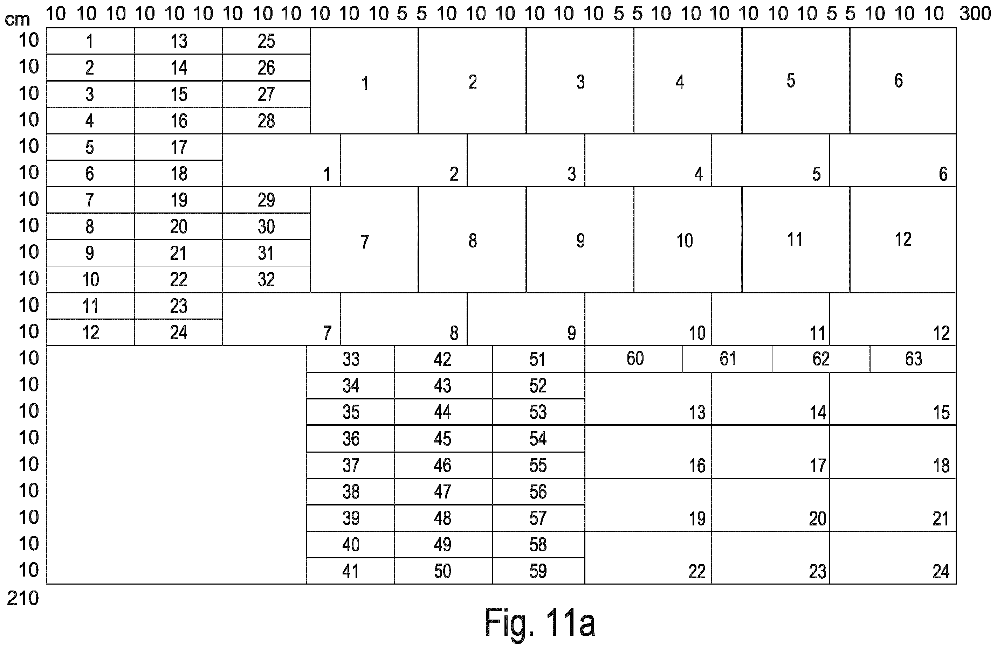

- FIG. 11a: eine vorteilhafte Fachkonfiguration eines erfindungsgemäßen Regals;

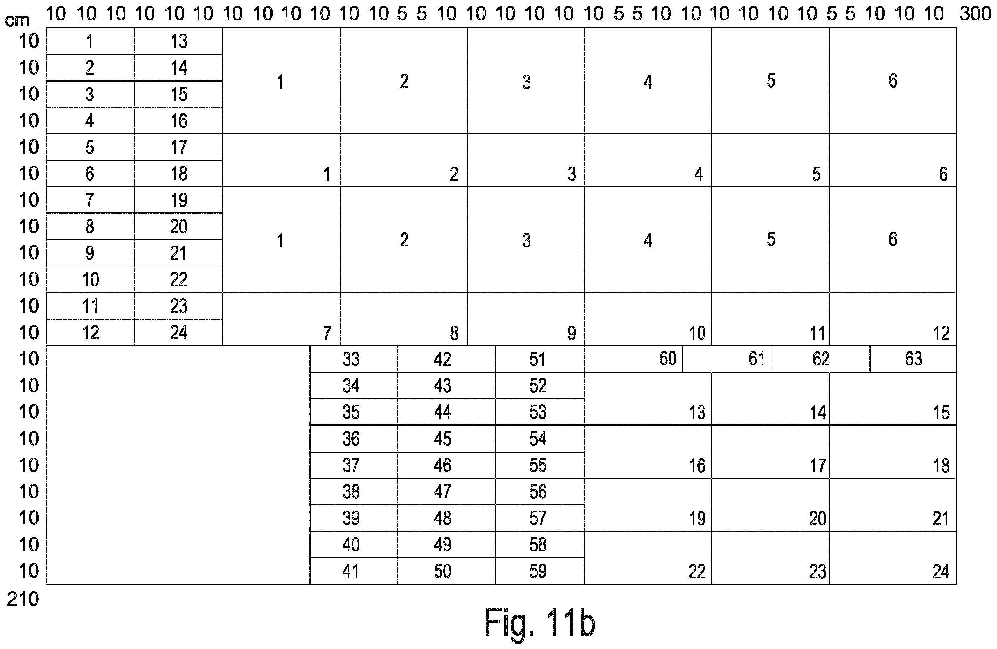

- FIG. 11b: eine vorteilhafte Fachkonfiguration eines erfindungsgemäßen Regals;

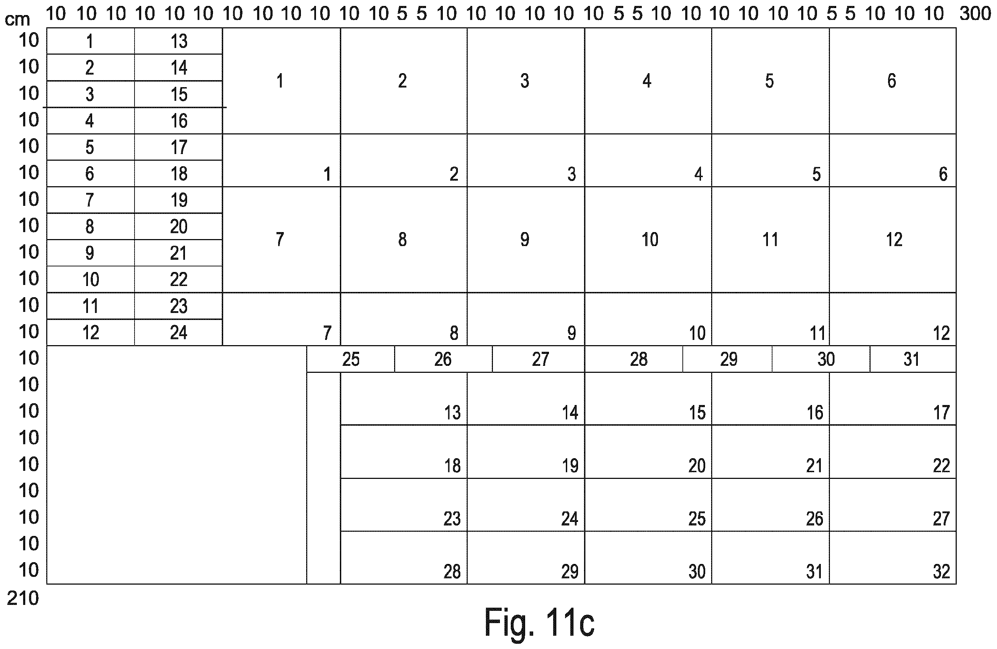

- FIG. 11c: eine vorteilhafte Fachkonfiguration eines erfindungsgemäßen Regals;

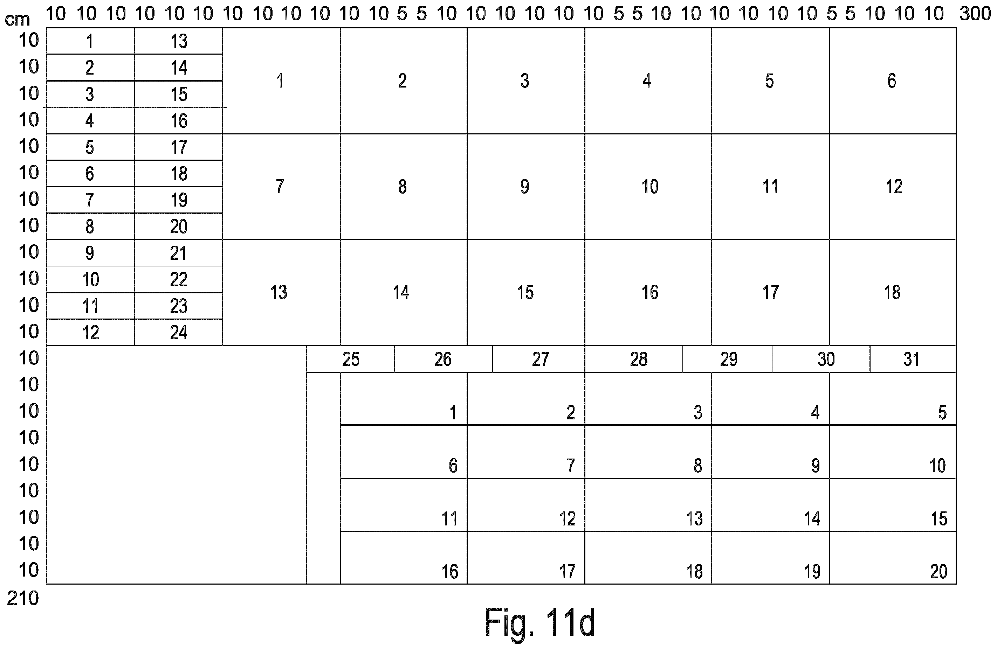

- FIG. 11d: eine vorteilhafte Fachkonfiguration eines erfindungsgemäßen Regals;

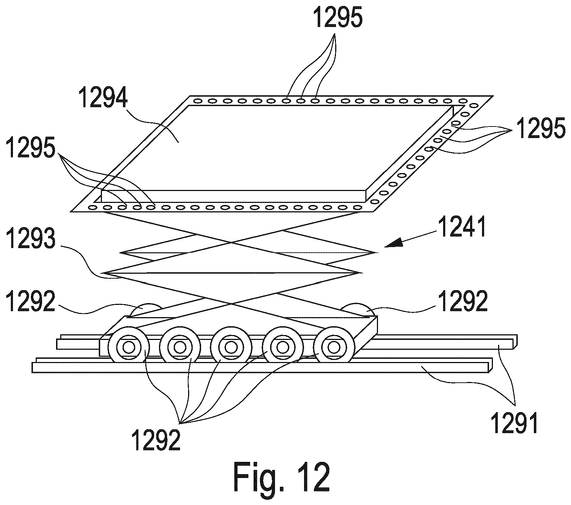

- FIG. 12: eine perspektivische Darstellung einer erfindungsgemäßen Transporteinheit;

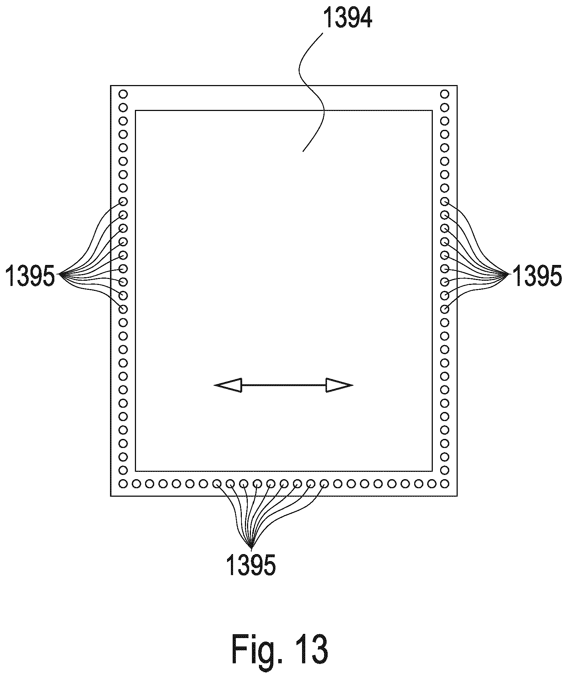

- FIG. 13: eine Aufsicht auf eine erfindungsgemäße Transporteinheit;

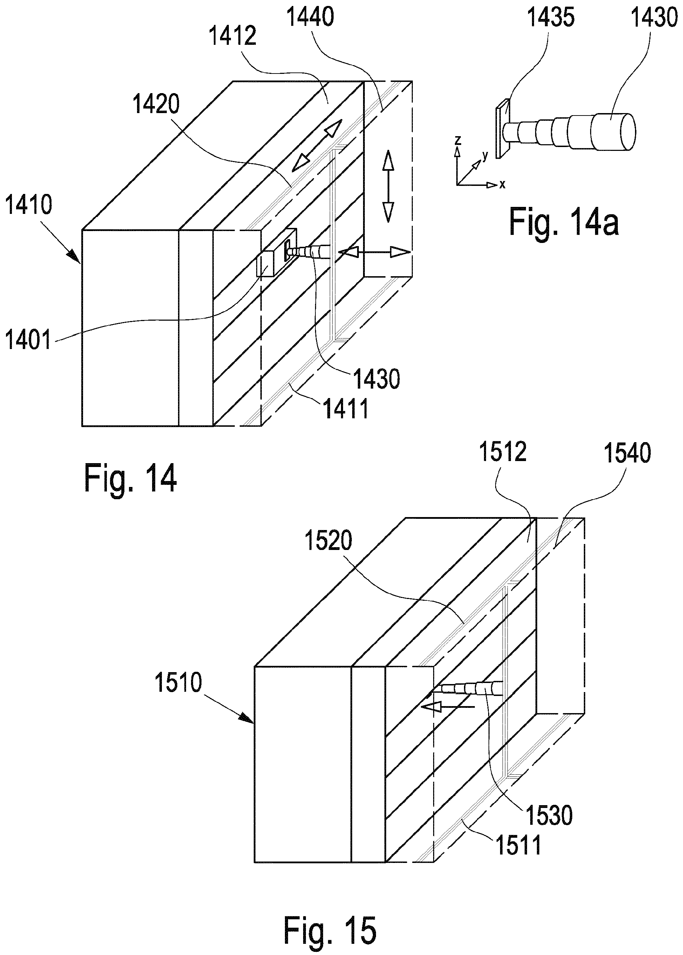

- FIG. 14: ein Ausführungsbeispiel einer erfindungsgemäßen Lagereinheit;
- FIG. 15: ein Ausführungsbeispiel einer erfindungsgemäßen Lagereinheit;

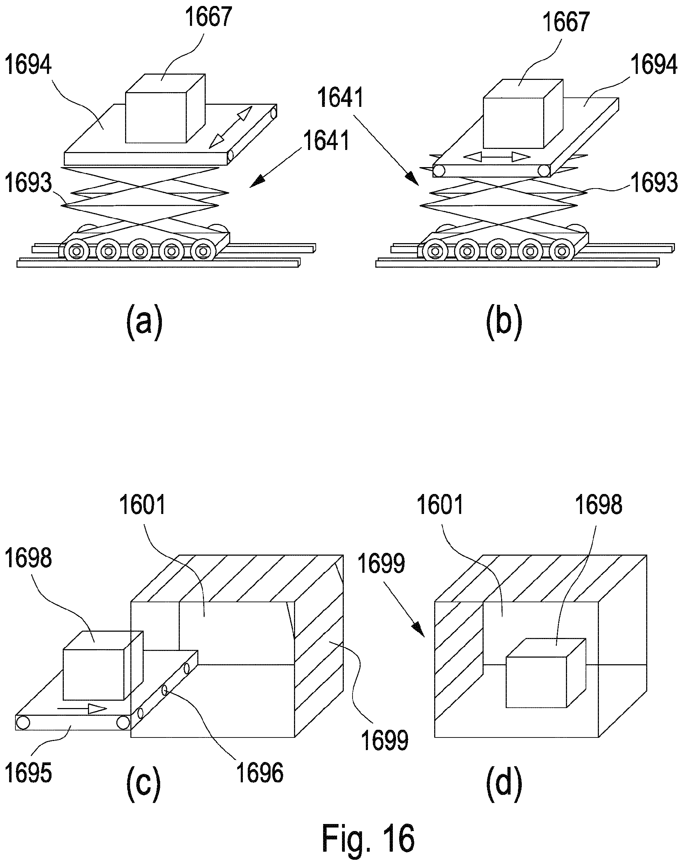

- FIG. 16: in Abbildungen 16a und 16b eine erfindungsgemäße Transporteinheit, die auch als Übergabeeinheit eingesetzt werden kann, und in Abbildungen 16c und 16d eine Prinzipdarstellung einer Übergabe eines Pakets 1698 in einem Bereich einer Übergabeeinrichtung;

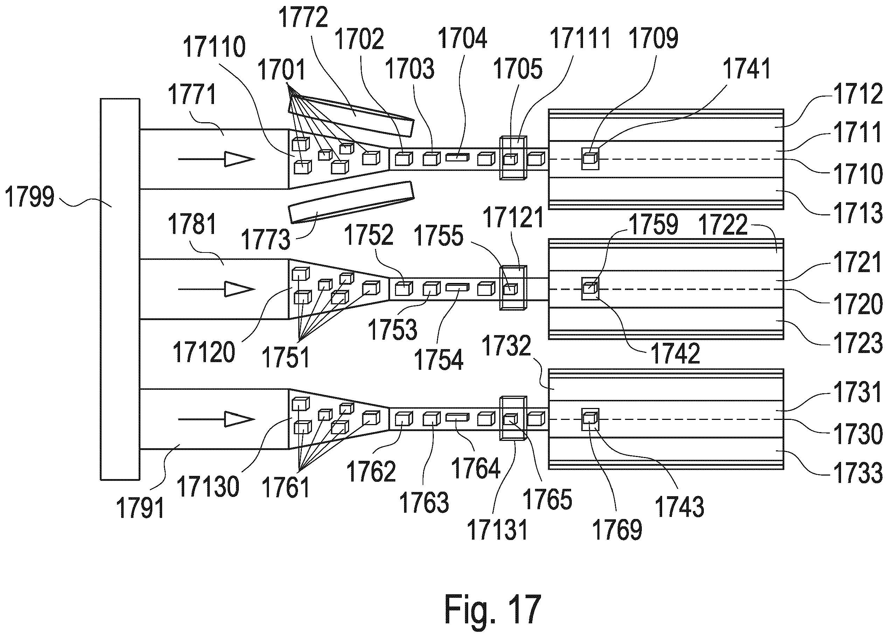

- FIG. 17: eine Aufsicht auf eine erfindungsgemäße Transfereinrichtung;

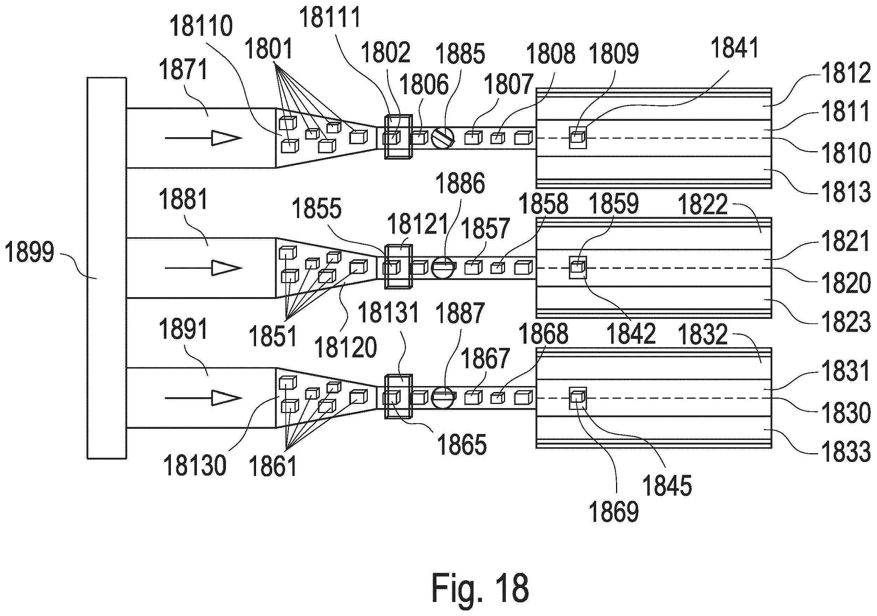

- FIG. 18: eine Aufsicht auf eine erfindungsgemäße Transfereinrichtung;

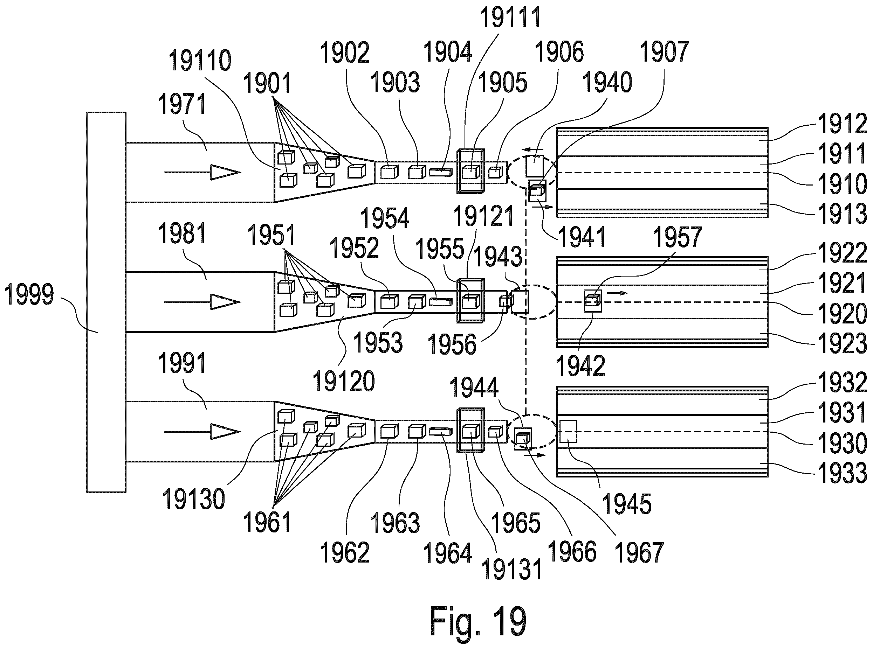

- FIG. 19: eine Aufsicht auf eine erfindungsgemäße Transfereinrichtung;

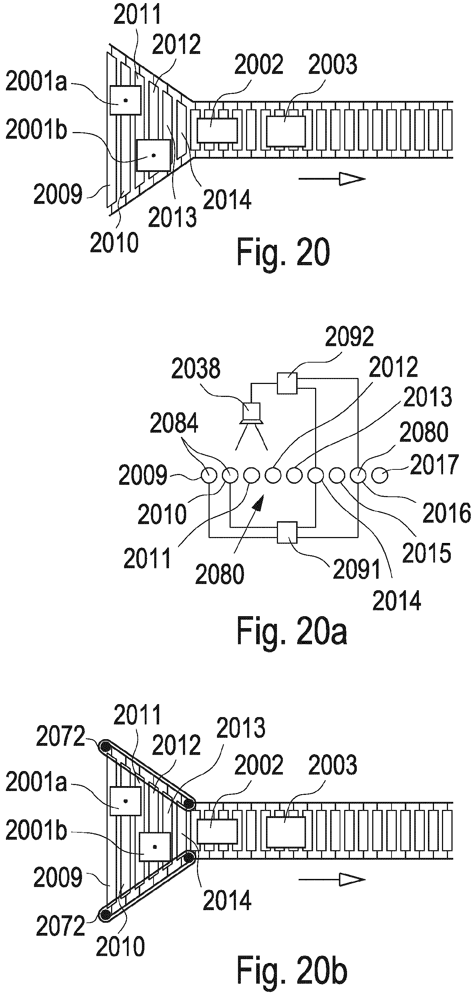

- FIG. 20: eine Aufsicht auf eine als Bestandteil eines erfindungsgemäßen Verteilzentrums und/oder einer erfindungsgemäßen Transfereinrichtung einsetzbaren Rollenbahn, insbesondere als Ausschnitt der in den Abbildungen 17-19 und 27-29 dargestellten Förderbänder;

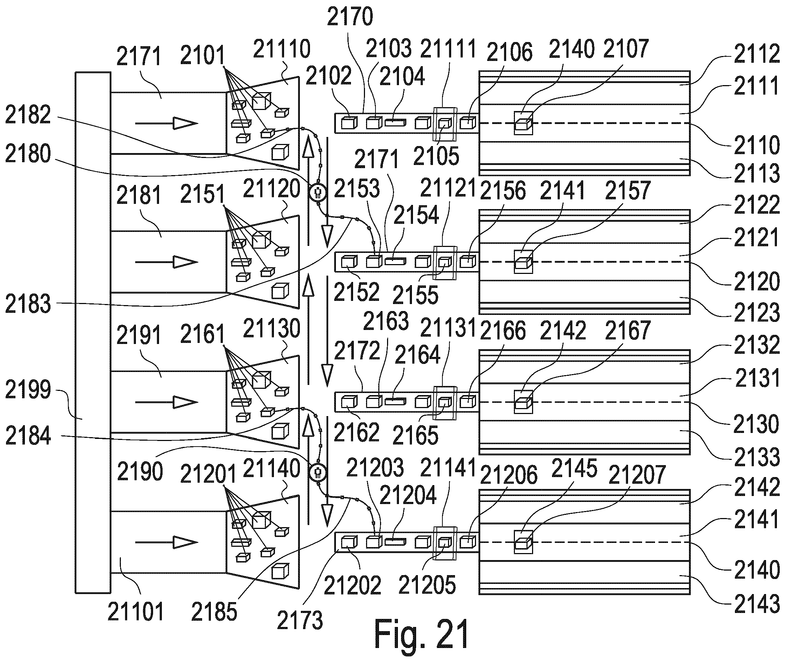

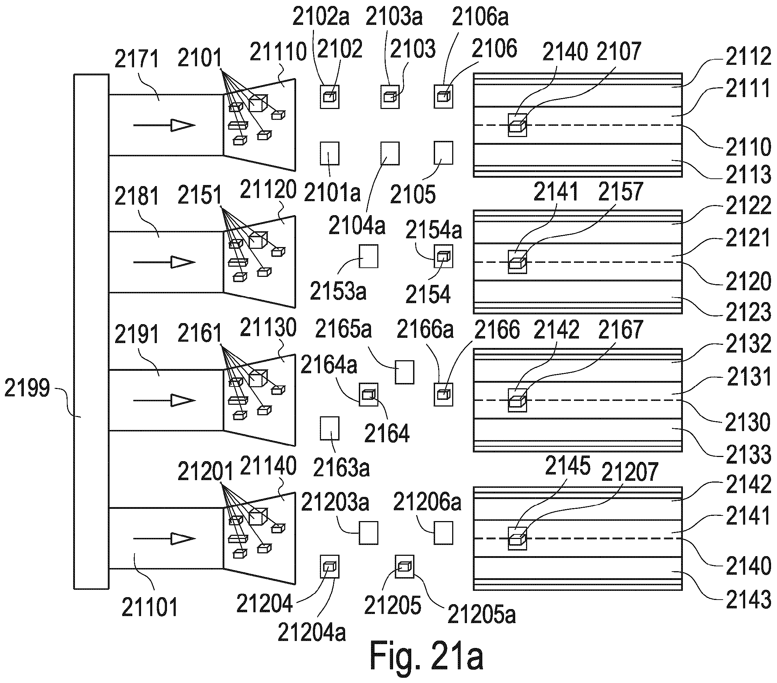

- FIG. 21: eine Aufsicht auf eine erfindungsgemäße Transfereinrichtung;

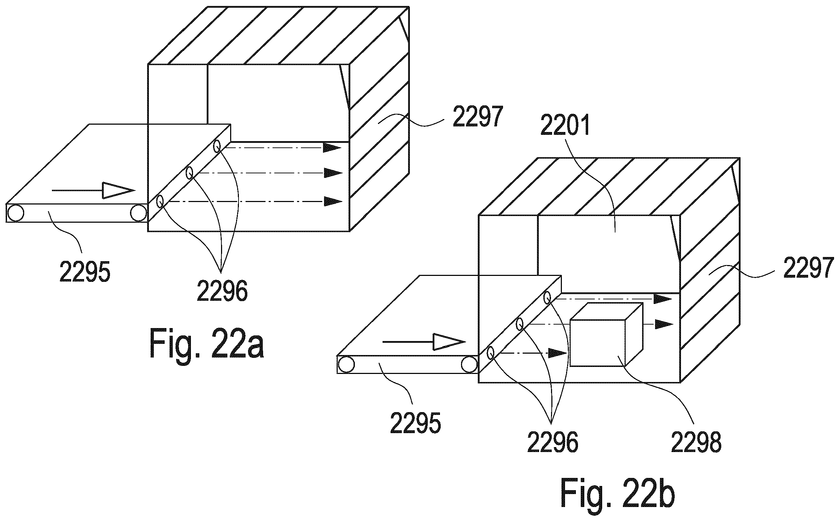

- FIG. 22: eine Prinzipdarstellung einer Übergabe eines Pakets an einen Empfänger;

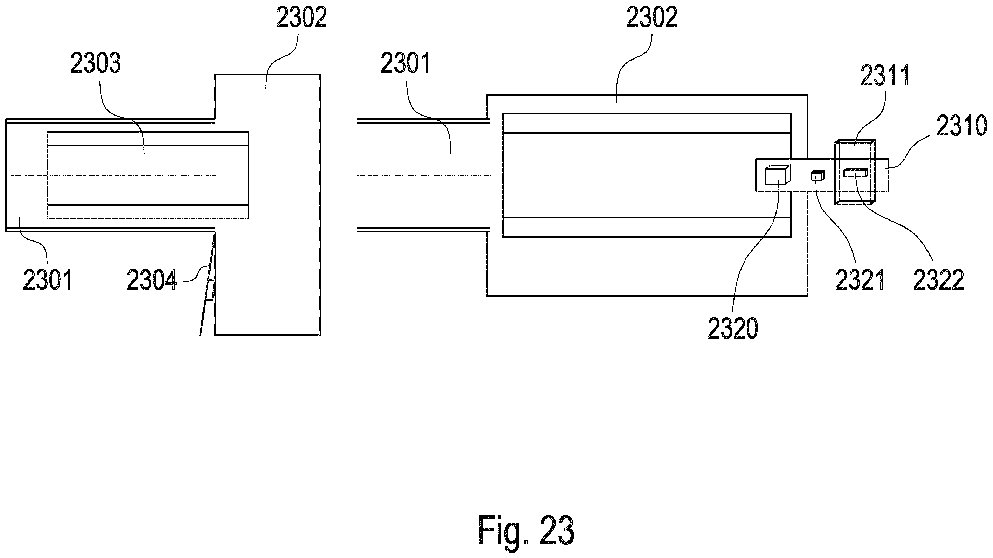

- FIG. 23: eine Prinzipdarstellung einer erfindungsgemäßen Beladung von Regalen;

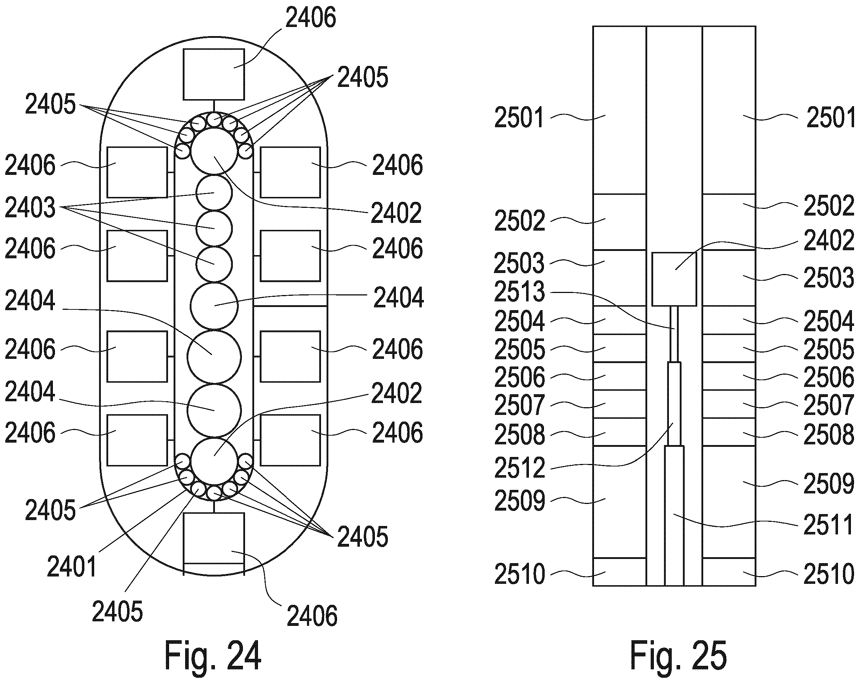

- FIG. 24: eine Prinzipdarstellung einer ein Paternostersystem aufweisenden erfindungsgemäßen Depoteinrichtung;
- FIG. 25: eine Prinzipdarstellung einer ein Paternostersystem aufweisenden erfindungsgemäßen Depoteinrichtung;

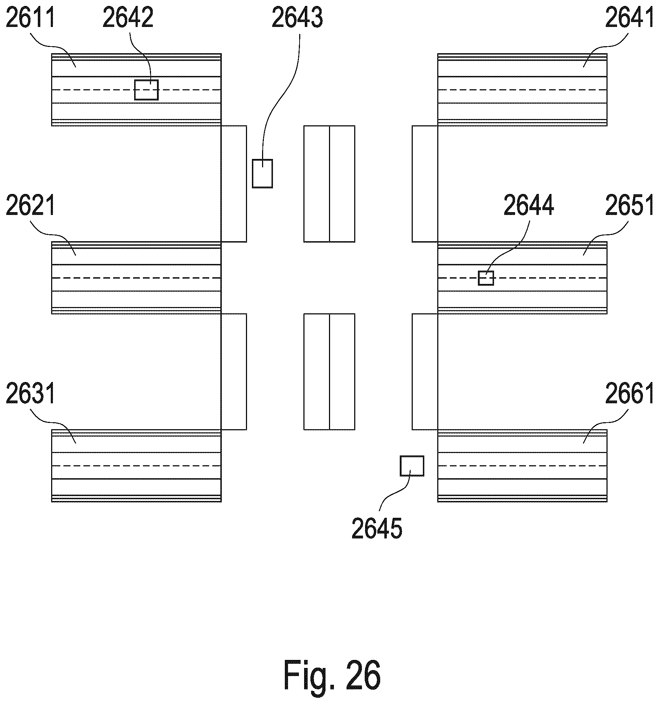

- FIG. 26: eine Prinzipdarstellung einer Depoteinrichtung dargestellt, die mit mehreren einzelnen Depoteinrichtungen zusammenwirken kann;

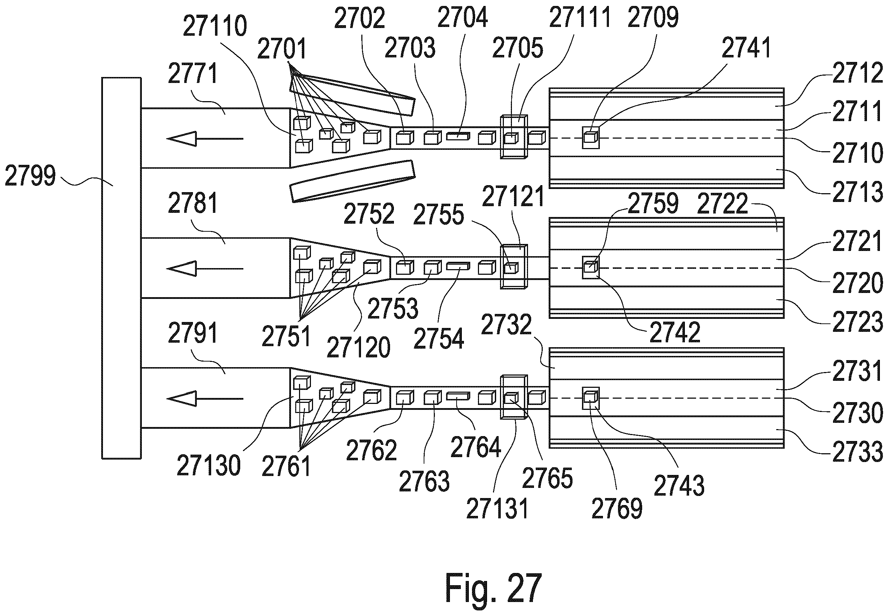

- FIG. 27: eine Aufsicht auf eine erfindungsgemäße Transfereinrichtung bei einem Entladevorgang;

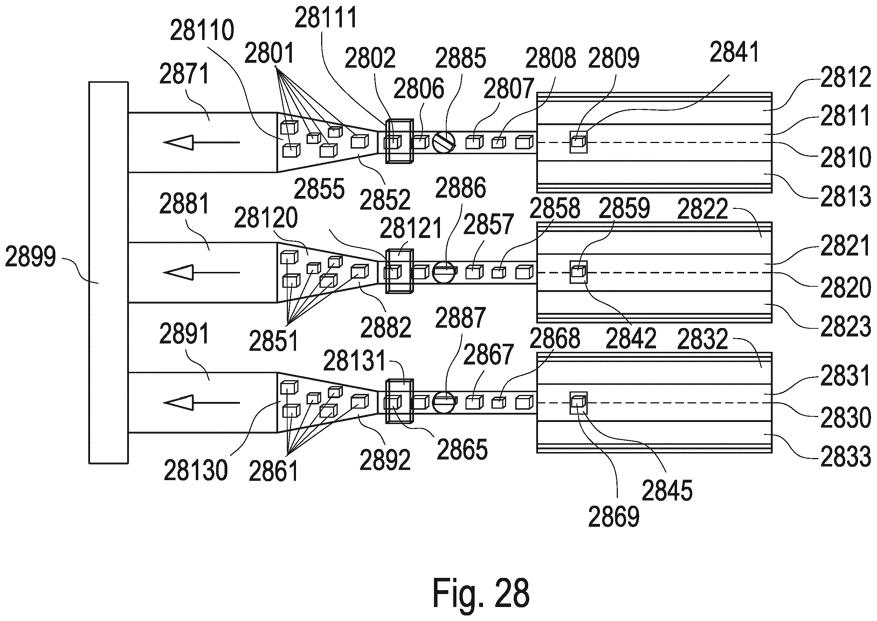

- FIG. 28: eine Aufsicht auf eine erfindungsgemäße Transfereinrichtung;

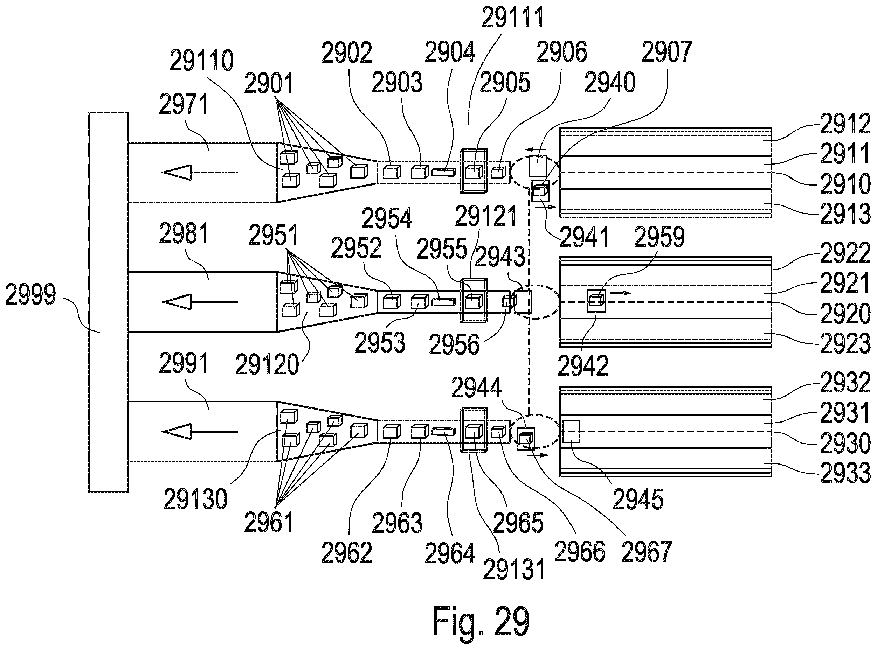

- FIG. 29: eine Aufsicht auf eine erfindungsgemäße Transfereinrichtung;

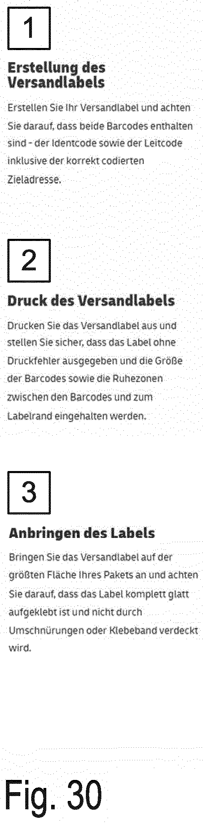

- FIG. 30: ein Ablaufplan für die Erstellung eines Versandlabels im Stand der Technik;

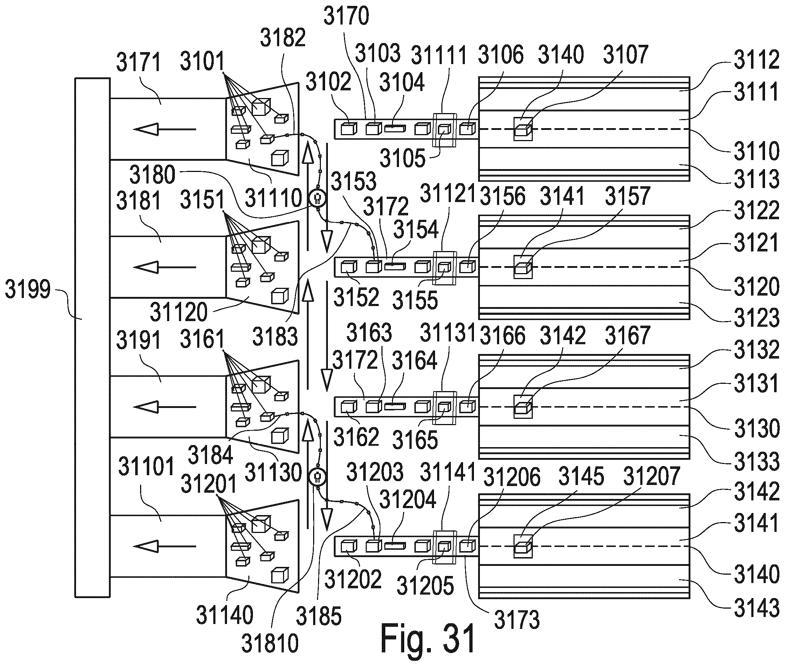

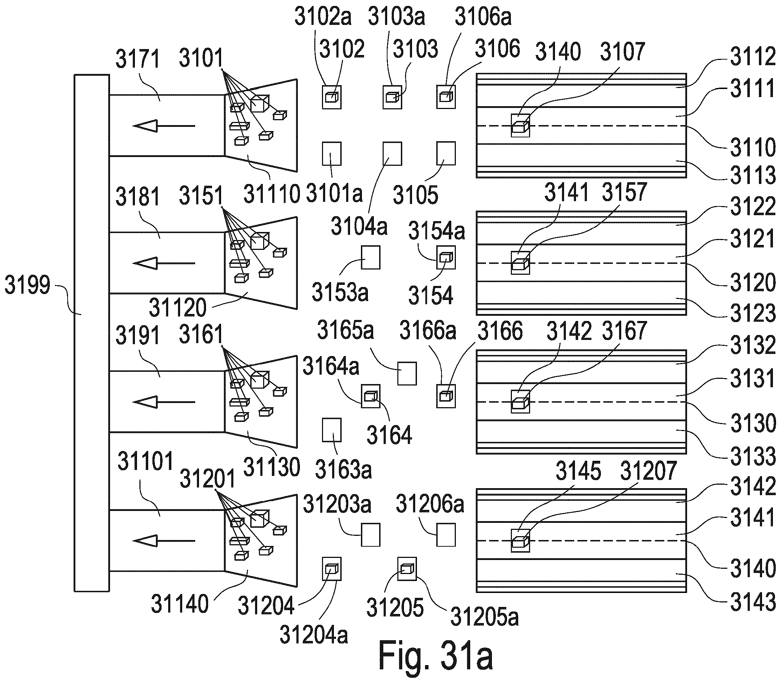

- FIG. 31: eine Aufsicht auf eine erfindungsgemäße Transfereinrichtung;

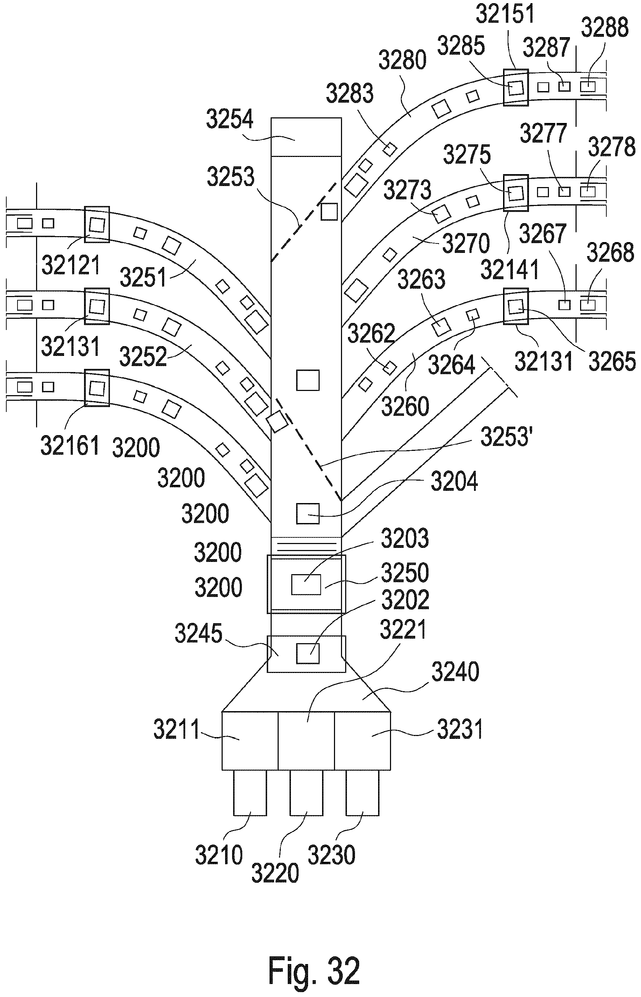

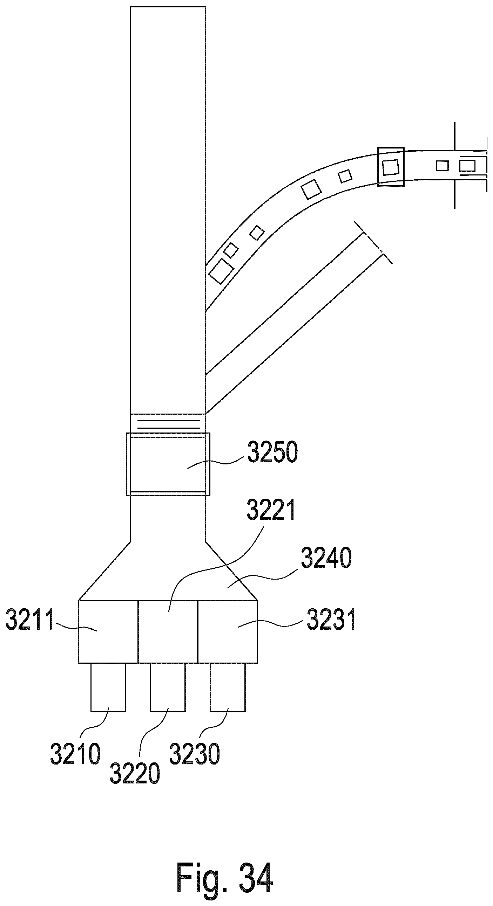

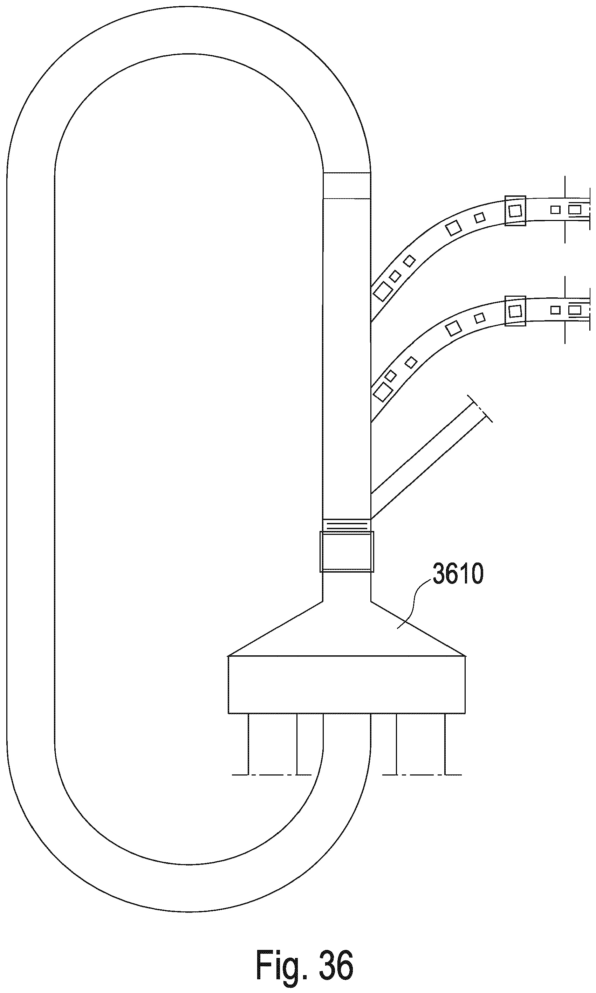

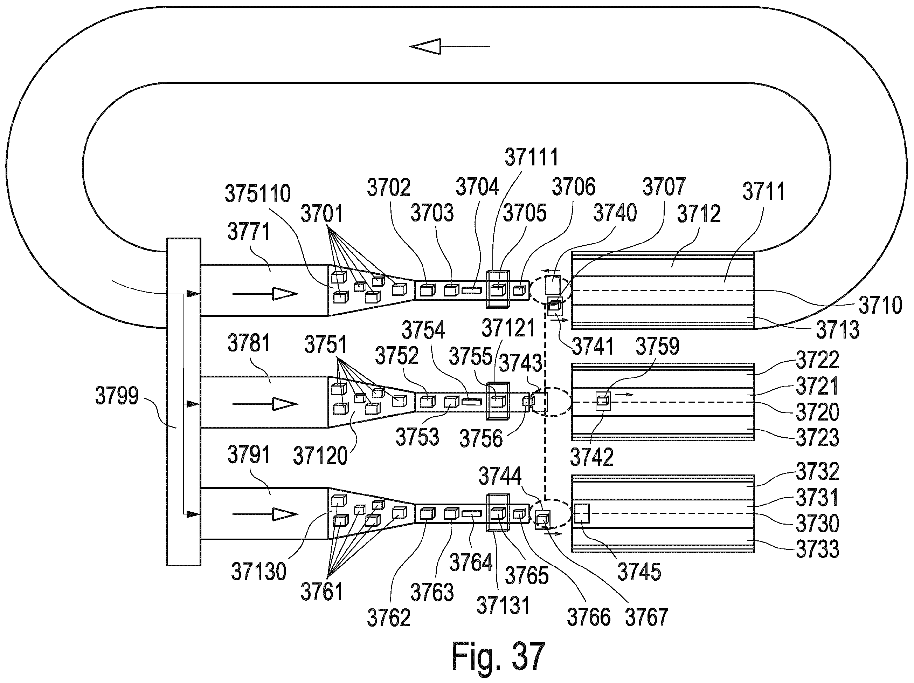

- FIG. 32, 34, 36, 37: bevorzugte Ausgestaltungen erfindungsgemäßer Verteilzentren;

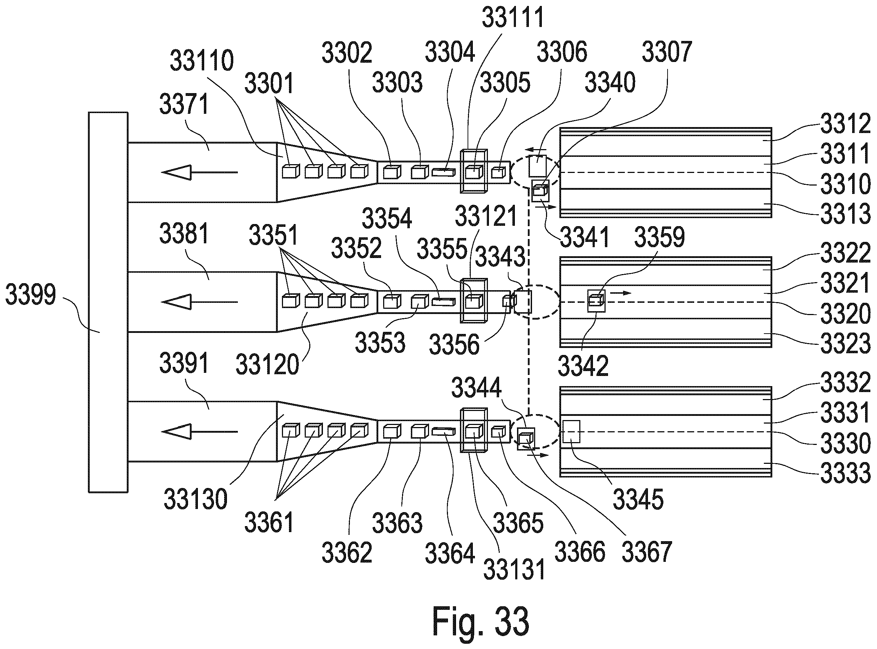

- FIG. 33: eine Aufsicht auf eine erfindungsgemäße Transfereinrichtung;

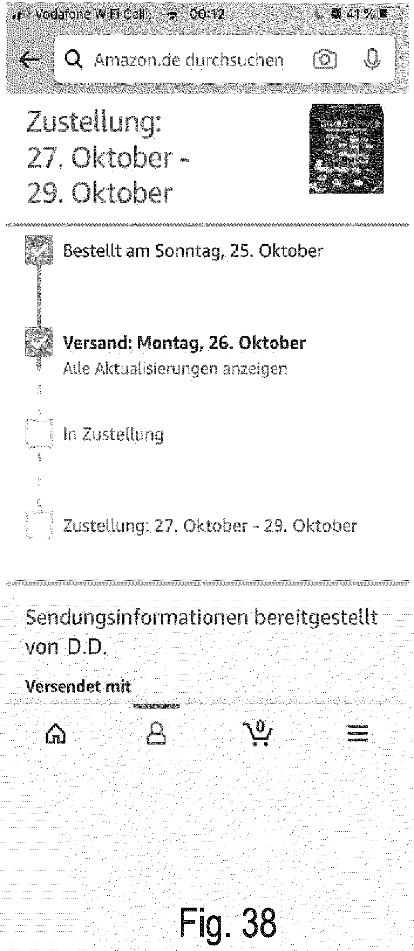

- FIG. 38: eine grafische Benutzeroberfläche einer Benutzerkomponente nach dem Stand der Technik;

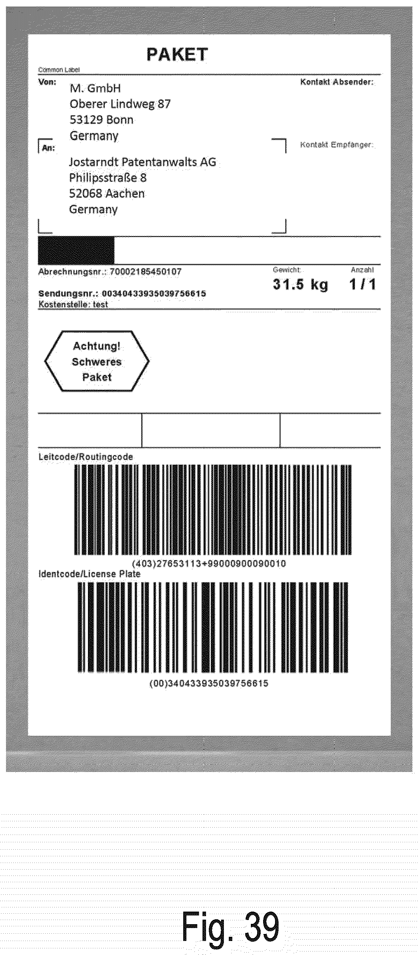

- FIG. 39: ein Versandlabel nach dem Stand der Technik;

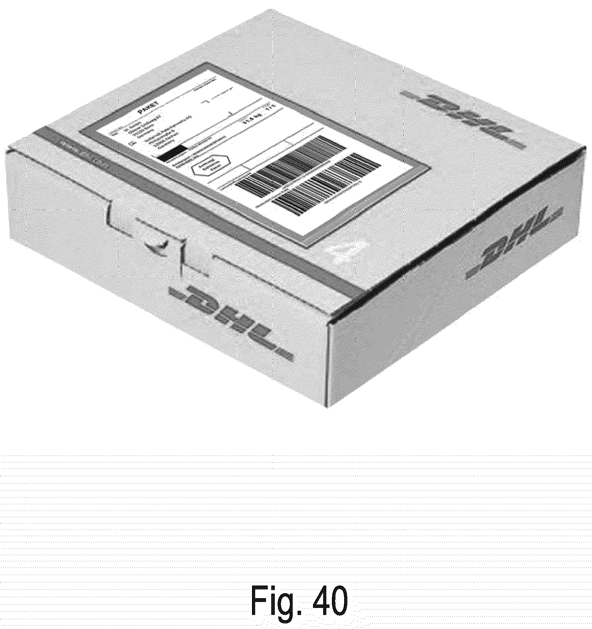

- FIG. 40: ein Paket nach dem Stand der Technik;

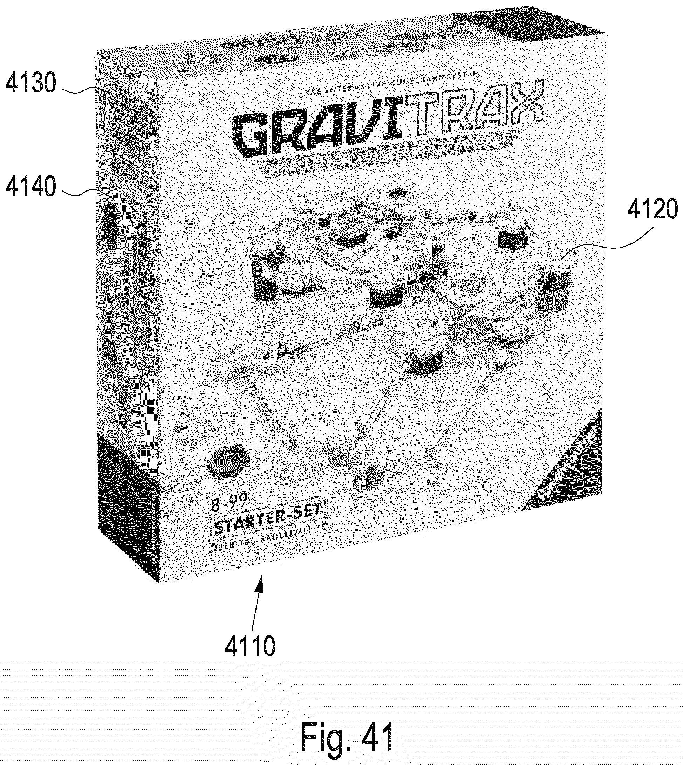

- FIG. 41: ein Warenobjekt;

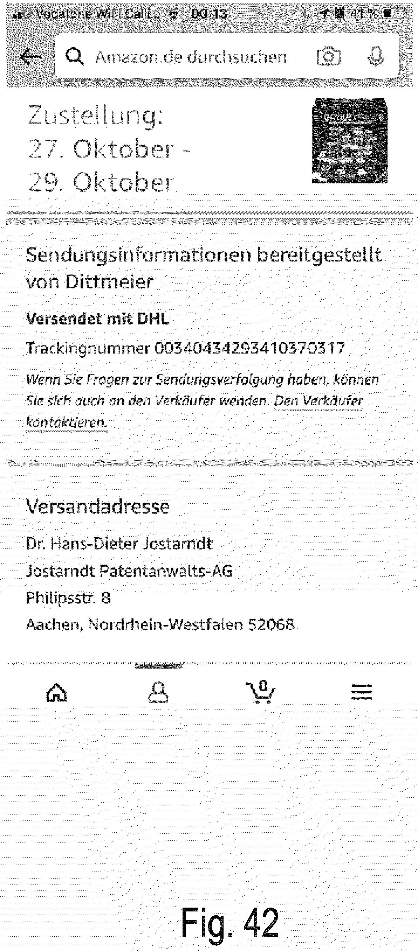

- FIG. 42: eine grafische Benutzeroberfläche einer Benutzerkomponente nach dem Stand der Technik;

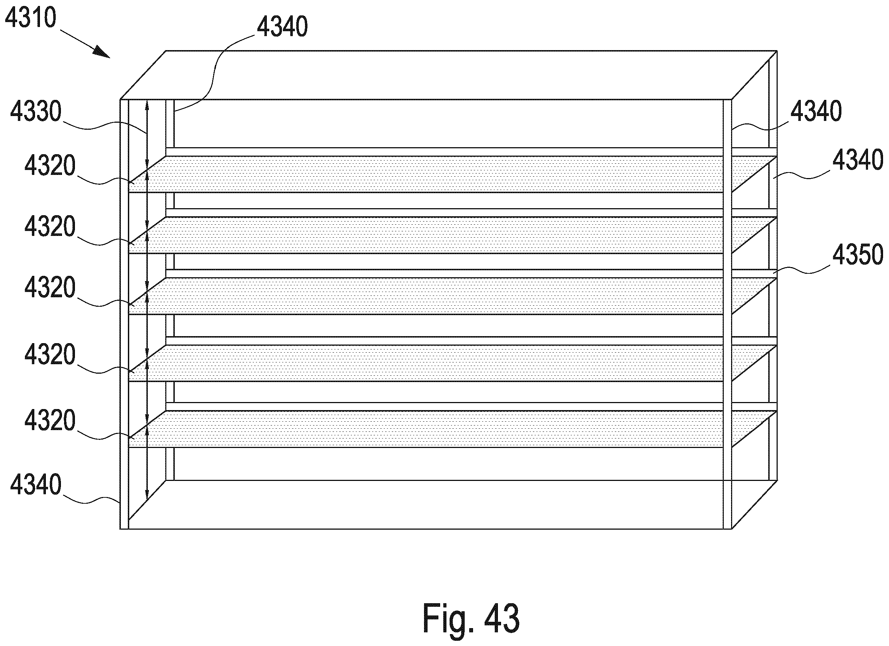

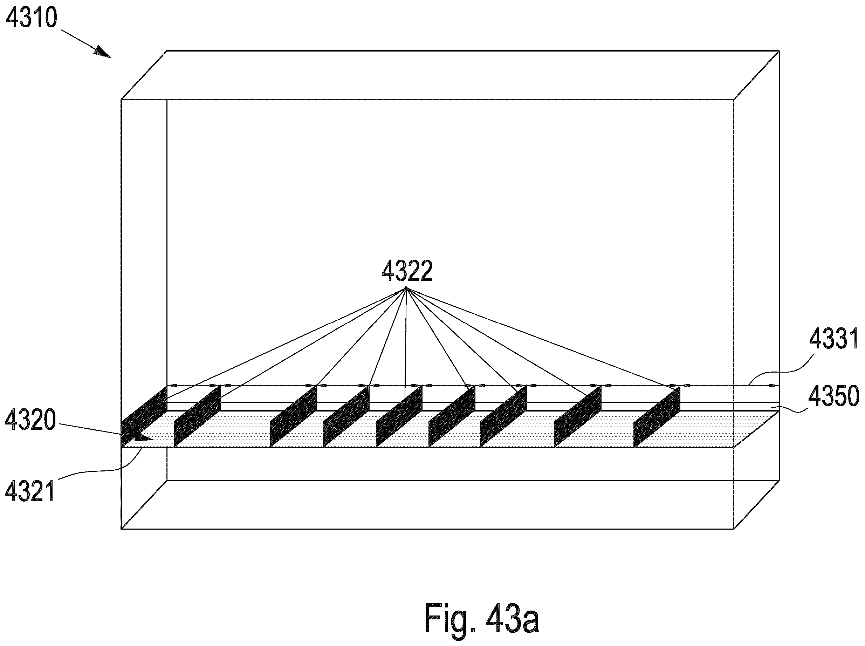

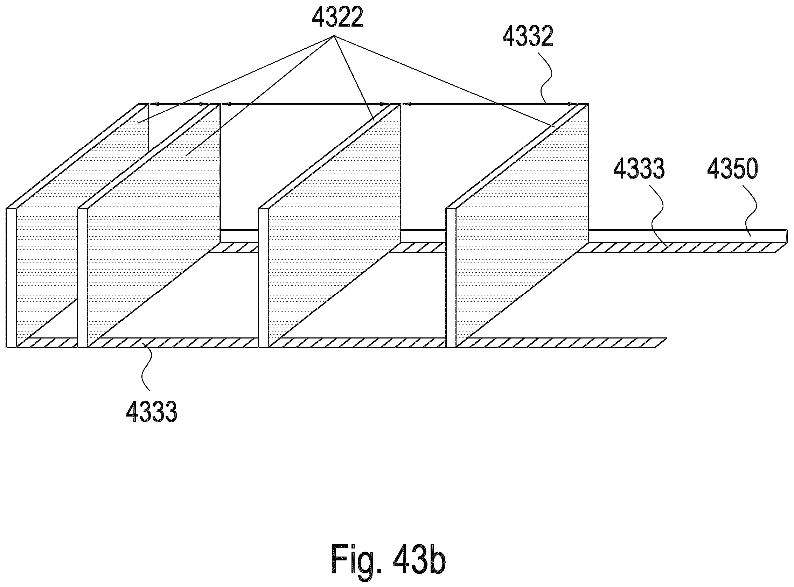

- FIG. 43, 43a 43b: eine Prinzipdarstellung eines erfindungsgemäßen Regalsystems;

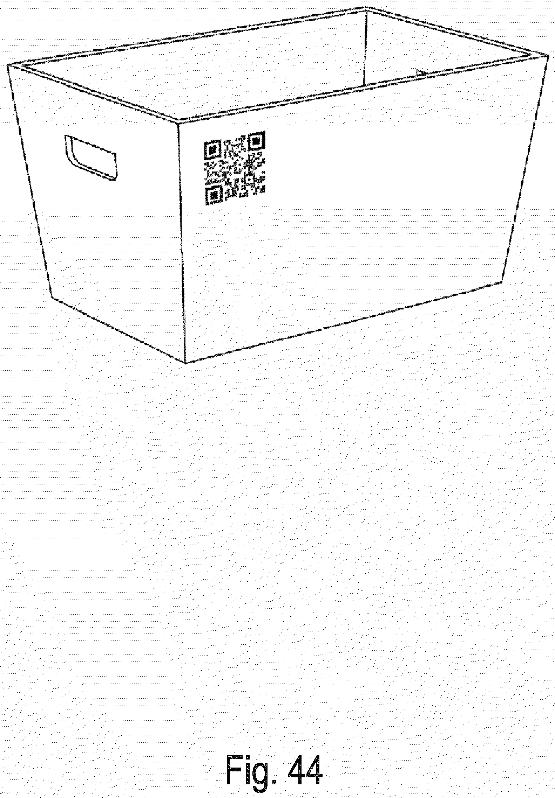

- FIG. 44: eine Prinzipdarstellung eines erfindungsgemäßen Pakets;
- FIG. 45: eine Prinzipdarstellung einer erfindungsgemäßen Zuordnung von Paketen zu Empfängern auf Grundlage von Empfängerattributen zur Handhabung physischer Pakete durch ein erfindungsgemäßes Logistiksystem.

### Erläuterung der Abbildungen

### Einleitung

Die vorliegende Anmeldung betrifft verschiedene Erfindungen, die durch das gemeinsame Konzept verbunden sind, Bearbeitungsvorgänge von Gegenständen möglichst weitgehend automatisiert und vorzugsweise auch kontaktlos durchzuführen.

Die vorliegende Anmeldung beinhaltet insbesondere Erfindungen, die wenigstens eines der folgenden Merkmale aufweisen:
- kontaktlose Übergabe von Paketen;
- Handhabung von Paketen auf der Grundlage wenigstens eines Paketidentifikationsmerkmals;
- Übergabe mehrerer Pakete an einem gemeinsamen optimierten Übergabepunkt innerhalb eines Übergabezeitraums;
- Auswahlverfahren (Ermittlungsverfahren) für die Ermittlung des gemeinsamen optimierten Übergabepunktes;
- Einsatz von Depoteinrichtungen für die Lagerung von Paketen;
- Einsatz von Depoteinrichtungen für die Sortierung von Paketen;
- Einsatz von Depoteinrichtungen für die Kommissionierung von Paketen;
- Einsatz von Depoteinrichtungen als Verkaufseinrichtungen.

Es ist möglich, diese Merkmale miteinander zu kombinieren, wobei es besonders vorteilhaft ist, auf Grundlage des erfindungsgemäßen Systems, wie es beispielhaft in Abbildung 5 dargestellt ist, ein Logistiksystem zu realisieren, das durch einen möglichst parallelen Einsatz mehrerer Merkmalskombinationen die Flexibilität, Effizienz und Zuverlässigkeit von Bearbeitungsvorgängen von Paketen erhöht.

Vorzugsweise wird wenigstens ein Teil der Pakete an den in dieser Anmeldung dargestellten gemeinsamen optimierten Übergabepunkten übergeben. Die in dieser Anmeldung offenbarten vorteilhaften Bearbeitungsvorgänge von Paketen und Bearbeitungssysteme von Paketen sind jedoch nicht auf Ausführungsformen der Bearbeitung von Paketen beschränkt, bei denen Übergabe von Paketen an gemeinsamen optimierten Übergabepunkten erfolgen.

Auch wenn die Erfindungen Bearbeitungsvorgänge von konventionellen Paketen ermöglichen, ist es möglich, zusätzlich und/oder stattdessen Gegenstände als Pakete zu handhaben, die in konventionellen Logistiksystemen nicht als Pakete gehandhabt werden können. Wie bereits im einleitenden Teil dargestellt, beinhaltet die vorliegende Anmeldung ferner eine Handhabung von Gegenständen mit gewissen Mindestabmessungen, Maximalabmessungen, Mindestgewichten und Maximalgewichten als Paketen, wobei die jeweiligen Bearbeitungsmittel an die Bezugsgrößen: Mindestabmessungen, Maximalabmessungen, Mindestgewichte und Maximalgewichte angepasst werden können. Es ist möglich, Gegenstände des täglichen Bedarfs wie Verbrauchsmaterialien oder Lebensmittel ebenso in Frage wie technische Gegenstände und Gerätschaften als Pakete zu bearbeiten, wobei es sich wie gleichfalls bereits im einleitenden Teil dargestellt, bei den Paketen um unverpackte Gegenstände, verpackte Gegenstände und umverpackte Gegenstände handeln kann, wobei bei verpackten und umverpackten Gegenständen das Paket die Verpackung bzw. Umverpackung und den darin verpackten Gegenstand umfasst. Ebenso ist es zweckmäßig, unverpackte Gegenstände, insbesondere Warenobjekte erfindungsgemäß zu bearbeiten. Briefsendungen sowie Werbematerialien und -prospekte sind auch Pakete im Sinne dieser Anmeldung.

Bevorzugte Übergabepunkte eines entsprechenden Logistiksystems sind in den Abbildungen 1, 2, 3, 4 und 7 dargestellt. Die dort dargestellten Übergabepunkte sind insbesondere gemeinsame optimierte Übergabepunkte für die Übergabe an die jeweiligen Empfänger und/oder für die Entgegennahme von den Einlieferern, vorzugsweise innerhalb eines bestimmten Übergabezeitraums.

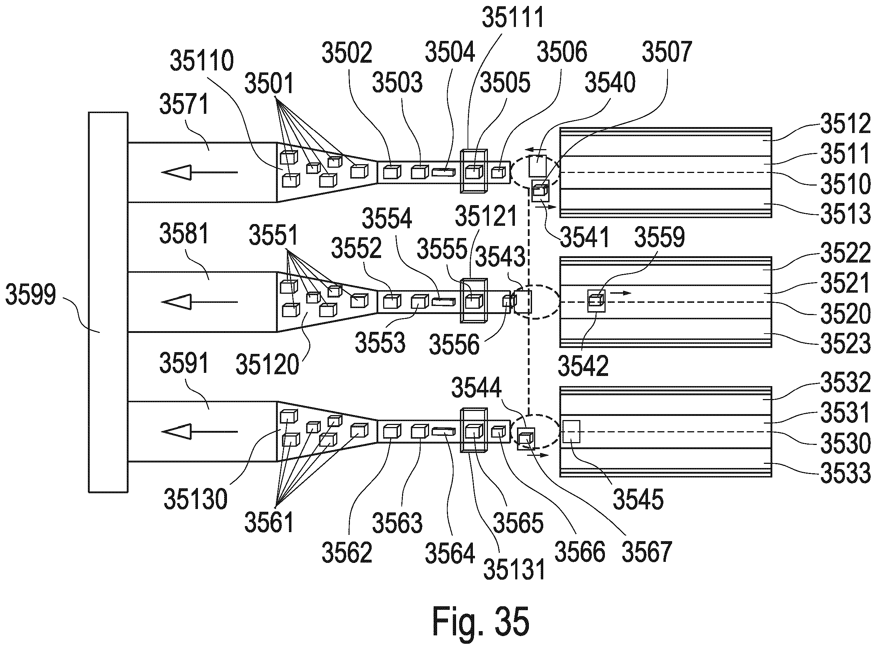

Vorzugsweise sind mehrere Übergabepunkte Standorte für Depoteinrichtungen. Bevorzugte Ausgestaltungen der Depoteinrichtungen sowie ihrer Beladung beziehungsweise ihrer Entladung sind in den Abbildungen 8, 9, 10, 11a, 11b, 11c, 11d, 14, 15, 16c, 16d, 17, 18, 19, 21, 22, 23, 24, 25, 26, 27, 28, 29, 31, 32, 33, 34, 35, 36, 37, 43, 43a und 43b dargestellt.

Die Abbildungen 1 bis 7 zeigen ein bevorzugtes System und Verfahren zur Übergabe einer Vielzahl von Paketen an mehrere Empfänger.

Nachfolgend werden anhand dieser Abbildungen vorteilhafte Ausführungsformen eines Verfahrens zur Übergabe einer Vielzahl von Paketen an mehrere Empfänger und/oder zur Einlieferung einer Vielzahl von Paketen mehrerer Einlieferer erläutert.

### Logik gemeinsamer optimierter Übergabepunkte

### Abbildung 1

Abbildung 1 zeigt eine Prinzipdarstellung, bei der sich ein Empfänger eines Pakets zwischen einem Ort 101 und einem Ort 109 bewegt, wobei sich ein weiterer Empfänger zwischen einem Ort 106 und einem Ort 102 bewegt, ein dritter Empfänger zwischen einem Ort 108 und einem Ort 103 bewegt und ein weiterer Empfänger sich zwischen einem Ort 104 und einen Ort 121 bewegt.

In diesem Fall wird als optimierter gemeinsamer Übergabepunkt 120 für eine Übergabe von Paketen an die zuvor genannten Empfänger der Ort 120 als Übergabepunkt - und damit als Übergabepunkt - ausgewählt, weil sich die Orte 102, 105, 109, 104 und 103 in unmittelbarer Nähe des Übergabepunktes 120 befinden, so dass sich sämtliche der zuvor genannten Empfänger innerhalb des Übergabezeitraums mindestens einmal in der Nähe des Übergabepunktes 120 befinden und eine Übergabe von Paketen an diesem gemeinsamen optimierten Übergabepunkt für die Empfänger mit möglichst geringem Aufwand erfolgen kann.

In einer besonders bevorzugten Ausgestaltung der Erfindung ist der Übergabepunkt 120 Standort für eine gegebenenfalls mobile Depoteinrichtung 140.

Die vorgenannten Überlegungen gelten analog auch dann, wenn die genannten Personen, anstatt Pakete an der Übergabestelle zu entnehmen, Pakete an der Übergabestelle einliefern. Dieses Auswahlverfahren (Optimierungsverfahren) ist somit gleichermaßen für die Übergabe von Paketen an Empfänger als auch für die Einlieferung von Paketen durch Einlieferer zweckmäßig.

### Abbildung 2

Abbildung 2 zeigt eine Prinzipdarstellung, bei der sich ein Empfänger eines Pakets zwischen einem Ort 201 und einem Ort 202 bewegt, wobei sich ein weiterer Empfänger zwischen einem Ort 203 und einem Ort 208 bewegt, ein dritter Empfänger bewegt sich zwischen einem Ort 207 und einem Ort 204 und ein weiterer Empfänger bewegt sich zwischen einem Ort 206 und einen Ort 205.

Wie dieses Beispiel zeigt, ist es hier nicht möglich, einen optimierten gemeinsamen Übergabepunkt für eine Übergabe an sämtliche Empfänger zu ermitteln, da der Zeitaufwand für mindestens einzelne Empfänger sehr hoch ist, was beispielhaft einem hohen - ungünstigen - Aufwandsparameter für mindestens einzelne Empfänger und somit einem hohen gemittelten Aufwandsparameter für alle Empfänger entspricht.

In diesem Fall wird ein gemeinsamer optimierter Übergabepunkt 220 für eine Übergabe von Paketen an die sich zwischen den Orten 201 und 202 sowie die sich zwischen den Orten 203 und 208 bewegenden Empfänger ausgewählt, weil sich die Orte 202 und 203 in unmittelbarer Nähe des Übergabepunktes 220 befinden, so dass sich sämtliche dieser Empfänger in der Nähe des Übergabepunktes 220 befinden und eine Übergabe von Paketen an diesem gemeinsamen optimierten Übergabepunkt für diese Empfänger mit möglichst geringem Aufwand erfolgen kann.

Ferner wird in diesem Fall ein gemeinsamer optimierter Übergabepunkt 230 für eine Übergabe von Paketen an die sich zwischen den Orten 205 und 206 sowie die sich zwischen den Orten 207 und 204 bewegenden Empfänger ausgewählt, weil sich Wegstrecken zwischen diesen Orten in unmittelbarer Nähe des Übergabepunktes 230 befinden, so dass die Wegstrecken sämtlicher dieser Empfänger in der Nähe Übergabepunktes 230 verlaufen und eine Übergabe von Paketen an diesem gemeinsamen optimierten Übergabepunkt 230 für diese Empfänger mit möglichst geringem Aufwand erfolgen kann.

In einer besonders bevorzugten Ausgestaltung der Erfindung ist der Übergabepunkt 220 Standort für eine gegebenenfalls mobile Depoteinrichtung 240. Ferner ist es zweckmäßig, dass sich auch am Übergabepunkt 230 eine mobile Depoteinrichtung 250 befindet. Die Aufenthaltsdauer von mobilen Depoteinrichtungen an dem jeweiligen Übergabepunkt 220, beziehungsweise 230 entspricht in diesem Fall dem Übergabezeitraum.

In der in Abbildung 2 dargestellten Ausführungsform ist für den Empfänger/Einlieferer, der sich zwischen Übergabepunkten 203 und 208 bewegt, anstelle des hier ausgewählten gemeinsamen optimierten Übergabepunktes 220 alternativ auch eine Übergabe an dem gemeinsamen, gleichfalls optimierten Übergabepunkt 230 gleichfalls möglich. Dieses Beispiel zeigt, dass zusätzlich zu den bisher dargestellten Parametern für die Auswahl gemeinsamer optimierter Übergabepunkte weitere Aspekte vorteilhafterweise zusätzlich mitberücksichtigt werden können, so beispielsweise Kapazitätsplanungen für die Depoteinrichtungen an den jeweiligen Übergabepunkten.

Von der Erfindung mit umfasst sind gleichfalls zweckmäßige Ausführungsformen, bei denen für die Übergabe von Paketen an den beiden Übergabepunkten 220 und 230 eine einzige Depoteinrichtung eingesetzt wird. In diesem Fall befindet sich die Depoteinrichtung in einem ersten Übergabezeitraum an einem ersten Übergabepunkt 220 und in einem zweiten Übergabezeitraum an dem zweiten Übergabepunkt 230. Hierbei ist es zweckmäßig, dass die Bewegung (der Transport) der Depoteinrichtung durch das in Abbildung 5 dargestellte Logistiksystem gesteuert wird.

Sämtliche der vorgenannten Überlegungen gelten analog auch dann, wenn die genannten Personen anstatt Pakete an einem Übergabepunkt, insbesondere einer Depoteinrichtung zu entnehmen, Pakete an einem Übergabepunkt, insbesondere der Depoteinrichtung einliefern. Dieses Auswahlverfahren (Optimierungsverfahren) zur Ermittlung gemeinsamer optimierter Übergabepunkte ist somit gleichermaßen für die Übergabe von Paketen an Empfänger als auch für die Einlieferung von Paketen durch Einlieferer zweckmäßig.

### Abbildung 3

Abbildung 3 zeigt eine Prinzipdarstellung einer Auswahl zweier gemeinsamer optimierter Übergabepunkte 320 und 330 aus einer Vielzahl möglicher räumlich voneinander getrennter Übergabepunkte 310, 311, 312, 313, 314, 315, 316, 317, 318, 319, 320, 330, bei der sich ein Empfänger eines Pakets zwischen einem Ort 301 und einem Ort 306 bewegt, wobei sich ein weiterer Empfänger zwischen einem Ort 303 und einem Ort 307 bewegt, ein dritter Empfänger bewegt sich zwischen einem Ort 308 und einem Ort 305 und ein weiterer Empfänger bewegt sich zwischen einem Ort 302 und einen Ort 304.

Von der Erfindung mit umfasst sind gleichfalls zweckmäßige Ausführungsformen, bei denen für die Übergabe von Paketen an den beiden Übergabepunkten 320 und 330 eine einzige Depoteinrichtung eingesetzt wird. In diesem Fall befindet sich die Depoteinrichtung in einem ersten Übergabezeitraum an einem ersten Übergabepunkt 320 und in einem zweiten Übergabepunkt. Hierbei ist es zweckmäßig, dass die Bewegung (der Transport) der Depoteinrichtung durch das in Abbildung 5 dargestellte Logistiksystem gesteuert wird.

Die vorgenannten Überlegungen gelten analog auch dann, wenn die genannten Personen, anstatt Pakete an der Übergabestelle zu entnehmen, Pakete an der Übergabestelle einliefern. Dieses Auswahlverfahren (Optimierungsverfahren) ist somit gleichermaßen für die Übergabe von Paketen an Empfänger als auch für die Einlieferung von Paketen durch Einlieferer zweckmäßig.

Wie dieses Beispiel zeigt, ist es hierbei weniger gut möglich, einen gemeinsamen optimierten Übergabepunkt für eine Übergabe an sämtliche Empfänger zu ermitteln, da der Zeitaufwand für mindestens einzelne Empfänger sehr hoch ist, was beispielhaft einem hohen - ungünstigen - Aufwandsparameter für mindestens einzelne Empfänger und somit einem hohen gemittelten Aufwandsparameter für alle Empfänger entspricht.

Falls der gemittelte Aufwandsparameter das Entscheidungskriterium für die Auswahl von Übergabepunkten ist, wird ein gemeinsamer optimierter Übergabepunkt 320 für eine Übergabe von Paketen an die sich zwischen den Orten 302 und 204 sowie die sich zwischen den Orten 303 und 307 bewegenden Empfänger ausgewählt, weil sich der Übergabepunkt 320 in unmittelbarer Nähe der Wegstrecken zwischen diesen Orten befindet, so dass für sämtliche Empfänger, die Wegstrecken zurücklegen, die in der Nähe des Übergabepunktes 320 verlaufen, eine Übergabe von Paketen an diesem gemeinsamen optimierten Übergabepunkt 320 mit möglichst geringem Aufwand erfolgen kann.

Ferner wird in diesem Fall ein gemeinsamer optimierter Übergabepunkt 330 für eine Übergabe von Paketen an die sich zwischen den Orten 301 und 306 sowie die sich zwischen den Orten 307 und 303 bewegenden Empfänger, sowie für die sich auf einer Wegstrecke zwischen den Orten 305 und 308 bewegenden Empfänger ausgewählt, weil sich Wegstrecken zwischen diesen Orten in unmittelbarer Nähe des Übergabepunktes 330 befinden, so dass die Wegstrecken sämtlicher dieser Empfänger in der Nähe des Übergabepunktes 330 verlaufen und eine Übergabe von Paketen an diesem gemeinsamen optimierten Übergabepunkt 330 für diese Empfänger mit möglichst geringem Aufwand erfolgen kann.

In einer besonders bevorzugten Ausgestaltung der Erfindung ist der Übergabepunkt 320 Standort für eine gegebenenfalls mobile Depoteinrichtung 340. Ferner ist es zweckmäßig, dass sich auch am Übergabepunkt 330 eine mobile Depoteinrichtung 350 befindet. Der Übergabezeitraum für die Übergabe von Paketen durch mobile Depoteinrichtungen an dem jeweiligen Übergabepunkt 320, beziehungsweise 330 entspricht möglichst weitgehend der Aufenthaltsdauer der mobilen Depoteinrichtung(en) an dem jeweiligen Übergabepunkt 320, beziehungsweise 330.

In der in Abbildung 3 dargestellten Ausführungsform ist für den Empfänger/Einlieferer, der sich zwischen Übergabepunkten 303 und 307 bewegt, anstelle des hier ausgewählten gemeinsamen optimierten Übergabepunktes 320 alternativ auch eine Übergabe an dem gemeinsamen, gleichfalls optimierten Übergabepunkt 330 gleichfalls möglich. Dieses Beispiel zeigt, dass zusätzlich zu den bisher dargestellten Parametern für die Auswahl gemeinsamer optimierter Übergabepunkte weitere Aspekte vorteilhafterweise zusätzlich mitberücksichtigt werden können, so beispielsweise Kapazitätsplanungen für die Depoteinrichtungen an den jeweiligen Übergabepunkten.

In den Abbildungen 1-3 ist die Erfindung beispielhaft bei einem Einsatz für wenige Empfänger dargestellt. Es handelt sich hierbei um eine Einzeldarstellung von Teilaspekten der Erfindung. Die vorliegende Erfindung eignet sich insbesondere für eine Übergabe von mehreren Tausend Paketen und in einer entsprechenden Ausbaustufe für eine Übergabe von mehreren Millionen Paketen an einem Tag.

### Abbildungen 4a, 4b, 4c und 4d

Abbildungen 4a, 4b, 4c und 4d zeigen schematisiert Karten zur Verdeutlichung der geographischen Anordnung der in den Abbildungen 1-3 dargestellten Übergabepunkte.

In den Abbildungen 4a, 4b, 4c und 4d ist der Einsatz der Erfindung in einer idealisiert dargestellten Stadt dargestellt.

Jede Stadt verfügt über eine Vielzahl von möglichen Übergabepunkten 401, 410, 415, 420, 480 und 495. Der Standort 495 befindet sich im dargestellten Ausführungsbeispiel auf einem Parkplatz einer die Stadt tangierenden Autobahn; in dargestellten Fall ohne Beschränkung der Allgemeinheit in Fahrtrichtung stadtauswärts.

In Abbildung 4b, einem Ausschnitt von Abbildung 4a, hier des oberen mittleren Teils von 4a, ist ein Einsatz der Erfindung für einen Übergabezeitraum zu Tageszeiten eines Werktages, beispielsweise eines Freitags, dargestellt.

In Abbildung 4c, ebenfalls einem Ausschnitt von Abbildung 4a, hier auf der rechten Seite, ist ein Einsatz der Erfindung für einen Übergabezeitraum zu Tageszeiten eines beliebigen Tages und gegebenenfalls auch ohne zeitliche Unterbrechung 24/7 dargestellt.

Abbildung 4d zeigt eine Implementation der Erfindung mit einer idealisiert dargestellten Fernstraßenkarte, bei der sich die zuvor in den Abbildungen 4a, 4b und 4c idealisiert dargestellte Stadt dargestellt im linken Bereich befindet und wobei eine über gegebenenfalls mehrere Autobahnen verlaufende Fahrstrecke als durchgezogene Linie dargestellt ist und wobei diese Fahrstrecke gleichfalls eine Wegstrecke im Sinne dieser Anmeldung ist.

An Werktagen fahren zahlreiche Personen in die Stadt beziehungsweise umrunden die Stadt auf einer Ringstraße, die in Abb. 4a durch eine dunkle Linie markiert ist. Eine in Abbildung 4c und Abbildung 4d dargestellte Ausfallstraße 412 wird sowohl an Werktagen als auch am Wochenende umfangreich befahren.

Die Ringstraße verläuft abschnittsweise in der Nähe eines Tierparks, der an Wochentagen nur wenig besucht wird. Der Tierpark verfügt über eigene große Parkplätze. Nur wenn diese Parkplätze fast vollständig genutzt sind, parken Besucher des Tierparks auf in der Nähe des Tierparks befindlichen Abschnitten der Ringstraße, beispielsweise auf dem in Abbildung 4a dargestellten Parkplatz 410.

Sofern der Freitag kein Feiertag ist, hat der Tierpark nur wenige Besucher und keiner der Besucher des Tierparks benutzt andere Parkplätze als die Parkplätze des Tierparks. Die Ringstraße verfügt deshalb an Werktagen über zahlreiche freie Parkplätze. Der Parkplatz 410 ist werktags stets frei und auch an Wochenenden kann auf dem Parkplatz 410 eine Depoteinrichtung oder ein die Depoteinrichtung enthaltendes Logistikfahrzeug bei einer Ankunft zu einer frühen Uhrzeit abgestellt werden.

Bei dem erfindungsgemäßen Verfahren wird - beispielsweise bei Verfahrensschritten, wie sie beispielhaft anhand von Abbildung 6 dargestellt sind - festgestellt, dass sich daher an der Ringstraße sowohl der Übergabepunkt 410 als auch bei unmittelbar hieran angrenzenden Parkplätzen mindestens ein geeigneter Übergabepunkt 410 für Pakete befindet. Der Übergabepunkt 410 ist deshalb besonders vorteilhaft, weil er unmittelbar an weitere Parkplätze angrenzt. Für Nutzer von öffentlichen Verkehrsmitteln ist der Übergabepunkt 410 nur eingeschränkt nutzbar, da an Werktagen nur wenige Personen an der in unmittelbarer Nähe befindlichen Haltestelle der örtlichen Busgesellschaft ein- oder aussteigen.

Ein weiterer geeigneter Übergabepunkt für Pakete ist der Übergabepunkt 480. Er befindet sich auf einem öffentlich zugänglichen Parkplatz unmittelbar vor einem Industriegelände. Er ist sowohl von das Industriegelände per Fahrrad erreichenden Benutzern als auch von Kraftfahrzeugen benutzenden Personen gleichermaßen gut erreichbar. Auch für Benutzer öffentlicher Verkehrsmittel ist dies ein geeigneter Übergabepunkt, da er sich ebenso wie der Übergabepunkt 410 in unmittelbarer Nähe einer Bus-Haltestelle für mehrere Linien befindet. Die nahe gelegene Haltestelle wird wegen ihrer Nähe zu mehreren Industriegeländen und zahlreichen dort angesiedelten Unternehmen von den frühen Morgenstunden bis in die späten Abendstunden intensiv als Einstiegshaltestelle, beziehungsweise als Ausstiegshaltestelle genutzt.

Ein weiterer gemeinsamer optimierter Übergabepunkt für die Übergabe zahlreicher Pakete ist der Übergabepunkt 420. Er befindet sich auf dem Gelände eines Baumarkts. Ferner ist dieser Übergabepunkt 420 für Berufspendler sehr gut erreichbar, da er in unmittelbarer Nähe der das Stadtzentrum mit außen liegenden Wohngebieten verbindenden Ausfallstraße 412 liegt. Ferner wird er durch die Kunden des Baumarktes und anliegender Geschäfte sowie Besucher eines nahegelegenen Polizeipräsidiums genutzt. Die genannten Einrichtungen werden auch von Benutzern öffentlicher Verkehrsmittel genutzt, insbesondere unter Einsatz einer dementsprechend als Einstiegshaltestelle und Ausstiegshaltestelle umfangreich genutzten Bushaltestelle.

Es ist zweckmäßig, insbesondere werktags die genannten Übergabepunkte 410, 420 und 480 als Standorte für erfindungsgemäße Depoteinrichtungen 140, 240, 250, 340, 350, 1710,1720, 1730, 1810, 1820, 1830, 1910, 1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 einzusetzen.

Eine gleichfalls vorteilhafte Ausführungsform der Erfindung sieht vor, dass sich an wenigstens einem, gegebenenfalls auch mehreren Übergabepunkten eine Depoteinrichtung befindet, die nicht nur für eine Übergabe von über das Logistiksystem transportierten Pakete, sondern auch für die Übergabe von Warenobjekten durch die Depoteinrichtung eingesetzt wird.

In diesem Fall ist eine flexible Nutzung der an dem Übergabepunkt 420 befindlichen Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 in gegebenenfalls variablen Umfang für die Übergabe von über das Logistiksystem transportierten Paketen und für durch die Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 kommissionierte Warenobjekte vorteilhaft.

Ein derartiger Einsatz der an dem Übergabepunkt 420 befindlichen Depoteinrichtung kommt nicht nur wie im dargestellten Fall an einem Freitag, sondern auch an anderen Tagen in Betracht.

In gleichfalls vorteilhaften Ausführungsformen der Erfindung beginnt ein Übergabezeitraum für die Übergabe an die Empfänger und/oder die Entgegennahme von den Einlieferern an dem zugeordneten gemeinsamen optimierten Übergabepunkt am Samstagmorgen und endet beispielhaft am Samstagabend oder am Sonntagabend.

Für diesen Übergabezeitraum ergibt das erfindungsgemäße Optimierungsverfahren andere gemeinsame optimierte Übergabepunkte 410, 415, 420, 495 für eine Übergabe von Paketen als die gemeinsamen optimierten Übergabepunkte 410, 420, 480, 495 für einen Übergabezeitraum, der beispielsweise an einem Werktag früh beginnt und am gleichen Werktag endet.

Der Übergabepunkt 410 kann auch an Wochenenden gut für das Aufstellen einer Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 genutzt werden, da die erwartete Ankunftszeit der Depoteinrichtung zum Erreichen einer möglichst hohen Zahl potentieller Empfänger oder Einlieferer von Paketen vor üblichen Ankunftszeiten von Besuchern des Tierparks liegt.

Der Übergabepunkt 410 ist jedoch an Samstagen und Sonntagen für eine Übergabe von Paketen an Empfänger, die Autos benutzen nur wenig geeignet, da sie wegen der zuvor dargestellten Auslastung des Parkplatzes nur geringe Aussichten haben, einen Parkplatz in der Nähe des Übergabepunktes 410 zu erreichen.

Für die Übergabe von insbesondere leichteren Paketen an Fahrradfahrer oder an die Benutzer der nahen gelegenen Bushaltestelle eignet sich der Übergabepunkte 410 auch an Samstagen und Sonntagen, da viele dieser Personen den Übergabepunkt 410 auf ihrem Weg von dem Tierpark zu ihrem Wohnort oder einem anderen Ort, den sie aufsuchen möchten, passieren.

Sofern eine ausreichende Anzahl von Empfängern und/oder Einlieferern von Paketen, die den Übergabepunkt 410 mit dem Fahrrad oder mit öffentlichen Verkehrsmitteln passieren, vorliegt, eignet sich der Übergabepunkt 410 auch an Wochenenden als Standort für eine mobile Depoteinrichtung.

Für Autofahrer eignet sich an Wochenenden der Übergabepunkt 410 wegen fehlender Parkmöglichkeiten in unmittelbarer Nähe weniger.

Es ist jedoch möglich, alternativ zu dem Übergabepunkt 410 oder - bei entsprechender Auslastung einer Depoteinrichtung 410 durch Nutzer öffentlicher Verkehrsmittel und Fahrradfahrer zusätzlich zu einer Depoteinrichtung an dem Standort 410 einen weiteren gemeinsamen optimierten Übergabepunkt 415 auf einem Bauernhof mit Außer-Haus-Verkauf vorzusehen. Hier ist der Parkplatz dieses Bauernhofes ein optimierter Übergabepunkt 415 und vorzugsweise Standort für eine erfindungsgemäße Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 oder gegebenenfalls für mehrere Depoteinrichtungen.

Der an Werktagen besonders geeignete Übergabepunkt 480 eignet sich für einen Einsatz an Wochenenden weniger, da die an ihn angrenzenden Wegstrecken und Aufenthaltsorte an Wochenenden kaum genutzt werden.

Wie zuvor bereits dargestellt, ist an Wochenenden der Übergabepunkt 420 ein besonders geeigneter gemeinsamer optimierter Übergabepunkt. Da an Wochenenden ein hoher Bedarf von Paketübergaben im Bereich des Übergabepunktes 420 erwartet wird, ist es möglich, an dem Übergabepunkt 420 nicht nur eine erfindungsgemäße Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322, sondern gegebenenfalls auch mehrere Depoteinrichtungen aufzustellen. Auch ist es zweckmäßig, die Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322, für eine Übergabe von Warenobjekten einzusetzen.

Die vorgenannten Überlegungen gelten analog auch dann, wenn die genannten Personen, anstelle von Paketen an der Übergabestelle zu entnehmen, Pakete an der Übergabestelle einliefern. Dieses Auswahlverfahren (Optimierungsverfahren) ist somit gleichermaßen für die Übergabe von Paketen an Empfängern als auch für die Einlieferung von Paketen durch Einlieferer zweckmäßig.

In den Abbildungen ist ferner dargestellt, dass für die Pakete aus einer Vielzahl möglicher räumlich voneinander getrennter Übergabepunkte 110, 111, 112, 113, 114, 115, 116, 117, 118, 119, 120, 210, 211, 212, 213, 214, 215, 216, 217, 218, 219, 220, 230, 240, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720 unter Berücksichtigung wenigstens eines Aufwandsparameters jeweils ein zugeordneter Übergabepunkt 120, 220, 230, 320, 330, 410, 415, 420, 495, 650, 720 für die Übergabe an den jeweiligen Empfänger innerhalb eines bestimmten Übergabezeitraums ermittelt wird, und dass die Übergabe an den Empfänger an dem zugeordneten Übergabepunkt 120, 220, 230, 320, 330, 410, 415, 420, 495, 650, 720 innerhalb des vorgesehenen Übergabezeitraums erfolgt.

Weitere Übergabepunkte können dadurch ermittelt werden, dass untersucht wird, welche Übergabepunkte sich in der Nähe einer oder mehrerer hinterlegter Aufenthaltsorte befinden.

Erfindungsgemäß ist es gleichfalls vorteilhaft, Wegstrecken zwischen etwaig hinterlegten Arbeits- bzw. Aufenthaltsorten zu berechnen. Hintergrund hierfür ist, dass eine Mindestwahrscheinlichkeit besteht, dass der Empfänger des Pakets sich zwischen diesen Orten bewegt.

Gegenüber Verfahren zur Wegstreckenoptimierung zur sequentiellen Übergabe von i.d.R. einzelnen Paketen an einzelne Empfänger und/oder einzelnen Einlieferern an unterschiedlichen Standorten, vorzugsweise deren Privatadressen, sieht die Erfindung insbesondere vor, für eine Vielzahl von Empfängern und/oder Einlieferern gemeinsame optimierte Übergabepunkte für die Übergabe von Paketen zu ermitteln, wobei an den Übergabepunkten jeweils eine Übergabe eines Teil der Vielzahl von Paketen an mehrere Empfänger und/oder von mehreren Einlieferern erfolgt, wobei die Ermittlung der Übergabepunkte in Abhängigkeit von Abstellmöglichkeiten für mobile Depoteinrichtungen für die Pakete und von gewünschten Übergabepunkten und/oder von für die Empfängern für die Übergabe der Pakete an die Empfänger und/oder Einlieferern für die Übergabe der Pakete von den Einliefern gewünschten Übergabepunkten erfolgt.

Es ist vorteilhaft, dass die Auswahl des gemeinsamen optimierten Übergabepunktes 120, 220, 230, 320, 330, 410, 415, 420, 495, 650, 720 nicht nur unter Einbeziehung des Aufwandparameters für den jeweiligen Empfänger, sondern auch unter Einbeziehung von Aufwandparametern für weitere, möglichst alle Empfänger am jeweiligen Tag erfolgt.

Ferner ist es zweckmäßig, dass für die Auswahl des gemeinsamen optimierten Übergabepunktes 120, 220, 320 für die Übergabe eines Pakets von dem Empfänger ausgewählte Übergabepunkte berücksichtigt werden und dass die Übergabe an den jeweiligen Empfänger unter Berücksichtigung etwaig ausgewählter Übergabepunkte erfolgt.

Es ist vorteilhaft, dass für die Auswahl des gemeinsamen optimierten Übergabepunktes 120, 220, 230, 320, 330, 410, 415, 420, 495, 650, 720 für mindestens einen Teil der Einlieferer und/oder Empfänger jeweils wenigstens zwei für die Übergabe eines Pakets von dem Einlieferer und/oder Empfänger ausgewählte Übergabepunkte berücksichtigt werden und dass die Übergabe an den jeweiligen Empfänger unter Berücksichtigung der von dem Empfänger und/oder Einlieferer ausgewählten Übergabepunkte erfolgt.

Ferner ist es zweckmäßig, dass die Auswahl des gemeinsamen optimierten Übergabepunktes 120, 220, 230, 320, 330, 410, 415, 420, 495, 650, 720 und die Übergabe an den jeweiligen Empfänger unter Berücksichtigung einer Wegstrecke zwischen den von dem Empfänger und/oder Einlieferer ausgewählten Übergabepunkten erfolgt.

Insbesondere werden aus einer Vielzahl von möglichen Standorten 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720 für mobile Depoteinrichtungen für die Pakete gemeinsame optimierte Übergabepunkte 120, 220, 230, 320, 330, 410, 415, 420, 495, 650, 720 für die Übergabe der Paketen an die Empfänger ermittelt, und für die ermittelten Übergabepunkte jeweils wenigstens eine mobile Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 vorgesehen.

In die Depoteinrichtungen 140, 240, 250, 340, 350 werden die für die Übergabe an den gemeinsamen optimierten Übergabepunkten 120, 220, 230, 320, 330 vorgesehene Pakete eingebracht, und die Depoteinrichtungen 140, 240, 250, 340, 350 werden zu den ihnen zugeordneten Übergabepunkten 120, 220, 230, 320, 330, 410, 415, 420, 495, 650, 720 transportiert, und während eines vorgesehenen Übergabezeitraums werden die Pakete in den mobilen Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 gelagert und für die Übergabe an die Empfänger der Paketen bereitgestellt.

### Gesamtüberblick Logistiksystem und Logistikprozesse

### Paketidentifikationsmerkmal

In der vorliegenden Anmeldung können gleiche, insbesondere gleichbleibende Paketidentifikationsmerkmale und/oder sich von anderen Paketidentifikationsmerkmalen unterscheidende Paketidentifikationsmerkmale zur Identifikation eines Pakets eingesetzt werden.

Wie bereits dargestellt, sind Pakete im Sinne der vorliegenden Erfindung stets physische Gegenstände, insbesondere mit gleichbleibenden physischen Eigenschaften, insbesondere Gewicht und Abmessungen. Es ist somit möglich, während des Aufenthalts des Pakets in einem erfindungsgemäßen Logistiksystem sicherzustellen, dass es sich jeweils um ein bestimmtes Paket handelt. Verschiedene Pakete unterscheiden sich im Regelfall in wenigstens einer physischen Eigenschaft und können durch Messung dieser physischen Eigenschaft voneinander unterscheiden werden. Diese physischen Eigenschaften sind daher als Paketidentifikationsmerkmale bei einer vorteilhaften Weiterbildung der Erfindung einsetzbar.

Bei dem Paketidentifikationsmerkmal kann es sich beispielsweise auch um einen Paketidentifikationscode handeln, der ein Paket eindeutig identifiziert. Ein derartiger Paketidentifikationscode wird beispielsweise auf ein Paket aufgebracht, bevor es an ein Logistiksystem oder eine Einheit des Logistiksystems, beispielsweise eine der in dieser Anmeldung dargestellten Annahmeeinheiten, beispielsweise die dargestellten Depoteinrichtungen übergeben wird, oder der Paketidentifikationscode wird bei einer Einlieferung in das Logistiksystem oder einem der Bearbeitungsvorgänge innerhalb des Logistiksystems auf das Paket aufgebracht.

Von der Erfindung mit umfasst sind Ausführungsformen, bei denen der Paketidentifikationscode ein physischer Code ist, der beispielsweise auf das Paket, eine Umverpackung des Pakets oder auf eine Lagereinheit für das Paket und/oder eine Transporteinheit für das Paket aufgebracht ist und/oder Ausführungsformen, bei denen der Paketidentifikationscode ein digitaler Code ist, welcher dem Paket und/oder einem digitalen Zwilling des Pakets zugeordnet wird.

Es ist vorteilhaft, wenn der jeweilige digitale Zwilling eines der Pakete, vorzugsweise mehrerer Pakete, noch vorteilhafter möglichst vieler Pakete mindestens ein Paketidentifikationsmerkmal enthält. Bei vorteilhaften Ausführungsformen, bei denen das Paket mit einem Paketidentifikationscode verknüpft ist, ist es vorteilhaft, dass der digitale Zwilling des Pakets den Paketidentifikationscode enthält.

Es ist zweckmäßig, wenigstens eine, vorteilhafterweise mehrere, noch vorteilhafter möglichst viele Informationen in den digitalen Zwilling eines Pakets zu integrieren.

Es ist besonders vorteilhaft, Paketidentifikationsmerkmale einzusetzen, die besonders leicht ermittelt werden können. Dies ermöglicht es, die Identität eines Pakets schneller und/oder mit geringerem Aufwand festzustellen.

Eine bevorzugte Ausgestaltung einer erfindungsgemäßen Handhabung von Paketen sieht vor, einen Paketidentifikationscode zu vergeben und/oder zu erfassen und anschließend als primäres Paketidentifikationsmerkmal zu speichern. Zweckmäßigerweise wird wenigsten ein weiteres, leichter und/oder schneller identifizierbares Merkmal des Pakets als sekundäres Paketidentifikationsmerkmal, insbesondere zur Kontrolle einer Richtigkeit des primären Paketidentifikationsmerkmals und/oder zur Steuerung eines weiteren Bearbeitungsvorganges eingesetzt. Beispiele für schneller und/oder mit geringerem Aufwand feststellbare Paketidentifikationsmerkmale sind Gewicht und/oder Abmessungen eines Pakets.

Sowohl das primäre Paketidentifikationsmerkmal als auch das sekundäre Paketidentifikationsmerkmal können Paketidentifikationsmerkmale im Sinne der vorliegenden Erfindung sein, wobei es besonders vorteilhat ist, Bearbeitungsvorgänge, insbesondere Bearbeitungsvorgänge von Paketen anhand eines dieser Paketidentifikationsmerkmale durchzuführen.

Ein nachfolgender Bearbeitungsvorgang des Pakets kann dann anhand einer Ermittlung des anderen Paketidentifikationsmerkmals durchgeführt werden. Hierzu ist es beispielsweise vorteilhaft, Förderbänder von Transfereinrichtungen mit Kameras zur Erfassung von Abmessungen der Pakete und/oder mit einer Waage auszustatten und/oder Transporteinheiten mit einer Waage auszustatten.

Beispielsweise wird ermittelt, dass ein Paket mit einem primären Paketidentifikationsmerkmal in Form eines Paketidentifikationscodes 123456789 ein Gewicht von 5015,6 g hat. Nachfolgend kann ein gemessenes Gewicht von 5015,6 g + /-0,2 g als sekundäres Paketidentifikationsmerkmal eingesetzt werden. Die Messung des Gewichtes stellt somit beispielhaft eine Ermittlung eines leichter und/oder schneller identifizierbaren sekundäres Paketidentifikationsmerkmals dar, welche eine Richtigkeit, dass dies das Paket mit dem Paketidentifikationscode 123456789 ist, kontrolliert und/oder anstelle des Paketidentifikationscodes zur weiteren Bearbeitung eingesetzt werden kann. Mit Kontrolle der Richtigkeit und einer Verknüpfung eines digitalen Abbildes des Pakets, insbesondere seines digitalen Zwillings ist das Paket zuverlässig identifiziert.

Das Paket mit dem Paketidentifikationscode 123456789 kann bereits bei einer Einlieferung in das Logistiksystem einem Empfänger und/oder einem Übergabepunkt, insbesondere einem gemeinsamen optimierten Übergabepunkt für die Übergabe mehrerer Pakete an mehrere Empfänger und/oder von mehreren Einlieferern zugeordnet sein. Es ist jedoch gleichfalls vorteilhaft, für wenigstens eines der Pakete die Zuordnung zu dem Empfänger und/oder dem Übergabepunkt zwischen der Einlieferung und der Übergabe an einen Empfänger des Pakets zu ändern.

Dieses allgemeine Prinzip kann erfindungsgemäß bei verschiedenen Bearbeitungsvorgängen umgesetzt werden, beispielsweise innerhalb eines der erfindungsgemäßen Verteilzentren, insbesondere eines Sortierzentrums und/oder auch zur Einlagerung von Paketen in erfindungsgemäße Depoteinrichtungen. Beispielsweise kann zunächst der Paketidentifikationscode eines Pakets ermittelt werden und dann erfolgen ein oder mehrere Bearbeitungsvorgänge. Bei einzelnen, mehreren oder allen Bearbeitungsvorgängen ist eine Berücksichtigung eines Paketidentifikationsmerkmales vorteilhaft.

So ist es beispielsweise möglich, zunächst einen Paketidentifikationscode eines Pakets zu ermitteln und das Paket hierdurch zuverlässig zu identifizieren. Vorzugsweise wird der Paketidentifikationscode als ein Paketidentifikationsmerkmal mit wenigstens einem anderen Paketidentifikationsmerkmal, beispielsweise einem Gewicht und/oder einer Abmessung des Pakets verknüpft. Auch eine Abbildung des Pakets, beispielsweise die in Abbildung 41 dargestellte Abbildung eines Pakets, kann als Paketidentifikationsmerkmal eingesetzt werden. Dies ist insbesondere dann vorteilhaft, wenn Warenobjekte als Pakete bearbeitet werden.

Eine vorteilhafte Weiterbildung der Erfindung sieht vor, dass den Paketen maschinenlesbare Daten zugeordnet werden, wobei die Daten zumindest eine Kennung umfassen, mit der das jeweilige Paket identifizierbar, insbesondere eindeutig identifizierbar ist. Zweckmäßigerweise wird wenigstens eines der in dieser Anmeldung dargestellten Paketidentifikationsmerkmale als Kennung für das jeweilige Paket eingesetzt.

Es ist besonders vorteilhaft, einen Paketidentifikationscode festzulegen, beispielsweise digital und/oder durch Versehen eines Pakets mit einem den Paketidentifikationscode enthaltenden Barcode oder Matrixcode oder einem den Paketidentifikationscode enthaltenden RFID-Chip oder einen bereits festgelegten Paketidentifikationscode zu ermitteln, beispielsweise mittels eines 6-Seiten-Scanners oder eines RFID-Lesers.

Nach der Festlegung und/oder Ermittlung des Paketidentifikationscodes kann - beispielsweise unter Einbeziehung eines digitalen Zwillings für das Paket - ein gesteuerter und/oder gemessener Transportweg und/oder Sortierweg des Pakets geplant und/oder nachverfolgt werden, so dass ein nachfolgender Bearbeitungsvorgang des Pakets, insbesondere eine Sortierung des Pakets und/oder ein Transport des Pakets anhand einer Kombination des zuvor festgestellten Paketidentifikationscode mit einer Ermittlung eines anderen, vorzugsweise leichter und/oder schneller messbaren Paketidentifikationsmerkmals so präzise durchgeführt werden, wie dies bei einer Ermittlung des Paketidentifikationscodes selbst der Fall ist. Hierdurch wird auch bei einer schnelleren und/oder weniger aufwändigen Ermittlung eines Paketidentifikationsmerkmals das Paket zuverlässig identifiziert.

Eine bevorzugte Weiterbildung der Erfindung sieht vor, Bearbeitungsvorgänge durch eine Bereitstellung von Prozessprotokollen, vorteilhafterweise unter Einbeziehung individueller Prozessprotokolle für einzelne Pakete zu ergänzen und/oder die bereitgestellten Prozessprotokolle für eine Steuerung von Bearbeitungsvorgängen einzusetzen. Ein Einsatz individueller Prozessprotokolle für einzelne Pakete hat den Vorteil, dass Echtzeitanwendungen implementiert werden können und/oder dass eine Verknüpfung zwischen einzelnen Paketen und ihren jeweiligen digitalen Zwillingen erleichtert wird.

Eine bevorzugte Implementation der Zuordnung von Paketen zu Versendern und/oder Empfängern erfolgt in einer bevorzugten Ausführungsform durch die in dieser Anmeldung dargestellten Verknüpfungen und/oder gleichfalls dargestellten Bereitstellungen von Prozessprotokollen, vorteilhafterweise unter Einbeziehung individueller Prozessprotokolle für einzelne Pakete, so dass insbesondere eine Verknüpfung zwischen einzelnen Paketen und ihren jeweiligen digitalen Zwillingen erleichtert wird.

Die Informationen zu dem Paketidentifikationsmerkmal werden zu einer Steuerkomponente 5012 übertragen. Im dargestellten Fall erhält die Steuerkomponente 5012 sowohl die Informationen zu den Paketidentifikationsmerkmalen als auch zu den Empfängern der jeweiligen Pakete von dem Bestellsystem 5010.

### Priorisierung von Sendungen

Von der Erfindung sind unterschiedliche Handhabungen unterschiedlicher Pakete mit umfasst. Insbesondere ist von der Erfindung mit umfasst, dass ein Teil der Pakete - wie zuvor dargestellt - bereits bei der jeweiligen Bestellung einem Empfänger zugeordnet ist, als auch, dass eine Zuordnung zwischen Paket und Empfänger zu einem späteren Zeitpunkt erfolgt.

Hierdurch ist es möglich, beschleunigte Übergaben von Paketen für ausgewählte Pakete und/oder ausgewählte Empfänger durchzuführen.

Die Zuordnung von Paketen zu Empfängern und/oder Benutzerklassen kann flexibel erfolgen. Dies ist beispielsweise dann relevant, wenn bei Notfällen, einschließlich medizinischer Notfälle und/oder technischer Notfälle Pakete, die für einen eiligen Einsatz benötigt werden, bevorrechtigt zu behandeln sind.

Neben einem Einsatz in Notfällen sind hierbei auch Verfahren zur Übergabe von Paketen mit umfasst, welche einen erhöhten Nutzwert für mögliche Empfänger der Pakete beinhalten: Beispielsweise können Pakete, bei denen eine Übergabe erst zu einem späteren Datum, insbesondere in einem späteren Übergabezeitraum angefordert ist, bereits so befördert werden, dass sie auch in einem früheren Übergabezeitraum übergeben werden können. In diesem Fall kann beispielsweise eine Benachrichtigung an den Empfänger erfolgen, dass er das Paket bereits früher abholen kann, sofern er dies möchte; oder ein anderer durch den ursprünglichen Empfänger berechtigter Empfänger eine Abholanforderung für das Paket aufgeben, so dass es an ihn anstelle des ursprünglich vorgesehenen Empfängers übergeben wird. Oder aber das Paket wird an einen neuen Empfänger ausgeliefert, der es als besonders eilig bestellt hatte, und gleichzeitig wird eine "Ersatzlieferung" an den ursprünglichen Empfänger veranlasst.

### Abbildung 5

### Einleitung

In Abbildung 5 ist ein Logistiksystem 5020 mit zugeordnetem Bestellsystem 5010 dargestellt.

Ein Betreiber eines erfindungsgemäßen Logistiksystems kann sowohl Anbieter eines Bestellsystems, insbesondere Händler, als auch eines Logistiksystems sein. Umgekehrt kann ein Händler neben seinem Bestellsystem auch Logistikdienstleistungen anbieten.

Die in dieser Anmeldung dargestellten Erfindungen lassen sich in eProcurement-Anwendungen und eCommerce-Anwendungen integrieren.

Zentrale Aufgabe eines Betreibers eines erfindungsgemäßen Logistiksystems ist die Übergabe des richtigen Pakets an den richtigen, berechtigten Empfänger. Zur Erfüllung dieser Aufgabe ist die Sicherstellung der eindeutigen Identifizierung eines Paketes und des zugehörigen eindeutigen Empfängers erforderlich.

Jedes Paket/ jedes Warenobjekt weist vorzugsweise einen zuverlässigen Identifizierer als Paketidentifikationsmerkmal auf, im Fall eines Warenobjektes beispielsweise einen EAN-Code, im Falle eines Buches eine ISBN-Nummer, im Fall eines umverpackten Paketes eine Paketidentifikationsnummer.

Zur korrekten Identifizierung des Empfängers werden neben Namen und Hausanschrift bevorzugt eindeutige Merkmale wie E-Mail-Adresse oder Mobilfunknummer angewandt.

Vorzugsweise beinhaltet das in Abbildung 5 dargestellte Logistiksystem 5020 in der mit 5100 gekennzeichneten Zeile Bearbeitungsvorgänge von Paketen; in den 5200 gekennzeichneten Zeilen zweckmäßige Bearbeitungseinheiten zu der Handhabung der Pakete und in den mit 5300 gekennzeichneten Zeilen bevorzugte Ausführungsformen der in den Zeilen 5200 dargestellten Bearbeitungseinheiten.

Die Bearbeitungsvorgänge und die eingesetzten Bearbeitungseinheiten sind miteinander kombinierbar, wobei möglichst umfassende Kombinationen besonders vorteilhaft sind. Die vorliegende Erfindung ist insbesondere nicht auf eine spezifische Kombination der Bearbeitungsvorgänge und Bearbeitungseinheiten beschränkt.

Bei einer Kombination einzelner Bearbeitungsvorgänge und Bearbeitungseinheiten ist es insbesondere zweckmäßig, dargestellte Bearbeitungseinheiten nur dort vorzusehen und einzusetzen, wo dies für die weitere Bearbeitung der Pakete vorteilhaft ist. Sofern beispielsweise die Pakete bereits vereinzelt übergeben werden, sind Maßnahmen zur Vereinzelung der Pakete nicht erforderlich. Ebenso kann eine Erfassung von Paketidentifikationsmerkmalen entfallen, wenn eine Identität des Pakets bereits aus einem oder mehreren der vorangegangenen Bearbeitungsvorgänge des Pakets bekannt ist.

Wenn beispielsweise ein Paketidentifikationscode eines Pakets bereits ermittelt wurde, ist es nicht erforderlich, den Paketidentifikationscode ein weiteres Mal zu ermitteln, sondern es ist stattdessen gleichfalls möglich und in vielen Ausführungsformen vorteilhafter, eine nachfolgende Identifikation des Pakets anhand eines schneller und/oder mit geringerem Aufwand ermittelbaren anderen Paketidentifikationsmerkmals durchzuführen.

Ein nachfolgender Bearbeitungsvorgang des Pakets kann dann anhand der Ermittlung des anderen Paketidentifikationsmerkmals durchgeführt werden.

Zusätzlich zu den üblichen im Umfeld eines Betreibers eines erfindungsgemäßen Logistiksystems eingesetzten Komponenten ist es vorteilhaft, einzelne, mehrere, möglichst viele oder besonders bevorzugt sogar sämtliche der in den Zeilen 5300 aufgeführten, weiteren Komponenten einzusetzen.

### Bestellsystem 5010

Als Bestellsystem 5010 wird insbesondere ein System zur Beauftragung von Einlieferungen und/oder Abholungen von Paketen verstanden.

Bei dem Bestellsystem handelt es sich beispielsweise um ein Computernetzwerk mit Verknüpfungsschnittstellen zur Interaktion mit einer Vielzahl von Benutzern.

In einer bevorzugten Ausführungsform ist das Bestellsystem ein System mit Mitteln zur elektronischen Beschaffung von Gütern unter Nutzung eines Netzwerkes, beispielsweise des Internets sowie anderer Informations- und Kommunikationssysteme. Es kann sich sowohl um Systeme eines Einkaufs von Unternehmen oder Organisationen als auch von Privatleuten handeln.

Vorzugsweise werden für Bestellaufträge gesicherte Zugänge in Extranets oder Intranets genutzt, insbesondere VPNs (virtual private network), die besonders abgesichert und für Dritte nicht zugänglich sind.

### Logistiksystem 5020

Das Logistiksystem betrifft vorteilhafterweise sowohl die "Vorwärtslogistik" (vom Versandhandel oder Privatversender zum Empfänger) als auch die "Rückwärtslogistik" (vom Empfänger oder Privatversender zurück zum Versandhandel oder einem anderen Empfänger).

Das erfindungsgemäße Logistiksystem 5020 ist vorzugsweise so ausgebildet, dass es mit einem oder mehreren Bestellsystemen 5010 zusammenwirken kann. Es kann sich hierbei um Verknüpfungen handeln, bei denen das Bestellsystem in das Logistiksystem eingebettet ist, aber auch um Verknüpfungen, bei denen das Logistiksystem 5020 von dem Bestellsystem 5010 Handhabungsaufträge für die Pakete erhält.

Eine bevorzugte Variante ist, dass das Bestellsystem 5010 und das Logistiksystem 5020 in Echtzeit miteinander verknüpft sind.

Insbesondere in diesem Fall sieht eine bevorzugte Ausführungsform des Bestellsystems 5010 vor, dass das Bestellsystem ein Eingabemittel zur Eingabe von einem oder mehreren gewünschten Übergabepunkten für die Übergabe eines Paketes an einen Empfänger dieses Paketes aufweist. Mittels dieser Informationen sowie der benötigten Informationen zur Identifizierung von Paket und Empfänger ist eine Steuerung des Paketes an den berechtigten Empfänger durch das Logistiksystem 5020 sichergestellt.

Die zu dieser Abbildung 5 und später zu Abbildung 6 gemachten Ausführungen gelten auch für den Fall, dass Logistiksystem und Bestellsystem voneinander getrennt und nicht als ein zusammenwirkendes System ausgebildet sind.

Es ist also möglich, das dargestellte Logistiksystem 5020 unabhängig von einem Bestellsystem 5010 zu betreiben. Die Informationen zu dem Paketidentifikationsmerkmal werden dann von einem separaten Bestellsystem - das eines Dritten - zum Logistiksystem 5020 übertragen. Im dargestellten Fall erhält das Logistiksystem 5020 sowohl die Informationen zu den Paketidentifikationsmerkmalen als auch ein eindeutiges Identifizierungsmerkmal zu den Empfängern der jeweiligen Pakete - beispielsweise eine E-Mail-Adresse oder Mobilfunk-Nummer.

Im Fall des Nichtvorhandenseins eines eigenen Bestellsystems werden Informationen zur Erleichterung der Auswahl von Übergabepunkten für Pakete an den Empfänger und/oder von dem Empfänger, insbesondere präferierte Übergabepunkte des Empfängers in einer App-Komponente 5021 eines Benutzers erfasst und in einem Backendsystem 5021, 5022 des Logistiksystem 5020 des Betreibers eines erfindungsgemäßen Logistiksystems gespeichert und in einer vorteilhaften Weiterbildung in Reaktion auf erfasste Informationen über ein Verhalten des Empfängers, insbesondere über zurückgelegte Wegstrecken und Wahl von Verkehrsmitteln, durch möglichst viele dieser Informationen enthaltenden Daten ergänzt.

Ferner ist es möglich, Pakete zu kennzeichnen, die an Depoteinrichtungen auszuliefern sind. Ein Zusatz wie "PAKETMOBIL Übergabe" für die Einlieferung in Depoteinrichtungen auf dem Label ist entbehrlich, kann jedoch erfolgen.

### Verknüpfungsschnittstelle 5015

Wie dargestellt, funktioniert die Erfindung mit mehreren Bestellsystemen und/oder Bestellkomponenten, so dass das dargestellte Bestellsystem 5010 lediglich ein Beispiel ist.

In einer ersten vorteilhaften Ausführungsform der Erfindung werden zunächst ein an sich bekanntes Logistiksystem 5020 und ein an sich bekanntes Bestellsystem 5010 durch die Verknüpfungsschnittstelle 5015 miteinander verknüpft.

Realisiert wird die Verknüpfung durch mindestens eine Verknüpfungsschnittstelle 5015.

Die Verknüpfungsschnittstelle 5015 ist vorzugsweise so ausgebildet, dass Anweisungen zur Handhabung der Pakete und/oder zur Zuordnung der Pakete an Empfänger übermittelt werden können.

In besonders vorteilhaften Weiterbildungen der Erfindung wird die Verknüpfungsschnittstelle 5015 so weitergebildet, dass Zuordnungen von Paketen zu Übergabepunkten und/oder Empfängern verändert werden können.

Durch den Einsatz der Verknüpfungsschnittstelle 5015 ist es möglich, ein Paket auch bei Weglassen von Versenderidentifikationsmerkmalen und/oder Empfängeridentifikationsmerkmalen einem Versender und/oder einem Empfänger zuzuordnen.

### Steuerkomponente 5012 des Logistiksystems

Die Steuerkomponente 5012 des Logistiksystems 5020 kann so ausgestaltet sein, dass sie möglichst viele oder sogar sämtliche der Bearbeitungsvorgänge der Pakete steuert. Es ist jedoch gleichfalls möglich, dass die Steuerkomponente 5012 lediglich einzelne der in dieser Anmeldung dargestellten Verfahrensschritte steuert.

Die Steuerkomponente 5012 des Logistiksystems 5020 kann einzelne oder mehrere oder sogar sämtliche der in dieser Anmeldung dargestellten Verfahren durchführen, wobei die Durchführung des Verfahrens, das sich dadurch auszeichnet, dass für mehrere Pakete aus einer Vielzahl möglicher räumlich voneinander getrennter Übergabepunkte 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720) unter Berücksichtigung wenigstens eines Aufwandsparameters jeweils ein gemeinsamer optimierter Übergabepunkt (120, 220, 230, 320, 330, 410, 415, 420, 495, 650, 720) für die Übergabe an den jeweiligen Empfänger innerhalb eines bestimmten Übergabezeitraums ermittelt wird, wobei eine Steuerung einer Übergabe an die Empfänger an dem zugeordneten gemeinsamen Übergabepunkt (120, 220, 230, 320, 330, 410, 415, 420, 495, 650, 720) innerhalb des vorgesehenen Übergabezeitraums durch die Steuerkomponente 5012 besonders vorteilhaft ist .

Nachfolgend sind Einzelheiten zu bevorzugten Ausgestaltungen der Steuerkomponente und zu ihrem Zusammenwirken mit den Komponenten des erfindungsgemäßen Logistiksystems dargestellt.

Wie zuvor bereits dargestellt, kann die Steuerkomponente 5012 des Logistiksystems 5020 so ausgestaltet sein, dass die Steuerkomponente 5012 möglichst viele oder sogar sämtliche der Bearbeitungsvorgänge der Pakete steuert. Es ist jedoch gleichfalls möglich, dass die Steuerkomponente 5012 lediglich einzelne der in dieser Anmeldung dargestellten Verfahrensschritte steuert. Vorzugsweise werden aus möglichst vielen, besonders bevorzugt sogar sämtlicher der nachfolgenden dargestellten Komponenten gewonnene Informationen eingesetzt:
- 5022: Benutzer-App zur Erfassung und Verwaltung von Benutzerdaten sowie Kommunikationsschnittstelle und Bedienelement einer Depoteinrichtung;
- 5023: Benutzerdatenbank der Benutzer-App;
- 5024: Netzkonfigurationsmodul insbesondere mit einer Datenbank für potentielle Aufstellorte mobiler Depoteinrichtungen;
- 5025: Netzkonfigurations-Tool für mobile Depoteinrichtungen;
- 5026: Steuerungsmodul Transport mobile Depoteinrichtungen;
- 5027: Benachrichtigungskomponente;
- Ortsbestimmungsinformationen zur Ermittlung der Orte und/oder Lagerpositionen der Pakete.

Die nachfolgenden Ausführungen beziehen sich sowohl auf die zuvor anhand von Abbildung 5 dargestellte Steuerkomponente 5012 als auch auf weitere Steuerkomponenten, die von der dort dargestellten Steuerkomponente 5012 gegebenenfalls getrennt sind. Die nachfolgend dargestellten Steuerkomponenten können jedoch auch unabhängig von der Steuerkomponente 5012 betrieben werden und sind nicht auf eine Steuerung durch die anhand Abbildung 5 dargestellte Steuerkomponente 5012 angewiesen.

Es ist jedoch besonders vorteilhaft, die in dem weiteren Anmeldetext dargestellten Ausgestaltungen auch bei der anhand von Abbildung 5 dargestellten Steuerkomponente 5012 und/oder bei durch die Steuerkomponente 5012 gesteuerten weiteren Steuerkomponenten einzusetzen.

Zur gezielten Verteilung der Pakete im Bereich der Transfereinrichtung 5130, 5336 an die Depoteinrichtungen werden Kommunikationsprotokolle der Paket- und Leitungsvermittlung verwendet und angepasst, um die Verteilung der Pakete handhaben zu können.

Es ist besonders vorteilhaft, Telekommunikationsprotokolle für die Steuerungsvorgänge und/oder für Protokollvorgänge einzusetzen, insbesondere paketvermittelte und leitungsvermittelte Telekommunikationsprotokolle und Mechanismen zur Steuerung von Paketzustellungs-, Logistik- und Workflow-Management-Systemen.

Unter anderem wird die Idee umgesetzt, dass der Einsatz und/oder die Modifikation von Protokollen zur Handhabung von Datenpakten auch für Bearbeitungsvorgängen der in dieser Anmeldung dargestellten physischen Pakete eingesetzt werden können, sofern sie bereits eine jeweils benötigte Funktionalität bieten. Um eine effiziente Handhabung von physischen Objekten, insbesondere von Paketen, zu erreichen, können verschiedene Ergänzungen implementiert werden.

Während Pakete im Stand der Technik aufwändig mit separat zu erstellenden Labeln versehen werden müssen, ist es mit der Erfindung möglich, beliebige physische Gegenstände - sofern für die jeweiligen Bearbeitungsvorgänge zu berücksichtigenden Abmessungen und/oder Gewichte eingehalten werden - handzuhaben, insbesondere durch einen oder mehrere der folgenden Bearbeitungsvorgänge:
- Einlieferung;
- Kommissionierung;
- Sortierung;
- Transport;
- Übergabe.

Pakete nach dem Stand der Technik und Warenobjekte nach dem Stand der Technik - wie das beispielhaft in Abbildung 40 dargestellte Paket und das in Abbildung 41 dargestellte Warenobjekt - können gleichfalls unter Einbeziehung der dargestellten Bearbeitungsvorgänge als erfindungsgemäße Pakete gehandhabt werden.

Eine vorteilhafte Weiterbildung der Erfindung sieht vor, dass den Paketen weitere Informationen als maschinenlesbare Daten, insbesondere durch Einsatz von digitalen Zwillingen, zugeordnet werden. Ein Beispiel für die weiteren Informationen sind Abmessungen, insbesondere das Raummaß des Pakets und/oder das Gewicht des Pakets, Fälligkeitsdatum/Zeit, Strafen für verspätete Lieferung, Lieferkosten, Einlieferer- und Empfängerinformationen, Material, Zerbrechlichkeit und Parameter des erforderlichen Transports des Pakets, z.B. ein Kühllastwagen für Güter, die gekühlt werden müssen.

Es ist zweckmäßig, den Steuerkomponenten eine Protokollfunktionalität hinzuzufügen.

Durch einen Einsatz der Protokollfunktionalität können verschiedene Anwendungen verwendet werden. Beispiele für diese Anwendungen sind die Verwaltung von Arbeitsabläufen, das Abrufen statistischer Informationen, das Verfolgen der Pakete, die Kontrolle der Weiterleitung der Pakete, die Alarmbehandlung und die Fehlerbehandlung.

Jedes Paket in einer jeweiligen physischen Transportebene kann von einem digitalen Zwilling, vorzugsweise als logisches Paket in einer logischen Transportebene, begleitet werden, notwendig ist dies jedoch nicht.

In einer weiteren vorteilhaften Ausführungsform der Erfindung sind die logische Transportebene und die physische Transportebene getrennt. Die logische Transportebene kann z.B. ein lokales Netzwerk oder das Internet sein. Dies ermöglicht es einem Unternehmen, das Backbone-Netz, das für die Sprach- und Datenübertragung verwendet wird, wiederzuverwenden, z.B. ein IP-Backbone.

Routing-Protokolle werden vorzugsweise verwendet, um eine Ermittlung eines optimalen Transportwegs zwischen Komponenten des erfindungsgemäßen Logistiksystems zu unterstützen.

Beispiele für diese Routing-Protokolle sind metrisch-basiertes Routing und Rerouting im Falle von Überlastung, z.B. Open Shortest Path First (OSPF), Border Gateway Protocol (BGP).

Die Schaffung virtueller Strecken erhöht die Flexibilität des Transportsystems.

Es ist auch möglich, wenigstens einen Teil der Pakete mit einem IP-Protokollkopf zu verknüpfen, um die Identifikation der Pakete zu erleichtern. Der IP-Protokollkopf kann eines der erfindungsgemäßen Paketidentifikationsmerkmale sein.

Die verschiedenen Pakete, die bearbeitet, insbesondere sortiert, transportiert und in den Depoteinrichtungen gelagert werden, haben unterschiedliche Abmessungen, Massen und sollten unterschiedlichen Bedürfnissen entsprechen. Die unterschiedlichen Bedürfnisse spiegeln sich am besten in speziellen Quality of Services (QOS)-Mechanismen wider. QOS-Spezifikationen sind zum Beispiel eine schnelle oder sichere Lieferung. Am besten werden die QOS-Spezifikationen kategorisiert, z.B. nach speziellen Kategorien, die z.B. Warenobjekte repräsentieren, die bald verbraucht werden müssen, oder nach verschiedenen Sicherheitsstufen.

In einer vorteilhaften Weiterbildung kann die Erfüllung von QOS-Spezifikationen bei der erfindungsgemäßen Ermittlung des jeweiligen Scoringwertes, insbesondere bei der anhand von Abbildung 6 detailliert erläuterten Ermittlung des Scoringwertes mitberücksichtigt werden.

Jedes der beschriebenen Routing-Protokolle kann verwendet werden, um Entfernungen, Kosten, Reisezeiten usw. zu minimieren und Bandbreiten möglichst effizient zu nutzen.

Eine Adressierung wird zum Beispiel von einem Domain Name Server (DNS) durchgeführt.

Spezielle Protokolle für die Alarmbearbeitung oder die Staukontrolle ermöglichen es dem System, bei unvorhergesehenen Ereignissen flexibel zu reagieren.

Darüber hinaus ist es vorteilhaft, Multicast-Funktionen zu implementieren.

Scheduling-Mechanismen ermöglichen eine weitere Steigerung der Effizienz.

Um die Zuverlässigkeit der Kommunikation und des Transports zu erhöhen, ist ein Einsatz eines Transmission Control Protocol (TCP) vorteilhaft.

Für einige Teile der Bearbeitung der Pakete, insbesondere für ihre Sortierung, Einlagerung und Übergabe ist eine Echtzeitverarbeitung erforderlich. Damit das System in Echtzeit reagieren kann, eignet sich die Verwendung eines Echtzeit-Protokolls (Real-Time Protocol, RTP). Ein Beispiel für einen Prozess, der auf RTP basiert, ist die Neuordnung von Paketen, was vorteilhaft ist, wenn die Pakete unterschiedlich geroutet wurden.

Ferner ist es vorzuziehen, die Dienstqualität durch ein geeignetes Protokoll, wie z.B. das Real-Time Protocol (RTCP) zu überwachen.

Die Sortierung der Pakete kann auf einem Paket-für-Paket-Routing-Mechanismus basieren, z.B. für den Fall, dass z.B. keine Abhängigkeit zwischen einzelnen Paketen besteht, aber es kann auch auf virtuellen Verbindungen basieren, insbesondere in dem Fall, dass alle Pakete denselben Weg durch das Netzwerk nehmen.

Ein Grund für ein paketweises Routing kann eine Überlastung in Teilen des Netzwerks sein, unterschiedliche Wegstrecken, die aufgrund der Tatsache auszuwählen sind, dass die Pakete unterschiedliche Parameter haben (wie Abmessung oder Fälligkeitsdatum etc.).

Bei dem erfindungsgemäßen Logistiksystem können Pakete mit beliebigen Transportmitteln zwischen verschiedenen Standorten transportiert werden. Die Adressierung des Standortes und/oder des jeweiligen Zielortes kann mittels IP-Adressen erfolgen. Die Zwischenspeicherung kann mittels ICMP, Flusssteuerung oder einem Mechanismus erfolgen, der den digitalen Zwilling und das physische Paket erst nach einer Bestätigung durch eine beliebige maschinelle oder menschliche Schnittstelle weiterleitet, z.B. kann einer der Operatoren eine webbasierte Schnittstelle verwenden, um die Weiterleitung des Pakets zu steuern oder die Alarmbearbeitung durchzuführen.

Es werden geeignete Kontrollnachrichtenprotokolle implementiert, um eine Überwachung, zum Beispiel eine Staukontrolle, zu ermöglichen. Ein Beispiel für dieses Protokoll ist das Internet Control Message Protocol (ICMP).

Weitere Routing-Protokolle werden vorzugsweise verwendet, um einen optimalen Transportweg von einem physischen Verteilknoten zu einem anderen physischen Verteilknoten oder zur Empfangsstelle zu wählen. Beispiele für diese Routing-Protokolle sind metrisches Routing, kostenbasiertes Routing.

Die erfindungsgemäßen Pakete sind physische Pakete. Es ist vorteilhaft, ein IP-basiertes Kommunikationsnetz zur Steuerung, Protokollierung und/oder Benachrichtigungen einzusetzen. Dies erfolgt in einer bevorzugten Ausgestaltung der Erfindung dadurch, dass die Pakete vorzugsweise in einem paketvermittelten Kommunikationsnetz von logischen Paketen begleitet werden. Vorzugsweise immer dann, wenn das physische Paket in einem Verteilknoten empfangen wird, informiert der Verteilknoten die jeweilige Bearbeitungseinheit/ Bearbeitungskomponente darüber, welcher Bearbeitungsvorgang zu erfolgen hat, und wartet auf eine Bestätigung, dass die Aktionen ausgeführt wurden.

Die dargestellten logischen Pakete werden in einer bevorzugten Ausführungsform der Erfindung jeweils als ein digitaler Zwilling des entsprechenden Pakets behandelt.

Die beiden oben beschriebenen Ausführungsformen können miteinander oder mit jeder der zuvor beschriebenen Ausführungsformen kombiniert werden.

Es ist vorteilhaft, den erfindungsgemäßen Depoteinrichtungen jeweils mindestens eine IP-Adresse zuzuordnen.

Neben den üblichen im Umfeld eines Betreibers eines erfindungsgemäßen Logistiksystems eingesetzten Komponenten ist es vorteilhaft, einzelne, mehrere, möglichst viele oder besonders bevorzugt sogar sämtliche der nachfolgenden weiteren Komponenten einzusetzen:

### Benutzer-App 5021, 5022

Die Bezugsziffern 5021, 5022 bezeichnen insbesondere eine Benutzer-APP zur Erfassung und Verwaltung von Benutzerdaten sowie Kommunikationsschnittstelle und Bedienelement einer Depoteinrichtung

Es ist besonders vorteilhaft, Benutzern des Logistiksystems, insbesondere Einlieferern oder Empfängern der Pakete insbesondere vor Durchführung der dargestellten Schritte eine App, insbesondere eine Benutzer-App 5021, 5022 zur Erfassung und Verwaltung von Benutzerdaten sowie Kommunikationsschnittstelle und Bedienelement einer Depoteinrichtung bereitzustellen, die es vorteilhafterweise erlaubt, in dieser Anmeldung dargestellte Verfahren zur Auswahl gemeinsamer optimierter Übergabepunkte durch Übermittelung von Lokalisierungsinformationen der Empfänger und/oder der Einlieferer zu an die Steuerkomponente 5012 optimieren.

Hierdurch ist es möglich, diejenigen Lokalisierungsinformationen, die der jeweilige Benutzer unter Berücksichtigung seiner jeweiligen Datenschutz-Anforderungen der Benutzer-App 5021, 5022 als Komponente des Logistiksystems 5020, vorzugsweise der Steuerkomponente 5012 teilt, bei der Auswahl der für den jeweiligen Benutzer im jeweiligen Übergabezeitraum geeigneten Übergabepunkte zu berücksichtigen. Eine derartige Integration erfolgt für möglichst viele Benutzer, so dass gemeinsame Übergabepunkte für eine konsolidierte Übergabe der Pakete an mehrere Empfänger ermittelt werden können.

Vorzugsweise kann die Benutzer-App 5021, 5022 so ausgestaltet sein, dass der Benutzer der App als Empfänger und/oder als Einlieferer von Paketen mittels der Benutzer-App 5021, 5022 überprüfen kann, welche Pakete, die sich von ihren Abmessungen grundsätzlich für eine Einlagerung in Lagerpositionen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eignen, insbesondere im Rahmen ggf. maximal und/ oder minimal zulässiger Paket-Abmaße an die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 aus- oder eingeliefert werden sollen.

Entsprechende Informationen in einer Benutzer-Datenbank 5023 sollten dann jeden Tag möglichst frühzeitig mit der Sendungsdatenbank, dem digitalen Zwilling und/oder Informationen des Logistiksystems, vorzugsweise Informationen zur Steuerung der Bearbeitungsvorgänge abgeglichen werden, wobei die entsprechende Auswahl der über die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu übergebenden Pakete je nach Umfang der Vernetzung der Datensysteme durch das Logistiksystem 5020 erfolgen kann.

Ferner ist es möglich, Pakete zu kennzeichnen, die an Depoteinrichtungen auszuliefern sind. Ein Zusatz wie "PAKETMOBIL Übergabe" für die Einlieferung in Depoteinrichtungen auf dem Label ist entbehrlich, kann jedoch erfolgen.

Beispiel: Der Benutzer hinterlegt seine E-Mail-Adresse und Zustellpräferenzen in der Benutzer-App 5021, 5022 und der Benutzer-Datenbank 5023. Das System hat jetzt einen Benutzer mit der eindeutigen E-Mail-Adresse z.B. bernd.einstein@gmail.com. Sobald der Versender die individuelle Paketinformationen an den Betreiber eines erfindungsgemäßen Logistiksystems sendet, welche u.a. auch die E-Mail-Adresse des Empfängers beinhaltet (bernd.einstein@gmail.com), matched / verheiratet das System beide Informationen (z.B. die E-Mail-Adresse mit dem Paketidentifikationscode). Alle Informationen, die jetzt dieses Paket betreffen, werden ab sofort automatisiert via der Benutzer APP 5021, 5022 an Bernd Einstein gesendet bzw. dessen Übergabepräferenzen berücksichtigt. Wünscht Bernd Einstein grundsätzlich die Übergabe an Depoteinrichtungen, so wird diese Auslieferungspräferenz berücksichtigt, auch wenn das Paket keinen Zusatz "Übergabe an Paketmobil" enthält.

### Benutzerdatenbank 5023 der Benutzer-App

Die Benutzerdatenbank 5023 dient als Backend-System der Benutzer-App.

### Netzkonfigurationsmodul 5024 und Netzkonfigurations-Tool 5025

Die Bezugsziffer 5024 bezeichnet insbesondere ein Netzkonfigurationsmodul, vorzugsweise mit einer Datenbank für potentielle Aufstellorte mobiler Depoteinrichtungen;
Ein Netzkonfigurationsmodul 5024 ist vorzugsweise so ausgestaltet, dass es insbesondere unter Berücksichtigung der dargestellten Aufwandsparameter und/oder Scoringwerte gemeinsame optimierte Übergabepunkte für eine Übergabe mehrerer Pakete und gegebenenfalls zusätzlich individuelle Übergabepunkte für einzelne Übergaben von Paketen ermitteln kann.

Der Bestellprozess kann zwar - wie bereits zuvor ausgeführt - auch teilweise so erfolgen, dass der Besteller eines Pakets einen von mehreren hinterlegten Übergabepunkten auswählt, und dass anschließend der Transportprozess des Pakets so gesteuert wird, dass der Transport zu dem ausgewählten Übergabepunkt erfolgt.

Es ist jedoch besonders vorteilhaft, das Logistiksystem so zu steuern und den Transport wenigstens eines Teils der Pakete so durchzuführen, dass der Transport zu einem Übergabepunkt erfolgt, der durch einen der in diesem Anmeldetext dargestellten Optimierungsprozesse ermittelt wurde.

Eine vorteilhafte Ausführungsform der Erfindung sieht vor, dass die Auswahl gemeinsamer optimierter Übergabepunkte nicht nur unter Einbeziehung des Aufwandparameters für den jeweiligen Empfänger, sondern auch unter Einbeziehung von Aufwandparametern für weitere Empfänger erfolgt.

Die Erfindung sieht eine Berücksichtigung des jeweiligen Aufwandsparameters möglichst vieler Empfänger, gegebenenfalls sogar sämtlicher Empfänger im jeweiligen Übergabezeitraum, beispielsweise am jeweiligen Tag vor.

Eine vorteilhafte Weiterbildung der Erfindung zeichnet sich dadurch aus, dass das Logistiksystem mit der Netzkonfigurationsmodul 5024 ein Mittel zur Erfassung einer Vielzahl von möglichen Stellplätzen für mobile Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 aufweist, und dass sie die Zuordnung der mobilen Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu den Übergabepunkten vornimmt.

Das Netzkonfigurationsmodul 5024 und/oder die Steuerkomponente 5012 kann einzelne oder mehrere der in dieser Anmeldung dargestellten Verfahren durchführen, wobei die Durchführung des Verfahrens, das sich dadurch auszeichnet, dass für mehrere Pakete aus einer Vielzahl möglicher, räumlich voneinander getrennter Übergabepunkte 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720 unter Berücksichtigung wenigstens eines Aufwandsparameters - direkt oder indirekt durch einen den Aufwandsparameter berücksichtigen Scoringwert - jeweils ein gemeinsamer optimierter Übergabepunkt (120, 220, 230, 320, 330, 410, 415, 420, 495, 650, 720) für die Übergabe an den jeweiligen Empfänger innerhalb eines bestimmten Übergabezeitraums ermittelt wird, und das vorsieht, dass die Übergabe an die Empfänger, die an dem zugeordneten gemeinsamen optimierten Übergabepunkt (120, 220, 230, 320, 330,650) innerhalb des vorgesehenen Übergabezeitraums erfolgt, durch das Netzkonfigurationsmodul 5024 besonders vorteilhaft ist.

Bei den Scoringwerten handelt es sich um Werte mit unterschiedlichen Dimensionen wie beispielsweise der Quantifizierung eines Aufwandes, die mit dem Hilfsmittel des Scorings auf eine Kennzahl reduziert werden können.

Es ist jedoch gleichfalls möglich, zusätzliche Eigenschaften der Übergabe der jeweiligen Pakete an die jeweiligen Empfänger und/oder des Einlieferers bei der Bestimmung der Scoringwerte mit zu berücksichtigen; wie z.B. die Abmessung oder das Gewicht der Pakete, weil diese den Aufwand der Abholung und die Zufriedenheit des Kunden beeinflussen.

Die Bezugsziffer 5025 bezeichnet ein Netzkonfigurations-Tool, insbesondere für die Auswahl gemeinsamer optimierter Übergabepunkte und/oder individueller Übergabepunkte, vorzugsweise als Aufstellorte (Standorte) für mobile Depoteinrichtungen;

Vorzugsweise enthält wenigstens eine Komponente des Logistiksystem 5020, insbesondere die Steuerkomponente 5012 oder die Verknüpfungsschnittstelle 5015 des Logistiksystems, vorzugsweise ein Netzkonfigurations-Tool 5025, das wenigstens einen Teil der Übergabepunkte als Standorte für Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 auswählt.

Die Steuerkomponente 5012 kann so ausgestaltet sein, dass sie möglichst viele oder sogar sämtliche der Bearbeitungsvorgänge der Pakete steuert.

Die Steuerkomponente 5012 des Logistiksystems, beziehungsweise das Logistiksystem 5020 steuert ein erfindungsgemäßes Verfahren zur Übergabe von Paketen an Empfänger so, dass die Pakete an Übergabepunkten, insbesondere gemeinsamen optimierten Übergabepunkten 120, 220, 230, 320, 330, 410, 415, 420, 495, 650, 720 wie sie beispielhaft in den Abbildungen 1,2,3,4,6 und 7 dargestellt sind, innerhalb eines (bestimmten) Übergabezeitraums für die Empfänger bereitgestellt werden, wobei die Übergabepunkte so ermittelt werden, dass Aufwandsparameter für die Empfänger möglichst optimiert sind.

Der Aufwandsparameter kann direkt eingesetzt werden, um beispielsweise einen Zeitaufwand zu berücksichtigen, den ein Empfänger eines Pakets oder ein Einlieferer eines Pakets von einem Ort, den er auch unabhängig von einer Paketübergabe aufsuchen würde - Ohnehin-Ort - als auch von einer Wegstrecke, die er auch unabhängig von der Paketübergabe befahren würde - Ohnehin-Weg- den Weg zu der Übergabestelle des Pakets, insbesondere des gemeinsamen optimierten Übergabepunktes oder des individuellen Übergabepunktes aufwenden muss.

Ferner können Scoringwerte verwendet werden, bei denen entsprechend der Optimierung der Aufwandparameter eine Verringerung des Aufwandes für den Empfänger den jeweiligen Scoringwert für die Auswahl des Übergabepunktes verbessert. Es ist selbstverständlich möglich, die Scoringwerte so zu definieren, dass ein möglichst hoher Scoringwert der beste Scoringwert ist, als auch Scoringwerte einzusetzen, bei denen die niedrigsten Werte die besten Werte sind. Aus Praktikabilitätsgründen sind jedoch dezimale Systeme, beispielsweise mit Werten von 0 als Mindestwert bis 10 als Maximalwert oder von 0 als Mindestwert bis 100 als Maximalwert bevorzugt.

Besonders vorteilhaft ist es, das Netzkonfigurations-Tool 5025 so auszugestalten, dass es ein Verfahren zur Übergabe einer Vielzahl von Paketen so steuert, dass für mehrere Empfänger von vielen möglichen, räumlich getrennten Übergabepunkten jeweils mindestens ein Scoringwert beziehungsweise bei einer mit geringerem Berechnungsaufwand erfolgenden Optimierung individueller Aufwandsparameter ein erfindungsgemäßer Optimierungsprozess so durchgeführt wird, dass für mehrere Pakete ein gemeinsamer optimierter Übergabepunkt für eine Übergabe in einem vorgesehene Übergabezeitraum ermittelt wird. Es ist jedoch gleichfalls möglich, dass die Steuerkomponente 5012 lediglich einzelne der in dieser Anmeldung dargestellten Verfahrensschritte steuert. Besonders vorteilhaft ist es, die Steuerkomponente 5012 so auszugestalten, dass sie ein Verfahren zur Übergabe einer Vielzahl von Paketen so steuert, dass für mehrere Empfänger von vielen mögliche, räumlich getrennte Übergabepunkte jeweils mindestens ein Scoringwert, beziehungsweise bei einer mit geringerem Berechnungsaufwand erfolgenden Optimierung individueller Aufwandsparameter ein erfindungsgemäßes Auswahlverfahren (Optimierungsverfahren) durchgeführt wird, so dass für mehrere Pakete ein gemeinsamer optimierter Übergabepunkt für eine Übergabe in einem vorgesehene Übergabezeitraum ermittelt wird.

Bei den Scoringwerten handelt es sich um Werte, die eine Quantifizierung eines Aufwandes für die Empfänger der Pakete berücksichtigen.

Insbesondere handelt es sich bei den Scoringwerten um Werte, die einen zeitlichen Aufwand für die einzelnen Empfänger für die Entgegennahme des jeweiligen Pakets wiedergeben.

Vorzugsweise handelt es sich bei den Scoringwerten um numerische Werte innerhalb eines vorgegebenen Nummernkreises.

In einer ersten Ausführungsform des Verfahrens werden beispielsweise die Aufwandsparameter für jeden der Empfänger für die Entgegennahme des Paketes berücksichtigt. In diesem Fall erhält beispielsweise bei einem von 1-10 reichenden Nummernkreis eine Bereitstellung des Pakets in einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 für deren Erreichen der Empfänger des jeweiligen Pakets einen Zeitaufwand von 10 Minuten aufwenden muss einen Scoring Wert von 1 und eine Bereitstellung in unmittelbarer Nähe zu einem Aufenthaltsort des Empfängers oder an einer von dem Empfänger ohnehin zurückgelegten Wegstrecke mit einem zusätzlichen Aufwand des Empfängers von 1 Minute oder weniger einen Scoringwert von 10.

Dementsprechend werden die Übergabepunkte so ausgewählt, dass für möglichst viele Empfänger der Pakete der entsprechende Scoringwert möglichst hoch ist. Es ist jedoch gleichfalls möglich, für einzelne Empfänger beziehungsweise für einzelne Pakete einen mindestens zu erzielenden Scoringwert vorzusehen, so dass beispielsweise der zusätzliche Zeitaufwand der zusätzliche Zeitaufwand des Empfängers höchstens 5 Minuten beträgt.

Es ist jedoch gleichfalls möglich, zusätzliche Eigenschaften der Übergabe der jeweiligen Pakete an die jeweiligen Empfänger bei der Bestimmung der Scoringwerte mit zu berücksichtigen.

Dies erfolgt beispielhaft bei einem entsprechend größeren Nummernkreis für die Scoringwerte, indem auch für die Auswahl des gewünschten Übergabezeitraum, insbesondere für eine möglichst kurze Zeit bis zur frühesten möglichen Übergabe des Pakets und/oder für einen möglichst geringen Zeitaufwand für die Entgegennahme der Pakete Scoringwerte vergeben werden.

Hierbei ist die Zuordnung der entsprechenden Kombination dieser Faktoren flexibel handhabbar. In einer Ausführungsform die Erfindung ist beispielsweise vorgesehen, dass sowohl für die Zeit zwischen einer Bestellung eines Pakets und dem zugehörigen Übergabezeitraum als auch für den Zeitaufwand des Empfängers zum Erreichen des Übergabepunktes Punkte vergeben werden.

So ist es beispielsweise möglich, für eine Übergabe am gleichen Tag wie die Bestellung oder sogar für eine Bereitstellung innerhalb eines kurzen Zeitraumes, der gegebenenfalls auch unter 1 Stunde betragen kann, einen entsprechenden Beitrag zum Scoringwert, von beispielsweise maximal 50 zu vergeben. Ferner wird dann auch für den Zeitaufwand für die Entgegennahme des Pakets ein Beitrag zum Scoringwert vergeben, beispielsweise für einen Zeitaufwand von 10 Minuten ein Beitrag zum Scoringwert von zehn, für einen Zeitaufwand von höchstens 5 Minuten ein Beitrag zum Scoringwert von 20, für einen Zeitaufwand von höchstens 3 Minuten ein Beitrag zum Scoringwert von 30, für einen Zeitaufwand von höchstens 2 Minuten ein Beitrag zum Scoring Wert von 40 und für einen Zeitaufwand von höchstens 1 Minute ein Beitrag zum Scoringwert von 50 vergeben.

So erhält beispielsweise die Bereitstellung eines Pakets innerhalb einer Woche ab Bestellung bei einem Aufwand für die Entgegennahme von 10 Minuten einen Scoringwert von 10 + 10 = 20, die Bereitstellung eines Pakets am Tag der Bestellung mit einem zusätzlichen Zeitaufwand für den Empfänger von höchstens 1 Minute einen Scoringwert von 50 + 50 = 100.

Es ist jedoch gleichfalls möglich, maximale Zeiten bis zur Bereitstellung des Pakets an dem jeweiligen Übergabepunkt als auch maximal Aufwände für die Entgegennahme der Pakete zu definieren. Dies kann bei einem entsprechenden Optimierungsprozess entsprechend berücksichtigt werden, so dass beispielsweise Empfängern einer privilegierten Benutzerklasse eine Übergabe jeweils so erfolgt, dass ein Scoringwert von mindestens 70 erreicht wird, wobei dieser Wert so wie die anderen Werte, insbesondere Scoringwerte, flexibel angepasst werden kann.

Vorzugsweise erfolgt die Steuerung so, dass innerhalb des Übergabezeitraums mehrere Pakete gemeinsam an den gemeinsamen optimierten Übergabepunkten (120, 220, 230, 320, 330, 410, 415, 420, 495, 650, 720) für mehrere Empfänger bereitgestellt werden.

Hierbei ist es zweckmäßig, dass die Bereitstellung wenigstens eines Teils der Pakete durch Depoteinrichtungen erfolgt. Die Erfindung kann mit einer Vielzahl von gegebenenfalls voneinander verschieden Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 einschließlich mobiler oder stationärer Depoteinrichtungen durchgeführt werden.

Es ist vorteilhaft, dass die Ermittlung der Übergabepunkte 120, 220, 230, 320, 330, 650 durch eine Auswahl aus räumlich voneinander getrennten Übergabepunkten 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720 erfolgt.

Ferner ist es zweckmäßig, dass die Auswahl aus den räumlich voneinander getrennten Übergabepunkten 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720 durch einen Auswahlprozess mit mehreren Auswahlschritten 601, 602, 603, 604 erfolgt.

Sofern eine mobile Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 für die Übergabe an dem Übergabepunkt bereitgestellt wird, handelt es sich beim Übergabepunkt vorzugsweise um den Aufstellort der Depoteinrichtung.

### Steuerungsmodul Transport mobiler Depoteinrichtungen 5026

Das Steuerungsmodul 5026 steuert den Transport der mobilen Depoteinrichtungen, einschließlich eines oder mehrere der nachfolgend dargestellten Transportvorgänge, die vorzugsweise durch erfindungsgemäße Optimierungsprozesse ermittelte Orte mit umfassen:
- zwischen verschiedenen Knoten des Logistiksystems, beispielsweise zwischen Verteilzentren,
- zwischen Transfereinrichtungen 5130, 5336 und den gemeinsamen optimierten Übergabepunkten für die Übergabe von Paketen,
- zwischen verschiedenen gemeinsamen optimierten Übergabepunkten,
- zu Orten für eine Übergabe einzelner Pakete und
- den Einsatz von Übergabemitteln.

Übergabemittel sind insbesondere die in dieser Anmeldung dargestellten Depoteinrichtungen und/oder mit den Depoteinrichtungen zusammenwirkenden Übergabeeinheiten.

### Benachrichtigungskomponente 5027

Benachrichtigungskomponenten 5027 können wie bei bestehenden Logistiksystemen eingesetzt werden, wobei es jedoch vorteilhaft ist, zusätzlich die Flexibilität der Übergabepunkte zu berücksichtigen, insbesondere so, dass ein vorzugsweise vorgesehener jeweiliger Übergabepunkt vorzugsweise dann den Empfängern der Pakete mitgeteilt wird, wenn die Steuerkomponente 5012 die Auswahl der Übergabepunkte, insbesondere der gemeinsamen optimierten Übergabepunkte durchgeführt hat.

Ferner ist es möglich, Empfängern von Paketen, sobald ein Paket für sie an das Logistiknetzwerk übergeben wurde, mittels geeigneter elektronischer Kommunikationskanäle, beispielsweise mittels E-Mail und /oder SMS oder in einer App über einen erwarteten Übergabezeitraum und eine Lokalisierungsinformation, die zunächst mehrere mögliche Übergabepunkte umfassen kann, zu informieren und diese Lokalisierungsinformation nach der Ermittlung und/oder Erreichung des vorgesehenen Übergabepunktes durch die Mitteilung des Übergabepunktes zu konkretisieren.

In einer bevorzugten Ausführungsform der Benachrichtigungskomponente 5027 ist es möglich, insbesondere bei Integration einer Benachrichtigungsfunktion in die Benutzer-App 5021 Lokalisierungsinformationen der Depoteinrichtung an den jeweiligen Übergabepunkten des Pakets sowie vorzugsweise zusätzlich auch zu dem jeweiligen Übergabezeitraum mitzuteilen.

Besonders vorteilhaft ist bei der Integration einer Benachrichtigungsfunktion in die App eine Verknüpfung mit einem Navigationssystem und/oder einem Kartendienst auf einem beliebigen Endgerät des Empfängers, so dass die Lokalisierungsinformation und/oder der Übergabezeitraum an das Navigationssystem und/oder den Kartendienst des Empfängers weitergeleitet werden.

### Bearbeitungsvorgänge von Paketen 5100

In einer bevorzugten Ausführungsform der Erfindung folgen die in Zeile 5100 dargestellten Bearbeitungsvorgänge aufeinander. Es ist besonders vorteilhaft, mehrere, insbesondere viele der in Zeile 5100 dargestellten Bearbeitungsvorgänge durchzuführen, jedoch ist es nicht notwendig, sämtliche der in Zeile 5100 dargestellten Bearbeitungsvorgänge durchzuführen.

Die erfindungsgemäße Handhabung von Paketen beinhaltet einen, mehrere oder sämtliche der nachfolgenden Bearbeitungsvorgänge eines Pakets:
- Annahme des Pakets, beispielsweise durch Einlieferung, insbesondere durch eine Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322;
- Transport des Pakets zwischen der Depoteinrichtung (140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322) und einem Einlieferer und/oder einem Empfänger des Pakets; insbesondere durch eine Übergabeeinheit,
- Transport des Pakets innerhalb der Depoteinrichtung, insbesondere zwischen einer Übergabeeinrichtung und Lagerpositionen einer Lagereinrichtung der Depoteinrichtung;
- Transport des Pakets von einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu einer weiteren Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322;
- Transport des Pakets zwischen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 und einer Transfereinrichtung 5130, 5336;
- Transport des Pakets innerhalb der Transfereinrichtung 5130, 5336;
- Sortierung des Pakets innerhalb der Transfereinrichtung 5130, 5336;
- Transport des Pakets zwischen der Transfereinrichtung 5130, 5336 und einem Verteilzentrum 5301 für Pakete;
- Sortierung des Pakets innerhalb des Verteilzentrums für Pakete (Paketverteilzentrum)
- Transport des Pakets zwischen zwei Verteilzentren.

Es ist ferner auch vorteilhaft, Bearbeitungsprozesse von Paketen vor ihrer Durchführung durch eine Simulationsberechnung vorab zu berechnen. Hierbei ist es besonders zweckmäßig, für die Pakete jeweils einen digitalen Zwilling vorzusehen und die erfolgten Bearbeitungsvorgänge der Pakete anhand des jeweiligen Paketidentifikationsmerkmals mit dem vorab berechneten Bearbeitungsprozess entsprechend der Simulationsberechnung zu vergleichen. Bei einer Übereinstimmung zwischen dem jeweils ermittelten Paketidentifikationsmerkmal und dem jeweiligen zugehörigen digitalen Zwilling ist das jeweilige Paket entsprechend identifiziert. Eine derartige vorteilhafte Identifikation des Pakets ist auch dann möglich, wenn ein Paketidentifikationsmerkmal in Verbindung mit einem in einem vorigen Bearbeitungsvorgang ermittelten anderen Paketidentifikationsmerkmal abgeglichen wird.

### Paket-Bearbeitung in Verteilzentren 5110

Insbesondere enthält die Spalte 5110 Bearbeitungsvorgänge sowie Bearbeitungseinheiten, insbesondere mit Mitteln zur Sortierung von Paketen im Bereich von Verteilzentren.

Nachfolgend werden bevorzugte Ausgestaltungen von Hauptläufen und Sortiervorgängen 5110 erläutert. Die Steuerkomponente 5012 des Logistiksystems 5020 gibt Informationen zu Paketidentifikationsmerkmalen, die eine Identifikation der Pakete ermöglichen, sowie Informationen über die vorgesehenen Übergabepunkte an Netzwerkknoten des Logistiksystems weiter.

Die Steuerkomponente 5012 des Logistiksystems, beziehungsweise das Logistiksystem 5020 erhalten Informationen zu Paketidentifikationsmerkmalen, die eine Identifikation der Pakete ermöglichen, von vorzugsweise mehreren Informationsquellen, beispielsweise bei einer Einlieferung der Pakete durch ein Erfassungsmitteln, durch Identifizierungseinrichtungen wie Scanner und RFID-Leser im Bereich von Verteilzentren, im Bereich von Transfereinrichtungen 5130, 5336.

Die Steuerkomponente 5012 des Logistiksystems, beziehungsweise das Logistiksystem 5020 gibt Informationen zu Paketidentifikationsmerkmalen, die eine Identifikation der Pakete ermöglichen, sowie Informationen über die vorgesehenen Übergabepunkte vorzugsweise an Transfereinrichtungen 5130, 5336 und/oder an Depoteinrichtungen weiter. Die Weitergabe der Informationen zu den Paketidentifikationsmerkmalen sowohl an die Transfereinrichtungen 5130, 5336 und an die Depoteinrichtungen hat den Vorteil, dass die Einlagerung der Pakete in Lagerpositionen einer Lagereinrichtung der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 schnell und zuverlässig erfolgt. Ein weiterer Vorteil dieser zweckmäßigen Ausführungsform ist, dass die Einlagerung in die Lagerpositionen der Lagereinrichtung der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 ohne einen Einsatz von Sensoreinrichtungen oder sonstigen Erfassungsmittel in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 erfolgen kann.

Netzwerkknoten des Logistiksystems sind insbesondere Bestandteile des Logistiksystems, bei denen Entscheidungen über zu erfolgende Bearbeitungsvorgänge der Pakete umgesetzt werden. Hierbei handelt es sich beispielsweise um Sortiervorgänge 5110, die vorzugsweise in Verteilzentren 5301 für Pakete erfolgen. Beispiele für Netzwerkknoten des Logistiksystems sind vorzugsweise Transfereinrichtungen 5130, 5336 sowie Transporteinheiten 5236 und die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322.

Hierbei werden die Paketidentifikationsmerkmale so übertragen, dass die jeweiligen Netzwerkknoten die Pakete unter Berücksichtigung der jeweils ausgewählten Übergabepunkte in den weiteren Transportprozess einbringen.

### Verteilzentrum 5301 und Zustelldepot 5302

In einer vorteilhaften Ausgestaltung der Erfindung sind die Zustelldepots als Verteilzentren ausgebildet. Es vorteilhaft, ein zwei- oder mehrstufiges Logistiksystem einzusetzen, bei dem vorzugsweise zunächst ein Transport von Paketen zu einem Verteilzentrum erfolgt, dann von einem Verteilzentrum zu einem anderen Verteilzentrum und anschließend von dem anderen Verteilzentrum zu Zustelldepots. Dabei finden beispielsweise folgende Bearbeitungsvorgänge statt:
- Auswahl eines Verteilzentrums 5301, das sich für eine weitere Verteilung der Pakete durch Beladung von Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322, besonders eignet;
- Eine Initiierung eines Transports zu dem Verteilzentrum 5301 und/oder zu dem Zustelldepot 5302;
- Eine Initiierung eines Transports zu der Depoteinrichtung;
- Ausschleusung der Pakete im Bereich eines Verteilzentrums 5301 oder Zustelldepots 5302

### Auswahl von Übergabepunkten 5120

Vorzugsweise enthalten die in Spalte 5120 dargestellten Bearbeitungsvorgänge und Bearbeitungseinheiten Mittel zur Auswahl von Übergabepunkten, insbesondere gemeinsamen optimierten Übergabepunkten von Paketen, insbesondere unter Verwendung von Depoteinrichtungen 5242, 5243, 5321, 5322.

### Depoteinrichtungen 5242, 5243, 5321, 5322

Bei den Depoteinrichtungen 5242, 5243, 5321, 5322 kann es sich um Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 handeln, wie sie in den Abbildungen 8-11d, 14-15, 17 bis 21 und 27 bis 31 dargestellt sind, jedoch ist das Logistiksystem nicht auf Anwendungsfälle mit Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 beschränkt und auch bei einem Einsatz von Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 können diese anders gestaltet sein, als dies in diesen Abbildungen beispielhaft dargestellt ist.

Die Depoteinrichtungen 5242 beinhalten in einer besonders bevorzugten Ausgestaltung eine flexible Anpassung wenigstens einer Lagereinheit 1410.

Gemäß einer gleichfalls bevorzugten Ausgestaltung weist die Depoteinrichtungen 5243 ein Paternostersystem auf.

Die in einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingelagerten Pakete werden vorzugsweise in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu den Übergabepunkten, insbesondere den gemeinsamen optimierten Übergabepunkten transportiert.

Die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 enthält vorzugsweise eine Übergabeeinrichtung für die Pakete als Teil der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322. Die Übergabeeinrichtung dient vorzugsweise auch als Annahmeeinrichtung für im Bereich der Übergabepunkte in die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 übergebenen Pakete.

### Beladungsvorbereitung der Depoteinrichtungen 5130

In einer bevorzugten Ausführungsform der Erfindung enthalten die in Spalte 5130 dargestellten Bearbeitungsvorgänge und Bearbeitungseinheiten Mittel und Verfahrensschritte 5233, 5331-5336 zu einer Beladungsvorbereitung der Depoteinrichtungen, insbesondere im Bereich von Transfereinrichtungen 5130, 5336.

Der Bearbeitungsvorgang 5130 beinhaltet einzelne, mehrere oder sogar sämtliche der nachfolgend dargestellten Bearbeitungsvorgänge für die Pakete:
- Transfer der Pakete aus einem Verteilzentrum;
- Vereinzelung der Pakete;
- Transport der Pakete von einem Verteilzentrum zu den Depoteinrichtungen;
- Transport der Pakete von einer oder mehreren ersten Depoteinrichtungen zu einer oder mehreren zweiten Depoteinrichtungen;
- Vorbereitung der anhand von Spalte 5140 dargestellten Einlagerung der Pakete in die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322.

Einzelne, mehrere oder sogar sämtliche dieser Bearbeitungsvorgänge für die Pakete werden in einer bevorzugten Ausführungsform der Erfindung durch die Transfereinrichtungen 5336 durchgeführt.

Die in Spalte 5130 dargestellten Bearbeitungsvorgänge und Bearbeitungseinheiten fördern einen Transfer von Paketen in Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322. Es handelt sich hierbei insbesondere um Bearbeitungsvorgänge, bei denen mehrere Pakete vorzugsweise unmittelbar hintereinander zu den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 transportiert werden und danach vorzugsweise in die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingelagert werden. Die Einlagerung der Pakete in die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 erfolgt vorzugsweise durch die Einlagerung der Pakete in Lagerpositionen von Lagereinrichtungen der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322.

Um die Einlagerung der Pakete in die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 möglichst schnell durchzuführen und/oder um die Entnahme von Paketen aus den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 möglichst schnell und zuverlässig durchzuführen, ist es zweckmäßig, Transfereinrichtungen einzusetzen, die beispielhaft in den Abbildungen 17, 18, 19, 20, 21, 27, 28, 29, 31, 32, 33, 34, 35, 36 und 37 dargestellt sind. Die in den Abbildungen 17, 18, 19, 20, 21, 27, 28, 29, 31, 32, 33, 34, 35, 36 und 37 dargestellten Transfereinrichtungen sind vorteilhafte Ausführungsformen erfindungsgemäßer Transfereinrichtungen 5336.

Die Transfereinrichtungen 5336 können auch Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 enthalten, die als Zwischenlager für Pakete dienen. In einem derartigen Fall werden Pakete vorzugsweise zunächst in eine erste Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 verbracht und dann aus dieser Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 wieder entnommen und in eine neue Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 verbracht.

### Transfereinrichtung 5336

Ein weiteres Bearbeitungsmodul, das in einer bevorzugten Ausführungsform der Erfindung durch Steuerkomponente 5012 des Logistiksystems, beziehungsweise das Logistiksystem 5020 gesteuert wird, ist ein Sortiermodul 5130, 5336 innerhalb des Verteilzentrums, das vorzugsweise auch zur Ausschleusung der Pakete zu den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 dient.

Vorzugsweise umfasst eine Bearbeitung im Bereich der Transfereinrichtungen 5130, 5336 eine autonome Vereinzelung 5231, eine optimierte Ausrichtung 5232 der Pakete und eine optimierte Fächerzuweisung 5233 - für Lagerpositionen der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322. Dabei werden beispielhaft folgende Bearbeitungsvorgänge durchgeführt:
- Übergabe der Pakete an einer Transfereinrichtung 5130, 5336 zu den Depoteinrichtungen140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322; vorzugsweise unter Einsatz einer Transporteinheit 1241, 1641, 1941, 1942, 1943, 1944, 1945, 2941, 2942, 2943, 2944, 2945, 5341;
- Transport der Pakete von der Transfereinrichtung 5130, 5336 zu der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322;

### Beladung der Depoteinrichtungen 5140

In einer gleichfalls vorteilhaften Ausführungsform der Erfindung enthalten die in Spalte 5140 dargestellten Bearbeitungsvorgänge und Bearbeitungseinheiten Mittel zur Beladung der Depoteinrichtungen, insbesondere zur Beladung der Depoteinrichtungen mit vereinzelten Paketen und vorteilhafter Weise auch unter Einbeziehung von Paketidentifikationsmerkmalen für die einzelnen Pakete.

Unmittelbar nachdem die Einlagerung von Paketen in die Depoteinrichtung im Verteilzentrum 5301 abgeschlossen ist, wird noch während einer Anwesenheit der Depoteinrichtung im Bereich des Verteilzentrums, beispielsweise im Bereich der Transfereinrichtungen 5130, 5336 vorzugsweise gesteuert durch die Steuerkomponente 5012 ein Datensatz an die Depoteinrichtung übermittelt. Bevorzugte Inhalte des Datensatzes sind alle relevanten Daten, die die Depoteinrichtung zur Übergabe der jetzt in der Depoteinrichtung befindlichen Pakete bzw. zur Annahme von bereits avisierten Einlieferungen von Paketen benötigt.

Vorzugsweise sind das für jedes im Bereich des Verteilzentrums beziehungsweise der Transfereinrichtung 5130, 5336 in die Depoteinrichtung eingelagerten Pakete:
- Lagerplatz innerhalb der Depoteinrichtung;
- Ein Paketidentifikationsmerkmal;
- Kontaktdaten eines jeweils vorgesehen Empfängers des Pakets;
- Authentifizierungsmerkmale des Empfängers des Pakets.

Vorzugsweise sind das für jedes während eines Aufenthalts der Depoteinrichtung an einem Standort, beispielsweise einem gemeinsamen optimierten Übergabepunkt in die Depoteinrichtung eingelagerten Pakete:
- Größe des Pakets;
- Paketidentifikationsmerkmal;
- Kontaktdaten des Einlieferers;
- Authentifizierungsmerkmale des Einlieferers;
- Kontaktdaten eines Empfängers des Pakets;
- Authentifizierungsmerkmale des Empfängers des Pakets.

Dies bedeutet, dass die Depoteinrichtung ohne eine permanente Kommunikation mit dem Logistiksystem beziehungsweise der Steuerkomponente 5012 autark an ihrem Standort agieren kann; d.h. alle Pakete in der Depoteinrichtung können vor Ort am Standort an den jeweiligen Empfänger ausgegeben werden bzw. bereits avisierte Einlieferungen von Versendern können angenommen und wiederum ausgegeben werden.

### Ein- und Auslagerung 5241

Ebenso können Verfahren zur Unterstützung eines Einlagerns der Pakete in Lagerpositionen der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 durch die Transporteinheit (1241, 1641, 1741, 1742, 1743, 1841, 1842, 1845, 1940, 1941, 1942, 1943, 1944, 1945, 2140, 2141, 2142, 2145, 2642, 2643, 2644, 2645, 2741, 2742, 2743, 28,41, 2842, 2845, 2940, 2941, 2942, 2943, 2944, 2945,3140, 3141, 3142, 3145, 3340, 3341, 3342, 3343, 3344, 3345, 3540, 3541, 3542, 3543, 3544, 3545, 3740, 3741, 3742, 3743, 3744, 3745) sowie weitere Einrichtungen, beispielsweise einen Schieber 1430 unterstützt werden.

### Lagereinrichtungen 5342

Eine vorteilhafte Ausführungsform dieses Verfahrens zeichnet sich dadurch aus, dass anhand von Paketidentifikationsmerkmalen eine Zuordnung der Pakete zu vorherbestimmten Lagerpositionen erfolgt, dass sich entlang eines in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 befindlichen Transportweges wenigstens eine Transporteinheit 1241, 1641, 1941, 1942, 1943, 1944, 1945, 2941, 2942, 2943, 2944, 2945 so bewegt, dass sie Pakete aus einem Sendungsstrom von Paketen anhand der Paketidentifikationsmerkmale entnehmen kann, dass unter Einsatz der Transporteinheit 1241, 1641, 1941, 1942, 1943, 1944, 1945, 2941, 2942, 2943, 2944, 2945 ein Transport der Pakete von dem Sendungsstrom in die Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 ermöglicht wird, wobei der Transport der Transporteinheit 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 innerhalb der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 unter Berücksichtigung der den jeweiligen Paketen anhand der Paketidentifikationsmerkmale zugeordneten Lagerpositionen gesteuert wird.

Ein besonders bevorzugter Bearbeitungsvorgang für die Paket ist:
- Einlagerung der Pakete durch eine Transporteinheit 1241, 1641, 1941, 1942, 1943, 1944, 1945, 2941, 2942, 2943, 2944, 2945,5341 in Lagerpositionen der Lagereinrichtungen: 5342 der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322.

### Transport und Aufstellung der Depoteinrichtungen an Standorten 5150

Gemäß einer zweckmäßigen Weiterbildung der Erfindung enthalten die in Spalte 5150 dargestellten Bearbeitungsvorgänge und Bearbeitungseinheiten Mittel zum Transport der Depoteinrichtungen und zur Aufstellung der Depoteinrichtungen an Standorten. Gemäß einer besonders vorteilhaften Ausführungsform geschieht dies einschließlich eines möglichst automatisiert erfolgenden Einparkens der Depoteinrichtungen an ihren jeweiligen Standorten.

Eine zweckmäßige Ausführungsform der Erfindung sieht vor, dass die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 von einem Ort zu einem anderen Ort transportiert wird. Insbesondere handelt es sich bei den verschiedenen Orten um ein Verteilzentrum 5301 und einen Standort in einem Einzugsbereich von Empfängern von Paketen und/oder Einlieferern von Paketen als gemeinsamer optimierter Übergabepunkt für mehrere Pakete und/oder auch das sequentielle Anfahren von mehreren gemeinsamen optimierten Übergabepunkten.

Sobald die Depoteinrichtung ihren Ausgabestandort, insbesondere an einem gemeinsamen optimierten Übergabepunkt, erreicht hat, sendet die Depoteinrichtung diese Information an die Steuerkomponente 5012. Die Steuerkomponente 5012 wiederum informiert, beispielsweise unter Einsatz von Benachrichtigungen an Benutzer-Apps 5021, 5022 und/oder Benutzerkomponenten von Empfängern, möglichst viele, vorzugsweise alle Empfänger, für welche ein Paket in der Depoteinrichtung gelagert ist, mit Informationen über
- den konkreten Standort der Depoteinrichtung;
- mit der Zeitspanne der Verfügbarkeit der Depoteinrichtung vor Ort (z.B. auch mit Countdown-Funktionalität/-Uhr), d.h. mit Informationen über den Übergabezeitraum für eine Paketübergabe an dem Standort der Depoteinrichtung;
- einen Link für eine Wegstreckenbeschreibung vom aktuellen Standort des Empfängers zum Standort der Depoteinrichtung (mit Angabe des Zeitaufwands);
- evtl. noch Zusatzinformationen bzgl. Wetter, Verkehrslage und Voucher eines Einzelhändlers nahe dem Standort der Depoteinrichtung;

Ein Transport der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu weiteren Standorten kann durch die Steuereinrichtung 5150 oder eine Anforderungseinheit 5180, 5281 gesteuert werden.

Zuvor wurde bereits eine bevorzugte Weiterbildung der in Spalte 5190 dargestellten Bearbeitungsvorgänge und Bearbeitungseinheiten offenbart, bei der Mittel zum Transport der Depoteinrichtungen zu den Transfereinrichtungen 5130, 5336 und/oder von einem ersten Aufstellort zu einem weiteren Aufstellort als weiteren Standort zur Aufstellung der Depoteinrichtung eingesetzt werden. Es ist jedoch gleichfalls möglich, dass wenigstens ein Teil der Depoteinrichtungen sich über einen längeren Zeitraum als die vorgesehenen Übergabezeitraume an einem Standort befindet oder sogar stationär ausgebildet ist, wobei stationär auch eine teilweise Stationarität, beispielsweise durch eine reversible Verbindung der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit einer anderen Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 und/oder einem anderen festen Bezugspunkt beinhaltet.

### Steuereinrichtung autonomer oder teil-autonomer Transport 5251

Zum Logistiksystem 5020 gehören vorzugsweise auch Steuereinrichtungen 5150, 5151 für eine Steuerung des Transportes der Pakete zu den jeweiligen Übergabepunkten. Diese stellen sicher, dass ein Transport einer die jeweiligen Pakete enthaltenden Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu dem jeweiligen Übergabepunkt erfolgt.

Die Steuereinrichtungen 5150, 5151 können Bestandteile der Steuerkomponente 5012 sein und/oder mit der Steuerkomponente 5012 zusammenwirken.

Es ist vorteilhaft, dass auch Transportvorgänge der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 durch die Steuerkomponente 5012 gesteuert werden und/oder dass die Steuerkomponente 5012 an andere Steuereinheiten, insbesondere Fahrzeugsteuereinheiten 5150, 5151 Steuerbefehle zur Steuerung des Transports der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 übermittelt.

Die entsprechende Steuerung erfolgt unter Einbeziehung eines Autonomitätsgrades der Transportmittel zum Transport der Depoteinrichtungen.

Es ist vorteilhaft, Fahrzeuge, mobile Roboter und gegebenenfalls fahrerlose Transportsysteme - nachfolgend zusammenfassend als Fahrzeuge bezeichnet - einzusetzen, die eine möglichst hohe Autonomiestufe aufweisen, die zuverlässig erreicht werden kann.

Eine Kontrolle der jeweiligen Umgebung des Fahrzeuges erfolgt insbesondere in den Autonomiestufen 3, 4 und 5.

Es ist jedoch gleichfalls möglich, auch ferngesteuerte Fahrzeuge einzusetzen.

Ein Einsatz einer Fernsteuerung hat den Vorteil, dass bei einer verhältnismäßig geringen Autonomiestufe ein Fahrer auf Grundlage der Steuerbefehle der Steuereinrichtung 5150 eine Steuerung des Fahrzeuges während der gesamten Fahrstrecke oder während Fahrabschnitten, die nicht autonom befahren werden können, vornimmt.

Ab Autonomiestufe 3 ist eine permanente Steuerung durch einen Fahrer nicht erforderlich, sondern vielmehr nur eine Schnittstelle, die es einem menschlichen Fahrer auf Anfrage eines Fahrzeugsystems ermöglicht, in kurzer Zeit angemessen zu reagieren.

Bei einer Autonomiestufe von 4 oder 5 kann auf einen Einsatz auch eines aus der Ferne einwirkenden Fahrers im Regelfall verzichtet werden. Insbesondere wird bei einer Autonomiestufe von 4 der Fahrmodus der Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 so gesteuert, dass alle Aspekte dynamischer Fahraufgaben durch das automatisierte Fahrsystem selbst erfolgen können.

Dies wird vorteilhafterweise durch Einsatzszenarien unterstützt, bei denen Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 außerhalb von Stoßzeiten, vorzugsweise vor dem morgendlichen Berufsverkehr oder nach dem abendlichen Berufsverkehr transportiert werden, wobei üblicherweise ein Transport der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 von den Transfereinrichtungen 5130, 5336 zu den Übergabepunkten vor dem morgendlichen Berufsverkehr erfolgt und der Rücktransport der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu den Transfereinrichtungen 5130, 5336 nach dem abendlichen Berufsverkehr. Hierdurch ist gewährleistet, dass während üblicher Tageszeiten, an denen viele Empfänger sich in der Nähe der Depoteinrichtungen befinden oder Wegstrecken zurücklegen, die in der Nähe von den Übergabepunkten liegen, die jeweilige Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit möglichst geringem Aufwand erreichbar ist.

Gemäß einer zweckmäßigen Weiterbildung der Erfindung enthalten die in Spalte 5190 dargestellten Bearbeitungsvorgänge und Bearbeitungseinheiten Mittel zum Transport der Depoteinrichtungen zu den Transfereinrichtungen 5130, 5336 und/oder von einem ersten Aufstellort zu einem weiteren Aufstellort als weiteren Standort zur Aufstellung der Depoteinrichtung.

Gemäß einer besonders vorteilhaften Ausführungsform geschieht der Transport einschließlich eines möglichst automatisiert erfolgenden Einparkens der Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 im Bereich der Transfereinrichtungen 5130, 5336 oder an den gemeinsamen optimierten Übergabepunkten.

### Benutzerkomponente 5351

Es ist vorteilhaft, das Logistiksystem, beziehungsweise eine oder mehrere der Komponenten des Logistiksystems so auszugestalten, dass sie über eine Benutzerschnittstelle mit Benutzerkomponenten 5351 interagieren, insbesondere auf Anforderungen zur Übergabe von Paketen reagieren können. Bei der Benutzerkomponente 5351 handelt es sich beispielsweise um ein Smartphone, eine Smartwatch oder um eine smarte Brille. Insbesondere ist die Benutzerschnittstelle so ausgebildet, dass sie eine Übergabe von Paketen veranlassende und/oder die Übergabe der Pakete verbessernde Informationen übermitteln kann. Beispiele für die übermittelbaren Informationen sind Paketidentifikationsmerkmale, Benutzeridentifikationsmerkmale, Authentifizierungsdaten und Benachrichtigungsinformationen.

Die Interaktion der Komponente des Logistiksystems mit den Benutzerkomponenten 5351 kann auf verschiedene Weise realisiert werden.

Es ist grundsätzlich möglich, mehrere der dargestellten Komponenten des Logistiksystems so auszugestalten, dass sie mit einer Benutzerkomponente 5351 wechselwirken können, besonders zweckmäßig ist jedoch, wenn es sich bei wenigstens einer der Komponenten um eine Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 handelt.

Eine andere Komponente des Logistiksystems, bei der eine Integration der Benutzerschnittstelle erfolgt, ist eine vorzugsweise mobile Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322, die so eingerichtet ist, dass sie Pakete ausgeben und/oder annehmen kann.

### Übergabe Pakete an Empfänger 5160

Die in Spalte 5160 dargestellten Bearbeitungsvorgänge und Bearbeitungseinheiten enthalten in einer besonders bevorzugten Ausführungsform in der Erfindung Mittel zur Übergabe von Paketen an Empfänger.

Die Benachrichtigungskomponente 5027 übermittelt wie bereits zuvor dargestellt beispielhaft folgende Information an den Empfänger eines Paketes und fordert ihn damit zur Abholung seines Paketes auf:
--------
"Lieber Herr Müller,
Ihr Paket liegt ab sofort bis heute 21:00 Uhr zur Abholung im Paketmobil,
an der Philipsstraße 8, 52068 Aachen für Sie bereit"
Den schnellsten Weg zu Ihrem Paket finden Sie hier.
Ihr Paketmobil Team"

Die Übergabe der in den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 befindlichen Pakete an die Empfänger, hier auch als Übergabe bezeichnet, kann unmittelbar durch die Benutzer-App 5021, 5022 gesteuert werden. Ferner erfolgt vorzugsweise eine Authentifizierung der Empfänger durch ein Authentifizierungsmodul.

Dies ist beispielsweise dann möglich, wenn ein Empfänger, der Benutzer einer App ist, diese so konfiguriert hat, dass bereits seine Annäherung an eine Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 einen Übergabevorgang initiiert.

Es ist zweckmäßig, ein Authentifizierungsmodul 5262 für einen Austausch von Authentifizierungsinformationen mit der Benutzerkomponenten 5351 des Empfängers und/oder einer App, insbesondere der Benutzer-App 5021, 5022 bereitzustellen, so dass eine Authentifizierung des Benutzers erleichtert wird.

Alternativ oder zusätzlich ist eine Identifikation des Benutzers unter Einbeziehung biometrischer Informationen möglich.

Das Authentifizierungsmodul 5262 wirkt vorzugsweise mit der Steuerkomponente 5012 und/oder mit der lokale Steuereinheit 5170, 5171 zusammen.

Die Annäherung des Empfängers an die Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 kann mittels verschiedener Standortbestimmungssysteme einschließlich satellitenbasierten Positionsbestimmungssystemen, Lokalisierung über ein Mobilfunknetz, ein WLAN und/oder über NFC festgestellt werden, wobei derartige Lokalisierungsmethoden teilweise Ortsgenauigkeiten im cm-Bereich ermöglichen.

Sobald der Empfänger sich nun innerhalb eines Nahfeldradius in der Größenordnung von beispielsweise 5m bis 50m, vorzugsweise 10m bis 20m Radius der entsprechenden Depoteinrichtung nähert, registriert dies die Depoteinrichtung selbstständig zum Beispiel via Near Field-Communication (NFC), und/oder die Steuerkomponente 5012 des Logistiksystems registriert dies aufgrund von empfangenen Lokalisierungsinformationen des Empfängers, die beispielsweise mittels GPS-Daten oder Ortung innerhalb eines mobilen Kommunikationsnetzes ermittelt werden.

Nachdem die Nähe des Empfängers zu der Depoteinrichtung festgestellt wurde, erhält seine Benutzer-App 5021, 5022 und/oder Benutzerkomponente eine Benachrichtigung. Nach dem Empfangen der Benachrichtigung wird die Benutzer-App 5021, 5022 und/oder die Benutzerkomponente in einen anderen Betriebszustand gebracht, insbesondere aktiviert. Dies kann ebenfalls standalone durch die Depoteinrichtung oder über das Logistiksystem, vorzugsweise die Steuerkomponente 5012 des Logistiksystems geschehen.

Vorzugsweise erhält der Empfänger nun von der Benutzer-App 5021, 5022 und/oder der Benutzerkomponente eine Abfrage, ob er jetzt unmittelbar das Paket aus der Depoteinrichtung entnehmen möchte. Bestätigt der Empfänger den Wunsch zur Entnahme, so wird er gebeten sich via App zu authentifizieren (z.B. via touch ID, oder Passworteingabe etc.). Auch die Authentifizierung kann wiederum standalone durch die Depoteinrichtung erfolgen und/oder durch die Steuerkomponente 5012 des Logistiksystems. Sofern die Authentifizierung positiv ist, der Empfänger sich zudem unmittelbar an der Depoteinrichtung befindet (beispielsweise maximal 2m entfernt) und eine Übergabe des Pakets möglich ist, so wird die Übergabe des Paketes durch die Depoteinrichtung eingeleitet.

Die zuvor genannte Übergabe des Pakets ist insbesondere dann möglich, wenn eines oder mehrerer der vorgenannten Merkmale erfüllt ist:
- vor dem Empfänger des Pakets befindet sich kein weiterer Empfänger des Pakets;
- es finden an der Depoteinrichtung keine parallel ablaufenden Übergabevorgänge von Paketen statt;
- es steht eine Übergabeeinheit für eine Übergabe des Pakets an einem individuellen Übergabepunkt zur Verfügung.

### (Lokale) Steuereinheit zur Übergabe von Paketen 5170

Besonders vorteilhafte Ausgestaltungen von Bearbeitungsvorgängen und Bearbeitungseinheiten im Bereich einer gegebenenfalls lokalen Steuereinheit zur Ermöglichung einer Übergabe der Pakete sind in Spalte 5170 dargestellt.

Eine Steuereinheit 5170, 5171 steuert mehrere, vorzugsweise viele, noch vorteilhafter sämtliche Bearbeitungsvorgänge im Bereich der Depoteinrichtungen, insbesondere bei Aufstellung der Depoteinrichtungen im Bereich der Aufstellorte.

Beispiele für die durch die Steuereinheit 5170, 5171 gesteuerte Bearbeitungsvorgänge sind:
- Einsatz von Depoteinrichtungen für die Lagerung von Paketen;
- Einsatz von Depoteinrichtungen für die Sortierung von Paketen;
- Einsatz von Depoteinrichtungen für die Kommissionierung von Paketen;
- Einsatz von Depoteinrichtungen als Verkaufseinrichtungen;
- Steuerung von Übergabevorgängen im Bereich der Depoteinrichtung.

Alternativ zur Steuerung durch die Benutzer-App 5021, 5022 ist es auch möglich, die Übergabe der Pakete durch eine lokale Steuereinheit 5170, 5171 in der Depoteinrichtung zu steuern, wobei die lokale Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 gegebenenfalls Zuordnungsinformationen zwischen Paket und Empfänger von der Datenbank 5023 empfängt und die Übergabe unter Berücksichtigung der Zuordnungsinformationen, beziehungsweise einer durch die Datenbank 5023 übermittelten Autorisierung vornimmt.

Es ist besonders vorteilhaft, die Steuereinheit 5170, 5171 als eine lokale Steuereinheit 5170, 5171 im Bereich der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 einzusetzen, insbesondere die lokale Steuereinheit 5170, 5171 so auszugestalten, dass sie die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 so steuert, dass eine Übergabe der Pakete auch unabhängig von der Steuerkomponente 5012 ermöglicht wird. Diese Ausgestaltung der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit jeweils einer lokalen Steuereinheit 5170, 5171 hat den Vorteil, dass ein Betrieb der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 vorzugsweise einschließlich einer Einlieferung von Paketen und einer Übergabe von Paketen auch dann möglich ist, wenn beispielsweise keine Datenverbindung zwischen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 und der Steuerkomponente 5012 besteht.

Benachrichtigungen des Empfängers über die Möglichkeit der Abholung durch den Empfänger können insbesondere dann erfolgen, wenn einer der nachfolgenden Verfahrensschritte erreicht wird:
- Einlieferung eines Pakets in eine Depoteinrichtung; insbesondere bei stationären Depoteinrichtungen;
- Beginn eines Transports einer das Paket enthaltenden mobilen Depoteinrichtung;
- Erreichen eines für die Übergabe vorgesehenen Standortes einer das Paket enthaltenden mobilen Depoteinrichtung;
- Information, dass ein in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 gelagertes Paket einem Empfänger zugeordnet werden kann.

### Übergabe von Paketen an individuellen Übergabepunkten 5175

Vorteilhafte Ausgestaltungen von Bearbeitungsvorgängen zur Durchführung und Verbesserung einer Übergabe von Paketen an individuellen Übergabepunkten sind in Spalte 5175 dargestellt.

Für die Übergabe von Paketen an einen einzelnen Empfänger an einem individuellen Übergabepunkt gibt es mehrere vorteilhafte Varianten.

Eine vorteilhafte Variante ist die Übergabe an einen einzelnen Empfänger an einem individuellen Übergabepunkt durch die Depoteinrichtung selbst. So kann die Depoteinrichtung nach Verlassen des gemeinsam optimierten Übergabepunktes für die Übergabe mehrerer Pakete an mehrere Empfänger und/oder von mehreren Einlieferern nacheinander verschiedene individuelle Adressen anfahren und dort eine Übergabe eines oder mehrerer Pakete vornehmen.

Für die Übergabe eines oder mehrerer Pakete ist es möglich, einen individuellen Übergabezeitraum und/oder individuellen Übergabepunkt mittels eines der in dieser Anmeldung offenbarten Auswahlverfahrens, insbesondere der dargestellten Verfahren zur Optimierung von Übergabepunkten zu ermitteln.

Es ist vorteilhaft, zunächst den individuellen Übergabezeitraum und/oder individuellen Übergabepunkt mit einem gegebenenfalls auswählbaren Konfidenzintervall zu ermitteln. Das Konfidenzintervall betrifft vorzugsweise den individuelle Übergabezeitraum und/oder der individuellen Übergabepunkt, der mit dem Empfänger vereinbart und/oder dem Empfänger mitgeteilt wird.

Eine zweckmäßige Ausführungsform der Erfindung sieht vor, dass die Steuerkomponente die Bearbeitungsvorgänge so steuert, dass die Übergabe des Pakets im individuelle Übergabezeitraum und/oder am individuellen Übergabepunkt mit der Mindestwahrscheinlichkeit durchführt, sobald der individuelle Übergabezeitraum und/oder individuelle Übergabepunkt mit einer Mindestwahrscheinlichkeit von beispielsweise mindestens 95%, vorzugsweise deutlich näher an 100% liegt - mit dem Empfänger vereinbart werden kann.

Eine gleichfalls vorteilhafte Ausführungsform der Erfindung sieht vor, dass die Übergabe des Pakets in dem individuellen Übergabezeitraum und/oder an dem individuellen Übergabepunkt mit einer Mindestwahrscheinlichkeit von beispielsweise mindestens 95%, vorzugsweise deutlich näher an 100% an den Empfänger erfolgen kann. Danach wird dem Empfänger die Übergabemöglichkeit mitgeteilt. Vorzugsweise übermittelt hierzu die Steuerkomponente mittels einer Benutzerkomponente 5351 des Empfängers und/oder einer APP, insbesondere einer Benutzer-App 5021, 5022 eine Benachrichtigung über die Übergabemöglichkeit und informiert so den Empfänger.

Es ist vorteilhaft, an den einzelnen Empfänger alternativ oder zusätzlich zu der in dem vorigen Absatz dargestellten Benachrichtigung unmittelbar nach Eintreffen der Depoteinrichtung am individuellen Übergabepunkt vorzugsweise mittels einer Benutzerkomponente 5351 und/oder einer App, insbesondere eine Benutzer-App 5021, 5022 eine Benachrichtigung über die sofortige Übergabemöglichkeit zu übermitteln und ihn so zu informieren. Der Prozess der Übergabe erfolgt vorzugsweise analog des Prozesses an einem gemeinsamen optimierten Übergabepunkt.

Eine weitere vorteilhafte Variante der Übergabe an einen einzelnen Empfänger an einem individuellen Übergabepunkt ist die Übergabe durch eine autonome Übergabeeinheit. Es ist gleichfalls möglich, die Transporteinheit 1641 als eine Übergabeeinheit einzusetzen, die Pakete zwischen der Depoteinrichtung und individuellen Übergabepunkten für eine Übergabe von Paketen an einzelne Empfänger transportieren kann.

Der individuelle Empfänger wird unmittelbar nach Eintreffen der Übergabeeinheit am individuellen Übergabepunkt via APP über die sofortige Übergabemöglichkeit informiert.

Sobald der Empfänger sich unmittelbar vor der Übergabeeinheit authentifiziert hat, gibt die Übergabeeinheit das Paket für den Empfänger frei.

### Anforderungseinheit für Übergabe an individuellen Übergabepunkten 5180

Gemäß einer zweckmäßigen Weiterbildung der Erfindung enthalten die in Spalte 5180 dargestellten Bearbeitungsvorgänge und Bearbeitungseinheiten Mittel zur Ermittlung individueller Übergabepunkte für die einzelnen Empfänger des Pakets und/oder die Übergabe des Pakets an den Empfänger und/oder die Annahme des Pakets von dem Einlieferer. Dies erfolgt insbesondere durch eine Anforderungseinheit 5180, 5281 für eine Übergabe des Pakets an einem individuellen Übergabepunkt, insbesondere im Bereich der Depoteinrichtung durch die Depoteinrichtung selbst und/oder eine Übergabeeinheit. Dies betriff Übergaben von Paketen insbesondere an gemeinsamen optimierten Übergabepunkten und/oder an individuellen Übergabepunkten für einzelne Empfänger und/oder Einlieferer von Paketen. Die Übergabe von Paketen an individuellen Übergabepunkten kann sowohl eine Integration einer "Haustürübergabe" als auch Übergaben von Paketen für einen definierbaren Personenkreis von Empfängern und/oder Einlieferern, insbesondere an individuellen Übergabepunkten beinhalten.

Insbesondere ist die Anforderungseinheit 5180, 5281 so eingerichtet, dass sie - vorzugsweise über eine Benutzerschnittstelle mit Benutzerkomponenten 5351 und/oder einer APP, insbesondere eine Benutzer-App 5021, 5022 interagieren, insbesondere auf Anforderungen zur Übergabe von Paketen reagieren kann. Bei der Benutzerkomponente 5351 handelt es sich beispielsweise um ein Smartphone, eine Smartwatch oder um eine smarte Brille. Insbesondere ist die Benutzerschnittstelle so ausgebildet, dass sie eine Übergabe von Paketen veranlassende und/oder die Übergabe der Pakete verbessernde Informationen übermitteln kann. Beispiele für die übermittelbaren Informationen sind Paketidentifikationsmerkmale, Benutzeridentifikationsmerkmale, Authentifizierungsdaten und Benachrichtigungsinformationen.

Insbesondere ist es vorteilhaft, die Anforderungseinheit 5180, 5281 als Komponente des Logistiksystems 5020 zu realisieren.

Beispiele für einen Einsatz individueller Übergabepunkte sind Standorte für Depoteinrichtungen, die so eingerichtet sind, dass Übergaben von Paketen ausschließlich für einen definierbaren Personenkreis von Empfängern und/oder Empfängern erfolgen.

Vorzugsweise veranlasst eine Anforderungseinheit 5180, 5281 eine Paketübergabe an einem individuellen Übergabepunkt.

### Einlieferung von Paketen 5190

Vorteilhafte Ausgestaltungen von Bearbeitungsvorgängen und Bearbeitungseinheiten im Bereich einer Einlagerung von Paketen, Warenobjekten und retournierten Waren, vorzugsweise mittels einer lokalen Steuereinheit zur Ermöglichung einer Einlieferung der Pakete, sind in Spalte 5190 dargestellt.

Es gibt mehrere vorteilhafte Ausgestaltungen von Bearbeitungsvorgängen und Bearbeitungseinheiten im Bereich einer Einlagerung von Paketen, Warenobjekten und retournierten Waren, vorzugsweise mittels einer lokalen Steuereinheit zur Ermöglichung einer Einlieferung der Pakete, sind in Spalte 5190 dargestellt.

Es ist ferner zweckmäßig, das Logistiksystem so auszugestalten, dass es zur Durchführung eines Verfahrens zur Entgegennahme einer Vielzahl von Paketen von mehreren Einlieferern eingerichtet ist, das sich dadurch auszeichnet, dass für mehrere Pakete aus einer Vielzahl möglicher räumlich voneinander getrennter Übergabepunkte 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, , 650, 710, 711, 712, 713, 714, 714, 715, 716, 716, 717, 718, 719, 720 unter Berücksichtigung wenigstens eines Aufwandsparameters jeweils ein gemeinsamer optimierter Übergabepunkt 120, 220, 230, 320, 330, 410, 415, 420, 495, 650, 720 für die Entgegennahme von den Einlieferern innerhalb eines bestimmten Übergabezeitraums ermittelt wird, und dass die Entgegennahme von den Einlieferern an dem zugeordneten gemeinsamen Übergabepunkt 120, 220, 230, 320, 330, 410, 415, 420, 495, 650, 720 innerhalb des vorgesehenen Übergabezeitraums erfolgt.

Vorzugsweise stellt eine Entgegenahme eines Pakets eine Einlieferung des Pakets in eine Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 und/oder eine Übergabe an eine Übergabeeinheit eine Einlieferung in das Logistiksystem dar.

Es ist besonders vorteilhaft, das Logistiksystem so auszugestalten, dass es zur Durchführung eines Verfahrens zur Übergabe einer Vielzahl von Paketen an mehrere Empfänger und zur Entgegennahme einer Vielzahl von Paketen von mehreren Einlieferern eingerichtet ist, das sich dadurch auszeichnet, dass für mehrere Pakete aus einer Vielzahl möglicher räumlich voneinander getrennter Übergabepunkte (110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 650, 720) unter Berücksichtigung wenigstens eines Aufwandsparameters jeweils ein gemeinsamer optimierter Übergabepunkt 120, 220, 230, 320, 330 für die Übergabe an die jeweiligen Empfänger und für die Entgegennahme von den Einlieferern innerhalb eines bestimmten Übergabezeitraums ermittelt wird, und dass die Übergabe an die Empfänger und die Entgegennahme von den Einlieferern an dem zugeordneten gemeinsamen Übergabepunkt 120, 220, 230, 320, 330, 410, 415, 420, 495, 650, 720 innerhalb des vorgesehenen Übergabezeitraums erfolgt.

Es ist vorteilhaft, im Bereich der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 einen oder mehreren der nachfolgend genannten Bearbeitungsvorgänge durchzuführen:
- 5291 Einzel-Einlagerung Warenobjekte von Versendern;
- 5292, "echte" erste Meile, insbesondere als Einlieferung des Pakets in das Logistiksystem zur Durchführung eines oder mehrerer der in dieser Anmeldung offenbarten Bearbeitungsvorgänge;
- 5293, Rücktransport eines in der Depoteinrichtung eingelagerten, jedoch nicht innerhalb des Übergabezeitraumes an dem gemeinsamen optimierten Übergabepunkt übergebenen Pakets.

Es ist vorteilhaft zu ermitteln, in welchem Umfang Lagerpositionen der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 nicht durch die zur Übergabe an den jeweiligen Übergabepunkten der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 von der Steuerkomponente 5012 zugordnete Pakete belegt sind und diese nicht belegten Lagerpositionen für eine Lagerung und Übergabe von Warenobjekten, die im Kontext dieser Anmeldung ebenfalls als Pakete bezeichnet werden, einschließlich zur Einlagerung von Retouren oder "echte erste Meile-Sendungen" durch/in die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu nutzen.

Auch ist es möglich, die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 so einzurichten, dass für eine lokale Übergabe an die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 im Bereich der Übergabepunkte nicht vorgesehene Lagerpositionen für eine Einlagerung von Paketen in die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 der lokalen Steuereinheit 5170, 5171 und/oder der Steuerkomponente 5012 mitgeteilt werden.

### Rücktransport der Depoteinrichtung und Auslagerung 5195 der Pakete

Es ist besonders vorteilhaft, eine Anzahl von nicht an Empfänger übergebenen Pakete möglichst gering zu halten und stattdessen Bearbeitungsvorgänge, insbesondere Bearbeitungsvorgänge im Bereich der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 so durchzuführen, dass möglichst viele der in der Depoteinrichtung befindlichen Pakete einschließlich im Bereich der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 an Empfänger einschließlich alternativer Empfänger für die ansonsten nicht übergebene Pakete übergeben werden.

Die Einbeziehung von Empfängern, denen jeweilige Pakete erst nach einem oder mehreren Bearbeitungsvorgängen zugeordnet werden, ist besonders vorteilhaft. Insbesondere ist es zweckmäßig, für wenigstens einen Teil der Pakete, insbesondere für Pakete, denen keine Empfänger zugeordnet ist, einen alternativen Empfänger zu ermitteln, so dass eine Übergabe des Pakets an den alternativen Empfänger insbesondere als Warenobjekt erfolgt.

Nach Beendigung des Übergabezeitraumes erfolgt in einem Verfahrensschritt 5195 ein Weitertransport der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu weiteren Übergabepunkten oder zu einer Transfereinrichtung 5130, 5336.

Im Verfahrensschritt 5195 werden aus der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 diejenigen Pakete, die nicht für eine Übergabe durch die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 in einem nachfolgenden Übergabezeitraum vorgesehen sind, insbesondere nicht innerhalb des vorgesehenen Übergabezeitraums abgeholte Pakete oder an die Übergabeeinrichtungen für einen weiteren Transport vorgesehene Pakete ausgelagert.

Die Auslagerung der nicht für eine Übergabe durch die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 in einem nachfolgenden Übergabezeitraum vorgesehen Pakete erfolgt vorzugsweise in einem automatisierten Bearbeitungsprozess 5296, 5396.

### Übergabe von Waren

Ausführungsformen der Erfindung umfassen Fälle mit, dass Pakete, einschließlich von hier als Pakete bezeichnete Warenobjekte in Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 bereitgehalten werden und erst unmittelbar in Reaktion auf einen Kauf eines jeweiligen Pakets an einen Empfänger des Pakets übergeben werden.

Auch sind von der Erfindung unterschiedliche Handhabungen unterschiedlicher Pakete mit umfasst. Insbesondere ist von der Erfindung mit umfasst, dass ein Teil der Pakete wie zuvor dargestellt bereits bei der jeweiligen Bestellung einem Empfänger zugeordnet ist als auch dass eine Zuordnung von Paket zu Empfänger zu einem späteren Zeitpunkt erfolgt.

Hierdurch ist es möglich, beschleunige Bestellverfahren für Pakete und/oder Empfänger durchzuführen, in dem Sinn, dass Pakete bereits auf den Transportweg gebracht werden, bevor sie tatsächlich bestellt werden.

Die Erfindung umfasst jedoch auch vorteilhafte Ausführungsformen, bei den eine Verknüpfung zwischen Paketen und Empfängern auch unabhängig von einem Bestellvorgang erfolgt, oder bei denen ein Paket, dessen Transport bereits initiiert wurde oder das sich auf einem Transportweg zu einem Empfänger beziehungsweise einem Übergabepunkt befindet oder das sich in einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 befindet, mit einer Übergabeinformation zur Steuerung einer Übergabe an einen anderen Empfänger verknüpft wird. Bei diesem Empfänger kann es sich um einen Empfänger handeln, der beispielsweise über eine Schnittstelle in das Bestellsystem eingegeben wurde als auch um einen späteren Besteller einschließlich einer Person, die erst in einem Einzugsbereich einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 wenigstens eine Komponente eines Kaufvorgangs durchführt, einschließlich eines Spontankaufs unmittelbar an der Depoteinrichtung.

Es ist möglich, in den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 als Pakete beliebige Gegenstände für eine Übergabe an Empfänger bereitzuhalten, wobei es sich sowohl um Empfänger handelt, denen die jeweiligen Gegenstände bereits bei oder vor ihrer Einlagerung in die jeweilige Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zugeordnet waren als auch Gegenstände bereit zu halten, die erst nach ihrer Einlagerung in der Depoteinrichtung, gegebenenfalls auch erst unmittelbar vor ihrer Übergabe einem Empfänger zugeordnet werden.

Die vorliegende Erfindung eignet sich sowohl für einen Einsatz mit individualisierten Paketen, bei denen es relevant ist, dass ein Paket mit einem vorher definierten Inhalt an einen vorher definierten Empfänger übermittelt wird als auch für einen Einsatz für die Übergabe von Waren, insbesondere von Massenwaren einschließlich solcher Waren, für die es vor einer Einlagerung oder bei der Einlagerung, gegebenenfalls sogar bei der Übergabe keinen definierten Empfänger gibt, sondern bei denen auch eine vorab nicht identifizierte Person Empfänger sein kann, beispielsweise bei der Ausgestaltung der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 als Verkaufseinrichtung.

Um eine Übergabe von Waren zu ermöglichen, ist es vorteilhaft, die Waren als Warenobjekte - vorzugsweise unter Einsatz einer erfindungsgemäßen Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 - zu transportieren. Bei der Übergabe von Warenobjekte können in Abhängigkeit der jeweiligen Abmessung der Warenobjekte innerhalb einer Lagerposition mehrere Pakete bereitgestellt werden. Bei einem derartigen Einsatz ist es zweckmäßig, Produktcodes, oder bereits vom Versender verwendete und angebrachte Codes, die auf einer Vielzahl von Warenobjekten bereits aufgebracht werden, als Paketidentifikationsmerkmale einzusetzen.

Ferner ist es möglich, Pakete, die eine austauschbare Ware enthalten, insbesondere ein Warenobjekt, das mehrfach mit gleichen Eigenschaften hergestellt wird, während eines Transportvorganges zu einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 oder erst innerhalb der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 einem Empfänger, vorzugsweise einem bevorrechtigten Empfänger, beispielsweise einem Käufer, zuzuordnen.

Auch die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 können Bestandteile des Bestellsystems sein und Eingabemittel zur Identifikation eines oder mehrerer Warenobjekte enthalten. Dieses Warenobjekt beziehungsweise diese Warenobjekte werden zu Paketen zusammengefasst, wobei jedes Paket im Regelfall ein oder mehrere Warenobjekte enthält. Die Bereitstellung eines oder mehrerer Warenobjekte als Paket beinhaltet auch den Fall, dass die Warenobjekte jeweils selbst als Pakete versendet werden. Bevorzugte Ausführungsformen der Erfindung sehen eine weitgehend kontaktlose oder sogar vollständig kontaktlose Handhabung der Pakete bei der Sortierung in einem Verteilzentrum in einem Zielgebiet eines Empfängers und auf der letzten Meile zum Empfänger vor, so dass in vielen Fällen auch auf eine Umverpackung der Warenobjekte verzichtet werden kann.

### Lokale Logistik

Lokale Logistik bezeichnet insbesondere die Durchführung von logistischen Bearbeitungsvorgängen im Bereich der optimierten gemeinsamen Übergabepunkte. Beispiele von logistischen Bearbeitungsvorgängen sind Einlieferungen, Sortiervorgänge, Kommissioniervorgänge und Ausgaben; Übergabe ist vorzugsweise ein Sammelbegriff für Einlieferungen und Ausgaben.

Die zusätzliche Integration einer lokalen Logistik, insbesondere mit Übergabe und Entgegennahme von Paketen unmittelbar im Bereich einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 ist besonders zweckmäßig. Dabei ist es vorteilhaft, dass die zusätzliche Integration so erfolgt, dass insbesondere Warenobjekte als Pakete übergeben werden können.

### Standort-Auswahlverfahren im Detail

### Abbildung 6

### Beschreibung Verfahren

In Abbildung 6 ist eine bevorzugte Ausführungsform der Ermittlung des gemeinsamen optimierten Übergabepunktes 120, 220, 230, 320, 330, 410, 415, 420, 495, 650, 720 als ein mehrstufiger Prozess mit mehreren Auswahlschritten dargestellt.

Bei der in Abbildung 6 dargestellten bevorzugten Ausführungsform der Ermittlung des gemeinsamen Übergabepunktes wird vorzugsweise von möglichst räumlich voneinander getrennten Übergabepunkten 611, 612, 613, 614, 615, 616, 617615, 616, 617, 650 ausgegangen.

Dieser Auswahlprozess enthält vorzugsweise einen oder mehrere Auswahlschritte, beispielsweise einen ersten Auswahlschritt 601, einen zweiten Auswahlschritt 602, einen dritten Auswahlschritt 603 und einen vierten Auswahlschritt 604.

Es ist besonders vorteilhaft, dass die Auswahlschritte sich auf unterschiedliche Zeiträume für eine Optimierung beziehen. Beispielsweise können in dem ersten Auswahlschritt 601 allgemeine Standorteigenschaften berücksichtigt werden, beispielsweise eine grundsätzliche Abstellmöglichkeit für eine gegebenenfalls mobile Depoteinrichtung.

Durch den Auswahlschritt 601 wird die "Long List" 605 aller potenziellen Standorte in eine Liste der für die Übergabe von Paketen grundsätzlich qualifizierten Standorte 606 transformiert.

In dem sich an den ersten Auswahlschritt 601 anschließenden zweiten Auswahlschritt 602 werden diejenigen Übergabepunkte, insbesondere Standorte für Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 ermittelt, bei denen sich innerhalb eines als Optimierungszeitraum vorzugsweise ermittelten Übergabezeitraums für die Pakete ein jeweiliger Aufwandsparameter für die Inbetriebnahme der Depoteinrichtungen möglichst niedrig ist. In dem sich an den zweiten Auswahlschritt 602 anschließenden dritten Auswahlschritt 603 werden diejenigen Übergabepunkte ermittelt, bei denen sich innerhalb eines als Optimierungszeitraum vorzugsweise ermittelten Übergabezeitraums für die Pakete ein jeweiliger Aufwandsparameter für die Benutzer von Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 gering ist. Ergebnis der Auswahlschritte 602 und 603 sind somit immer weiter anzahlmäßig beschränkte Listen 607 und 608 grundsätzlich qualifizierter Standorte.

Bei anderen, sich hieran gegebenenfalls anschließenden oder gleichzeitig erfolgenden Auswahlschritten 604 können ein oder mehrere weitere Optimierungsparameter, berücksichtigt werden, beispielsweise in Bezug auf eine Geeignetheit für eine Einlagerung von Waren als weitere Pakete innerhalb der jeweiligen Depoteinrichtung. Endergebnis des Auswahlverfahrens ist eine Liste 609 an Standorten für Depoteinrichtungen für einen Übergabezeitraum, insbesondere innerhalb des jeweiligen Tages. Die Liste enthält, wenn beispielsweise erfindungsgemäße Verfahren so umfangreich implementiert werden, dass sie beispielsweise Übergabeprozesse innerhalb eines oder mehrerer Länder durchführen können gegebenenfalls mehrere hunderttausend oder sogar mehrere Millionen Einträge von gemeinsamen optimierten Übergabepunkten. Einer dieser gemeinsamen optimierten Übergabepunkte ist der in dieser Anmeldung näher erläuterte gemeinsame optimierte Übergabepunkt 650.

Vorzugsweise erfolgen die Auswahlschritte so, dass für mehrere Pakete wenigstens einer der möglichen Übergabepunkte 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617615, 616, 617, 650, 710, 711, 712, 713, 714, 714, 715, 716, 716, 717, 718, 719, 720 ein Standort 120, 220, 230, 320, 330, 410, 415, 420, 495, 650, 720 ist, der einen gemeinsamen optimierter Übergabepunkt 120, 220, 230, 320, 330, 410, 415, 420, 495, 650, 720 für die Übergabe an die jeweiligen Empfänger bildet und dass an dem gemeinsamen Übergabepunkt eine mobile Depoteinrichtungen 140, 240, 250, 340, 350, 1710, 1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 für eine gemeinsame Lagerung der mehreren Pakete und für die Übergabe der mehreren Pakete an die jeweiligen Empfänger der mehreren Pakete an dem zugeordneten gemeinsamen Übergabepunkt 120, 220, 230, 320, 330, 410, 415, 420, 495, 650, 720 innerhalb des vorgesehenen Übergabezeitraums bereitgestellt wird.

Es ist vorteilhaft, dass die für die Übergabe an den Übergabepunkten 120, 220, 230, 320, 330, 410, 415, 420, 495, 650, 720 vorgesehenen Pakete in die mobilen Depoteinrichtungen 140, 240, 250, 340, 350 eingebracht werden und dass dann die mobilen Depoteinrichtungen 140, 240, 250, 340, 350 die Pakete zu den ihnen zugeordneten Übergabepunkten (120, 220, 230, 320, 330 transportieren und dass während des vorgesehenen Übergabezeitraums die Pakete in den mobilen Depoteinrichtungen 140, 240, 250, 340, 350 gelagert und für die Übergabe an die Empfänger der Pakete unter Einsatz der Depoteinrichtungen 140, 240, 250, 340, 350 bereitgestellt werden.

Ferner ist es zweckmäßig, dass mehrere für die Übergabe an einem der Übergabepunkte 120, 220, 230, 320, 330, 650, 670, vorgesehenen Pakete zu einer Transfereinrichtung 5130, 5336 transportiert und an der Transfereinrichtung 5130, 5336 in eine der mobilen Depoteinrichtungen 140, 240, 250, 340, 350 eingebracht werden.

Eine bevorzugte Ausgestaltung der Auswahlverfahrens berücksichtigt eine Ausführungsform, die sich dadurch auszeichnet, dass zusätzlich zu den mehreren Paketen die an dem zugeordneten gemeinsamen Übergabepunkt 120, 220, 230, 320, 330, 650, 670 innerhalb des vorgesehenen Übergabezeitraums in der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 bereitgestellt werden, weitere Pakete in die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingeliefert und eingelagert werden.

Eine hiermit kombinierbare bevorzugte Ausgestaltung des Auswahlverfahrens berücksichtigt eine Ausführungsform, die sich dadurch auszeichnet, dass ein Teil der in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingestellten weiteren Pakete nach Ablauf des Übergabezeitraums für die mehreren Pakete zu einer Transfereinrichtung 5130, 5336 transportiert wird, sofern sie während des ursprünglichen Übergabezeitraums nicht abgeholt werden.

Eine weitere gleichfalls hiermit kombinierbare bevorzugte Ausgestaltung zeichnet sich dadurch aus, dass in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 gelagerte Pakete auf eine empfangene Ausgabeaufforderung hin innerhalb der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 in eine Übergabeeinrichtung transportiert und dort dem Empfänger zugänglich gemacht werden.

Längerfristige Optimierungsparameter insbesondere in Auswahlschritt 601 betreffen insbesondere die technische Geeignetheit des jeweiligen Übergabepunktes, beispielsweise die Möglichkeit, dort eine Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 aufzustellen. Es handelt sich hierbei insbesondere um Standorte, an denen die jeweilige Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 geparkt werden kann.

Weitere eher langfristige Optimierungsparameter sind u.a. eine Verfügbarkeit weiterer Parkplätze und/oder eine Nähe zu öffentlichen Verkehrsmitteln,
Es gibt langfristige Parameter, beispielsweise regulatorische Bedingungen, insbesondere Vorschriften über eine Nutzung öffentlicher Parkplätze oder im Privateigentum befindliche Parkplätze.

Einzelne der langfristigen Optimierungsparameter betreffen somit Parameter, die mehrere Monate gültig sind, gegebenenfalls sogar mehrere Jahre. Andere der längerfristigen Optimierungsparameter sind deutlich kürzer als ein Monat, jedoch länger als ein üblicherweise einen Tag oder kurzer andauernder Übergabezeitraum.

Dies zeigt sich beispielsweise anhand der in den Abbildungen. 4a, 4b, 4c 4d dargestellten Karte einer idealisierten Stadt. Hierbei ist eine Straßenverbindung zwischen der P - Straße und dem J - Platz in der A - Stadt dargestellt, durch eine dicke schwarze Linie gekennzeichnet. Es handelt sich hierbei um eine maßstäbliche Darstellung. Ungefähr auf der Mitte zwischen den Ohnehin-Orten eines Empfängers eines Pakets befindet sich die XX - Straße. Diese Straße befindet sich in einer Entfernung von mehreren 100 m zu einem Tierpark. Während Wochentagen sind an dieser Straße zahlreiche Parkplätze verfügbar. An Wochenenden sind jedoch Parkplätze des Tierparks überfüllt, so dass auch die zu allen anderen Zeiten freien Parkplätze entlang der XX - Straße belegt sind.

Eine Übergabe an normalen Werktagen im Bereich der XX - Straße ist hier jedoch problemlos möglich. Es sind sowohl ausreichend Parkplätze für die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 und für Benutzer der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 sowie für Empfänger und Einlieferer der Pakete vorhanden. Eine Nähe zu öffentlichen Verkehrsmitteln und somit ein günstiger Aufwandsparameter für die Benutzer der öffentlichen Verkehrsmittel ist gleichfalls gegeben.

Andere Parameter sind jedoch in Abhängigkeit von dem jeweiligen Übergabezeitraum zu berücksichtigen. Beispielsweise kann berücksichtigt werden, dass an einer Straße gelegentlich Bauarbeiten erfolgen, die zahlreiche Autofahrer zur Nutzung von Umwegen veranlassen und daher die Zahl potentieller Empfänger innerhalb eines im Bauzeitraum liegenden Übergabezeitraums entsprechend reduzieren. In diesem Fall ist es zweckmäßig, als Übergabepunkt einen Punkt zu wählen, der eine derartige Restriktion nicht aufweist.

Ein weiterer Parameter ist die Eignung für die Einlagerung von Gegenständen in die Depoteinrichtung. Derartige Gegenstände werden in dieser Anmeldung auch als Pakete bezeichnet, auch wenn es sich hierbei nicht um Pakete im klassischen Sinne handelt.

Bei der Optimierung von Standorten für Depoteinrichtungen werden sowohl die Auswirkungen auf die Kosten des Paketdienstleisters wie auch die Konvenienz für die Empfänger berücksichtigt. Zwischen beiden Größen gibt es einen Trade-off: Je mehr Depoteinrichtungen eingesetzt werden, desto höher in der Regel die Konvenienz für die Empfänger, desto höher aber auch die Kosten für den Paketdienstleister.

Beispielsweise kann davon ausgegangen werden, dass der Paketdienstleister ein bestimmtes Niveau an Gesamtkosten für die Bearbeitungsvorgänge eines Pakets nicht überschreiten will - dieses determiniert dann mit der jeweiligen Tagespaketmenge ein Gesamtbudget und darüber die Gesamtzahl der am jeweiligen Tag z.B. in einer Stadt eingesetzten Depoteinrichtungen, d.h. die Gesamtzahl an Standorten. Gegeben die Gesamtanzahl an Standorten, können diese dann so verteilt werden, dass am jeweiligen Tag der Gesamtaufwand für die jeweiligen Empfänger, die jeweiligen Standorte zu erreichen, minimiert wird. Dafür sollte der jeweilige Standort auf oder möglichst nah an Wegstrecken oder Orten liegen, die die Empfänger am jeweiligen Tag ohnehin zurücklegen (ohnehin-Wegstrecken) oder aufsuchen (ohnehin-Orte"). Dabei sollten Standorte mit guten Parkmöglichkeiten bevorzugt werden (solange ein hoher Anteil von Paketen mit dem Auto abgeholt wird). Zusätzlich können in die tagesaktuelle Optimierung auch Informationen über Staus und Baustellen sowie über besondere Veranstaltungen, die zu Beeinträchtigung von Verkehrs- und Parkverhältnissen führen können, einbezogen werden. Bevorzugte Ausführungsformen der Erfindung berücksichtigen einen oder mehrere der folgenden Optimierungsansätze:
- Am einfachsten ist es, den Standort so zu optimieren, dass - über alle Empfänger von Paketen aus der jeweiligen Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 am fraglichen Tag - die Summe der distanzmäßigen Abweichungen zu den ohnehin-Wegstrecken bzw. ohnehin-Orten minimiert wird.
- Man kann zusätzlich auch die Art der Fortbewegung des Empfängers berücksichtigen: Strecken per Auto werden in der Regel schneller als solche zu Fuß oder per Fahrrad zurückgelegt - man kann daher bei Kenntnis der Art der Fortbewegung des jeweiligen Empfängers den Zeitbedarf für die Abweichung vom ohnehin-Weg oder -Ort kalkulieren und dann den zusätzlichen Zeitbedarf über alle Empfänger minimieren. Der Aufwandsparameter hätte dementsprechend die Dimension "Zeitaufwand".
- Die beiden ersten Methoden arbeiten mit einer Gleichgewichtung über alle Empfänger. Denkbar wäre auch, Empfänger mit hoher Anzahl an Paketen über das Jahr stärker zu gewichten - oder Empfänger, die einen Premium-Service gebucht haben.
- Ferner zweckmäßig sind zudem Lösungen, wonach die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 über den Tag verteilt an unterschiedlichen Standorten im Einsatz ist. Solche Lösungen könnten vor allem in dünn besiedelten ländlichen Gebieten sinnvoll sein, bei denen stationäre Einrichtungen für die konsolidierte Übergabe (stationäre Paketfachanlagen wie Packstationen, Filialen und sonstige stationäre Paketausgabe- und -annahmeeinheiten etc.) aufgrund geringer Sendungsmengen bisher ökonomisch nicht vertretbar waren. So ist es beispielsweise vorteilhaft, dass eine mobile Depoteinrichtung eine Reihe von Dörfern "abfährt" und dort jeweils z.B. 2 Stunden anhält. In dieser Zeit können die Empfänger von Paketen an diesem Tag oder von ihnen per einer Benutzerkomponente 5351 des Empfängers und/oder einer App, insbesondere einer Benutzer-App 5021, 5022 App bevollmächtigte Ersatzempfänger die Pakete abholen.

Auch in Städten sind unterschiedliche Standorte im Verlauf eines Tages vorstellbar, z.B. vormittags an einem ersten Standort in einem Stadtteil und nachmittags an einem anderen Standort in einem anderen Stadtteil. Für Empfänger, deren zusätzlicher Zeitaufwand zum Erreichen des zweiten Standorts geringer als beim ersten Standort ist, eröffnet sich dann ein trade-off: Sie können entscheiden, ob sie das Paket unter Inkaufnahme eines höheren Zeitinvests schon morgens abholen oder zur Aufwandsminimierung das Verbringen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 an den zweiten, näheren Standort im weiteren Verlauf des Tages abwarten wollen. Wenn sich Empfänger, die dem zweiten Standort zugeordnet wurden, für die frühe Abholung entscheiden, kann sich für die zweite Tageshälfte ein anderer optimaler Standort ergeben.

Eine solche untertägige Optimierung ist von der Erfindung gleichfalls mit umfasst, auch wenn sie wegen der Notwendigkeit zusätzlicher Kommunikation an die Kunden mit dem Inhalt "Der Standort der Depoteinrichtung hat sich geändert: Sie erhalten Ihr Paket jetzt am Standort Y" aufwändiger ist. Zum untertägigen Verbringen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 können ebenso wie für die dargestellten Transportvorgänge zwischen den Transfereinrichtungen 5130, 5336 und den Depoteinrichtungen die in dieser Anmeldung dargestellten Transportmittel eingesetzt werden einschließlich Fahrzeugen mit den dargestellten Autonomitätsgraden, wobei auch hier vorteilhafterweise die entsprechende Steuerung unter Einbeziehung des Autonomitätsgrades der Transportmittel zum Transport der Depoteinrichtungen erfolgt.

Ein zweckmäßiger Parameter für die Ermittlung der gemeinsamen optimierten Übergabepunkte ist bei einem Einsatz als Auswahlverfahren für die Auswahl von Standorten für Depoteinrichtungen, dass die den jeweiligen Depoteinrichtungen am jeweiligen Tag zugeordneten Pakete tatsächlich auch alle in die zugeordneten Lagereinheiten der Depoteinrichtungen passen. Das wird vorzugsweise durch die frühzeitige Messung des Raummaßes (Länge, Breite, Höhe) der Pakete im ersten Verteilzentrum 5301 für Pakete, insbesondere einem Verteilzentrum, dass das jeweilige Paket bearbeitet, und die anschließende Verwendung des Raummaßes im Auswahlverfahren sichergestellt, und zwar unabhängig davon, ob die Abmaße der Lagereinheiten fest vorgegeben oder (in gewissen Grenzen) flexibel konfigurierbar sind. Vorzugsweise erfolgt eine simultane Optimierung von Standorten und Fächer-/Lagerplatzkonfiguration und vorzugsweise auch der Übergabezeiträume:
- Bei flexibler Lagereinheitenkonfiguration der Lagereinheiten, insbesondere Regale und "hohem" Anteil großer Pakete wird simultan zur Standortoptimierung auch die Fächerkonfiguration so optimiert, dass alle "geographisch", also aufgrund geringem "Extra-Zeitaufwand" bei der Abholung, zur jeweiligen Depoteinrichtung passenden Pakete auch in eines der vergrößerten Fächer passen - entsprechend werden dann andere Fächer im jeweils möglichen Ausmaß verkleinert.
- Stößt diese Optimierung an Grenzen, weil entweder die Anzahl großer Pakete zu hoch ist, oder die übrigen Fächer nicht ausreichend verkleinert werden können, setzt - wie bei starrer Fächerkonfiguration der Regale - eine Art iterativer Optimierung ein: Es wird ermittelt, welche Pakete ohne großen zusätzlichen Zeitaufwand für den Empfänger auf andere Depoteinrichtungen verlagert werden können. Dieser Vorgang wird so oft wiederholt, bis für die für die Übergabe der Pakete in den jeweiligen Übergabezeiträumen einsetzbaren stehenden Depoteinrichtungen alle Pakete, inklusive der großen, jeweils in ein Fach passen. In einer vorteilhaften Ausführungsform kann eine Prioritätsregel eingeführt werden: Bevor zu viele kleine Pakete auf weniger optimale Standorte verlagert werden, würde man zuerst große Pakete geographisch verlagern, bzw. dem Kunden die Übergabe an einem späteren Tag anbieten.

In einer bevorzugten Ausführungsform der Erfindung kann die Optimierung der Standorte und die Kommunikation mit dem Kunden wie folgt ablaufen:
Wenn der Kunde die Benutzer-App herunterlädt, ist die App so konfiguriert, dass er zwischen mehreren, beispielsweise vier Möglichkeiten auswählt, die die spätere Auswahl von Standorten für die Depoteinrichtungenunterstützen:
- In einer "Basis-Variante" kann er in einer Karte eine begrenzte Anzahl sogenannter "Points of Interest" angeben (als Orientierung werden hier Punkte des öffentlichen Lebens in einem bestimmten Umkreis seines angegebenen Wohnortes (z.B. Supermärkte, Schulen, Tankstellen, ÖPNV Haltestellen) angezeigt), an denen er/sie sich idealerweise zumindest an einem Tag der Woche "eh" aufhält (Ohnehin-Orte). Er/sie wird dabei jeweils gefragt, an welchen Wochentagen er diese Standorte aufsucht und mit welchem Verkehrsmittel er jeweils unterwegs ist.
- In einer "Advanced Variante" gibt der Kunde für jeden Wochentag Wohn- und Arbeitseinsatz-, Einkaufs- und sonstige "typische Aufenthaltsorte" samt Verkehrsmittel (idealerweise auch mit Uhrzeiten) an, so dass das System der Standortoptimierung in der Lage ist Ohnehin-Wegstrecken zu berechnen.
- In der "Professional Variante" erlaubt der Empfänger die Nutzung der Standorte des Smartphones oder anderer geeigneter digitaler Geräte (z.B. Smartwatch) zumindest über einen bestimmten Zeitraum, idealiter aber permanent, so dass das System in der Lage ist, Aufenthaltsorte des Empfängers zu berücksichtigen und vorzugsweise kontinuierlich upzudaten.
- Eine vierte Variante könnte darin bestehen, dass der Empfänger der App erlaubt, auf vorherige Aufenthaltsorte des Empfängers zuzugreifen und diese in die Optimierungsprozesse einfließen.

Wird im System ein Paket generiert, das vom Versender oder vom Empfänger zur Übergabe an die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 beauftragt ist sind zwei Fälle zu unterscheiden:
- Das Paket überschreitet einen kritischen Schwellenwert hinsichtlich Gewicht und/oder Raummaß, die die Übergabe an der Depoteinrichtung unbequem machen könnte, z.B. einen Schwellenwert von 15kg oder von mehr als 1,20m längste Seite. In diesem Fall erhält der Empfänger eine Benachrichtigung, die ihm unter Hinweis auf den kritischen Schwellenwert die Wahl zwischen einer Übergabe an gemeinsamen optimierten Übergabepunkten und einer gegebenenfalls aufpreispflichtige Übergabe an einem individuellen Übergabepunkt lässt. Dem Empfänger wird dabei klar kommuniziert, bis wann er eine diesbezügliche Entscheidung treffen kann, ggf. in Form einer "Count-down-Uhr" vorzugsweise mit einem Reminder, z.B. 5 Minuten vor Ablauf der Frist. Trifft der Empfänger innerhalb einer vorgegebenen Zeit keine Wahl, wird per default an eine der erfindungsgemäßen Depoteinrichtungen übergeben.
- Für alle endgültig zur Übergabe an Depoteinrichtungen vorgesehenen Pakete erfolgt die Standortoptimierung mit den bei Registrierung in der Benutzer-App eingegebenen Daten bzw. mit den aktuellen Aufenthaltsorten, und zwar in der Art und Weise, dass beispielsweise der zeitmäßige "Zusatzaufwand" von Ohnehin-Wegstrecken bzw. Ohnehin-Orten (bei der "Basisvariante") zu gemeinsamen optimierten Übergabepunkten für alle Empfänger minimiert und ggf. ein entsprechender KPI auf Einzelkunden-Ebene eingehalten wird. Bei Bevorzugung von "Heavy Usern" bzw. "Premium-Kunden" werden die zeitlichen Zusatzaufwände vorzugsweise gewichtet).

Nach Abschluss der Standortoptimierung erhält der Kunde einen Übergabeavis, die ihm die Bereitstellung des Pakets in einer Depoteinrichtung mit "quasi-genauem" Standort und "voraussichtlichem" frühesten und spätesten Zeitpunkt der Abholung ankündigt ("quasi" und "voraussichtlich", weil ein avisierter Parkplatz besetzt sein kann und Parken auf neuem Parkplatz bzw. Stau bei der Anfahrt Zeit kostet). Fährt eine mobile Depoteinrichtung am betreffenden Tag unterschiedliche Standorte an, so werden dem Empfänger im Sinne maximaler Transparenz auch die anderen Standorte mit den jeweiligen Abholzeiten angekündigt.

Ferner ist es möglich, dem Empfänger zusätzlich für eine begrenzte Anzahl von Stunden auch noch die Wahl einräumen, statt der Übergabe am vorgeschlagenen gemeinsamen optimierten Übergabepunkt eine Übergabe an dem nächstgelegenen gemeinsamen optimierten Übergabepunkt, insbesondere der nächstgelegenen verfügbaren Depoteinrichtung zu veranlassen. Der dadurch generierte Zusatzaufwand könnte vertretbar sein, wenn das System dadurch ausreichend viel über die "wahren Präferenzen" der Empfänger lernt (z.B. bei zu schlechten oder rasch veralteten und nicht upgedateten "Ausgangsdaten" der Empfänger nach Basisvariante bzw. "Advanced Variante").

Nach Abschluss des Parkvorgangs am eigentlichen Zustelltag erhält der Empfänger einen finalen Übergabeavis mit dem dann finalen Standort und der Bestätigung, dass er ab sofort Pakete abholen kann.

Wenn für Empfänger detaillierte Informationen nicht oder nicht vollständig vorliegen, können durch ein selbstlernendes System, insbesondere unter Einsatz neuronaler Netze auch Vergangenheitswerte einbezogen werden: "Wo, d.h. an welchen stationären Abholeinrichtungen wie Packstationen bzw. Filialen/Paketshops hat der Empfänger in der Vergangenheit Paketsendungen abgeholt?"

Ziel der täglichen oder sogar untertägigen Standortoptimierung ist somit, möglichst vielen Empfängern und auch Einlieferern die "Paketübergabe auf dem Weg", d.h. ohne Umweg oder mit einem minimalen Umweg, vorzugsweise unter Einhaltung von KPIs über eine maximalen zeitlichen Zusatzaufwand zu ermöglichen. Dies ist bei allen verschiedenen Ausbaustufen des Netzes an Depoteinrichtungen vorteilhaft:
- In einer ersten Ausbaustufe sind die Depoteinrichtungen nur als "letzte Meile" für Pakete ausgestaltet.
- In einer zweiten Ausbaustufe können Depoteinrichtungen für beliebige Einlieferer in der Nähe des jeweiligen Standortes, z.B. im jeweiligen Stadtbezirk, geöffnet werden. Einzelhändler, andere Paketdienstleister, andere Unternehmen und auch Privatpersonen könnten Waren, Pakete, oder Gegenstände einlagern und autorisierte Empfänger diese anschließend entnehmen.
- In einer weiteren Ausbaustufe können die Depoteinrichtungen z.B. in einer Stadt zu einem Netz dergestalt verbunden werden, dass Pakete, Warenobjekte oder weitere Gegenstände in einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingeliefert und dann untertägig zu einem anderen Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 transportiert und dort für den jeweiligen Empfänger verfügbar gemacht werden.

In der ersten Ausbaustufe werden die Standortpräferenzen der Empfänger wie bereits früher in dieser Anmeldung beschrieben berücksichtigt. In der zweiten Ausbaustufe können zumindest bei am Vortag gebuchten Ein- und Auslagerungen von Paketen, Warenobjekte oder sonstigen Gegenständen Standortpräferenzen von Versendern wie Empfängern berücksichtigt werden Konkret heißt dies: Haben Versender bzw. Empfänger ihre Ohnehin-Wegstrecken bzw. Ohnehin-Orte im System hinterlegt, oder ihr Einverständnis für die Übermittelung von Aufenthaltsorten und/oder Wegstrecken gegeben, so können diese bei am Vortag gebuchten Ein- und Auslagerungen in gleicher Weise berücksichtigt werden, wie die von Empfängern von Paketen. Anders stellt sich die Situation bei erst am jeweiligen "Übergabe- = Ein- = Auslagertag" kurzfristig gebuchten Ein- und Auslagerungen dar. Da die Standortoptimierung jeweils am Vorabend stattfindet, können bei taggleich gebuchten Ein- und Auslagerungen höchstens historische Erfahrungswerte berücksichtigt werden. Hierzu ein Beispiel: Ein Telekommunikationsdienstleister bucht in festen Zeitabständen (z.B. alle drei Tage), aber jeweils immer nur für den gleichen Tag, Fächer der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 im Stadtteil X zur Übergabe von Warenobjekten an Kunden. Da das System diese "Gesetzmäßigkeit" aus historischen Daten herleiten kann, werden die Ohnehin-Wegstrecken bzw. Standortpräferenzen des Telekommunikationsdienstleisters im Auswahlverfahren berücksichtigt, bei täglich wechselnden Kunden nicht aber deren Standortpräferenzen, da unbekannt.

Ähnlich verhält es sich in der dritten Ausbaustufe. Werden Einlagerung, Transport und Auslagerung von Warenobjekten einen Tag im Voraus beauftragt, können Bewegungsdaten/Standortpräferenzen von Versendern wie Empfängern in die Standortoptimierung einfließen. Findet die Beauftragung taggleich statt, und davon ist angesichts des vorherrschenden Use-Cases "Same-Day-Einkauf" auszugehen, können höchstens historische Erfahrungswerte in die Optimierung einfließen (z.B. "Buchhandlung X liefert jeden Tag ein").

Weitere Änderungen in der Standortoptimierung können sich ergeben, wenn beim Versand von Benachrichtigungen zu Depoteinrichtung-Pakete Werbung für Geschäfte im Umkreis des jeweiligen Depoteinrichtung-Standortes gemacht wird. In einer bevorzugten Ausführungsform fließt als zusätzliches Kriterium eine Minimierung der Distanz zu Ladenlokalen der Werbetreibenden in das Auswahlverfahren ein.

Weitere eher langfristige Optimierungsparameter sind u.a. eine Verfügbarkeit weiterer Parkplätze und/oder eine Nähe zu öffentlichen Verkehrsmitteln. In einer bevorzugten Ausführungsform der Erfindung kann ein von den jeweiligen Paketen unabhängiger Auswahlschritt mit einem auf die Pakete bezogenen Auswahlschritt, beispielsweise unter Berücksichtigung von Gewicht und/oder Abmessungen eines Pakets bei der auf die Übergabe dieses Pakets bezogenen Optimierung/Minimierung eines Aufwandparameters kombiniert werden

Durch einen Auswahlschritt 601 wird die "Long List" 605 aller potenziellen Standorte in eine Liste der für die Übergabe von Paketen grundsätzlich qualifizierten Standorte 606 transformiert.

In dem sich an den ersten Auswahlschritt 601 anschließenden zweiten Auswahlschritt 602 werden diejenigen Übergabepunkte, insbesondere Standorte für Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 ermittelt, bei denen sich innerhalb eines als Optimierungszeitraum vorzugsweise ermittelten Übergabezeitraums für die Pakete ein jeweiliger Aufwandsparameter für die Inbetriebnahme der Depoteinrichtungen möglichst niedrig ist. In dem sich an den zweiten Auswahlschritt 602 anschließenden dritten Auswahlschritt 603 werden diejenigen Übergabepunkte ermittelt, bei denen sich innerhalb eines als Optimierungszeitraum vorzugsweise ermittelten Übergabezeitraums für die Pakete ein jeweiliger Aufwandsparameter für die Benutzer von Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 gering ist. Ergebnis der Auswahlschritte 602 und 603 sind somit immer weiter anzahlmäßig beschränkte Listen 607 und 608 grundsätzlich qualifizierter Standorte.

Bei anderen, sich hieran gegebenenfalls anschließenden oder gleichzeitig erfolgenden Auswahlschritten 604 können ein oder mehrere weitere Optimierungsparameter, berücksichtigt werden, beispielsweise in Bezug auf eine Geeignetheit für eine Einlagerung von Waren als weitere Pakete innerhalb der jeweiligen Depoteinrichtung. Endergebnis des Auswahlverfahrens ist eine Liste 609 an Standorten für Depoteinrichtungen für einen Übergabezeitraum, insbesondere innerhalb des jeweiligen Tages. Die Liste enthält, wenn beispielsweise erfindungsgemäße Verfahren so umfangreich implementiert werden, dass sie beispielsweise Übergabeprozesse innerhalb eines oder mehrerer Länder durchführen können gegebenenfalls mehrere hunderttausend oder sogar mehrere Millionen Einträge von gemeinsamen optimierten Übergabepunkten. Einer dieser gemeinsamen optimierten Übergabepunkte ist der in dieser Anmeldung näher erläuterte gemeinsame optimierte Übergabepunkt 650.

Zusammenfassend lassen sich besonders vorteilhafte Verfahren und Auswahlschritte der Standortoptimierung wie folgt darstellen.

Vorteilhafterweise erfolgt ein Einsatz eines Auswahlverfahrens (Optimierungsverfahrens) mit einer Auswahl einer Anzahl von Standorten und genauen Lokalisierungsdaten der Standorte, insbesondere mit Auswahlschritten, dergestalt, dass die Standorte
- Basiskriterien erfüllen (ausreichende Größe des Standorts, am betreffenden Tag verfügbar, genügend Parkplätze, leicht zugänglich, sicher, etc.),
- für einen Betreiber des Logistiksystems aufwandsminimierend sind,
- und bestimmte Nebenbedingungen erfüllen:
   - die Einlagerung der Paketsendungen in die Depoteinrichtungen muss von Größe und Gewicht der Pakete her technisch möglich sein,
   - der Aufwand, die Standorte zur Paketabholung/-einlieferung zu erreichen, muss für Empfänger und ggf. lokale Versender innerhalb bestimmter Grenzen bleiben.

### Mittel zur Erreichung des Oberziels

Zur Erreichung dieses Oberziels werden sequentiell Filterverfahren sowie Maximierungsverfahren unter Nebenbedingungen eingesetzt.

### A. Filterverfahren

Filterverfahren stellen sicher, dass Basiskriterien erfüllt werden. Sie werden vorzugsweise unabhängig und im Vorfeld von konkreten Sendungsdaten ausgeführt und zwar in Abhängigkeit vom jeweiligen Filterkriterium entweder in größeren Zeitabständen oder täglich:
- Aus der Grundgesamtheit (oder Long List) der in Deutschland (oder einem anderen Land) vorhandenen Parkplätze werden die Standorte herausgefiltert,
   - die aufgrund ihrer Größe als Stellplätze für mobile Depoteinrichtungen in Frage kommen,
   - und die über genügend andere Parkplätze im unmittelbaren Umfeld verfügen, die Empfänger von Paketen zum Parken ihres eigenen Fahrzeuges nutzen können.
- Sodann werden die Standorte herausgefiltert, die aufgrund ihrer Beschaffenheit (Sichtverhältnisse, Platz, "local neighbourhood") als sicher gelten können.
- Tägliche Filter können sicherstellen, dass der Standort verkehrsmäßig und wettermäßig am betreffenden Tag erreichbar und nutzbar ist, also z.B. keine unzumutbaren Staus, Volksfeste, Märkte, Starkregen, Überschwemmungen o.Ä. die Nutzung beeinträchtigen.
- Zusätzlich können aus der Grundgesamtheit an stationären Depoteinrichtungen (z.B. Packstationen) diejenigen herausgefiltert werden, die am betreffenden Tag Kapazitäten zur Aus- bzw. Einlagerung von Paketen haben.

Ein Ergebnis dieser Anwendung eines Filterverfahrens ist eine Short List an Standorten, die für mobile Depoteinrichtungen bzw. zur stationären Ein- und Auslagerung von Paketen in Frage kommen.

### B. Maximierungsverfahren

Standorte sind mit Aufwänden verbunden (Aufwand für eine Anfahrt von den jeweiligen Verteilzentren, Aufwand für eine vorzugsweise reversible Verbindung der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit einer anderen Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 und/oder einem anderen festen Bezugspunkt (Anschluss). Standorte können aber auch mindestens in zweifacher Hinsicht Erlöspotenzial bieten: Zum einen, wenn Werbetreibende bei den Empfängern von Paketsendungen am betreffenden Standort Werbung machen wollen, z.B. über die Sendungsbenachrichtigung zur Abholung. Zum anderen, wenn lokale Einlieferer (ggf. auch Empfänger) bei besonders nahen mobilen Depoteinrichtungen einen Aufpreis auf den normalen Paketpreis zu zahlen bereit sind.

Ein Anschluss der Depoteinrichtung erfolgt vorzugsweise als eine reversible physische Verbindung, insbesondere mittels eines Kopplungselementes im Bereich der Depoteinrichtung und eines hiermit zusammenwirkenden Kopplungselementes der damit zu verbindenden Einrichtung, insbesondere einer anderen Depoteinrichtung, eines Gebäude oder eines Bodens vorzugsweise mittels zusammenwirkender androgyner Kopplungselemente. Das Kopplungselement ist vorzugsweise so ausgebildet, dass es eine lösbare mechanische Verbindung bewirkt. In einer vorteilhaften Ausführungsform enthält das Kopplungselement Zuführungsleitungen für Daten und/oder Medien, insbesondere Elektrizität, Flüssigkeiten, insbesondere eine Kühlflüssigkeit sowie Gase.

Der Betreiber eines erfindungsgemäßen Logistiksystems bzw. Betreiber des Netzes an Depoteinrichtungen wird Anzahl und geografische Positionen der gemeinsamen optimierten Übergabepunkte idealerweise so wählen, dass für den betreffenden Tag seine Nettoerlöse (standortbezogene Einnahmen abzüglich Kosten) maximiert werden. Dabei sind natürlich Nebenbedingungen zu beachten, die im Folgenden beschrieben werden.

### C. Nebenbedingungen

Bei erfindungsgemäßen Maximierungsverfahren werden vorzugsweise zwei Gruppen von Nebenbedingungen eingesetzt: Die erste Gruppe stellt die technische Realisierbarkeit der Einlagerung der Sendungen des betreffenden Tages sicher. Hierbei spielt vor allem die Größe der einzelnen Paketsendungen eine Rolle, aber auch ihr Gewicht. Konkret: es muss sichergestellt sein, dass alle für den jeweiligen Standort am betreffenden Tag vorgesehenen Paketsendungen (egal, ob an Empfänger auszulagern oder vorab zur Einlagerung durch Einlieferer gebuchten Sendungen) auch in die mobile (bzw. stationäre) Depoteinrichtung hineinpassen, und Maximalgewichte für einzelne Fächer bzw. für die Depoteinrichtung als Ganzes nicht überschritten werden. Von besonderem Vorteil sind dabei flexibel konfigurierbare Regal- bzw. Lagerplatzsysteme für die Depoteinrichtungen, denn sie eröffnen mehr Freiheitsgrade.

Die zweite Gruppe an Nebenbedingungen dient der Aufwandsbegrenzung für Empfänger von Paketsendungen, ggf. aber auch für Vor-Ort-Einlieferer von Paketsendungen ("lokale Versender"). Dazu werden Aufwandsparameter der Empfänger bzw. Einlieferer berücksichtigt, die in jedem Fall den zeitlichen Zusatzaufwand zur Erreichung des jeweiligen Standorts, ausgehend von Ohnehin-Orten und -Wegen der Empfänger bzw. Einlieferer, erfassen. Alle anderen Faktoren, die aufwandstreibend sind, können bzw. sollten zusätzlich erfasst werden. Dazu gehören die Varianz der Standorte (wenn bestimmte Empfänger/Einlieferer den "ständigen Wechsel" von Standorten als nachteilig empfinden bzw. einen konstanten Standort präferieren) bzw. die Trageleistung beim Weg zurück von der Depoteinrichtung zum Auto/Fahrrad/Wohnadresse, gerade bei schwereren Sendungen. Werden im Aufwandsparameter mehrere Faktoren unterschieden, können Scoring-Verfahren oder andere geeignete Verfahren eingesetzt werden, um aus einem mehr-dimensionalen Aufwandsparameter pro Empfänger/Einlieferer eindimensionale Werte bzw. Scores zu generieren.

Nebenbedingungen bezüglich Aufwandsparametern könnten im einfachsten Fall so aussehen, dass für alle (oder einen hohen Anteil von z.B. 95% der) Empfänger/Einlieferer der zeitliche Zusatzaufwand zum Erreichen der Depoteinrichtung unter x, z.B. 10, Minuten, liegt, oder - bei mehreren Aufwandsfaktoren - ein geeigneter Score-Wert nicht überschritten wird. Es sind aber auch Verfahren vorstellbar, bei denen für unterschiedliche Empfänger- bzw. Einlieferergruppen unterschiedlich hohe Werte bei den Nebenbedingungen eingesetzt werden. So könnte beispielsweise festgelegt werden, dass der zeitliche Zusatzaufwand für Amazon-Prime-Kunden abweichend vom Wert für sonstige Empfänger nur bei 5 Minuten liegen darf und der gleiche Wert für lokale Einlieferer Anwendung findet, die die Einlagerung einen Tag im Voraus buchen.

Schließlich ist es vorteilhaft, wenn bei der Standortwahl auch vergangenes Feedback der Empfänger oder Einlieferer über frühere Standorte als Nebenbedingung einfließt ("nur Standorte, die als Feedback einen Durchschnittsscore von x Smileys erhalten haben"). Des Weiteren können bei der Standortwahl nicht nur Aufwandsparameter tatsächlicher Empfänger und Einlieferer des Folgetages berücksichtigt werden, sondern auch die Parameter erwarteter Empfänger bzw. Einlieferer, insbesondere dann, wenn Ware erst an Empfänger verkauft wird bzw. wenn die Wareneinlagerung durch lokale Versender nicht vorab gebucht wurde. In diesen Fällen ermöglichen lernende beziehungsweise selbstlernende Verfahren die Ermittlung erwarteter Empfänger bzw. Einlieferer sowie ihrer erwarteten Orte und Wege.

Vorzugsweise erfolgen die Auswahlschritte so, dass für mehrere Pakete wenigstens einer der möglichen Übergabepunkte 110, 111, 112, 113, 114, 115, 116, 117, 118, 119, 120, 210, 211, 212, 213, 214, 215, 216, 217, 218, 219, 220, 230, 310, 311, 312, 313, 314, 315, 316, 317, 318, 319, 320, 330, 611, 612, 613, 614, 615, 616, 617, 650, 710, 711, 712, 713, 714, 714, 715, 716, 716, 717, 718, 719, 720 ein Standort 120, 220, 230, 320, 330, 410, 415, 420, 495, 650, 720 ist, der einen gemeinsamen optimierter Übergabepunkt 120, 220, 230, 320, 330, 410, 415, 420, 495, 650, 720 für die Übergabe an die jeweiligen Empfänger bildet, und dass an dem gemeinsamen Übergabepunkt eine mobile Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110,3120, 3130, 3140, 5321 für eine gemeinsame Deponierung der mehreren Pakete und für die Übergabe der mehreren Pakete an die jeweiligen Empfänger der mehreren Pakete und/oder für die Übergabe der weiteren Pakete durch die Einlieferer der weiteren Pakete an dem zugeordneten gemeinsamen Übergabepunkt 120, 220, 230, 320, 330, 410, 415, 420, 495, 650, 720 innerhalb des vorgesehenen Übergabezeitraums bereitgestellt wird.

Es ist vorteilhaft, dass die für die Übergabe an den Übergabepunkten 120, 220, 230, 320, 330, 410, 415, 420, 495, 650, 720 vorgesehenen Pakete in die vorzugsweise mobilen Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110,3120, 3130, 3140, 5321 eingebracht werden und dass dann die mobilen Depoteinrichtungen 140, 240, 250, 340, 350 die Pakete 140, 240, 250, 340, 350 zu den ihnen zugeordneten Übergabepunkten (120, 220, 230, 320, 330 transportiert werden und dass während des vorgesehenen Übergabezeitraums die Pakete 140, 240, 250, 340, 350 in den mobilen Depoteinrichtungen 140, 240, 250, 340, 350 gelagert und für die Übergabe an die Empfänger der Pakete 140, 240, 250, 340, 350 unter Einsatz der Depoteinrichtungen 140, 240, 250, 340, 350 bereitgestellt werden.

Ferner ist es zweckmäßig, dass mehrere für die Übergabe an einem der Übergabepunkte 120, 220, 230, 320, 330, 650, 670 vorgesehenen Pakete zu einer Transfereinrichtung 5130, 5336 transportiert und an der Transfereinrichtung 5130, 5336 in eine der mobilen Depoteinrichtungen 140, 240, 250, 340, 350 eingebracht werden.

Eine bevorzugte Ausgestaltung der Auswahlverfahren berücksichtigt eine Ausführungsform, die sich dadurch auszeichnet, dass zusätzlich zu den mehreren Paketen die an dem zugeordneten gemeinsamen optimierten Übergabepunkt 120, 220, 230, 320, 330, 650, 670 innerhalb des vorgesehenen Übergabezeitraums in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 bereitgestellt werden, weitere Pakete von Einlieferern in die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingestellt werden.

Eine hiermit kombinierbare bevorzugte Ausgestaltung des Auswahlverfahrens berücksichtigt eine Ausführungsform, die sich dadurch auszeichnet, dass ein Teil der in der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingestellten weiteren Pakete nach Ablauf des Übergabezeitraums für die mehreren Pakete zu einer Transfereinrichtung 5130, 5336 transportiert wird, sofern sie während des ursprünglichen Übergabezeitraums nicht abgeholt werden.

Eine weitere gleichfalls hiermit kombinierbare bevorzugte Ausgestaltung des Auswahlverfahrens berücksichtigt eine Ausführungsform, die sich dadurch auszeichnet, dass ein anderer Teil der in der Depoteinrichtung 140, 240, 250, 340, 350 eingestellten weiteren Pakete für eine Übergabe auf eine im Bereich der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 empfangene Ausgabeaufforderung ausgegeben wird.

Die in dieser Anmeldung dargestellten Verfahren, insbesondere die dargestellten Bearbeitungsvorgänge lassen sich mittels linearer Optimierung so verbessern, dass die Verfahren und/oder Bearbeitungsvorgänge möglichst effizient durchgeführt werden.

So sind beispielsweise auch die vorstehend dargestellten Auswahlverfahren mittels linearer Optimierung verbesserbar.

Es ist jedoch besonders vorteilhaft, Verfahren und Systeme der künstlichen Intelligenz einzusetzen und dementsprechend ein lernendes, beziehungsweise selbstlernendes System einzusetzen.

### LPS - Lernendes Paketmobil System

Eine besonders vorteilhafte Weiterbildung der Erfindung zeichnet sich durch eine Implementierung eines lernenden beziehungsweise selbstlernenden Systems aus. Ein derartiges Verfahren und ein entsprechendes System werden im Kontext dieser Anmeldung als LPS (Lernendes Paketmobil System) bezeichnet.

Das selbstlernende System wird vorzugsweise durch ein neuronales Netz realisiert. Kalibrierungen, insbesondere Lernvorgänge des neuronalen Netzes erfolgen beispielsweise unter Einbeziehung der in dem Artikel
"Drei nützliche Instrumente, um Ihr maschinell lernendes System zu evaluieren" https://medium.com/@turicodeag/drei-n%C3%BCtzliche-instrumente-um-ihr-maschinell-lernendes-system-zu-evaluieren-cd8fa92d82a1
dargestellten Evaluationsinstrumente. Die in diesem Artikel dargestellten relevanten Datenpunkte entsprechen vorzugsweise den gemeinsamen optimierten Übergabepunkten im Sinne dieser Anmeldung.

Nachfolgend wird beispielhaft der Einsatz von LPS bei der erfindungsgemäßen Ermittlung gemeinsamer optimierter Übergabepunkte zur Übergabe von Paketen an die Empfänger und/oder die Entgegennahme von Paketen von den Einlieferern an den zugeordneten gemeinsamen optimierten Übergabepunkten erläutert.

Hierbei ist es vorteilhaft, dass für die Auswahl des gemeinsamen optimierten Übergabepunktes (120, 220, 230, 320, 330, 410, 415, 420, 495, 650, 720) für wenigstens einen Teil der Empfänger und/oder Einlieferer jeweils wenigstens ein für die Übergabe eines Pakets an den Empfänger und/oder von dem Einlieferer durch das selbstlernende System ausgewählter Übergabepunkte berücksichtigt wird, was vorzugsweise durch Integration in das Auswahlverfahren für die gemeinsamen optimierten Übergabepunkte erleichtert wird und dass die Übergabe an den jeweiligen Empfänger und/oder die Übergabe durch den Einlieferer an den gemeinsamen optimierten Übergabepunkte (120, 220, 230, 320, 330, 410, 415, 420, 495, 650, 720) unter Berücksichtigung der durch das selbstlernende System ausgewählten Übergabepunkte erfolgt.

Dies zeigt sich beispielshaft bei der Erläuterung für den Einsatz von LPS in Bezug auf den gemeinsamen optimierten Übergabepunkt:
Hat ein Empfänger oder der Versender z.B. nur seine Privatdresse in der Datenbank 5023 seiner Benutzer-App 5021, 5022 zur Erfassung und Verwaltung von Benutzerdaten hinterlegt, so trifft das "Lernende Paketmobil System" zur Ermittlung von optimierten Übergabepunkten für diesen Empfänger oder Versender selbstständig erste Hypothesen.

Beispielsweise ermittelt das System die nächstgelegenen Einkaufsmöglichkeiten (z.B. Einzelhandelsgeschäfte des täglichen Bedarfs) und geht von der Hypothese aus, dass sich der Empfänger / oder Versender zwischen seiner angegebenen Privatadresse und den ermittelten Einkaufsmöglichkeiten regelmäßig bewegt. Je nach Alter wird z.B. eine mögliche Häufigkeit der Bewegung zwischen den zwei Punkten oder die Art der Fortbewegung (Auto, Fahrrad, zu Fuß und öffentliche Verkehrsmittel) zwischen den zwei Punkten angenommen.

Ein weiterer Parameter für die Ermittlung eines optimierten Übergabepunktes ist die Bewertungsmöglichkeit für den Empfänger bzw. Versender im Zuge jeder Abholung des Empfängers bzw. jeden Versands durch den Versender.

Konkret: wenn der Empfänger oder der Versender vor der Depoteinrichtung steht, sich authentifiziert hat und die Depoteinrichtung die Übergabe seines Paketes einleitet, wird der Empfänger oder Versender in der zur Übergabe eingesetzten APP, insbesondere einer Benutzer-App 5021, 5022 um eine Bewertung des eben genutzten Übergabepunktes gebeten (z.B. "war der Übergabepunkt gut für Dich zu erreichen?" oder "wäre der Übergabepunkt auch für zukünftige Abholungen oder Versendungen in Ordnung für Dich?"), z.B. relativ einfach mit einem 3 Smiley-System (lächeln / neutral / traurig). Zudem könnte in einem weiterentwickelten System der Grund für z.B. eine neutrale oder negative Smiley-Bewertung erfragt werden (z.B. Vorgabe von "keine Parkmöglichkeit", "zu weit von meinem Wohnort entfernt" etc.). Diese Bewertung des Einlieferers und/oder Empfängers fließt dann in alle zukünftigen Ermittlungen (als Aufwandsparameter) insbesondere für diesen Einlieferers und/oder Empfängers bzgl. eines gemeinsam optimierten Übergabepunktes mit ein.

Beispielsweise kann LPS so ermitteln, ob sich ab einer gewissen Distanz zwischen optimierten Übergabepunkten und der Privatanschrift die Bewertung negativ verändert, oder ob z.B. die Bewertung immer südlich von der Privatadresse positiv und westlich negativ ist, oder ob an bestimmten Wochentagen oder bei bestimmten Wetterbedingungen die Bewertung Tendenzen erkennen lässt.

Weitere Kriterien zur Ableitung von Hypothesen über Aufenthaltsorte und/oder Wege für LPS und als Grundlagen für selbstlernende Systeme können z.B.
das Alter sein: jüngeren Nutzer könnte hierbei z.B. eine größere Bereitschaft für längere Nutzungswege unterstellt werden. Weitere Beispiele für Kriterien sind:
- das Einzugsgebiet der Adresse des Nutzers: Stadtrand = höherer Nutzungsgrad von PKW bzw. öffentlichen Verkehrsmitteln, innerstädtisch: Fahrrad, Fußwege;
- das gekoppelte Angebot von Vouchern: z.B. immer, wenn ein Voucher in Verbindung mit der Nutzung dem Nutzer zur Verfügung gestellt wird, ist die Wahrscheinlichkeit höher, dass der Nutzer diesen Ort aufsucht und positiv bewertet.
- die Dringlichkeit der Sendung/ des Sendungsempfangs-/ -versands in Abhängigkeit von Inhalt oder abgeleitet durch Versender sein.

Sofern die der Benutzer-App 5021, 5022 zugeordneten Datenschutzanforderungen des Benutzers eine Weiterleitung der dargestellten Informationen an einen Logistikdienstleister und/oder eine Steuerkomponente des Logistiksystems erlauben, werden diese Informationen weitergeleitet und verbessern Ermittlungen von:
- gemeinsamen optimierten Übergabepunkte 120, 220, 230, 320, 330, 410, 415, 420, 495, 650, 720;
- vorgesehene Übergabezeiträume;
- individuellen Übergabepunkten für die einzelnen Empfänger des Pakets für eine Übergabe des Pakets an den Empfänger und/oder die Annahme des Pakets von dem Einlieferer.

Je größer der Umfang ist, in dem ein Benutzer des Logistiksystems, insbesondere ein Einlieferer eines Pakets und/oder ein Empfänger eines Pakets, eine Verknüpfung mit für die Übergabe von Paketen an den Benutzer und/oder von dem Benutzer relevanten Informationen ermöglicht, insbesondere durch Verknüpfung mit Lokalisierungsinformationen - Kontaktdaten und Kalendereinträgen, desto besser können bei diesem Benutzer zugeordneten Übergaben von Paketen die jeweiligen Aufwandsparameter optimiert werden.

Vorzugsweise werden Funktionen und Kapazitäten des Systems sowie Positionsdaten der Pakete insbesondere bei Veränderungen überprüft, und entsprechende Statusinformationen werden an eine Steuerkomponente, insbesondere die in dieser Anmeldung dargestellte Steuerkomponente 5012 und/oder an eine der Steuereinrichtungen übermittelt.

Eine Auswertung der Statusinformationen durch die Steuerkomponente 5012 hat den Vorteil, dass Friktionen in Bearbeitungsvorgängen in Echtzeit erkannt werden und dass dementsprechend möglichst viele Bearbeitungsvorgänge, insbesondere die dargestellten Bearbeitungsvorgänge kontrolliert und an sich gegebenenfalls anpassende Umweltbedingungen angepasst werden können, beispielsweise bei Transportvorgängen Ausfällen von Komponenten, Baustellen oder Staus.

Um eine hohe Sicherheit der Bearbeitungsvorgänge zu erzielen, ist es zweckmäßig, eingesetzte Bearbeitungsmittel redundant auszulegen und vorzugsweise Verfahren der Predictive Maintenance einzusetzen.

Eine Überprüfung der Bearbeitungsvorgänge und des Systems in Echtzeit ermöglichen es ferner, verbleibende Kapazitäten und/oder Opportunitäten zu ermitteln.

Es ist besonders vorteilhaft, die Bearbeitungsvorgänge so zu überprüfen, dass ermittelt wird, ob Transportopportunitäten und/oder Übergabeopportunitäten, insbesondere zur Übergabe von Paketen bestehen.

Beispielsweise kann das System so ausgelegt sein, dass in einem Land wie Deutschland, täglich 10 Millionen Übergaben von Paketen erfolgen können. Im Stadtgebiet von Aachen mit circa 250.000 Einwohnern können beispielsweise Kapazitäten für Bearbeitungsvorgänge vorhanden sein, die es ermöglichen, täglich 30.000 Pakete zu übergeben. Analog ist die tägliche Kapazität für Übergaben von Paketen in Aachen und angrenzenden Gebieten, beispielsweise einschließlich Autobahnparkplätzen in der Umgebung von Aachen bei 100.000 Pakete täglich.

Sofern von einer Steuerkomponente des Systems, beispielsweise der Steuerkomponente 5012 festgestellt wird, dass in gesamten Logistiksystem und/oder in ausgewählten Gebieten, vorzugsweise geographischen Gebieten wie Aachen oder in der Umgebung freie Kapazitäten, insbesondere für Transportvorgänge und/oder Übergabevorgänge von Paketen vorhanden sind, ist es möglich, den Erwerb einer Nutzung der freien Kapazitäten über ein Angebotsportal zu ermöglichen.

Eine besonders vorteilhafte Ausgestaltung des Angebotsportals ist eine Integration von verbesserten Verfahren einer Dutch Auction. Hierbei werden Durchführungen von Transportvorgängen und/oder Übergabevorgängen von Paketen einzeln oder in Bündeln angeboten. Zweckmäßigerweise startet eine derartige Dutch Auction bei einem hohen Startpreis, und der Preis verringert sich nachfolgend bis in einen Bereich von Grenzkosten für jeweilige Transportvorgänge und/oder Übergabevorgänge von Paketen.

### Abbildung 7

In Abbildung 7 ist eine bevorzugte Ausführungsform der Ermittlung des gemeinsamen optimierten Übergabepunktes 120, 220, 230, 320, 330, 410, 415, 420, 495, 650, 720 dargestellt, insbesondere hinsichtlich der Berücksichtigung einer unterschiedlichen Tiefe an Informationen, die von Empfängern wie von Einlieferern von Paketen vor der Übergabe von Paketen bereitgestellt werden, bei der Ermittlung des Aufwandsparameters.

Beispielsweise kann davon ausgegangen werden, dass zu Empfänger A nur seine Wohnadresse WA bekannt ist, ansonsten aber keine Arbeits- oder Aufenthaltsorte. Bei Einlieferer B ist sowohl die Wohnadresse WB wie auch die Adresse seines Arbeitsortes AB bekannt, nicht jedoch die genaue Wegstrecke zwischen Wohnadresse und Arbeitsort von B, so dass das System mittels eines Wegeoptimierungsalgorithmus die gestrichelte Line als Wegstrecke zwischen WB und AB berechnet. Zu Empfänger C kann beispielsweise bekannt sein, dass er sich an unterschiedlichen Wohn-, Arbeits- und Aufenthaltsorten aufhält, dergestalt, dass er entweder von Wohnadresse WC1 zu Arbeitsadresse AC1 und von dort zu Aufenthaltsadresse AUC1 und von dort wieder zu seiner Wohnadresse WC1 fährt, oder aber von Wohnadresse WC2 zu Arbeitsadresse AC2 und von dort zu Aufenthaltsadresse AUC2 und von dort wieder zu seiner Wohnadresse WC2, wobei die genauen Wegstrecken auch hier wieder unbekannt sind, so dass das System die gestrichelten Linien von WC1 zu AC1 zu AUC1 zu WC1 oder von WC2 zu AC2 zu AUC2 zu WC2 als Wegstrecken berechnet. Einlieferer D wiederum hat nur eine Wohnadresse WD und eine Arbeitsadresse AD, und teilt die zwischen beiden Adressen gewählte Wegstrecke - in Abbildung 7 die durchgezogene Linie zwischen WD und AD - über die App oder über eine Erlaubnis zur Nutzung von Lokalisierungsinformationen mit, so dass keine Wegstrecke berechnet werden muss.

Die Berücksichtigung aller bekannten oder abgeschätzten Wohn-, Arbeits- und Aufenthaltsorte sowie die zwischen ihnen zurückgelegten Wegstrecken, ob bekannt oder berechnet, führt in diesem Beispiel dazu, dass sich als gemeinsamer optimierter Übergabepunkt der Übergabepunkt 720 anbietet, der Mittelpunkt des schraffierten Kreises. Er zeichnet sich dadurch aus, dass der als räumliche Distanz ausgedrückte Zusatzaufwand, den die Empfänger und Einlieferer A bis D von Orten, an denen sie sich während des Übergabezeitraumes ohnehin befinden, zum Erreichen des gemeinsamen optimierten Übergabepunktes 720 aufwenden müssen, gleich oder kleiner als eine noch als akzeptabel angesehenen Distanz r ist, wobei r den Radius des schraffierten Kreises bezeichnet.

In der Realität werden die Wohn-, Arbeits- und Aufenthaltsorte nicht immer so günstig liegen wie in diesem Beispiel. Grundsätzlich wird daher bei der Auswahl eines gemeinsamen optimierten Übergabepunktes 720 so vorgegangen, dass für jeden der grundsätzlich als Übergabepunkt qualifizierten Standorte (711, 712, 713, 714, 715, 716, 717, 718, 719, 720) für jeden Empfänger eines Paketes an diesem Standort oder Einlieferer eines Paketes an diesem Standort der minimale zeitliche Zusatzaufwand errechnet wird, den der jeweilige Empfänger oder Einlieferer von Orten, an denen er/sie sich im Übergabezeitraum ohnehin aufhält, zu jedem qualifizierten Standort aufwenden müsste. Beispielsweise ist der zeitliche Zusatzaufwand für Empfänger B zu einem Übergabestandort 717 die Differenz zwischen dem Zeitbedarf für die schnellste Wegstrecke von WB nach 717 und dann nach AB (gepunktete Linie) abzüglich des Zeitbedarfs für die schnellste Wegstrecke direkt von WB nach AB (gestrichelte Linie), wobei entweder das Verkehrsmittel zugrunde gelegt wird, das die Empfänger oder Einlieferer angegeben haben oder das das System ggf. mit Methoden der Künstlichen Intelligenz berechnet.

Aus der Vielzahl von möglichen Übergabestandorten 711, 712, 713, 714, 715, 716, 717, 718, 719, 720 wählt das System sodann denjenigen Übergabepunkt aus, bei dem der zeitliche Zusatzaufwand über alle Empfänger und Einlieferer kumuliert betrachtet am geringsten ist und/oder am besten begrenzt ist. Dabei sind unterschiedliche Operationalisierungen des Kriteriums "am geringsten" denkbar. Ein besonders bevorzugtes Verfahren könnte beispielsweise vorsehen, dass für jeden Empfänger und/oder Einlieferer, der bestimmten priorisierten Benutzergruppen angehört, der zeitliche Zusatzaufwand einen Schwellenwert von z.B. 5 Minuten nicht überschreiten darf, und dass über alle Empfänger und Einlieferer betrachtet für einen Anteil von 95% der zeitliche Zusatzaufwand unter 10 Minuten liegt.

### Logistikfahrzeug & mobile Depoteinrichtung

### Abbildung 8

Abbildung 8 zeigt ein Beispiel eines erfindungsgemäßen Logistikfahrzeuges 810. In dieser Ausführungsformen handelt es sich um ein äußerlich nur teilweise angepasstes Fahrzeug. Es weist beispielsweise eine Fahrerkabine 820 und einen Laderaum 830 auf.

Erfindungsgemäß mit umfasst sind auch komplexere Logistikfahrzeuge, beispielsweise mit Einrichtungen zum autonomen Fahren oder zum teilautonomen Fahren, wobei insbesondere beim autonomen Fahren beispielsweise die Fahrerkabine entfallen kann.

Das Logistikfahrzeug 810 enthält eine vorzugsweise eine nicht dargestellte Steuereinheit.

Es ist grundsätzlich möglich, das Logistikfahrzeug 810 mit einer lokalen Steuereinheit so auszugestalten, dass sie eine Wegstrecke und/oder eine Beladung des Logistikfahrzeuges 810 derart steuern kann, dass sie die Pakete in jeweils für sie vorgesehene Lagerpositionen innerhalb des Laderaum 830 des Logistikfahrzeuges 810 steuern kann. Vorzugsweise erfolgt hierzu eine Steuerung einer in der Depoteinrichtung befindlichen Transporteinheit und/oder eines in der Depoteinrichtung befindlichen Greifarms.

Es ist jedoch noch vorteilhafter, die Steuerkomponente 5012 des Logistiksystems so auszugestalten, dass sie eine Beladung des Logistikfahrzeuges 810 derart steuern kann, dass die Pakete in jeweils für sie vorgesehene Lagepositionen innerhalb des Laderaum 830 des Logistikfahrzeuges 810 steuern kann.

Der Laderaum 830 weist insbesondere den anhand der Abbildungen 9, 10, 11 und 14,15 sowie 17, 18, 19, 21, 27, 28, 29, 31, 33, 35, 37, 43 näher dargestellten Aufbau auf.

In den anhand der Abbildungen 9, 10, 11, 14, 15, 17-19, 21 und 27-31, 35-37, 43 dargestellten Ausführungsbeispielen weisen die Depoteinrichtungen einen besonders einfachen und zweckmäßigen Aufbau aus, jeweils mit einem Mittelgang 1711, 1721, 1731, 1811, 1821, 1831, 1911, 1921, 1931, 2111, 2121, 2131, 214, 2711, 2721, 2731, 2811, 2821, 2831, 2911, 2921, 2931, 3111, 3121, 3131, 3141, 3311, 3321, 3331, 3511, 3521, 3531, 3711, 3721, 3731.

An den Seiten der Mittelgänge sind jeweils Regale 1712, 1713, 1722, 1723, 1731, 1732, 1812, 1813, 1822, 1823, 1832, 1833, 1912, 1913, 1922, 1923, 1932, 1933, 2112, 2113, 2122, 2123, 2132, 2133, 2142, 2143, 2712, 2713, 2722, 2723, 2731, 2733, 2812, 2813, 2821, 2823, 2831, 2833, 2812, 2813, 2922, 2923, 2932, 2933, 3112, 3113, 3122, 3123, 3132, 3133, 3142, 3143, 3312, 3313, 3321, 3323, 3331, 3333, 3512, 3513, 3522, 3523, 3532, 3533, 3712, 3713, 3721, 3713, 3732, 3733 angeordnet. Selbstverständlich sind Ausführungen mit anderen Gestaltungen der Lagerpositionen gleichfalls möglich.

### Abbildung 9

Die Abbildung 9 zeigt eine schematische Darstellung eines Laderaums einer Depoteinrichtung 830 insbesondere als Teil eines erfindungsgemäßen Logistikfahrzeuges, insbesondere des in Abbildung 8 dargestellten Logistikfahrzeugs. Auf dem Laderaum der Depoteinrichtung 830 befinden sich vorzugsweise Photovoltaik-Module 991 zur Gewinnung von Strom, sodass sich die Depoteinrichtung z.B. während der Verweildauer an gemeinsamen Übergabepunkten ohne Anschluss an externe Stromnetzte selbst versorgen kann. Der Laderaum der Depoteinrichtung 820 lässt sich zur Beladung in einem Verteilzentrum 5301 komplett öffnen. Hierfür existiert eine sich öffnende Frontseite 993 des Laderaums der Depoteinrichtung 830, welche um bis zu 180 Grad geöffnet werden kann. In der sich zu öffnenden Frontseite 993 ist eine Übergabeeinrichtung 992 integriert. Die Übergabeeinrichtung 992 dient zur Übergabe von Paketen. Bei der Übergabe von Paketen kann es sich um die Übergabe von Paketen aus einer Lagereinheit der Depoteinrichtung an einen Empfänger und/oder die Annahme von Paketen von Versendern und die anschließende Einlagerung des Paketes in eine Lagereinheit in die Depoteinrichtung handeln.

### Abbildung 10

Die Abbildung 10 zeigt eine Aufsicht auf eine horizontale Querschnittsebene des in Abbildung 8 dargestellten Logistikfahrzeuges mit wenigstens zwei Regalen;
Der Laderaum einer Depoteinrichtung 830 hat erfindungsgemäß Folgenden Innenausbau: An beiden Längsseiten befindet sich jeweils eine Lagereinrichtung (Regaleinheit) 1048 zur Einlagerung von Paketen. Beispielhafte Gestaltung der Lagereinrichtung siehe Abb. 11a bis 11d. Besonders vorteilhaft ist auch eine jederzeit neu konfigurierbare, noch vorteilhafter eine automatisch konfigurierbare Lagereinrichtung (Regaleinheit) siehe Abb. 43, 43a und 43b.

Zwischen der jeweiligen Lagereinrichtung (Regaleinheit) 1048 und der Außenhaut des Laderaums der Depoteinrichtung 830 befindet sich die Schiebereinheit 1045 und 1046 zum Verschieben von Paketen aus der Lagereinrichtung (Regaleinheit) 1048 auf die Transporteinheit 1041. Die Transporteinheit 1041 transportiert das Paket 1044 entlang der Führungsschiene 1047 zur Übergabeeinrichtung 1049.

Im Fall der Abgabe eines Pakets durch einen Versender über die Übergabeeinrichtung 1049, transportiert die Transporteinheit 1041 das Paket 1044 in eine Lagerposition der Lagereinrichtung 1041.

### Abbildungen 11a - 11d

Die Abbildungen 11a-d zeigen jeweils eine vorteilhafte Fachkonfiguration eines erfindungsgemäßen Regals; Die Lagereinrichtungen (Regaleinheiten), welche sich vorzugsweise z.B. innerhalb von Depoteinrichtungen zur Einlagerung von Paketen befinden, aber auch als Lagereinheit installiert in einem Verteilzentrum zur Einlagerung von Pakten, sowie generell zur Einlagerung von Gegenständen sinnvoll sind, können wie in den Abbildung 11a bis 11d eine fest fixierte Fächerkonfiguration ausweisen, so z.B. in Abbildung 11a mit insgesamt 99 Fächern in der Aufteilung mit 63 Fächern der Größe S (30cm x 10cm x 50cm), 24 Fächern der Größe M (35cm x 20cm x 50cm) und 12 Fächern der Größe L (35cm x 40 cm x 50cm), der Abbildung 11b mit insgesamt 91 Fächern in der Aufteilung mit 55 Fächern der Größe S (30cm x 10cm x 50cm), 24 Fächern der Größe M (20cm x 40cm x 50cm) und 12 Fächern der Größe L (40cm x 40 cm x 50cm), der Abbildung 11c mit insgesamt 75 Fächern in der Aufteilung mit 31 Fächern der Größe S (30cm x 10cm x 50cm), 32 Fächern der Größe M (20cm x 40cm x 50cm) und 12 Fächern der Größe L (40cm x 40 cm x 50cm) und der Abbildung 11d mit insgesamt 69 Fächern in der Aufteilung mit 31 Fächern der Größe S (30cm x 10cm x 50cm), 20 Fächern der Größe M (20cm x 40cm x 50cm) und 18 Fächern der Größe L (40cm x 40 cm x 50cm).

### Abbildungen 14, 15

Die Abbildungen 14 und 15 zeigen ein Ausführungsbeispiel einer erfindungsgemäßen Lagereinheit 1410 mit einer Regaleinheit und einer Schiebereinheit 1420 zum Verschieben von Paketen 1401 aus einem Regal 1412, 1512.

Eine Führungsschiene 1420, beziehungsweise 1520 führt beweglich eine weitere Führungsschiene auf einer vorgegebenen Bahn, insbesondere in horizontaler (y-Richtung) Richtung und/oder vertikaler (z-Richtung) Richtung, so dass ein Schieber 1430 gelagert und entlang einer vollständigen Seitenfläche der Regaleinheit verfahrbar ist.

An dem Schieber 1430 ist ausfahrbar ein Stempel 1435 angeordnet und in X - Richtung verschiebbar, so dass der Schieber 1430 Pakete 1401 aus dem Regal 1412,1512 befördern kann, insbesondere auf eine Transporteinheit.

Es ist alternativ und/oder zusätzlich zweckmäßig, die Depoteinrichtungen 140, 240, 250, 340, 350 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit einem oder mehreren aus Vereinfachungsgründen nicht dargestellten Greifarmen auszustatten.

Die Greifarme sind vorzugsweise im Inneren der Logistikfahrzeuge angeordnet und vorzugsweise so lang, dass sie einen Transport von Paketen zwischen Lagerpositionen der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 und einer Übergabeeinrichtung 1601 / 2201 der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 vorzugsweise einschließlich einer Entnahme aus der Übergabeeinrichtung 1601 / 2201 und einer Entnahme aus Lagerpositionen der Depoteinrichtung durchführen können.

Es ist ferner vorteilhaft, die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit wenigstens einen Greifarm, vorzugsweise ähnlich den Greifarmen der Roboter im Bereich der Endstellen 21110, 21120, 21130, 21140, 31110, 31120, 31130, 31140 auszustatten.

Unter Einsatz des Greifarmes beziehungsweise der Greifarme in den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 können einzelne mehrere oder sämtliche der nachfolgenden Bearbeitungsvorgänge durchgeführt und/oder erleichtert werden:
- Transport von Paketen zwischen der Übergabeeinrichtung 1601 / 2201 und Lagerpositionen der Depoteinrichtung;
- Durchführung und/oder Erleichterung der Einlagerung von Paketen in die Lagerpositionen der Depoteinrichtung;
- Durchführung und/oder Erleichterung der Auslagerung von Paketen aus den Lagerpositionen der Depoteinrichtung;
- Transport von Paketen zwischen den Lagerpositionen der Depoteinrichtung und der Übergabeeinrichtung 1601 / 2201.

Vorzugsweise sind an den Greifarmen Roboterwerkzeuge, vorzugsweise Greifsysteme angebracht, insbesondere einer oder mehrere Sauggreifer, die auch Vakuumgreifer genannt werden. Beispielsweise werden die aus DE 198 17 426 A1 bekannten Greifersysteme, insbesondere Vakuumgreifersysteme, hierzu angepasst. Insbesondere ist es vorteilhaft, die in dieser Druckschrift dargestellten Maßnahmen zur Überwachung des Greifvorgangs durch einen Kraftsensor einzusetzen. Dies ermöglicht Korrekturen bei falschem Greifen von Paketen, da Kräfte außerhalb eines Toleranzbereichs gemessen und zur Variation einer Steuerung des Greifvorgangs eingesetzt werden können.

Ferner ist es zweckmäßig, die Greifarme mit einem oder mehreren Sensor-Modulen, insbesondere wenigstens einem Kraftsensor, auszustatten, um die Kraft auf das anzuhebende Paket, insbesondere die Pakete 2101, 2151, 2161, 21201 zu messen. Ferner ist ein Einsatz von Lagesensoren vorteilhaft, die geeignet sind, eine relative Lage oder einen Abstand zwischen Paket und Greifer zu messen oder Start- und Endpunkte einer Bewegung zu ermitteln.

Vorzugsweise wird zur Aufnahme der Pakete eine flexible Greifeinrichtung eingesetzt, die beispielsweise in DE 20 2007 013 673 U1 dargestellt ist. Diese Greifeinrichtung weist einen Greifer mit mehrgliedrigem Gestell auf, das für die vorliegende Erfindung so angepasst wird, dass eine bessere Anpassung an variable Abmaße (Geometrien) der Pakete ermöglich wird.

### Transporteinheit

### Abbildung 12

Die Abbildung 12 zeigt eine perspektivische Darstellung einer erfindungsgemäßen Transporteinheit; Transporteinheiten unterstützen die Ein- und Auslagerung der Pakete in und aus Lagerpositionen von Lagereinrichtungen der Depoteinrichtungen sowie den Transport von und zu einer Übergabeeinrichtung der Depoteinrichtung. Die erfindungsgemäße Transporteinheit 1241 wird mittels Rädern 1292 auf Schienen 1291 geführt, was beispielsweise für einen Einsatz innerhalb von Depoteinrichtungen und/oder im Bereich von Transfereinrichtungen sinnvoll ist.

Die Transporteinheit 1241 weist eine höhenverstellbare Einrichtung 1293 auf, die beispielhaft scharnierförmig ausgebildet ist. Die höhenverstellbare Einrichtung 1293 dient der höhenverstellbaren Lagerung einer Transferplattform 1294. Die Transferplattform 1294 weist vorzugsweise ein Transportband zum Transport von Paketen auf. Mittels der Lichtschrankensensoren 1295 wird geprüft, ob sich bei Übergabe eines Pakets auf und/oder von der Transferplattform 1294 das Paket vollständig und transportgerecht auf der Transferplattform 1294 befindet bzw. von der Transferplattform 1294 vollständig an die zur übergebenen Einheit übergeben wurde.

### Abbildung 13

Die Abbildung 13 zeigt eine Aufsicht auf eine erfindungsgemäße Transporteinheit; Die Transferplattform 1394 weist vorzugsweise ein Transportband zum Transport von Paketen auf. Mittels des Transportbandes kann ein Transfer eines Pakets, beispielsweise auf die Transferplattform und/oder von der Transferplattform in eine Lagerposition einer Depoteinrichtung erfolgen. Mittels der Lichtschrankensensoren 1395 wird geprüft, ob sich bei Übergabe eines Pakets auf und/oder von der Transferplattform 1394 das Paket vollständig und transportgerecht auf der Transferplattform 1394 befindet bzw. von der Transferplattform 1394 vollständig an die zur übergebenen Einheit übergeben wurde.

### Abbildungen 16a, 16b

In vorteilhaften Ausführungsformen der Erfindung sind wenigstens einzelne der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 so ausgestaltet, dass sich in ihnen Transporteinheiten so bewegen und/oder so gesteuert werden, dass sie einzelne mehrere oder sämtliche der nachfolgenden Bearbeitungsvorgänge durchführen und/oder erleichtern können:
- Transport von Paketen zwischen der Übergabeeinrichtung 1601 / 2201 und Lagerpositionen der Depoteinrichtung;
- Durchführung und/oder Erleichterung der Einlagerung von Paketen in die Lagerpositionen der Depoteinrichtung;
- Durchführung und/oder Erleichterung der Auslagerung von Paketen aus den Lagerpositionen der Depoteinrichtung;
- Transport von Paketen zwischen den Lagerpositionen der Depoteinrichtung und der Übergabeeinrichtung 1601 / 2201.

Die in den Abbildungen 16a und 16b dargestellte erfindungsgemäße Transporteinheit 1641 ist auf Schienen geführt, was beispielsweise für einen Einsatz innerhalb von Depoteinrichtungen und/oder im Bereich von Transfereinrichtungen sinnvoll ist.

Die Transporteinheit 1641 weist eine höhenverstellbare Einrichtung 1693 auf, die beispielhaft scharnierförmig ausgebildet ist. Die höhenverstellbare Einrichtung 1693 dient der höhenverstellbaren Lagerung einer Transferplattform 1694. Die Transferplattform 1694 weist vorzugsweise ein Transportband zum Transport von Paketen, beispielsweise des in Abbildung 16a beispielhaft eingezeichneten Pakets 1667 auf. Mittels des Transportbandes kann ein Transfer des Pakets 1667, beispielsweise auf die Transferplattform und/oder von der Transferplattform in eine Lagerposition einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 unterstützt werden.

Die Transferplattform 1694 ist vorzugsweise drehbar gelagert. Hierdurch wird beispielsweise erleichtert, dass die Transferplattform 1694 Pakete von einem Förderband einer Transfereinrichtung 5336 Pakete aufnehmen kann und/oder - vorzugsweise nach einer Drehung der Transfereinrichtung 5336 - Pakete in Lagerpositionen von Lagereinrichtungen der Depoteinrichtungen transferieren kann.

Die Transporteinheit 1641 stellt eine bevorzugte Ausführungsform der in dieser Anmeldung dargestellten Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 dar.

Es ist ihr gleichfalls möglich, die Transporteinheit 1641 als eine Übergabeeinheit einzusetzen, die Pakete zwischen der Depoteinrichtung und individuellen Übergabepunkten für eine Übergabe von Paketen an einzelne Empfänger und/oder von einzelnen Einlieferern transportieren kann (vgl. Abschnitt Individuelle Übergabepunkte).

### Sortieren im Verteilzentrum, Beladungsvorbereitung &: Beladung

### Sortierung

Das Sortieren von Paketen für Empfänger erfolgt vorzugsweise so, dass Touren für mobile Depoteinrichtungen einerseits und Touren mit normalen Paketzustellfahrzeuge für die Haustürübergabe andererseits separiert werden. Dies ist zweckmäßig, da
- Pakete für Depoteinrichtung-Übergabe bestimmte Höchstmaße nicht überschreiten sollen,
- Pakete für Depoteinrichtung-Übergabe in der Endstelle zur Beladung vereinzelt werden sollen.

### Beladungsvorbereitung

Aus dem Sortierprozess heraus werden die für die Übergabe mit Depoteinrichtungen bestimmten Pakete automatisiert identifiziert, ausgeschleust, vereinzelt und via Förderband an die Übergabeposition zu dem Logistikfahrzeug transportiert.

Sofern die Pakete nicht bereits zuvor - vorzugsweise in dem Verteilzentrum 5301 für Pakete vereinzelt wurden, wird zur Vereinzelung der Pakete eine Endstelle des Verteilzentrums um einen Paketvereinzelner erweitert, der Pakete auf der Endstelle einzeln und hintereinander vom Sorter in Richtung Fahrzeug aufreiht.

Vorzugsweise sind die Endstellen über eine allmähliche Verengung so ausgestaltet, sowie vorzugsweise mittels vorwärtsziehender Seitenbänder so konfiguriert, dass sich eine Vereinzelung der Pakete ergibt.

### Variante 1: Vollautomatische Lösung

Hier sind die Endstellen über eine allmähliche Verengung, sowie vorwärtsziehende Seitenbänder so konfiguriert, dass sich eine Vereinzelung der Pakete ergibt

### Variante 2: Vollautomatische Lösung mit Ausrichtungsdrehteller und -federung

Hier sind die Endstellen über eine allmähliche Verengung, sowie vorwärtsziehende Seitenbänder so konfiguriert, dass sich eine Vereinzelung der Pakete ergibt, analog der vollautomatisierten Lösung ohne Ausrichtungsfeder.

Hierbei gibt es zwei Varianten:
- nach Scannung des 6-Seiten-Scanners wird das Paket weiterbefördert und eine "pauschale Justierung" erfolgt, d.h. das Paket wird durch permanent auf beiden Seiten drückende Federn automatisch mittig platziert.
- nach Scannung des 6-Seiten-Scanners wird das Paket weiterbefördert; die Daten, wie das Paket auf dem Förderband positioniert ist, werden von dem 6-Seiten-Scanner an eine Steuerkomponente weitergeleitet, die die Federn entsprechend der Lage des Paketes bewegt (also jede Feder individuell), so dass das Paket ebenfalls danach mittig positioniert ist.

Der genaueren Schilderung dieser Verfahren dienen die Abb. 17-21. Bei den anhand der Abbildungen 17, 18, 19, 20, 21, 32, und 37 dargestellten Ausführungsformen der Erfindung werden von Endstellen übergebene Pakete im Bereich von Förderbändern vereinzelt und nach der Vereinzelung gescannt.

Die Abbildungen 17, 18, 19, 20, 21,21a und 37 zeigen die Transfereinrichtungen 5130, 5336 in einem Einsatz bei der Beladung von Depoteinrichtungen 1710,1720, 1730, 1810,1820, 1830, 1910,1920, 1930, 2110, 2120, 2130, 2140, 2710, 2720, 2730.

### Abbildung 17

Abbildung 17 zeigt eine bevorzugte Ausführungsform einer erfindungsgemäßen Transfereinrichtung 5130, 5336. Es handelt sich hierbei um eine vollautomatische Lösung, wobei im Bereich von Endstellen 1771, 1781, 1791 über eine allmähliche Verengung 17110, 17120, 17130 sowie vorwärtsziehende Seitenbänder 1772, 1773 ein Transportband 1771, 1781, 1791 so konfiguriert ist, dass sich eine Vereinzelung der Pakete 1701-1709, 1751-1759, 1761-1769 ergibt.

### Abbildung 20, 20a und 20b

Abbildung 20 zeigt eine Aufsicht auf eine als Bestandteil einer erfindungsgemäßen Transfereinrichtung 5130, 5336, insbesondere als Förderband einsetzbaren Rollenbahn.

Die Abbildungen 20, 20a und 20b illustrieren vorteilhafte Ausführungsformen zur Vereinzelung von Paketen sowohl an Endstellen in Verteilzentren wie in Abbildungen 17-19 dargestellt, als auch auf Hauptförderbändern von erfindungsgemäßen Verteilzentren wie in Abbildungen 32-37 dargestellt.

Die Pakete 2001a und 2001b, 2002 und 2003 werden dabei von Einzelelementen 2009-14 einer Rollenbahn oder von äquivalenten technischen Einrichtungen grundsätzlich vorwärts befördert, in Abbildungen 20 und 20b nach rechts. Jedes einzelne Element 2009-14 der Rollenbahn kann aber auch entgegen der allgemeinen Fließrichtung gedreht werden, in Abbildungen 20 und 20b also nach links. Zudem kann die Geschwindigkeit jedes Einzelelements variiert werden. Dadurch kann im Fall von noch nicht genügend vereinzelten Paketen wie 2001a und 2001b das obere Paket 2001a verlangsamt und das untere Paket 2001b beschleunigt werden, so dass sich bis zur Verjüngung der Rollenbahn nach Einzelelement 2014 eine vollständige Vereinzelung der Pakete 2001a und 2001b ergibt. Technisch geschieht dies dadurch, dass die Einzelelemente 2009 und 2010 sich nach links drehen, und die Einzelelemente 2012 und 2013 sich gegenüber der Normalgeschwindigkeit der Einzelelemente beschleunigt nach rechts drehen, während sich Einzelelement 2011 für einen kurzen Moment gar nicht dreht.

Der Vereinzelungsvorgang kann zusätzlich durch seitliche Bänder 2072 wie in Abbildung 20b unterstützt werden. Die seitlichen Bänder 2072 sind dabei in beide Richtungen drehbar. Das untere Paket 2001b kann dabei nicht nur durch eine beschleunigte Bewegung der Einzelelemente 2012 und 2013, sondern auch durch eine Vorwärtsbewegung des unteren seitlichen Bandes 2072 beschleunigt nach vorne bewegt werden, was den Vereinzelungsprozess unterstützt.

### Abbildung 20a

Abbildung 20a zeigt in einem Querschnitt einen Teilbereich der in den Abbildungen 20 und 20b dargestellten erfindungsgemäßen Rollenbahn. Die in Abbildung 20a beispielhaft dargestellte Rollenbahn weist zylinderförmig ausgebildete Rollen 2009, 2010, 2011,2012, 2013, 2014, 2015, 2016, 2017 auf. Die Rollen sind über beispielhaft dargestellte Rotationsachsen 2084 und 2080 drehbar gelagert.

Einzelne der Rollen, im dargestellten Fall die Rollen 2011, 2012, 2013, 2017 weisen keinen eigenen Antrieb auf, sondern sind entlang um ihre jeweilige Rotationsachse drehbar gelagert, vorzugsweise mit einer entsprechenden reibungsarmen Lagereinrichtung, beispielsweise einem Kugellager oder einem Wellenlager.

Die Rollen 2009, 2010, 2014, 2016 sind jeweils über einen aus Vereinfachungsgründen nicht dargestellten Motor vorzugsweise einzeln antreibbar. Insbesondere ist der jeweils die Rollen 2009, 2010, 2014, 2016 antreibende Motor so eingerichtet, dass er eine aktive Drehung der Rollen 2009, 2010, 2014, 2016 sowohl im Uhrzeigersinn als auch gegen Uhrzeigersinn bewirken kann, so dass Pakete in den Bereichen, in denen sie auf die jeweilige Rolle aufliegen gezielt beschleunigt oder gezielt abgebremst werden können.

Die Motoren, welche die Rollen 2009, 2010, 2014, 2016 antreiben, werden von einer Steuereinheit 2091 gesteuert, wobei die Steuereinheit 2091 Auswertesignale einer Erfassungseinheit 2092 zu Positionen von Paketen 2001a, 2001b, 2002, 2003 berücksichtigen kann. Hierzu wirkt die Erfassungseinheit 2092 mit wenigstens einem und/oder einer Kameraeinrichtung 2038 zur Erfassung der Positionen der Pakete 2001a, 2001b, 2002, 2003 zusammen.

Wie zuvor anhand von Abbildung 20 erläutert, liegen die Pakete 2001a und 2001b auf dem durch die Rollenbahn gebildeten Förderband nahe beieinander. Wie gleichfalls dargestellt, befindet sich das Paket 2001b in Förderrichtung des Rollenbandes - entsprechend der Pfeilrichtung - vor dem Paket 2001a. Durch eine Steuerung der Rollen, auf denen sich ausschließlich das Paket 2001b, jedoch nicht das Band Paket 2001a befindet im Uhrzeigersinn und somit zur Förderung des Pakets 2001b in Förderrichtung und durch Steuerung der Rollen auf denen sich ausschließlich das Paket 2001a befindet entgegen des Uhrzeigersinns werden die Pakete 2001b und 2001a voneinander getrennt, beziehungsweise eine anderweitig - beispielsweise durch die Förderbänder 2072 erfolgende Vereinzelung der Pakete 2001a und 2001b wird entsprechend unterstützt.

### Abbildung 21

Abbildung 21 zeigt eine weitere vorteilhafte Ausführungsform einer erfindungsgemäßen Transfereinrichtung 5130, 5336. Hier ist keine Veränderung der heutigen Endstellen, die beispielhaft in Abbildung 21 mit Bezugsziffernkombinationen 2171 / 21110, 2181 / 21120, 2191 / 21130, 21101 / 21140 gekennzeichnet sind, notwendig, da es durch den Einsatz von Robotern 2180, 2190 zu einer "Überbrückung (Vereinzelung)" zwischen der bereits heute bestehenden Endstelle den Förderbändern 2170, 2171, 2172, 2173 zu den Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 kommt: Einer der Roboter betreut dabei vorzugsweise 2-3 Endstellen 21110, 21120, 21130, 21140, insbesondere im Wechsel. Eine Betreuung der Endstellen im Wechsel erfolgt in einer bevorzugten Ausgestaltung dadurch, dass der Roboter 2180, 2190 an den Endstellen 21110, 21120, 21130, 21140 mehrere Pakete 21110, 21120, 21130, 21140, vorzugsweise 3 bis 10 einzelne Pakete 2101, 2151, 2161, 21201 aus einer der Endstellen 21110, 21120, 21130, 21140 entnimmt und auf ein in der Nähe der jeweiligen Endstelle 21110, 21120, 21130, 21140 befindliches Förderband 2170, 2171, 2172, 2173 auflegt. Der Roboter 2180, 2190 wechselt dann zur nächsten der Endstellen 21110, 21120, 21130, 21140 und dem jeweils daran anschließenden Förderband.

Es ist zweckmäßig, die Roboter 2180, 2181 mit Greifarmen 2182, 2183, 2184, 2185 auszustatten. Vorzugsweise sind an den Greifarmen 2182, 2183, 2184, 2185 aus Vereinfachungsgründen nicht dargestellte Roboterwerkzeuge vorzugsweise Greifsysteme angebracht, insbesondere einer oder mehrere Sauggreifern, die auch Vakuumgreifer genannt werden. Beispielsweise werden die aus DE 198 17 426 A1 bekannten Greifersysteme, insbesondere Vakuumgreifersysteme hierzu angepasst. Insbesondere ist es vorteilhaft, die in dieser Druckschrift dargestellten Maßnahmen zur Überwachung des Greifvorgangs einschließlich eines Kraftsensors einzusetzen. Dies ermöglicht Korrekturen bei falschem Greifen von Paketen, da Kräfte außerhalb eines Toleranzbereichs gemessen und zur Variation einer Steuerung des Greifvorgangs eingesetzt werden können.

Ferner ist es zweckmäßig, die Greifarme mit einem oder mehreren Sensor-Modulen, insbesondere wenigstens einem Kraftsensor auszustatten, um die Kraft auf das anzuhebende Paket, insbesondere die Pakete 2101, 2151, 2161, 21201 zu messen. Ferner ist ein Einsatz von Lagesensoren vorteilhaft, die geeignet sind, eine relative Lage oder einen Abstand zwischen Paket und Greifer zu messen oder Start- und Endpunkte einer Bewegung zu ermitteln.

Vorzugsweise wird zur Aufnahme der Pakete eine flexible Greifeinrichtung eingesetzt, die beispielsweise in DE 20 2007 013 673 U1 dargestellt ist. Diese Greifeinrichtung weist einen Greifer mit mehrgliedrigem Gestell auf, das für die vorliegende Erfindung so angepasst wird, dass eine bessere Anpassung an variable Abmaße (Geometrien) der Pakete ermöglich wird.

### Abbildung 21a

Abbildung 21a ist eine vorteilhafte Abwandlung der zuvor anhand von Abbildung 21 dargestellten erfindungsgemäßen Transfereinrichtung 5130, 5336. Jedoch werden bei der anhand von Abbildung 21a dargestellten Ausführungsform die bei der Ausführungsform gemäß Abbildung 21 vorhandenen Transportbänder 2170, 2171, 2172, 2173 entfernt und sind vollkommen durch Transporteinheiten 2101a, 2102a, 2103a, 2104a, 2105, 2106a, 2153a, 2154a, 2163a, 2164a, 2165a, 2166a, 21203a, 21204a, 21205a und 21206a ersetzt.

Die in Abbildung 21a dargestellte erfindungsgemäßen Transfereinrichtung 5130, 5336 ist insbesondere dann vorteilhaft, wenn Pakete bereits vereinzelt übergeben werden, wie insbesondere bei den anhand der Abbildungen 32, 34, 36,37 dargestellten bevorzugten Ausgestaltungen erfindungsgemäßer Verteilzentren.

Eine Betreuung der Endstellen im Wechsel erfolgt in einer bevorzugten Ausgestaltung dadurch, dass die Transporteinheiten direkt an die Endstellen auf gleicher Höhe heranfahren und die Pakete von der Endstelle direkt auf die Transporteinheit geschoben wird.

### Beladungsvorbereitung

### Abbildung 18

Abbildung 18 zeigt eine vollautomatische Ausgestaltung der Transfereinrichtungen 5130, 5336 mit Ausrichtungsdrehteller und -federung.

Hier sind die Endstellen 1871, 1881, 1891 über eine allmähliche Verengung 18110, 17130 sowie aus Vereinfachungsgründen nicht dargestellte, vorzugsweise wie anhand der Abbildungen 17 und 20 dargestellte, vorwärtsziehende Seitenbänder und zusätzlich durch Drehteller und -federung 1885, 1886, 1887 so konfiguriert, dass sich eine Vereinzelung der Pakete ergibt, und zusätzlich noch folgendes Problem gelöst wird:
Da Pakete i.d.R. in Länge / Breite / Höhe unterschiedliche Maße haben und die Pakete ggf. mit der längeren Seite nach vorne, d.h. vertikal, auf dem Vereinzelnerförderband 17110, 17120, 17130, 18110, liegen und so auch der Transporteinheit übergeben werden würden, könnte die Transporteinheit (da sich diese bei Einlagerung um 90 Grad dreht) die Einlagerung nur in einem Fach mit Länge der längeren Seite des Paketes vornehmen; d.h. z.B. ein Paket mit der Länge 10cm und 50 cm, würde dann ein Fach mit mind. 50cm Breite benötigen, obwohl von den Maßen auch eine Fachbreite von 10 cm ausreichend wäre, wenn das Fach hinreichend tief wäre. Um zu gewährleisten, dass die Übergabe an die Transporteinheit stets mit der kürzen Seite erfolgt, scannt 1) ein Scanner die Lage des Pakets, übermittelt 2) diese Information den nachfolgenden Ausrichtungsdrehteller, der 3) dann entsprechend der Information bzgl. der Lage des Pakets, das Paket so dreht, dass die kürzeste Seite nach vorne zeigt und schiebt es wieder weiter, so dass es an die Transporteinheit übergeben werden kann.

Da sich die einzelnen Pakete 1701, 1702, 1703, 1704, 1705, 1751, 1752, 1753, 1754, 1755, 1761, 1762, 1763, 1764, 1765 erheblich in Abmessungen, Volumen und Form unterscheiden, aber eine exakte Positionierung des Paketes, nämlich immer mittig auf dem Förderband, für die Übergabe an die Transporteinheit vorteilhaft ist, wird am Ende des Förderbands das Paket mit Hilfe einer Federungseinrichtung mittig justiert. Andernfalls würde die Gefahr bestehen, dass das Paket seitlich von der Transporteinheit aufgenommen wird.

### Beladung

### Abbildung 19

Abbildung 19 zeigt eine Transfereinrichtung 5130, 5336 mit Einsatz von zwei und mehr Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 . Um die Beladung einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zu beschleunigen, können alternativ auch zwei oder mehr Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 zur Beladung einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 eingesetzt werden.

Im Gegensatz zur Beladung einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 mit einer Transporteinheit, fahren die Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 bei Beladung mit zwei und mehr Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 zur Aufnahme eines Paketes aus der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 hin zum Förderband. Für die Strecke von der Depoteinrichtung (140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322) zum Förderband wird gegebenenfalls eine Führungsschiene (Führungsschiene analog wie in der Depoteinrichtung) genutzt, welche nahtlos an die Führungsschiene der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 andockt.

Durch eine Steuerung der Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744,3745 durch das Mittel zur Steuerung der Transfereinrichtung ist eine Führungsschiene jedoch entbehrlich. Dies ist einer der Vorteile des Einsatzes des Mittels zur Steuerung der Transfereinrichtung.

Aus Perspektive der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 fährt die "leere" Transporteinheit z.B. über die rechte Seite des Rings der Führungsschiene zum Förderband, um ein Paket aufzunehmen. Parallel hierzu wartet eine zweite Transporteinheit dann auf der linken Seite des Rings, bereits mit einem Paket vom Förderband bestückt. Sobald die leere Transporteinheit die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 verlassen hat und zum Förderband fährt, fährt die mit einem Paket bestückte Transporteinheit in die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 zur Beladung ein.

In einer bevorzugten Ausführungsform der Erfindung erfolgt die Beladung der Depoteinrichtungen in einem Verteilzentrum 5301.

Zu diesem Zweck wird die Tür, die möglichst die vollständige Rückseite des Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 einnimmt, so weit geöffnet, dass Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 direkt und ohne Abstand zur Laderampe an diese heranrangiert werden kann.

Analog erfolgt die Beladung anderer mobiler Depoteinrichtungen in dem Bereich des Verteilzentrums 5301. Zu diesem Zweck werden gleichfalls deren Türen, die die vollständige Rückseite der Depoteinrichtung einnehmen, so weit geöffnet, dass die Depoteinrichtungen direkt und ohne Abstand zur Laderampe an diese heranrangiert werden kann.

Eine besonders bevorzugte Ausführungsform der Erfindung sieht eine kontaktlose, automatisierte Beladung im Logistikzentrum von Depoteinrichtungen und/oder Logistikfahrzeugen vor. Dabei ist in Transportrichtung der Pakete im Anschluss an die Transfereinrichtung ein Transportband angeordnet.

Nach Durchlaufen des Scanners, vorzugsweise des 6-Seiten-Scanners als Teil einer Transfereinrichtung wird das Paket auf eine Transporteinheit 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 befördert, die innerhalb des Logistikfahrzeugs bis zur Position des vorgesehenen Ablagefaches fährt, sich dort höhenverstellbar an die Höhe des Fachs anpasst und das Paket einlagert.

Es ist zweckmäßig, eine Einlagerung von Paketen in die Lagerpositionen der Depoteinrichtung, insbesondere in Fächer der Regale 1412, 1512. durchzuführen. In einer bevorzugten Ausführungsform der Erfindung erfolgt die Einlagerung von Paketen in die Lagerpositionen der Depoteinrichtung unter Einsatz einer oder mehrerer der dargestellten Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 und/oder unter Einsatz weiterer Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 , die vorzugsweise gleichfalls innerhalb der Depoteinrichtungen verfahrbar sind.

Ist die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 final beladen, so verbleibt vorzugsweise nur eine Transporteinheit in der Depoteinrichtung, um am finalen Ausgabeort die Pakete zum Ausgabefach zu bringen bzw. Pakete vom Ausgabefach einzulagern.

Des Weiteren können die im Logistikzentrum verbleibenden Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 verbunden mit einer Führungsschiene zwischen den einzelnen Endstellen, auch zur Beladung anderer Depoteinrichtungen eingesetzt werden.

Zudem besteht durch diese Verbindung die Möglichkeit, falsch abgeleitete Pakete automatisiert von einer Endstelle zur nächsten zu transportieren. Falsch abgeleitete Pakete werden im Zuge der Scannung mit dem 6-Seiten-Scanner auf dem Förderband identifiziert. Dies könnten Pakete sein die z.B. in eine andere Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 verbracht werden müssen.

### Übergabe

### Überblick

Bei einer Übergabe eines Paketes an den Empfänger wird das Paket zunächst aus der Lagerposition der Depoteinrichtung ausgelagert, auf die Transferplattform 1694 der Transporteinheit 1641 und anschließend in die Übergabeeinrichtung 1601 befördert. Eine Erleichterung der Auslagerung von Paketen aus den Lagerpositionen der Depoteinrichtung kann alternativ und/oder zusätzlich unter Einsatz der in den Abbildungen 14 und 15 dargestellten Schiebereinheit 1420 erfolgen.

### Abbildung 16 (c und d)

Die Abbildungen 16c und 16d zeigen eine Prinzipdarstellung einer Übergabe eines Pakets 1698 in einem Bereich einer Übergabeeinrichtung, zu der es bei der Übergabe an Empfänger 5160 sowie bei der lokalen Einlieferung 5190 kommt.

### Abbildung 22 (a und b)

Die Abbildungen 22a und 22b zeigen eine erfindungsgemäße Übergabeeinrichtung 2201. Es kann sich hierbei um die zuvor anhand der Abbildungen 16c und 16d dargestellte Übergabeeinrichtung 1601 handeln. Die Übergabeeinrichtung 2201 dient zur Übergabe von Paketen. Bei der Übergabe von Paketen kann es sich um die Übergabe von Paketen aus einer Lagereinheit der Depoteinrichtung an einen Empfänger und/oder die Annahme von Paketen von Versendern und die anschließende Einlagerung des Paketes in eine Lagereinheit in die Depoteinrichtung handeln.

Abbildung 22a zeigt einen Betriebszustand der Übergabeeinrichtung 1601 / 2201 nachdem ein Paket, beispielsweise das in Abbildung 16c dargestellte Paket 1698 von einem Empfänger und/oder von einem eine Übergabe an den Empfänger erleichternden Übergabeeinheit aus der Übergabeeinrichtung 1601 / 2201 entnommen wurde.

Nachdem ein Empfänger ein Paket entnommen hat, schließt sich die Übergabeeinrichtung 1601 / 2201 wieder. In dem in Abbildung 22a dargestellten Betriebszustand hat der Empfänger das Paket entnommen. Die Transporteinheit 2295 fährt an die Übergabeeinrichtung 1601 / 2201 heran und prüft mittels der Lichtschranke 2296, ob sich in der Übergabeeinrichtung 1601 / 2201 noch ein Paket befindet. In dem in Abbildung 22a dargestellten Betriebszustand der Übergabeeinrichtung 1601 / 2201 meldet die Lichtschranke 2296, dass kein Paket mehr in der Übergabeeinrichtung vorhanden ist. Die Übergabe ist damit erfolgreich abgeschlossen. Vorzugsweise erhält nun der Einlieferer des Pakets, insbesondere der Versender des Pakets eine Benachrichtigung über die erfolgreiche Übergabe, insbesondere die erfolgreiche Übergabe an den Empfänger des Pakets. Sofern das Paket keinem individualisierten Empfänger zugeordnet war - dies ist beispielsweise dann der Fall, wenn das Paket ein Warenobjekt ist - erhält der Einlieferer vorzugsweise eine Benachrichtigung über die Tatsache, dass das Paket erfolgreich übergeben wurde.

Abbildung 22b zeigt einen Betriebszustand der Übergabeeinrichtung 1601 / 2201, bei dem der Empfänger das Paket nicht entnommen hat. Nachdem die Übergabeeinrichtung geschlossen wurde, fährt die Transporteinheit 2295 an die Übergabeeinrichtung 2201 heran und prüft mittels der Lichtschranke 2296, ob sich in der Übergabeeinrichtung 2201 noch ein Paket befindet. In dem in Abbildung 22b dargestellten Betriebszustand meldet die Lichtschranke 2296 eine Unterbrechung eines Lichtstrahls oder mehrerer Lichtstrahlen durch einen Gegenstand, insbesondere das Paket 2298. Dies ist eine bevorzugte Ausführungsform einer auch mit anderen Mitteln durchführbaren Überprüfung, ob sich ein Paket oder ein sonstiger Gegenstand in der Übergabeeinrichtung 1601 / 2201 befindet. Andere gleichfalls einsetzbare Überprüfungsmittel zur Überprüfung, ob sich ein Paket oder ein sonstiger Gegenstand in der Übergabeeinrichtung 1601 / 2201 befindet sind eine Waage oder ein Ultraschallsensor.

Falls sich ein Paket oder ein sonstiger Gegenstand in der Übergabeeinrichtung 1601 / 2201 befindet, prüft die Depoteinrichtung und/oder das System, ob sich der Empfänger des Paketes noch in unmittelbarer Nähe der Depoteinrichtung befindet. Sollte dies der Fall sein, so wird der Empfänger unmittelbar via App kontaktiert und gefragt, ob er sein Paket entnehmen möchte. Sollte der Empfänger nicht antworten bzw. dies verneinen, so wird das Paket von einer Transporteinheit und/oder von einem Greifarm wieder in eine der Lagerpositionen der Depoteinrichtung, vorzugsweise in die Lagerposition aus der das Paket entnommen wurde, transportiert.

Der Rücktransport des Pakets in eine der Lagerpositionen der Depoteinrichtung ist auch dann vorteilhaft, wenn sich der Empfänger nicht mehr in unmittelbarer Nähe der Depoteinrichtung befinden würde.

In einer bevorzugten Ausführungsform informiert das System den Versender vorzugsweise parallel hierzu, so dass dieser den Empfänger ebenfalls kontaktieren und/oder das Paket einem anderen Empfänger zuweisen kann.

Sollte der Empfänger sich noch in unmittelbarer Nähe der Depoteinrichtung befinden und eine erneute Übergabe wünschen, dann öffnet sich die Übergabeeinheit nach entsprechender Authentifizierung des Empfängers.

### Entladung im Verteilzentrum

### Überblick

Nach dem Ende des Übergabezeitraums am Standort fahren die Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 wieder zurück zum Logistikzentrum. Die dortige Entnahme von Paketen (nicht abgeholte Pakete - nach Ablauf der Abholfrist) oder von Einlieferern eingestellte Pakete (Retouren bzw. C2C Pakete) aus dem Logistikfahrzeug erfolgt ebenfalls vollautomatisiert:
Nicht nur die Be-, sondern auch die Entladung der Depoteinrichtungen 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 erfolgt vorzugsweise unter Einsatz von Transfereinrichtungen. In einer bevorzugten Ausführungsform sind die Transfereinrichtungen so aufgebaut wie die Transfereinrichtungen, die anhand der Abbildungen 17, 18, 19, 20, 21 und 37 dargestellt werden. Die Abbildungen 17, 18, 19, 20, 21 und 37 zeigen einen Betrieb der dort dargestellten Transfereinrichtungen zum Beladen von Depoteinrichtungen. Es ist möglich, die in den Abbildungen 17, 18, 19, 20, 21 und 37 dargestellten Transfereinrichtungen auch zum Entladen von Depoteinrichtungen einzusetzen.

Die in den Abbildungen 27, 28, 29, 31, 33 und 35 für die Entladung der Depoteinrichtungen dargestellten Transfereinrichtungen können ebenso gleichfalls zum Beladen von Depoteinrichtungen eingesetzt werden. Insbesondere kann es sich bei den in den Abbildungen 27, 28, 29, 31, 33 und 35 dargestellten Transfereinrichtungen um die gleichen Transfereinrichtungen handeln, die zuvor anhand der Abbildungen 17, 18, 19, 20, 21 und 37 dargestellt wurden. Die entsprechenden Bestandteile der Transfereinrichtungen können daher so aufgebaut sein wie die Transfereinrichtungen, die zuvor anhand der Abbildungen 17, 18, 19, 20, 21 und 37 dargestellt wurden. Da beim Entladen aber alle Pakete von der Transporteinheit 1641, 2642, 2643, 2644, 2645, 2741, 2742, 2743, 28,41, 2842, 2845, 2940, 2941, 2942, 2943, 2944, 2945,3140, 3141, 3142, 3145, 3340, 3341, 3342, 3343, 3344, 3345, 3540, 3541, 3542, 3543, 3544, 3545, 3740, 3741, 3742, 3743, 3744, 3745 bereits vereinzelt aus der Depoteinrichtung befördert werden, können alle Komponenten der Transfereinrichtung, die die Vereinzelung beim Beladen bewirken, beim Entladen "auf neutral gestellt werden".

In den anhand der Abbildungen 27-31 und 35 dargestellten Ausführungsbeispielen weisen die Depoteinrichtungen einen besonders einfachen und zweckmäßigen Aufbau auf, jeweils mit einem Mittelgang 2711, 2721, 2731, 2811, 2821, 2831, 2911, 2921, 2931, 2911, 2921, 2931, 3111, 3121, 3131, 3141
An den Seiten der Mittelgänge sind jeweils Regale 2712, 2713, 2722, 2723, 2732, 2812, 2813, 2822, 2823, 2832, 2912, 2913, 2922, 2923, 2932, 3112, 3113, 3122, 3123, 3132, 3142, 3143 angeordnet. Selbstverständlich sind Ausführungen mit anderen Gestaltungen der Lagerpositionen gleichfalls möglich.

Bei den anhand der Abbildungen 27, 28, 29, 31, 33 und 35 dargestellten Ausführungsformen der Erfindung werden von aus den Depoteinrichtungen vereinzelt übergebene Pakete auf Förderbändern transportiert und gegebenenfalls gescannt und zu Endstellen transportiert.

Die Abbildungen 27, 28, 29, 30, 31 und 35 zeigen die Transfereinrichtungen 5130, 5336 in einem Einsatz bei der Entladung von Depoteinrichtungen 2710, 2720, 2730, 2810,1820, 2830, 2910,1920, 2930, 3110, 3120, 3130, 3140, 2710, 2720, 2730.

### Abbildung 27

Abbildung 27 zeigt eine bevorzugte Ausführungsform einer erfindungsgemäßen Transfereinrichtung 5130, 5336.

### Abbildung 28

Abbildung 28 zeigt eine vollautomatische Ausgestaltung der Transfereinrichtungen 5130, 5336 mit Ausrichtungsdrehteller und -federung, die auf "neutral" gestellt sind, da die Pakete bereits vereinzelt von der Transporteinheit aus der Depoteinrichtung heraus befördert sind.

### Abbildung 29

Abbildung 29 zeigt eine Transfereinrichtung 5130, 5336 mit Einsatz von zwei und mehr Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 . Um die Entladung einer Depoteinrichtung 140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) zu beschleunigen, können alternativ auch zwei oder mehr Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 zur Entladung einer Depoteinrichtung (140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) eingesetzt werden.

Es ist vorteilhaft, dass zur Entladung einer Depoteinrichtung (140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) eine oder mehrere, vorzugsweise mindestens zwei Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 zur Aufnahme eines Paketes aus der Depoteinrichtung 140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) hin zum Förderband eingesetzt werden. Für die Strecke von der Depoteinrichtung (140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322 zum Förderband wird eine ringförmige Führungsschiene (Führungsschiene analog wie in der Depoteinrichtung) genutzt, welche nahtlos an die Führungsschiene der Depoteinrichtung 140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322 andockt.

Aus Perspektive der Depoteinrichtung 140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322 fährt eine Transporteinheit mit einem aus der Depoteinrichtung entladenen Paket Transporteinheit z.B. über die rechte Seite der Führungsschiene zum Förderband, um ein Paket zu übergeben. Parallel hierzu wartet eine zweite "leere" Transporteinheit dann auf der linken Seite der Führungsschiene, um ein weiteres zu entladendes Paket aus der Depoteinrichtung zu übernehmen. Sobald die mit einem Paket bestückte Transporteinheit die Depoteinrichtung (140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) verlassen hat und zum Förderband fährt, fährt die leere Transporteinheit in die Depoteinrichtung 140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322 um ein neues Paket zur Entladung zu übernehmen.

Ist die Depoteinrichtung (140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) final entladen, so verbleibt nur eine Transporteinheit in der Depoteinrichtung, um bei einem neuen Beladevorgang neue Pakete einzulagern.

Des Weiteren können die im Logistikzentrum verbleibenden Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 verbunden mit einer Führungsschiene zwischen den einzelnen Endstellen, auch zur Entladung anderer Depoteinrichtungen eingesetzt werden.

### Abbildung 31

Abbildung 31 zeigt eine halbautomatisierte Implementation einer erfindungsgemäßen Endstelle. Hier ist keine Veränderung der heutigen Endstellen notwendig, da es durch den Einsatz von Robotern zu einer "quasi-manuellen Überbrückung)" zwischen der bereits heute bestehenden Endstelle und dem Förderband zu der Depoteinrichtung (140, 240, 250, 340, 350, 2710,1720, 2730, 2810,1820, 2830, 2910,1920, 2930, 3110, 3120, 3130, 3140, 2710, 2720, 2730, 2810, 2820, 2830, 2910, 2920, 2930, 3110, 3120, 3130, 3140, 5242, 5243, 5321, 5322) kommt: Ein Roboter betreut dabei 2-3 Endstellen im Wechsel, übernimmt dabei die aus den Depoteinrichtungen entladenen Pakete von Förderbändern, führt sie den jeweiligen Endstellen zu und wechselt dann zu einem neuen Förderband.

Die dargestellten Ausführungsformen können in den heute bestehenden Logistikzentren (Depots) eingesetzt werden.

### Abbildung 31a

Abbildung 31a ist eine vorteilhafte Abwandlung der zuvor anhand von Abbildung 31 dargestellten erfindungsgemäßen Transfereinrichtung 5130, 5336. Jedoch werden bei der anhand von Abbildung 31a dargestellten Ausführungsform die bei der Ausführungsform gemäß Abbildung 31 vorhandenen Transportbänder entfernt und sind vollkommen durch Transporteinheiten 3101a, 3102a, 3103a, 3104a, 3105, 3106a, 3153a, 3154a, 3163a, 3164a, 3165a, 3166a, 31203a, 31204a, 31205a und 31206a ersetzt.

### Be- und Entlademodi im Detail

### Überblick

Eine vorteilhafte Ausführungsform der in dieser Anmeldung dargestellten Depoteinrichtungen sieht vor, wenigstens eine der Depoteinrichtungen so auszugestalten, dass sie wenigstens zwei verschiedene Belademodi und/oder wenigstens zwei verschiedene Entlademodi aufweist.

Ein erster Belademodus ist in dieser Anmeldung beispielhaft anhand der Beladung der Depoteinrichtungen 140, 240, 250, 340, 350,1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 im Bereich der Transfereinrichtungen dargestellt.

Der erste Belademodus (Schnellbelademodus) ist vorzugsweise dadurch gekennzeichnet, dass in diesem Belademodus eine unterbrechungsfreie Wegstrecke zwischen einer Umgebung der Depoteinrichtung und einem Innenraum der Depoteinrichtung 140, 240, 250, 340, 350,1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 gebildet ist.

Entlang der unterbrechungsfreien Wegstrecke können Pakete unterbrechungsfrei von außen bis in die Lagerpositionen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 (Beladung) und/oder von den Lagerpositionen der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 nach außen (Entladung) transportiert werden.

Sowohl bei den in dieser Anmeldung beispielhaft erläuterten Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 als auch bei Depoteinrichtungen mit einem hiervon verschiedenen Aufbau ist es zweckmäßig, eine Schleuse 1601 vorzusehen, wie sie beispielhaft in den Abbildungen 16c und 16d dargestellt ist.

Es ist besonders vorteilhaft, die Schleuse 1601 nur während eines Belademodus für eine individuelle Einlagerung eines Pakets und/oder während eines Entlademodus für eine individuelle Entnahme eines Pakets zwischen einer Lagereinrichtung der Depoteinrichtung und einem Ausgabemittel, beispielsweise dem in Abbildung 16c dargestellten Übergabeschlitten 1695 vorzusehen. Ein derartiger Übergabeschlitten 1695 kann jedoch auch Bestandteil einer der Transporteinheiten und/oder einer der Übergabeeinheiten sein.

Die Schleuse 1601 ist nicht auf die in den Abbildungen 16b,16c, 22a und 22b dargestellten Ausführungsformen beschränkt, sondern kann alle Funktionen und Ausgestaltungen von Warenschleuse, insbesondere mit einem elektronisch gesicherten Zugang, aufweisen.

In einem Belademodus für eine unterbrechungsfreie Beladung (Schnellbelademodus) der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322, insbesondere bei einer Beladung im Bereich der Transfereinrichtungen ist es sinnvoll, dass die Schleuse 1601 aus einem Transportweg für Pakete 1044, 1401, 1667, 1698, 1701, 1702, 1703, 1704, 1705, 1709, 1751, 1752, 1753, 1754, 1755, 1759, 1761, 1762, 1763, 1764, 1765, 1769,1801, 1802, 1806, 1807, 1809, 1851, 1855, , 1857, 1858, 1859, 1861, 1865, 1867, 1868, 1869, 1901, 1902, 1903, 1904, 1905, 1906, 1907, 1951, 1952, 1953, 1954, 1955, 1956, 1957, 1961, 1962, 1963, 1964, 1965, 1966, 1967, 2001a, 2001b, 2002, 2003,2101, 2102, 2103, 2104, 2105, 2106, 2107, 2151, 2152, 2153, 2154, 2155, 2156, 2157, 2161, 2162, 2163, 2164, 2165, 2166, 2167, 21201, 21202, 21203, 21204, 21205, 21206, 21207, 2298, 2320, 2321, 2322, 2701, 2702, 2703, 2704, 2705, 2709, 2751, 2752, 2753, 2754, 2755, 2761, 2762, 2763, 2764, 2765, 2769, 2801, 2802, 2806, 2807, 2808, 2809, 2851, 2855, 2857, 2858, 2859, 2861, 2865, 2867, 2868, 2869, 2901, 2902, 2903, 2904, 2905, 2906, 2907, 2951, 2952, 2953, 2954, 2955, 2956, 2961, 2962, 2963, 2964, 2965, 2966, 2967, 3101, 3102, 3103, 3104, 3105, 3106, 3107, 3151, 3152, 3153, 3154, 3155, 3156, 3157, 3161, 3162, 3163, 3164, 3165, 3166, 3167, 3202, 3203, 3204, 3262, 3263, 3264, 3265, 3267, 3268, 3273, 3275, 3277, 3278, 3283, 3285, 3287, 3288, 3301, 3302, 3302, 3304, 3305, 3306, 3307, 3351, 3352, 3352, 3354, 3355, 3356, 3359, 3361, 3362, 3363, 3364, 3365, 3366, 3367, 3501, 3502, 3503, 3504, 3505, 3506, 3551, 3552, 3553, 3554, 3555, 3556, 3559, 3561, 3562, 3563, 3564, 3565, 3566, 3567, 3701, 3702, 3703, 3704, 3705, 3706, 3707, 3751, 3752, 3753, 3754, 3755, 3756, 3759, 3761, 3762, 3763, 3764, 3765, 3766, 3767, 31201, 31202, 31203, 31204, 31205, 31206, 31207 entfernt wird.

Eine Schleuse 1601 befindet sich während eines gesicherten Entlademodus, insbesondere für eine Übergabe eines Pakets, zwischen einer Lagereinrichtung der Depoteinrichtung und einem Ausgabemittel, beispielsweise dem in Abbildung 16c dargestellten Übergabeschlitten 1695.

In einem Entlademodus für eine unterbrechungsfreie Entladung (Schnellentlademodus) der Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322, insbesondere bei einer Entladung im Bereich der Transfereinrichtungen ist es sinnvoll, dass die Schleuse 1601 aus einem Transportweg für Pakete 1044, 1401, 1667, 1698, 1701, 1702, 1703, 1704, 1705, 1709, 1751, 1752, 1753, 1754, 1755, 1759, 1761, 1762, 1763, 1764, 1765, 1769,1801, 1802, 1806, 1807, 1809, 1851, 1855, , 1857, 1858, 1859, 1861, 1865, 1867, 1868, 1869, 1901, 1902, 1903, 1904, 1905, 1906, 1907, 1951, 1952, 1953, 1954, 1955, 1956, 1957, 1961, 1962, 1963, 1964, 1965, 1966, 1967, 2001a, 2001b, 2002, 2003,2101, 2102, 2103, 2104, 2105, 2106, 2107, 2151, 2152, 2153, 2154, 2155, 2156, 2157, 2161, 2162, 2163, 2164, 2165, 2166, 2167, 21201, 21202, 21203, 21204, 21205, 21206, 21207, 2298, 2320, 2321, 2322, 2701, 2702, 2703, 2704, 2705, 2709, 2751, 2752, 2753, 2754, 2755, 2761, 2762, 2763, 2764, 2765, 2769, 2801, 2802, 2806, 2807, 2808, 2809, 2851, 2855, 2857, 2858, 2859, 2861, 2865, 2867, 2868, 2869, 2901, 2902, 2903, 2904, 2905, 2906, 2907, 2951, 2952, 2953, 2954, 2955, 2956, 2961, 2962, 2963, 2964, 2965, 2966, 2967, 3101, 3102, 3103, 3104, 3105, 3106, 3107, 3151, 3152, 3153, 3154, 3155, 3156, 3157, 3161, 3162, 3163, 3164, 3165, 3166, 3167, 3202, 3203, 3204, 3262, 3263, 3264, 3265, 3267, 3268, 3273, 3275, 3277, 3278, 3283, 3285, 3287, 3288, 3301, 3302, 3302, 3304, 3305, 3306, 3307, 3351, 3352, 3352, 3354, 3355, 3356, 3359, 3361, 3362, 3363, 3364, 3365, 3366, 3367, 3501, 3502, 3503, 3504, 3505, 3506, 3551, 3552, 3553, 3554, 3555, 3556, 3559, 3561, 3562, 3563, 3564, 3565, 3566, 3567, 3701, 3702, 3703, 3704, 3705, 3706, 3707, 3751, 3752, 3753, 3754, 3755, 3756, 3759, 3761, 3762, 3763, 3764, 3765, 3766, 3767, 31201, 31202, 31203, 31204, 31205, 31206, 31207 entfernt wird.

Für den in Abbildung 16c und 16d dargestellten Beladungsmodus ist es vorteilhaft, die Schleuseneinrichtung 1601 einzusetzen, so dass sichergestellt ist, dass kein unbefugter Gegenstand und erst recht keine unbefugten Personen in ein Inneres der Depoteinrichtung gelangen können.

Der in den Abbildungen 16c und 16d dargestellte Beladungsmodus eignet sich insbesondere für einen Einsatz der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 in Bereichen, in denen die Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 für Empfänger von Paketen und/oder für Einlieferer von Paketen zugänglich ist. Dieser Beladungsmodus ist insbesondere dann zweckmäßig, wenn sich die Depoteinrichtungen an Standorten für die Übergabe von Paketen, insbesondere an Standorten, insbesondere Aufstellorten als gemeinsame optimierte Übergabepunkte für die Übergabe der Pakete befinden.

Ebenso ist dies ein vorteilhafter Belademodus von Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 für eine Übergabe von Paketen an individuellen Übergabepunkten.

Es ist ferner vorteilhaft, die Schleuseneinrichtung 1601 auch bei einem Entlademodus einzusetzen, bei dem sichergestellt wird, dass kein unbefugter Gegenstand und erst recht keine unbefugten Personen in ein Inneres der Depoteinrichtung gelangen können. Dieser Entlademodus mit der Schleuseneinrichtung 1601 gleichfalls dann besonders zweckmäßig, wenn sich die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 an Standorten für die Übergabe von Paketen insbesondere an Standorten, insbesondere Aufstellorten als gemeinsame optimierte Übergabepunkte für die Übergabe der Pakete befinden.

Bei beiden Belademodi und/oder beiden Entlademodi ist es vorteilhaft, dass Transporteinheiten die Einlagerung von Paketen, insbesondere die Einlagerung von Paketen in die Depoteinrichtungen 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 durchführen und/oder unterstützen.

### Spezielle Ausgestaltungsformen

### Individuelle Übergabepunkte

Es ist vorteilhaft, die in dieser Anmeldung dargestellten Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 als Übergabeeinheiten einzusetzen. Es ist hierbei möglich, Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 unverändert einzusetzen. Für den Einsatz der Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 als Übergabeeinheiten ist es zweckmäßig, die Transporteinheiten 1041, 1241, 1641, 1940, 1941, 1942,1943,1944,1945, 2140, 2141, 21422, 2145, 2101a, 2102a, 2103a, 2104a, 2105, 2106a, 2140, 2141, 2153a, 2154a, 2163a, 2164a, 2165a, 2166a, 21203a, 21204a, 21205a, 2145, 21206a, 3141, 31422, 3145, 3101a, 3102a, 3103a, 3104a, 3105, 3106a, 3140, 3141, 3153a, 3154a, 3163a, 3164a, 3165a, 3166a, 31203a, 31204a, 31205a, 3145, 31206a, 3740,3741,3742, 3733, 3744, 3745 mit zusätzlichen Mitteln auszustatten, um sie besser als Übergabeeinheiten einsetzen zu können und insbesondere während eines Transports des Pakets zwischen der Depoteinrichtung und dem individuellen Übergabepunkt des Empfängers das Paket vor Umwelteinflüssen und/oder vor einer unberechtigten Entnahme zu schützen.

Dies gilt entsprechend auch für den Transport des Pakets zwischen dem individuellen Übergabepunkt eines Einlieferers sowie für den Transport des Pakets zwischen der Depoteinrichtung und individuellen Übergabepunkten für eine Übergabe von Paketen an einzelne Empfänger und/oder von einzelnen Einlieferern.

Hierfür ist es beispielsweise zweckmäßig, Übergabeeinheiten einzusetzen, die eine Abdeckung für das Paket und/oder einen Greifarm für eine Übergabe des Pakets enthalten.

Die Greifarme der Übergabeeinheiten und/oder der Transporteinheiten weisen in einer bevorzugten Ausgestaltung, insbesondere dann, wenn die Transporteinheiten auch als Übergabeeinheiten eingesetzt werden können, wenigstens einen Greifarm, ähnlich den Greifarmen der Roboter im Bereich der Endstellen 21110, 21120, 21130, 21140, 31110, 31120, 31130, 31140 beziehungsweise den Greifarmen innerhalb der Depoteinrichtungen auf.

Um einen sicheren Einsatz der Übergabeeinheit auch in einem aufwändigeren Gelände und/oder bei Treppen und Steigungen sowie Gefällen zu ermöglichen, ist es zweckmäßig, eine Übergabeeinheit einzusetzen, die Beine aufweist, wie beispielsweise den Roboterhund Spot von Boston Dynamics / Hyundai oder einen anderen Roboter mit einer vergleichbaren Funktionalität.

Ein derartiger Roboter ist mit weiteren Vorteilen verbunden, Diese Vorteile ergeben sich insbesondere bei einem möglichen Einsatz von Mitteln zur Mensch-Maschine-Kommunikation und/oder zur Kommunikation mit einer Benutzerkomponente, insbesondere einem Smartphone, einer Smart Watch oder smarten Brille (Smartglas)

Die individuellen Übergabepunkte können eine unterschiedliche Beschaffenheit aufweisen. Es ist beispielsweise möglich, dass sich ein Empfänger an dem Übergabepunkt befindet und dass eine Übergabe des Pakets unmittelbar an den Empfänger erfolgt. Ebenso ist eine Übergabe an andere Personen und/oder an technische Einrichtungen einschließlich weiterer Depoteinrichtungen oder Paketboxen als Ersatz für den Empfänger und/oder ein Ablegen des Pakets an dem individuellen Übergabepunkt oder einem anderen, mit einem Empfänger des Pakets und/oder Einlieferer des Pakets vereinbarten anderen Übergabepunkt, vorzugsweise einem in der Nähe befindlichen und gegen unbefugte Einsichtnahme geschützten Ort möglich.

Besonders zweckmäßig ist eine Weiterbildung der Erfindung, bei der sich auch im Bereich wenigstens eines Teils der individuellen Übergabepunkte eine Depoteinrichtung befindet.

### Alternative Belademöglichkeit für Depoteinrichtung

### Abbildung 23

Abbildung 23 beschreibt eine zusätzliche Möglichkeit, eine Depoteinrichtung zu beladen.

Die Depoteinrichtung 2301 wird dazu mit ihrer Transporteinrichtung an ein Zustelldepot 2302 herangefahren. Um die Lagereinrichtung 2303 als Ganzes aus der Depoteinrichtung herausfahren zu können, wird die Tür 2304 auf der Rückseite der Depoteinrichtung vollständig geöffnet.

Innerhalb des Zustelldepots kann nun das Förderband 2310 der Transfereinrichtung bis zwischen die beiden Regale der Lagereinrichtung verlängert werden. Die Pakete 2320 werden durch eine Paketidentifizierungseinheit 2311 erfasst und ihre endgültige Lagerposition wird abgefragt bzw. angezeigt.

Die Beladung der Lagereinrichtung kann dann manuell durch Personal oder durch Transporteinheiten erfolgen.

Diese Lösung ist auch dann anwendbar, wenn die Depoteinrichtung nicht als Paketmobil, sondern lediglich als vorbepacktes Zustellfahrzeug eingesetzt wird.

### Paternostersysteme als alternative Depoteinrichtungen

### Abbildungen 24 und 25

Abbildung 24 und Abbildung 25 sind Prinzipdarstellungen einer ein Paternostersystem aufweisenden erfindungsgemäßen Depoteinrichtung, wobei Abbildung 24 eine Aufsicht und Abbildung 25 eine Seitenansicht einer ein Paternostersystem aufweisenden erfindungsgemäßen Depoteinrichtung darstellt.

Auf jeder der Ebenen 2501-2510 befindet sich ein Drehband 2401, das vorteilhafterweise von einer Mechanik aus zwei Motoren 2402 je Ebene und zusätzlichen Zahnrädern 2403, 2404 und 2405 je Ebene oder einer anderen geeigneten mechanischen Einrichtung angetrieben wird. An jedem Drehband 2401 sind mehrere Paketboxen 2406 befestigt. Sobald ein Empfänger ein Paket abholen oder ein Einlieferer ein Paket einlegen will, wird zunächst die richtige Lagerposition innerhalb der mobilen Depoteinrichtung ermittelt. Sodann werden die Motoren mit Hilfe von ineinander verfahrbaren Teleskopstangen 2511-13 auf die Höhe der richtigen Ebene angehoben. Daran anschließend bewegt sich das Drehband so lange, bis die richtige Paketbox 2406 vor das Ausgabefach 2407 gelangt, das sich dann öffnet.

### Multiple Depoteinrichtungen

### Abbildung 26

In Abbildung 26 ist ein eine Depoteinrichtung dargestellt, die mit mehreren einzelnen Depoteinrichtungen 2611, 2621, 2631, 2641, 2651 und 2661 zusammenwirken kann.

Die in Abbildung 26 dargestellte Depoteinrichtung enthält auch zwischen den einzelnen Depoteinrichtungen 2611, 2621, 2631, 2641, 2651 und 2661 Lagereinrichtungen für eine Lagerung von Paketen.

In einer vorteilhaften Ausgestaltung der in Abbildung 26 dargestellten Depoteinrichtung sind Transporteinheiten 2642, 2643, 2644 und 2645 zwischen den einzelnen Depoteinrichtungen 2611, 2621, 2631, 2641, 2651 und 2661 sowie in den dazwischen befindlichen Bereichen der gesamten Depoteinrichtung verfügbar.

Die in Abbildung 26 dargestellte Depoteinrichtung ist sowohl für eine Zwischenspeicherung von Paketen als auch für Verteilvorgänge, Sortiervorgänge und Kommissioniervorgänge zweckmäßig einsetzbar.

### Verteilzentren der Zukunft

### Abbildungen 32, 34, 36 und 37

In erfindungsgemäßen Verteilzentren für Pakete können zusätzlich und/oder alternativ besonders kostengünstige und effiziente Lösungen eingesetzt werden.

Abbildungen 32, 34, 36 und 37 zeigen bevorzugte Ausgestaltungen erfindungsgemäßer Verteilzentren für die in diesen Abbildungen als Rechtecke dargestellten Pakete , 3202, 3203, 3204, 3262, 3263, 3264, 3265, 3267, 3268, 3273, 3275, 3277, 3278, 3283, 3285, 3287, 3288, 3301, 3302, 3302, 3304, 3305, 3306, 3307, 3351, 3352, 3352, 3354, 3355, 3356, 3359, 3361, 3362, 3363, 3364, 3365, 3366, 3367, 3501, 3502, 3503, 3504, 3505, 3506, 3551, 3552, 3553, 3554, 3555, 3556, 3559, 3561, 3562, 3563, 3564, 3565, 3566, 3567, 3701, 3702, 3703, 3704, 3705, 3706, 3707, 3751, 3752, 3753, 3754, 3755, 3756, 3759, 3761, 3762, 3763, 3764, 3765, 3766, 3767, 31201, 31202, 31203, 31204, 31205, 31206, 31207.

Hierbei können Pakete auf verschiedene Arten von einem Hauptband auf Endstellen befördert werden. Beispielsweise können Kippschalen auf einem Hauptsorter eingesetzt werden, die im Bereich der Ziel-Endstelle durch einen elektrischen Impuls in Richtung der Endstelle kippen und dadurch das Paket mittels Ausnutzung der Schwerkraft abladen.

Bei Förderbändern - z.B. Gummibahnen - wird in der Regel die gleiche Technik verwendet, die bei einem Flipper-Automaten die Kugel mittels Hebel wieder in den oberen Teil des Spielfeldes befördert. Dieser Hebel schwenkt am Förderband von der Seite über das Förderband und leitet das Paket an der vorbestimmten Endstelle im 45°-Winkel ab

Werden Rollenbänder verwendet, bei denen die Rollen einzeln motorisch angetrieben werden, können durch die Zwischenräume zwischen den einzelnen Rollen Stäbe ausgefahren werden, z.B. entlang der Linie 3253 die dann im gleichen Winkel wie beim Hebel am Förderband die Pakete an der vorbestimmten Endstelle abgeleitet werden.

Die Abbildungen 32, 34, 36 und 37 zeigen bevorzugte Ausgestaltungen erfindungsgemäßer Verteilzentren.

Die in den Abbildungen 32, 34, 36 und 37 dargestellten Verteilzentren für Pakete 3202; 3203; 3204; 3262; 3263; 3264; 3267; 3268; 3273; 3277; 3278; 3283; 3287; 3288, 3301; 3302; 3303; 3304; 3305; 3306; 3307; 3351; 3352; 3353; 3354; 3355; 3356; 3359; 3361; 3362; 3363; 3364; 3365; 3366; 3367, 3501; 3502; 3503; 3504; 3505; 3506; 3507; 3551; 3552; 3553; 3554; 3555; 3556; 3559; 3561; 3562; 3563; 3564; 3565; 3566; 3567, 3701; 3702; 3703; 3704; 3705; 3706; 3707; 3751; 3752; 3753; 3754; 3755; 3756; 3759; 3761; 3762; 3763; 3764; 3765; 3766; 3767 sind vorzugsweise so ausgestaltet, dass sie Mittel zum vereinzelten Transport der Pakete 3202; 3203; 3204; 3262; 3263; 3264; 3267; 3268; 3273; 3277; 3278; 3283; 3287; 3288, 3301; 3302; 3303; 3304; 3305; 3306; 3307; 3351; 3352; 3353; 3354; 3355; 3356; 3359; 3361; 3362; 3363; 3364; 3365; 3366; 3367, 3501; 3502; 3503; 3504; 3505; 3506; 3507; 3551; 3552; 3553; 3554; 3555; 3556; 3559; 3561; 3562; 3563; 3564; 3565; 3566; 3567, 3701; 3702; 3703; 3704; 3705; 3706; 3707; 3751; 3752; 3753; 3754; 3755; 3756; 3759; 3761; 3762; 3763; 3764; 3765; 3766; 3767, enthalten.

Vorzugsweise enthalten die Verteilzentren Transfereinrichtungen zum vorzugsweise vereinzelten Transfer der Pakete sowie Mittel zur vereinzelten Ausschleusung der Pakete 3202; 3203; 3204; 3262; 3263; 3264; 3267; 3268; 3273; 3277; 3278; 3283; 3287; 3288, 3301; 3302; 3303; 3304; 3305; 3306; 3307; 3351; 3352; 3353; 3354; 3355; 3356; 3359; 3361; 3362; 3363; 3364; 3365; 3366; 3367, 3501; 3502; 3503; 3504; 3505; 3506; 3507; 3551; 3552; 3553; 3554; 3555; 3556; 3559; 3561; 3562; 3563; 3564; 3565; 3566; 3567, 3701; 3702; 3703; 3704; 3705; 3706; 3707; 3751; 3752; 3753; 3754; 3755; 3756; 3759; 3761; 3762; 3763; 3764; 3765; 3766; 3767 zu den Transfereinrichtungen.

Die Pakete werden - wie in Abbildung 32 gezeigt - beispielsweise nach Entladung vorzugsweise bereits auf einem Haupttransportband 3240 von einem 6-Seitenscanner (inkl. Waage) 3250 zur Ermittlung des Paketidentifikationscodes und des Raummaßes (Höhe/Breite/Tiefe) gescannt. Parallel hierzu wird das Gewicht des einzelnen Paketes ermittelt.

Ein Einsatz eines digitalen Zwillings zu jedem Paket ist besonders vorteilhaft.

Die Scannung eines Pakets erfolgt entweder zum Zwecke einer Identifizierung oder zur Kontrolle.

Nach Scannung auf dem Haupttransportband (Identifizierung) wird das Paket bis zum Abgang beispielsweise auf ein weiteres Transportband, beispielsweise das Endstellenband 32141 (je ein Endstellenband je Depoteinrichtung) transportiert. Das Paket wird dann durch entsprechende Mittel 3253 auf das entsprechende Endstellenband ausgeschleust. Das Paket wird in der Art und Weise ausgeschleust, dass es bereits vereinzelt auf ein Band befördert wird, von welchem es dann final einer Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 übergeben wird. Dies ist möglich, weil bei Depoteinrichtungen der Beladevorgang aufgrund Automatisierung mehrere Stunden und somit deutlich länger dauern kann als bisher, und deshalb die Endstellen keinen Platz zur Pufferung von Paketen brauchen: Jedes Paket wird einzeln ausgeschleust und dann einzeln auf einem Förderband, insbesondere einer Rollenbahn zur Übergabeeinheit gelangen.

Sollten dennoch mehr Pakete auf die Endstelle ausgeschleust werden, als am Ende der Endstelle in das Depotfahrzeug beladen werden, so kann es zu einem "Stau" auf der Endstelle kommen. Dann stellt das System sicher, dass keine zusätzlichen Pakete auf die Endstelle ausgeschleust werden. Zudem ist durch Federungsmechanismen an den Seiten der Endstellen sicherzustellen, dass sich Pakete im Stau nicht verkeilen bzw. sich ihre Reihenfolge ändert.

Das Haupttransportband ist hier vorzugsweise abweichend vom Stand der Technik auf einer Ebene wie das Endstellenband. D.h. das Paket wird direkt vom Haupttransportband auf das Endstellenband gelangen und wäre somit automatisch vereinzelt. Es bleibt gegenüber anderen Paketen in seiner Reihenfolge auf dem Endstellenband unverändert, bis es final in Lagerpositionen der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 eingelagert wird. Die Pakete gelangen in der Reihenfolge, in der sie vom Haupttransportbandscanner gescannt werden, auf das Endstellenband und werden auch in dieser Reihenfolge an die Transporteinheit übergeben.

Zur Sicherstellung (Kontrolle), dass es sich um das entsprechende Paket handelt, welches an die Transporteinheit übergeben wird, kann einerseits ein weiterer 6-Seitenscanner je Endstellenband eingesetzt werden (Scannung des Paketidentifikationscodes). Besonders vorteilhaft ist es, alternativ oder zusätzlich eine Waage einzusetzen (Vergleich des Gewichts mit dem Gewicht, welches die Waage auf dem Hauttransportband ermittelt hat) oder eines Raummaßscanners (Vergleich des Raummaßes mit dem Raummaß, welches auf dem Haupttransportband ermittelt wurde). Die Informationen, welche auf dem Haupttransportband ermittelt wurden, werden unmittelbar an eine Transfereinrichtung 5130, 5336 übermittelt, so dass diese vor Eintreffen des Pakets bereits dem Messinstrument, insbesondere einem 6-Seitenscanner/Waage/Raummaßscanner zum Abgleich zur Verfügung stehen; d.h. die Steuerkomponente 5012 kann berücksichtigen, dass ein Paket vom Haupttransportbandscanner bis zum Messinstrument des entsprechenden Endstellenbands z.B. 23 Sekunden benötigt. Somit erfasst das Messinstrument der Endstelle 23 Sekunden nach Erfassung der Daten auf dem Haupttransportband die Daten und gleicht diese mit dem Daten des zu erwartenden Pakets ab.

Sind die Daten, die vom Haupttransportbandscanner/-waage ermittelt wurden, mit den Daten des Messinstrumentes der Depoteinrichtung-Endstelle identisch, wird das Paket an die Transporteinheit übergeben. Die Transporteinheit hat dann die entsprechenden Lagerplatzkoordinaten bereits von einer Steuerkomponente 5012 erhalten und lagert das Paket entsprechend in die Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 ein.

Sind die Daten, die vom Haupttransportbandscanner/ -waage ermittelt wurden, mit den Daten des Messinstrumentes der Depoteinrichtung-Endstelle nicht identisch, wird automatisch geprüft, ob die ermittelnden Daten der Depoteinrichtung-Endstelle mit anderen ermittelnden Paketdaten vom Haupttransportbandscanner/-waage identisch sind. Sind diese Daten mit dem eines anderen Pakets identisch, welches ebenfalls in dieses Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 eingelagert werden soll, so wird dieses Paket mit den korrigierten Daten an die Transporteinheit übergeben.

Sollte das Paket mit keinem Paketidentifikationsmerkmal für diese Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 identisch sein, wird dieses Paket ausgeschleust, in einen "no read" (Nachbearbeitungsbereich) Bereich transportiert und nachbehandelt.

### Abbildung 30

Abbildung 30 zeigt einen Ablaufplan für die Erstellung eines Versandlabels im Stand der Technik.

Zunächst ist hierbei die Erstellung des Versandlabels selbst erforderlich. Dabei muss darauf geachtet werden, dass das Versandlabel zwei verschiedene Barcodes enthält, einen Identcode sowie einen Leitcode inklusive einer korrekt codierten Zieladresse (Zustellinformation).

Danach muss das Versandlabel gedruckt werden, wobei darauf zu achten ist, dass das Label ohne Druckfehler ausgegeben und die Größe der Barcodes sowie von Ruhezonen zwischen dem Barcode und dem Labelrand eingehalten werden.

Schließlich ist auch ein dauerhaftes Anbringen des Versandlabels auf dem Paket erforderlich, wobei darauf geachtet werden muss, dass das Label komplett glatt aufgeklebt ist und nicht durch Umschnürungen oder Klebeband verdeckt wird.

In besonders bevorzugten Ausführungsform in der Erfindung ist es hingegen möglich, auf jegliche Versandlabel zu verzichten.

Selbst wenn für den Einsatz der Erfindung Versandlabel eingesetzt werden, ist es in bevorzugten Ausführungsformen nicht erforderlich, die zuvor dargestellte codierte Zieladresse (Zustellinformation) einzugeben, da es ausreicht, das Paket selber zu identifizieren.

In vorteilhaften Weiterbildungen der Erfindung ist es somit möglich, auf bekannte Versandlabel und/oder auf einzelne, mehrere oder sämtliche dieser Verfahrensschritte zu verzichten. Die Versandlabel können durch andere Kennzeichnungsmerkmale ersetzt werden, beziehungsweise es ist möglich, ganz auf sie zu verzichten.

In besonders bevorzugten Ausführungsformen der Erfindung erfolgt der Verzicht auf ein Versandlabel beispielsweise wie bei dem anhand von Abbildung 44 erläuterten Paket, das virtuell mit einem von einer Steuereinrichtung generierten Paketidentifizierungscode verknüpft wird. Dieser Paketidentifizierungscode kann ferner mit einem oder mehreren anderen Paketidentifizierungsmerkmalen verknüpft werden.

### Abbildungen 39 und 40

Abbildung 39 zeigt ein Versandlabel nach dem Stand der Technik und Abbildung 40 zeigt ein Paket nach dem Stand der Technik; das mit einem Versandlabel versehen ist, dessen Erstellung zuvor anhand von Abbildung 30 dargestellt wurde.

Es ist möglich, auch derartige Pakete nach dem Stand der Technik erfindungsgemäß zu bearbeiten und insbesondere Übergabevorgänge, Einlagerungen und Transport auch dieser Pakete erfindungsgemäß durchzuführen, wobei es vorteilhaft ist, einzelne Informationen, insbesondere die Zustelladresse nicht zu erfassen, insbesondere weil besonders bevorzugte Ausführungsformen der Erfindung eine flexiblen Zuordnung von Paketen zu Empfängern ermöglicht, insbesondere wie es beispielhaft anhand der Abbildungen 44 und 45 dargestellt ist.

### Abbildung 41

Abbildung 41 zeigt ein Warenobjekt nach dem Stand der Technik. Dieses Warenobjekt ist ein Beispiel aus einer zahlenmäßig nicht begrenzten Anzahl von Warenobjekten, die mit den erfindungsgemäßen Bearbeitungsvorgängen, insbesondere Übergabevorgängen, Einlagerungen und Transport bearbeitet werden kann.

Insbesondere kann mittels einer Kameraeinrichtung in Abbildung 41 dargestellte Abbildung erstellt und als Paketidentifikationsmerkmal eingesetzt werden.

Eine vorteilhafte Weiterbildung der Erfindung sieht vor, dass auch Warenobjekte, wie dem beispielhaft in Abbildung 41 dargestellten Warenobjekt, maschinenlesbare Daten zugeordnet werden, wobei die Daten zumindest eine Kennung umfassen, mit der das jeweilige Paket eindeutig identifizierbar ist. Zweckmäßigerweise wird wenigstens eines der in dieser Anmeldung dargestellten Paketidentifikationsmerkmale als Kennung für das jeweilige Paket eingesetzt.

Pakete nach dem Stand der Technik und Warenobjekte nach dem Stand der Technik - wie das beispielhaft in Abbildung 40 dargestellte Paket und das in Abbildung 41 gleichfalls beispielhaft dargestellte Warenobjekt - können somit gleichfalls unter Einbeziehung der dargestellten Bearbeitungsvorgänge als erfindungsgemäße Pakete gehandhabt werden.

### Flexible Regalsysteme

### Abbildungen 43, 43a und 43b

In den Abbildungen 43, 43a, 43b, ist ein erfindungsgemäßes Regalsystem dargestellt. Das erfindungsgemäße Regalsystem eignet sich insbesondere für einen Einsatz in einer Lagereinrichtung einer Depoteinrichtung. Das dargestellte Regalsystem ist jedoch nicht auf einen derartigen Einsatz beschränkt. Beispielsweise kann das Regalsystem auch für andere Lagerlösungen eingesetzt werden.

Das dargestellte Regalsystem zeichnet sich dadurch aus, dass Regalbretter 4320 und/oder seitliche Begrenzungstrennwände 4322 verschiebbar angeordnet werden können.

Dadurch ist es möglich, den Abstand zwischen verschiedenen horizontalen oder senkrechten Ebenen des Regals an variable Anforderungen anzupassen. Besonders vorteilhaft ist es, die Lagereinrichtung an Anzahl und/oder Abmessungen einzulagernder Güter, insbesondere Warenobjekte, einschließlich der in dieser Anmeldung dargestellten Pakete anzupassen.

### Logistiklösung für Wareneinlagerung

### Abbildung 44

Besondere Vorteile der flexiblen Zuordnung von Paketen zu Empfängern sowie der Zuordnung von mehreren einzelnen Gegenständen zu einem Paket werden nachfolgend anhand des in Abbildung 44 dargestellten Pakets erläutert.

Das in Abbildung 44 dargestellte Paket ist als ein offener Karton ausgebildet, der leicht mit anderen Paketen und/oder Warenobjekten befüllt werden kann.

Alternativ ist es möglich, einen schließbaren oder geschlossen Karton oder einen tablettartigen Behälter als Paket einzusetzen.

Eine bevorzugte Ausführung der Erfindung sieht vor, dass mehrere der Kartons ineinander gestapelt sind, und dass der jeweils oberste Karton - beispielsweise mithilfe eines Sauggreifers aus einem nach oben offenem Stapel von Kartons entnommen wird.

Um eine Stapelbarkeit der Kartons und/oder die Entnahme von Kartons aus einem Stapel mehrere Kartons zu erleichtern, ist es vorteilhaft, innerhalb eines Stapels von Kartons mit gleichen Abmessungen und vorzugsweise nach außen geneigten Seitenflächen einzusetzen, wie der beispielhaft in Abbildung 44 dargestellte Karton.

Selbstverständlich ist es möglich, innerhalb der Depoteinrichtungen Behälter/Pakete mit unterschiedlichen Abmessungen einzusetzen, vorteilhafterweise unter Einsatz von mehreren Stapeln, die Kartons mit Abmessungen aufweisen, die innerhalb eines Stapels gleich sind und sich vorzugsweise zwischen verschiedenen Stapeln unterscheiden.

Es ist vorteilhaft, die Behälter in einer ihre Abmessungen berücksichtigenden Lagereinheit zu lagern und aus dieser Lagereinheit zu entnehmen, sobald ein Steuerbefehl zur Durchführung einer oder mehrerer der in dieser Anmeldung dargestellten logistischen Bearbeitungsvorgänge übermittelt wurde.

Es ist nicht notwendig, die Pakete/Kartons physisch mit einem Paketidentifikationscode zu versehen. Die in Abbildung 44 dargestellten Pakete/Kartons sind beispielhaft mit einem Matrixcode versehen. Es kann sich hierbei um einen individuellen Matrixcode für jeden einzelnen Karton / jedes einzelne Paket handeln oder um einen gleichen Matrixcode für mehrere Pakete und/oder mehrere Kartons. Hierbei kann der Matrixcode beispielhaft auf eine Webseite eines Kommissionierers, der den Karton befüllt, oder eines Betreibers des Logistiksystems hinweisen, beispielsweise auf die Webseite www.parcelmobile.com.

Der dargestellte Karton kann an verschiedenen Orten mit Paketen und/oder Warenobjekten befüllt werden. Hierbei ist es grundsätzlich möglich, den Karton von einer ersten Station, in der mit einem oder mehreren ersten Paketen und/oder einem oder mehreren ersten Warenobjekten befüllt wird zu einer zweiten Station zu verfahren, in der er mit einem oder mehreren zweiten Paketen und/oder einem oder mehreren zweiten Warenobjekten befüllt wird oder die gesamte Befüllung des Kartons in einer einzelnen Kommissioniereinrichtung vorzunehmen. Selbstverständlich ist es möglich, die Kartons/Pakete auch in einer größeren Anzahl von Depoteinrichtungen zu befüllen.

Wie bereits bei der Darstellung der lokalen Logistik im Bereich der Depoteinrichtungen dargestellt, ist es mithilfe der erfindungsgemäßen Depoteinrichtungen möglich, Bearbeitungsvorgänge, insbesondere logistische Funktionen durchzuführen. Eine derartige logistische Funktion ist in einer besonders bevorzugten Ausführungsform der Erfindung die Kommissionierung der Pakete und/oder Warenobjekte im Bereich erfindungsgemäßer Depoteinrichtungen, insbesondere innerhalb der Depoteinrichtungen oder in einem Verteilzentrum 5301 für Pakete.

Sobald der Karton für eine Befüllung vorgesehen ist, ist es zweckmäßig, ihn als ein Paket im Sinne der vorliegenden Erfindung zu behandeln. Dies bedeutet insbesondere, dass es möglich ist, ein durch den unbefüllten oder befüllten Karton gebildetes Paket mit einem oder mehreren der folgenden Bearbeitungsvorgänge zu bearbeiten:
- Annahme als Paket, beispielsweise als Einlieferung, insbesondere durch eine Depoteinrichtung oder im Bereich einer Depoteinrichtung;
- Transport des Pakets zwischen der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 und einem Einlieferer und/oder einem Empfänger des Pakets; insbesondere durch eine Übergabeeinheit,
- Transport des Pakets innerhalb der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322, insbesondere zwischen einer Übergabeeinrichtung und Lagerpositionen einer Lagereinrichtung der Depoteinrichtung;
- Transport des Pakets von einer Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 zu einer weiteren Depoteinrichtung;
- Transport des Pakets zwischen der Depoteinrichtung 140, 240, 250, 340, 350, 1710,1720, 1730, 1810,1820, 1830, 1910,1920, 1930, 2110, 2120, 2130, 2140, 2710, 2720, 2730, 2810, 2820, 2830, 2910, 2920, 2930, 3110, 3120, 3130, 3140, 5242, 5243, 5321, 5322 und einer Transfereinrichtung 5130, 5336;
- Transport des Pakets innerhalb der Transfereinrichtung;
- Sortierung des Pakets innerhalb der Transfereinrichtung 5130, 5336;
- Sortierung des Pakets innerhalb des Verteilzentrums für Pakete (Paketverteilzentrum 5301);
- Transport des Pakets zwischen zwei Verteilzentren.

Dies betrifft insbesondere Bearbeitungsvorgänge des Pakets:
- Einlieferung in ein Logistiksystem;
- Transport zu einer Depoteinrichtung;
- Transport zu einer. Lagerposition einer Depoteinrichtung;
- Übergabe an einen Empfänger.

Während es im Stand der Technik erforderlich ist, Pakete physisch sowohl mit einem Paketidentifizierungscode als auch mit einer Zustelladressinformation zu versehen, ist dies in einer bevorzugten Ausführungsform der Erfindung nicht erforderlich, wobei es selbstverständlich möglich ist, den Paketidentifizierungscode und/oder die Zustelladressinformation eines Pakets zu erfassen und/oder als Paketidentifikationsmerkmal(e) zu verwenden.

Sobald von einer Steuereinrichtung einer oder mehrere der zuvor genannten Bearbeitungsvorgänge initiiert werden, insbesondere
- ein Transportvorgang,
- ein Befüllvorgang,
- eine Einlagerung,
- eine Ausgabe,
wird das Paket virtuell mit einem von der Steuereinrichtung generierten Paketidentifizierungscode verknüpft. Dieser Paketidentifizierungscode kann mit einem oder mehreren anderen Paketidentifizierungsmerkmalen verknüpft werden. So ist es beispielsweise möglich, einem Paket mit dem Gewicht von beispielsweise 5,0182 kg und/oder der Lagerposition 58 einen zuvor nicht vergebenen eindeutigen Paketidentifizierungscode 1234567890 zuzuordnen.

Die anhand von Abbildung 44 dargestellte Ausführung des Pakets als ein offener Karton ist eine Ausführungsform, die vor allem dann sinnvoll ist, wenn das Paket an sämtlichen Bearbeitungsvorgängen bis zu einer Übergabe an einen Empfänger vor einer Einwirkung durch Unbefugte geschützt ist.

Erfindungsgemäß wird vorzugsweise eine kontaktlose Logistik bereitgestellt, bei der die Bearbeitungsvorgänge durch Maschinen erfolgen, so dass die Pakete und/oder die in den Paketen befindlichen Gegenstände vor ungewollten Einflüssen geschützt sind. Deswegen kann auf eine aufwändige Umverpackung verzichtet werden.

### Label & Identcodes

### Abbildung 30

### Abbildung 38 bis 42

Während Pakete im Stand der Technik aufwändig mit separat zu erstellenden Labeln des jeweils genutzten Logistikdienstleisters versehen werden müssen, ist es mit der Erfindung möglich, beliebige physische Gegenstände - sofern für die jeweiligen Bearbeitungsvorgänge zu berücksichtigende Abmessungen und/oder Gewichte eingehalten werden - im Logistiksystem handzuhaben, insbesondere durch einen oder mehrere der folgenden Bearbeitungsvorgänge:
- Einlieferung;
- Kommissionierung;
- Sortierung;
- Transport;
- Übergabe.

Pakete nach dem Stand der Technik und Warenobjekte nach dem Stand der Technik - wie das beispielhaft in Abbildung 40 dargestellte Paket und das in Abbildung 41 gleichfalls beispielhaft dargestellte Warenobjekt - können gleichfalls unter Einbeziehung der dargestellten Bearbeitungsvorgänge als erfindungsgemäße Pakete gehandhabt werden, vorzugsweise

Eine vorteilhafte Weiterbildung der Erfindung sieht vor, dass den Paketen weitere Informationen als maschinenlesbare Daten insbesondere durch Einsatz von digitalen Zwillingen zugeordnet werden. Ein Beispiel für die weiteren Informationen sind Abmessungen, insbesondere das Raummaß des Pakets und/oder das Gewicht des Pakets, Fälligkeitsdatum/Zeit, Strafen für verspätete Lieferung, Lieferkosten, Einlieferer - und Empfängerinformationen, Material, Zerbrechlichkeit und Parameter der erforderlichen Art und Weise des Transports des Pakets, z.B. ein Kühllastwagen für Güter, die gekühlt werden müssen.

Es ist zweckmäßig, den Steuerkomponenten eine Protokollfunktionalität hinzuzufügen.

### Zuordnung von Paketen zu Empfängern auf Grundlage von Empfängerattributen

### Abbildung 45

Weitere vorteilhafte Weiterbildungen der erfindungsgemäßen Durchführung von Bearbeitungsvorgängen von Paketen insbesondere unter Einsatz einzelner, mehrerer oder vieler der in Abbildung 5 dargestellten Bearbeitungsvorgänge sind in Abbildung 45 beispielhaft dargestellt.

In Abbildung 45 ist unter anderem eine Zuordnung von Paketen zu Empfängern auf Grundlage von Empfängerattributen dargestellt, wobei Paketen im Laufe ihres Transportweges sich verändernde Anteile von festen Empfängerattributen und variablen Empfängerattributen zugeordnet werden Beispiele für die Empfängerattribute sind die dargestellten Bestandteile der Adresstiefe, insbesondere führende Zahlen einer Postleitzahl (beispielsweise die ersten zwei oder drei Stellen), weitere Stellen der Postleitzahl, in dieser Anmeldung dargestellte Übergabepunkte, sowie alternativ oder zusätzlich komplette Postleitzahl vorzugsweise inklusive Straße, beziehungsweise Straßenabschnitt.

Abbildung 45 zeigt insbesondere eine Prinzipdarstellung einer erfindungsgemäßen Handhabung physischer Pakete durch ein Logistiksystem, insbesondere mit Merkmalen des zuvor anhand beispielhaft vor allem mit Bezug zu Abbildung 5 dargestellten Logistiksystems 5020, vorzugsweise mit einzelnen, mehreren, vielen oder sämtlichen der in den Spalten 5110, 5120, 5130, 5140, 5150, 5160, 5170, 5175, 5180 dargestellten Bearbeitungsvorgänge.

Während in konventionellen Paketbearbeitungssystemen Bearbeitungen von Paketen einen Transport von Paketen von einem festen Versender zu einem oder mehreren vorab festgelegten Empfängern vorsehen - dies ist mit den in der vorliegenden Anmeldung dargestellten Bearbeitungsvorgängen gleichfalls möglich - erlauben die in dieser Anmeldung als vorteilhaft dargestellten Bearbeitungsvorgänge eine flexible Zuordnung von Paketen zu Empfängern und/oder Übergabepunkten, wobei es besonders vorteilhaft ist, eine flexible Zuweisung eines finalen Empfängers und/oder eines finalen Übergabepunktes, der insbesondere aus den in dieser Anmeldung dargestellten gemeinsamen optimierten Übergabepunkten und individuellen Übergabepunkten für einen individuelle Empfänger als finalen Empfänger ausgewählt werden kann, vorzunehmen..

Bei den in Abbildung 45 beispielhaft dargestellten Bearbeitungsvorgängen von Paketen können gleiche, insbesondere gleichbleibende Paketidentifikationsmerkmale und/oder sich von anderen Paketidentifikationsmerkmalen unterscheidende Paketidentifikationsmerkmale zur Identifikation eines Pakets eingesetzt werden. Bei dem Paketidentifikationsmerkmal kann es sich beispielsweise um den in dieser Anmeldung bereits erläuterten Paketidentifikationscode handeln, der ein Paket eindeutig identifiziert. Ein derartiger Paketidentifikationscode wird beispielsweise auf ein Paket aufgebracht, bevor es an ein Logistiksystem oder eine Einheit des Logistiksystems, beispielsweise eine der in dieser Anmeldung dargestellten Annahmeeinheiten, beispielsweise die dargestellten Depoteinrichtungen übergeben wird, oder der Paketidentifikationscode wird bei einer Einlieferung in das Logistiksystem oder einem der Bearbeitungsvorgänge innerhalb des Logistiksystems auf das Paket aufgebracht.

Auch bei den in Abbildung 45 beispielhaft dargestellten Bearbeitungsvorgängen von Paketen sind Ausführungsformen mit umfasst, bei denen der Paketidentifikationscode ein physischer Code ist, der beispielsweise auf das Paket, eine Umverpackung des Pakets oder auf eine Lagereinheit für das Paket und/oder eine Transporteinheit für das Paket aufgebracht ist und/oder Ausführungsformen, bei denen der Paketidentifikationscode ein digitaler Code ist, welcher dem Paket und/oder einem digitalen Zwilling des Pakets zugeordnet wird.

Es ist auch bei den in Abbildung 45 beispielhaft dargestellten Bearbeitungsvorgängen vorteilhaft, wenn der jeweilige digitale Zwilling eines der Pakete, vorzugsweise mehrerer Pakete, noch vorteilhafter möglichst vieler Pakete mindestens ein Paketidentifikationsmerkmal enthält. Bei vorteilhaften Ausführungsformen, bei denen das Paket mit einem Paketidentifikationscode verknüpft ist, ist es vorteilhaft, dass der digitale Zwilling des Pakets den Paketidentifikationscode enthält.

Es ist zweckmäßig, wenigstens eine, vorteilhafterweise mehrere, noch vorteilhafter möglichst viele Informationen in den digitalen Zwilling eines Pakets zu integrieren.

Eine bevorzugte Weiterbildung der Erfindung sieht vor, Bearbeitungsvorgänge durch eine Bereitstellung von Prozessprotokollen, vorteilhafterweise unter Einbeziehung individueller Prozessprotokolle für einzelne Pakete zu ergänzen und/oder die bereitgestellten Prozessprotokolle für eine Steuerung von Bearbeitungsvorgängen einzusetzen. Ein Einsatz individueller Prozessprotokolle für einzelne Pakete hat den Vorteil, dass Echtzeitanwendungen implementiert werden können, und/oder dass eine Verknüpfung zwischen einzelnen Paketen und ihren jeweiligen digitalen Zwillingen erleichtert wird.

Eine vorteilhafte Weiterbildung der Erfindung sieht vor, dass den Paketen Informationen als maschinenlesbare Daten insbesondere durch Einsatz von digitalen Zwillingen zugeordnet werden, wobei die Daten zumindest eine Kennung umfassen, mit der das jeweilige Paket identifizierbar, insbesondere eindeutig identifizierbar ist und vorzugsweise weitere Informationen wie Fälligkeitsdatum/Zeit, Strafen für verspätete Lieferung, Lieferkosten, Einlieferer - und Empfängerinformationen, Material, Zerbrechlichkeit und Parameter des erforderlichen Transports, z.B. ein Kühllastwagen für Güter, die gekühlt werden müssen, berücksichtigt werden.

Zweckmäßigerweise wird wenigstens eines der in dieser Anmeldung dargestellten Paketidentifikationsmerkmale als Kennung für das jeweilige Paket eingesetzt.

Eine bevorzugte Ausgestaltung einer erfindungsgemäßen Handhabung von Paketen sieht vor, einen Paketidentifikationscode zu vergeben und/oder zu erfassen und anschließend als primäres Paketidentifikationsmerkmal zu speichern. Zweckmäßigerweise wird bei möglichst vielen Bearbeitungsvorgängen von Paketen, so auch bei den anhand von Abbildung 45 dargestellten Bearbeitungsvorgängen wenigstens ein weiteres, leichter und/oder schneller identifizierbares Merkmal des Pakets als sekundäres Paketidentifikationsmerkmal insbesondere zur Kontrolle einer Richtigkeit des primären Paketidentifikationsmerkmals und/zur Steuerung eines weiteren Bearbeitungsvorganges eingesetzt. Beispiele für schneller und/oder mit geringerem Aufwand feststellbare Paketidentifikationsmerkmale sind Gewicht und/oder Abmessungen eines Pakets.

Sowohl das primäre Paketidentifikationsmerkmal als auch das als sekundäre Paketidentifikationsmerkmal können Paketidentifikationsmerkmale im Sinne der vorliegenden Erfindung sein, wobei es besonders vorteilhaft ist, Bearbeitungsvorgänge, insbesondere Bearbeitungsvorgänge von Paketen anhand eines dieser Paketidentifikationsmerkmale durchzuführen.

Der anhand von Abbildung 45 erläuterte Versender ist eine Ausführungsform eines erfindungsgemäßen Einlieferers.

Nach der Festlegung und/oder Ermittlung des Paketidentifikationscodes kann - beispielsweise unter Einbeziehung eines digitalen Zwillings für das Paket - ein Transportweg und/oder Sortierweg des Pakets geplant, gesteuerter und/oder nachverfolgt werden, so dass ein nachfolgender Bearbeitungsvorgang des Pakets, insbesondere eine Sortierung des Pakets und/oder ein Transport des Pakets anhand einer Kombination des zuvor festgestellten Paketidentifikationscode mit einer Ermittlung eines anderen, vorzugsweise leichter und/oder schneller messbaren Paketidentifikationsmerkmals so präzise durchgeführt werden, wie dies bei einer Ermittlung des Paketidentifikationscodes selbst der Fall ist. Hierdurch wird auch bei einer schnelleren und/oder weniger aufwändigen Ermittlung eines Paketidentifikationsmerkmals das Paket zuverlässig identifiziert.

Dieses allgemeine Prinzip kann erfindungsgemäß bei verschiedenen Bearbeitungsvorgängen umgesetzt werden, beispielsweise innerhalb eines der erfindungsgemäßen Verteilzentren, insbesondere eines Sortierzentrums und/oder auch zur Einlagerung von Paketen in erfindungsgemäße Depoteinrichtungen. Beispielsweise kann zunächst der Paketidentifikationscode eines Pakets ermittelt werden, und dann erfolgen ein oder mehrere Bearbeitungsvorgänge. Bei einzelnen, mehreren oder allen Bearbeitungsvorgängen ist eine Berücksichtigung eines Paketidentifikationsmerkmales vorteilhaft.

So ist es beispielsweise möglich, zunächst einen Paketidentifikationscode eines Pakets zu ermitteln und das Paket hierdurch zuverlässig zu identifizieren. Vorzugsweise wird der Paketidentifikationscode als ein Paketidentifikationsmerkmal mit wenigstens einem anderen Paketidentifikationsmerkmal, beispielsweise einem Gewicht und/oder einer Abmessung des Pakets verknüpft. Auch eine Abbildung des Pakets, beispielsweise die in Abbildung 41 dargestellte Abbildung eines Pakets, kann als Paketidentifikationsmerkmal eingesetzt werden. Dies ist insbesondere dann vorteilhaft, wenn Warenobjekte als Pakete bearbeitet werden.

Durch eine Verknüpfung, insbesondere unter Einsatz einer Verknüpfungsschnittstelle, bevorzugt der Verknüpfungsschnittstelle 5015, ist es möglich, das Paket auch bei Weglassen von Versenderidentifikationsmerkmalen und/oder Empfängeridentifikationsmerkmalen einem Versender und/oder einem Empfänger zuzuordnen.

Eine bevorzugte Implementation der Zuordnung von Paketen zu Versender und/oder Empfängern erfolgt in einer bevorzugten Ausführungsform durch die in dieser Anmeldung dargestellten Verknüpfungen und/oder gleichfalls dargestellten Bereitstellungen von Prozessprotokollen, vorteilhafterweise unter Einbeziehung individueller Prozessprotokolle für einzelne Pakete, so dass insbesondere eine Verknüpfung zwischen einzelnen Paketen und ihren jeweiligen digitalen Zwillingen erleichtert wird.

Abbildung 45 enthält auch eine Darstellung von bevorzugten Anforderungen einer gewünschten oder benötigten Empfängeradresstiefe 4530 eines Paketes, vorzugsweise in der zeitlichen Abfolge der einzelnen Produktionsstufen eines Logistikunternehmens von der Abholung beim Versender bis zur finalen Übergabe an den Empfänger.

Initiiert der Versender 4510 den Versand eines Paketes, so sendet er dem Logistiksystem 5020 im Zuge eines Abholauftrages ein Avis über die abzuholenden Pakete. Dieses Avis beinhaltet z.B. Anzahl der abzuholenden Pakete, Gewicht je Paket, Paketidentifikations-merkmale, etc.

Die Angabe einer Zieladresse des Paketes ist insbesondere zu diesem Zeitpunkt noch nicht notwendig.

Nach Abholung - Bearbeitungsvorgang - beim Versender 4511 durch eine Komponente des Logistiksystems 5020 erfolgt ein Weitertransport der Pakete - Bearbeitungsvorgang - zu einem Zustelldepot 5302, insbesondere zum Abgangsdepot 4512 des Logistiksystems 5020. Von hier aus wird das Paket weiterbefördert - Bearbeitungsvorgang - zu einem Verteilzentrum 5301, insbesondere einem Abgangsverteilzentrum 4513 des Logistiksystems 5020. Bei Großversendern ist es auch möglich, dass Pakete nach Abholung unter Umgehung des Abgangsdepots 4512 direkt in ein Abgangsverteilzentrum 4513 befördert werden. Vor Eintreffen des Pakets im Abgangsverteilzentrum des Logistiksystems 5020 ist es zweckmäßig, dass der Versender 4510 dem Logistiksystem 5020 die ersten drei Stellen der Postleitzahl 999 mitteilt. Dies erfolgt vorzugsweise digital in Verbindung mit geeigneten Paketidentifikationsmerkmalen. Der Logistiksystem 5020 verknüpft die ersten drei Stellen der Postleitzahl 999 mit einem in einer Steuerkomponente des Logistiksystems gespeicherten Paketidentifikationsmerkmal des Pakets, beispielsweis dem Paketidentifikationscode des Pakets.

Die ersten drei Stellen der Postleitzahl 999 können als Steuerungscode dienen, so dass das Paket auf eine richtige Linehaul 4514 - zu einem weiteren Verteilzentrum 5301, insbesondere dem für weiteren Bearbeitungsvorgänge des Pakets beabsichtigten - richtigen - Eingangsverteilzentrum 4515 sortierbar ist (Anforderung 4530).

Das Paket verlässt im Anschluss das Abgangsverteilzentrum 4513 und wird via Linehaul 4514 in das Eingangsverteilzentrum des Logistiksystems 5020, 4515 transportiert. Spätestens bis zum Eintreffen des Pakets im Eingangsverteilzentrum des Logistiksystems 5020, 4515 wird eine Übermittlung des Versenders 4510 über der kompletten Postleitzahl, zum Beispiel 99999 an den Logistiksystem 5020 notwendig.

Dies erfolgt vorzugsweise digital. Der Logistiksystem 5020 verknüpft die komplette Postleitzahl, zum Beispiel 99999 mit dem bereits vorhandenen Produktidentifikationsmerkmal des Pakets.

Die komplette Postleitzahl, zum Beispiel 99999 ist zweckmäßig, damit das Paket auf das richtige Eingangsdepot 4516 sortierbar ist (Anforderung 4540).

Nach Verlassen des Eingangsverteilzentrum des Logistiksystems 5020, 4515 bis spätestens zum Eintreffen des Pakets im Eingangsdepot des Logistiksystems 5020, 4516 muss der Versender 4510 dem Logistiksystem 5020 zur bereits vorhanden kompletten Postleitzahl, zum Beispiel 99999 nun auch eine konkrete Straße, zum Beispiel 99999a mitteilen.

Die komplette Postleitzahl, zum Beispiel 99999 und die konkrete Straße, zum Beispiel 99999a sind zweckmäßig, damit das Paket auf die richtige Depoteinrichtung sortierbar ist, insbesondere aufgrund einer Anforderung 4550.

Im Eingangsdepot des Logistiksystems 5020, 4516 wird das Paket jetzt in die entsprechende mobile Depoteinrichtung 4517 eingelagert und zum gemeinsamen optimierten Übergabepunkt verfahren.

Der Versender 4510 hat jetzt die Möglichkeit, insbesondere bis zu einem Zeitpunkt unmittelbar bevor die Depoteinrichtung das Verteilzentrum verlässt, in welchem die Depoteinrichtung beladen wurde, für die Übergabe des Pakets insbesondere an einem gemeinsamen optimierten Übergabepunkt, das Paket einem finalen Empfänger 4520 zuzuweisen. Diese Zuweisung kann - bei funktionierender Datenverbindung zwischen Logistiksystem und/oder Benutzer App einerseits, und Steuerkomponente der Depoteinrichtung andererseits - auch vollzogen werden, wenn der finale Empfänger 4520 das Paket erst unmittelbar vor der Depoteinrichtung erwirbt und der Versender 4510 ihm das Paket dann zuweist.

Die komplette Postleitzahl, zum Beispiel 99999, die konkrete Straße, zum Beispiel 99999a und ein Empfängeridentifikationsmerkmal, zum Beispiel 99999b sind vorteilhaft, damit das Paket auf den richtigen finalen Empfänger übergebbar ist (Anforderung 4560).

Es ist auch bei den anhand von Abbildung 45 beispielhaft dargestellten Bearbeitungsvorgängen vorteilhaft, eine Anzahl von nicht an Empfänger übergebene Pakete möglichst gering zu halten und stattdessen Bearbeitungsvorgänge, insbesondere Bearbeitungsvorgänge im Bereich der Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322 so durchzuführen, dass möglichst viele der in der Depoteinrichtung befindlichen Pakete an Empfänger einschließlich alternativer Empfänger für die ansonsten nicht übergebene Pakete übergeben werden.

Die Einbeziehung von Empfängern, denen jeweilige Pakete erst nach einem oder mehreren Bearbeitungsvorgängen zugeordnet werden, ist bei der Implementation gemäß Abbildung 45 wie auch bei den weiteren Ausführungsbeispielen dieses Anmeldetextes besonders vorteilhaft. Insbesondere ist es vorteilhaft, wenigstens einen Teil der Pakete, insbesondere Pakete, denen kein Empfänger zugeordnet ist oder bei denen ermittelt wird, dass eine Übergabe an einen zuvor zugeordneten Empfänger nicht möglich ist, einem anderen Empfänger, insbesondere einem finalen Empfänger, insbesondere als Warenobjekt zuzuordnen.

### Abbildung 46

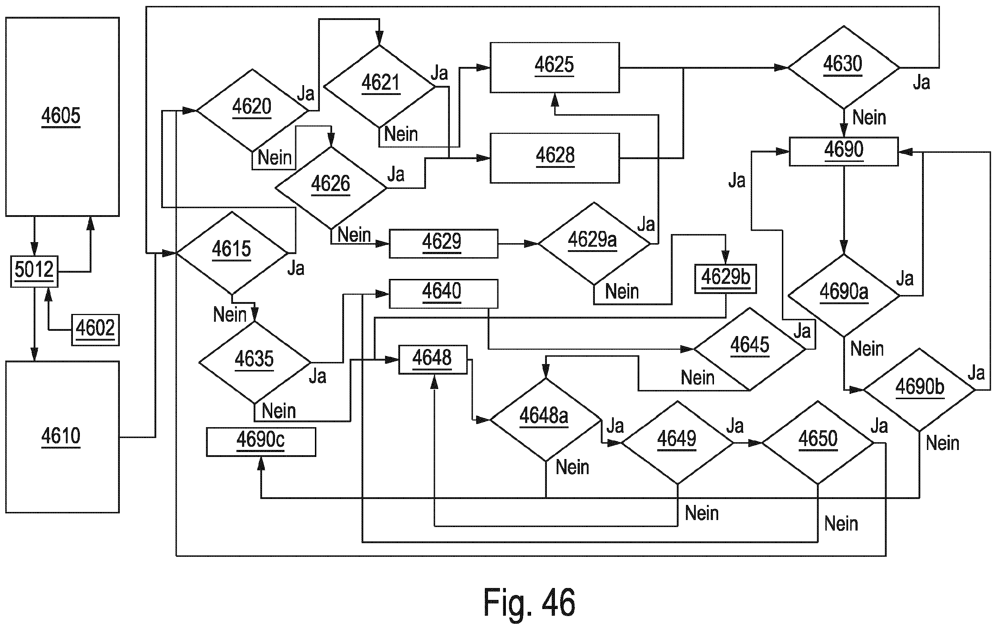

Abbildung 46 zeigt eine Prinzipdarstellung eines besonders bevorzugten Einsatzes von Paketidentifikationsmerkmalen und Empfängerattributen bei einem Verfahren zur Übergabe einer Vielzahl von Paketen mehrerer Versender an mehrere Empfänger durch ein Logistiksystem, insbesondere wobei das Logistiksystem wenigstens einen Bearbeitungsvorgang der Pakete anhand eines jeweils den Paketen zugeordneten Paketidentifikationscodes vornimmt.

Vorzugsweise dienen die in dieser Anmeldung offenbarten Empfängerattribute zu einer Identifikation eines jeweils vorgesehen Empfängers eines Pakets, wobei es auch in dieser Ausführungsform der Erfindung vorteilhaft ist, den jeweiligen Paketen sich verändernde Anteile von ihnen jeweils zugeordneten festen Empfängerattributen und variablen Empfängerattributen zuzuordnen, wobei einzelne, mehrere oder alle den Empfänger identifizierbaren Informationen als Empfängerattribute eingesetzt werden können, so dass wie nachfolgend beispielhaft anhand von Abbildung 46 dargestellt verschiedene Zuordnungen eines Pakets zu einem Empfänger möglich sind, insbesondere:
- einen bei einer Einlieferung des Pakets fest vorgesehener Empfänger;
- einen nach einer Einlieferung des Pakets ausgewählten Empfänger;
- einen während eines Aufenthalts des Pakets in einer Depoteinrichtung definierbaren finaler Empfänger, insbesondere
   o einen Angehörigen einer bestimmten Benutzergruppen, insbesondere einer priorisierten Benutzergruppe;
   o einen Empfänger, der bereit ist, ein vorgesehenes Entgelt für das Paket zu entrichten;
   ∘ einen festlegbaren Käufer und
   o einen beliebigen Käufer, insbesondere bei einem Direktverkauf.

Im Stand der Technik müssen Versender aus einem von einem Logistik-Dienstleister vorgegebenen geschlossenen Nummernkreis einen Paketidentifikationscode je Paket auswählen, zusätzlich die Zieladresse des Pakets vollständig spezifizieren und sowohl den Paketidentifikationscode als auch die Informationen zur Zieladresse in einem oder mehreren von dem Logistik-Dienstleister spezifizierten Codes (z.B. Barcodes, Datamatrix-Codes bzw. 2D-Codes) auf einem nach Vorgaben des Logistik-Dienstleisters gestalteten Label auf dem Paket aufbringen. Auch weitere Informationen z.B. über besondere Services wie prioritäre Bearbeitung oder Einzug von Geldbeträgen bei der Übergabe bzw. Zustellung müssen nach festen Regeln auf dem Label aufgebracht werden. Das erfindungsgemäße System kann flexibler gestaltet werden:
- Vom Versender frei wählbare originäre Paketidentifikationsmerkmale wie Kundennummer, Bestell- oder Rechnungsnummer können als einzelne Merkmale oder in einer Kombination von mindestens zwei Merkmalen als Paketidentifikationscode beziehungsweise als Bestandteile des Paketidentifikationscode eingesetzt werden, und müssen beispielsweise auch nicht in Form besonderer Codes auf einem Label aufgebracht werden - es reichen nach Übermittelung einer Regelanweisung für mehrere Pakete an das Logistiksystem für die einzelnen Pakete beliebige Merkmale, insbesondere alphanumerische Merkmale, die fest mit dem Paket verbunden sind und in sendungsvorauseilenden Daten mitgeteilt werden.
- Weder in den sendungsvorauseilenden Daten noch auf dem Paket muss eine Zieladresse (insbesondere Adresse eines Empfängers, ein logistischer Knoten, ein gemeinsamer optimierter Übergabepunkt oder ein individueller Übergabepunkt) vollständig mit Angabe von Postleitzahl, Ort, Straße und Hausnummer spezifiziert werden. Vorzugsweise spezifiziert der Versender entweder im Datensatz und/oder auf dem Paket einen finalen Empfänger durch eine geeignete Information (z.B. E-Mail-Adresse oder Mobiltelefonnummer), oder aber der Versender legt zunächst nur einzelne Empfängeradressattribute fest, die den Transport des Pakets zu einer bestimmten Bearbeitungseinheit ermöglichen, und spezifiziert den finalen Empfänger später.
- Sonstige Informationen, z.B. über besondere Services wie prioritäre Bearbeitung oder Einzug von Geldbeträgen bei der Übergabe bzw. Zustellung können in den sendungsvorauseilenden Daten und/oder in beliebiger, für das Logistiksystem verarbeitbarer Form auf dem Paket spezifiziert werden.

Vorzugsweise sind die sendungsvorauseilenden Daten für ein Paket Bestandteile eines digitalen Zwillings des Pakets und erlauben die Schaffung eines digitalen Zwillings des Paketes.

Es ist vorteilhaft, dass Versender der Pakete in einem Verfahrensschritt 4602 Regelanweisungen für mehrere Pakete, insbesondere für sämtliche Pakete des Versenders oder für alle Pakete des Versenders, die innerhalb eines Bearbeitungszeitraums in das Logistiksystem eingeliefert werden, festlegen, und diese Regelanweisungen an das Logistiksystem übermitteln. Dabei bestimmen die Regelanweisungen bestimmen, welches physisch mit dem Paket verbundene und auslesbare originäre Paketidentifikationsmerkmal oder welche physisch mit dem Paket verbundenen und auslesbaren originären Paketidentifikationsmerkmale der einzelnen von dem Versender eingelieferten Pakete zur Bildung des jeweils den einzelnen Paketen zugeordneten Paketidentifikationscodes berücksichtigt werden sollen,
Die mit den einzelnen Paketen verbundenen und auslesbaren originären Paketidentifikationsmerkmale der einzelnen von dem Versender einzuliefernden Pakete werden vorzugsweise als sendungsvorauseilende Daten in einem Verfahrensschritt 4605 von dem Versender an das Logistiksystem übermittelt. Zu den im Verfahrensschritt 4605 zu übermittelnden sendungsvorauseilenden Daten gehört vorzugsweise auch eine Angabe des Versenders, ob und gegebenenfalls bis zu welcher Zeitdauer er eine Freigabe zur Zahlung eines etwaigen Entgelts für eine Zwischenlagerung des Paketes während des Transportweges erteilt.

In dem Verfahrensschritt 4610 wird der Paketidentifikationscode eines individuellen Pakets generiert. Die Generierung des Paketidentifikationscodes des Pakets erfolgt unter Berücksichtigung wenigstens eines originären Paketidentifikationsmerkmals des Pakets, insbesondere von wenigstens zwei originären Paketidentifikationsmerkmalen des Pakets.

Es ist vorteilhaft, den Verfahrensschritt 4610 nach den Verfahrensschritten 4602 und 4605 durchzuführen: In Verfahrensschritt 4602 erhält eine Steuerkomponente des Logistiksystems, insbesondere die anhand von Abbildung 5 erläuterte Steuerkomponente 5012, über eine Schnittstelle zum Empfang von Regelanweisungen der Versender die Regelanweisungen der Versender, wobei die Regelanweisungen der jeweiligen Versender festlegen, welches physisch mit dem Paket verbundene und auslesbare originäre Paketidentifikationsmerkmal oder welche physisch mit dem Paket verbundenen und auslesbaren originären Paketidentifikationsmerkmale der einzelnen von dem Versender eingelieferten Pakete zur Bildung des jeweils den einzelnen Paketen zugeordneten Paketidentifikationscodes berücksichtigt wird, beziehungsweise werden. In einem späteren Verfahrensschritt 4605 empfängt die Steuerkomponente des Logistiksystems ferner Informationen der Versender zu einzuliefernden Paketen, wobei die Information für ein einzelnes der Pakete wenigstens ein der Regelanweisung entsprechendes originäres Paketidentifikationsmerkmal des Pakets enthält, so dass in Verfahrensschritt 4610 der Paketidentifikationscode unter Berücksichtigung des originären Paketidentifikationsmerkmals oder der originären Paketidentifikationsmerkmale gebildet wird. Bei wenigstens einem Bearbeitungsvorgang des Pakets wird das Vorliegen des originären Paketidentifikationsmerkmal oder der originären Paketidentifikationsmerkmale ermittelt, so dass eine Identifikation des Pakets erfolgt, so dass wenigstens ein nachfolgender Bearbeitungsvorgang des Pakets unter Berücksichtigung des Paketidentifikationscodes durchgeführt wird.

Pakete nach dem Stand der Technik und Warenobjekte nach dem Stand der Technik - wie das beispielhaft in Abbildung 40 dargestellte Paket und das in Abbildung 41 dargestellte Warenobjekt - können gleichfalls unter Einbeziehung der dargestellten Bearbeitungsvorgänge als erfindungsgemäße Pakete gehandhabt werden.

Es ist zweckmäßig, dass der Paketidentifikationscode eines Pakets als primäres Paketidentifikationsmerkmal gespeichert wird, dass dem Paket wenigstens ein von dem primären Paketidentifikationsmerkmal verschiedenes sekundäres Paketidentifikationsmerkmal zugeordnet wird und dass wenigstens ein Bearbeitungsvorgang des Pakets anhand des sekundären Paketidentifikationsmerkmals durchgeführt wird. Dies schließt einzelne, mehrere oder alle der Verfahrensschritte 4615 ff als besonders bevorzugte Ausführungsformen mit ein.

Eine vorteilhafte Weiterbildung der Erfindung sieht vor, dass den Paketen weitere Informationen als maschinenlesbare Daten, insbesondere durch Einsatz von digitalen Zwillingen, zugeordnet werden. Die Zuordnung maschinenlesbarer Daten, insbesondere der digitalen Zwillinge, erfolgt insbesondere in dem Verfahrensschritt 4610. Ein Beispiel für die weiteren Informationen sind Abmessungen, insbesondere das Raummaß des Pakets und/oder das Gewicht des Pakets, Fälligkeitsdatum/Zeit, Strafen für verspätete Lieferung, Lieferkosten, Einlieferer- und Empfängerinformationen, Material, Zerbrechlichkeit und Parameter des erforderlichen Transports des Pakets, z.B. ein Kühllastwagen für Güter, die gekühlt werden müssen.

Von der Erfindung mit umfasst sind sowohl Ausführungsformen, bei denen Pakete insbesondere mittels einer lokalen Logistik an ihrem Einlieferungsort oder in der Nähe ihres Einlieferungsortes an Empfänger übergeben werden als auch Ausführungsformen, bei denen wenigstens ein Teil der Pakete nach der Festlegung und/oder Ermittlung des Paketidentifikationscodes mittels eines gesteuerter Transportwegs und/oder Sortierwegs innerhalb des Logistiksystems transportiert und/oder bearbeitet werden.

Die Steuerung der Bearbeitung der Pakete in den Verfahrensschritten 4620 ff. erfolgt unter Berücksichtigung des Überprüfungsschrittes 4615.

In dem Überprüfungsschritt 4615 wird ermittelt, ob der Versender des Pakets einen finalen Empfänger des Pakets festgelegt hat. Die Übermittlung eines potentiellen finalen Empfängers des Pakets erfolgt beispielsweise in dem Verfahrensschritt 4605 als Bestandteil der sendungsvorauseilenden Daten. Es ist zweckmäßig, den finalen Empfänger durch wenigstens eine der folgenden Informationen zu spezifizieren:
- E-Mail-Adresse;
- Mobiltelefonnummer,
- Vollständige postalische Anschrift;
- Steuer-Identifikationsnummer;
- Rentenversicherungsnummer;
- Personalausweisnummer;
- Kreditkartennummer;
- IBAN.

Es ist besonders vorteilhaft, den finalen Empfänger des Pakets zu einem späteren Zeitpunkt festzulegen, so dass der Überprüfungsschritt 4615 gegebenenfalls wiederholt werden kann. Durch den Einsatz der in dieser Anmeldung dargestellten Bearbeitungsschritte, insbesondere der anhand der Abbildung 46 dargestellten Bearbeitungsschritte ist es möglich, den finalen Empfänger des Pakets bis unmittelbar vor der Übergabe des Pakets an den finalen Empfänger auszuwählen und gegebenenfalls zu ändern.

Bei den in dieser Anmeldung dargestellten Verfahrensschritten kann es sich insbesondere um Bearbeitungsschritte oder um Überprüfungsschritte handeln.

Wenn in dem Überprüfungsschritt 4615 festgestellt wird, dass ein finaler Empfänger des Pakets von dem Versender festgelegt wurde, wird in einem Überprüfungsschritt 4620 überprüft, ob in einer Empfängerdatenbank 5032 des Logistiksystems der finale Empfänger hinterlegt ist, um dessen Zustellpräferenzen und/oder Aufenthaltsorte entsprechend zu berücksichtigen.

Die Berücksichtigung von Empfängern als finale Empfänger für die finale Übergabe des Pakets erfolgt in einer vorteilhaften Ausführungsform durch einen Einsatz von wenigstens einer Depoteinrichtung 140, 240, 250, 340, 350, 740, 830, 1711, 1721, 1731, 1811,1821, 1831, 1911,1921, 1931, 2111, 2121, 2131, 2141, 2303, 2321, 2611, 2621, 2631, 2641, 2651, 2661, 2711, 2721, 2731, 2811, 2821, 2831, 2911, 2921, 2931, 3111, 3121, 3131, 3141, 3311, 3321, 3331, 3511, 3521, 3531, 3711, 3721, 3731, 5242, 5243, 5321, 5322. Insbesondere kann die Depoteinrichtung, wenn sie über ausreichende Informationen zur Autorisierung des finalen Empfängers verfügt, in einem Verfahrensschritt 4690 die finale Übergabe an den finalen Empfänger bewirken.

Wenn in dem Überprüfungsschritt 4620 festgestellt wird, dass der Empfänger des Pakets in dem Logistiksystem und/oder einer Bearbeitungseinheit des Logistiksystems, insbesondere in einer Empfängerdatenbank 5032 mit wenigstens einer Zustellpräferenz gespeichert ist, wird in einem Überprüfungsschritt 4621 gegebenenfalls zunächst überprüft, ob eine Anweisung des Versenders des Pakets bezüglich einer Beschränkung von Zustellpräferenzen des Empfängers des Pakets vorliegt. Sofern keine Anweisung des Versenders zur Beschränkung der Auswahl von Zustellpräferenzen des Empfängers vorliegt, erfolgt in dem Verfahrensschritt 4625, der gegebenenfalls aus mehreren einzelnen Bearbeitungsschritten bestehen kann, die Bearbeitung des Pakets entsprechend übermittelter und/oder hinterlegter Zustellpräferenzen des Empfängers.

In dem Verfahrensschritt 4630 wird überprüft, ob eine Anweisung des Versenders zur Änderung des finalen Empfängers vorliegt. Falls eine Anweisung des Versenders zur Änderung des finalen Empfängers vorliegt, erfolgt die weitere Steuerung der Bearbeitung der Pakete unter Berücksichtigung der ab dem Überprüfungsschritt 4615 dargestellten Überprüfungsvorgänge und/oder Bearbeitungsvorgänge. Falls keine Anweisung vorliegt, wird das Paket in Verfahrensschritt 4690 durch eine finale Bearbeitungseinheit, beispielweise eine Depoteinrichtung oder eine Übergabeeinheit zur Übergabe an den Empfänger bereitgestellt. Insbesondere wird nach erfolgreich abgeschlossener Authentifizierung, beispielsweise mittels einer Benutzer-App 5021, 5022 oder einer Benutzerkomponente 5351 ein Benutzer als finaler Empfänger autorisiert, insbesondere zur Entnahme eines Pakets aus der Depoteinrichtung.

In periodischen Abständen, z.B. am Ende jedes Tages, schließt sich ein Überprüfungsschritt 4690a an, in dem überprüft wird, ob sich das Paket aufgrund einer nicht erfolgten Übergabe an den finalen Empfänger noch in der Depoteinrichtung befindet. Ist dies der Fall, so schließt sich Überprüfungsschritt 4690b an: der Versender oder der Empfänger wird gefragt, ob er eine Freigabe zur Zahlung eines etwaigen Entgelts für eine weitere Lagerung in der Depoteinrichtung erteilt Ist dies der Fall, verbleibt das Paket in der Depoteinrichtung, bis es gemäß Verfahrensschritt 4690 zur Übergabe kommt. Falls keine solche Freigabe vorliegt, wird das Paket gemäß Verfahrensschritt 4690c an den Versender zurückgeschickt.

Wenn in dem Überprüfungsschritt 4620 festgestellt wird, dass in der Empfängerdatenbank 5032 des Logistiksystems der zuvor in dem Verfahrensschritt 4615 mitgeteilte finale Empfänger nicht hinterlegt ist, wird in einem weiteren Überprüfungsschritt 4626 überprüft, ob das Paket selber, insbesondere in Form physisch mit dem Paket verbundener (insbesondere "aufgedruckt"; RFID-Transponder) oder in Form ergänzender Informationen zum Paket, beispielsweise als Bestandteil eines digitalen Zwilling des Pakets, eine vollständige Adresse aufweist oder eine vollständige Adresse anhand der ergänzenden Informationen ermittelbar ist.

Wenn in dem Überprüfungsschritt 4626 festgestellt wird, dass die vollständige Empfängeradresse ermittelbar ist, wird in dem Verfahrensschritt 4628 das Paket entsprechend der Adressangabe des Versenders bearbeitet.

Wenn in dem Überprüfungsschritt 4626 keine vollständige Empfängeradresse ermittelbar ist, wird in dem Verfahrensschritt 4629 eine Zwischenlagerung des Pakets durchgeführt. Dann wird mit Hilfe von Empfängerattributen, die eine Kontaktierung des Empfängers ermöglichen, eine Abfrage an den Empfänger bezüglich seiner Zustellpräferenzen durchgeführt. Empfängerattribute, die eine Kontaktierung des Empfängers ermöglichen, sind beispielsweise E-Mail-Adresse oder Mobilfunknummer.

In Überprüfungsschritt 4629a überprüft das Logistiksystem, ob der Empfänger entsprechende Zustellpräferenzen übermittelt hat. Ist dies der Fall, wird das Paket in Bearbeitungsschritt 4625 entsprechend den Zustellpräferenzen des Empfängers bearbeitet. Übermittelt der Empfänger keine Zustellpräferenzen, wird der Versender in Verfahrensschritt 4629b kontaktiert und gemäß Verfahrensschritt 4648 wird die Sendung in einer Bearbeitungseinheit zwischengelagert.

Es ist zweckmäßig, dass in einen Überprüfungsschritt 4648a überprüft wird, ob der Versender eine Freigabe zur Entrichtung eines gegebenenfalls zu entrichtenden Entgelts für die Zwischenlagerung des Pakets in der Bearbeitungseinheit erteilt hat.

Falls der Versender diese Freigabe nicht erteilt, oder ein von dem Versender freigegebener Zeitraum für eine Zwischenlagerung des Pakets abgelaufen ist, wird in einem Verfahrensschritt 4690c das Paket an den Versender zurücktransportiert.

Falls der Versender diese Freigabe erteilt hat und der freigegebene Zeitraum für die Zwischenlagerung des Pakets nicht überschritten wurde, wird in einem Überprüfungsschritt 4649 überprüft, ob der Versender zusätzliche und/oder neue Empfängeradressattribute übermittelt hat.

Falls der Versender bei Durchführung des Überprüfungsschrittes 4649 keine zuvor noch nicht vorliegenden weiteren Empfängeradressattribute übermittelt hat, wird in dem Bearbeitungsvorgang 4648 das Paket so lange weiter in der Bearbeitungseinheit zwischengelagert, bis der Versender zusätzliche Empfängeradressattribute übermittelt oder der von dem Versender freigegebene Zeitraum für eine Zwischenlagerung des Pakets abgelaufen ist.

Es ist zweckmäßig, dass in einen Überprüfungsschritt 4648a überprüft wird, ob der Versender eine Freigabe zur Entrichtung eines gegebenenfalls zu entrichtenden Entgelts für die Zwischenlagerung des Pakets in der Bearbeitungseinheit erteilt hat.

Falls der Versender die weitere Empfängeradressattribute übermittelt hat, wird in einem Überprüfungsschritt 4650 überprüft, ob die übermittelten weiteren Empfängeradressattribute eine Identifikation des finalen Empfängers ermöglichen.

Falls die übermittelten weiteren Empfängeradressattribute eine Identifikation des finalen Empfängers ermöglichen, erfolgt eine Verzweigung zum Überprüfungsschritt 4620.

Falls die übermittelten weiteren Empfängeradressattribute keine ausreichende Identifikation des finalen Empfängers ermöglichen, erfolgt eine Verzweigung zum Verfahrensschritt 4640 mit einer Beförderung bis zu der Bearbeitungseinheit, die durch die ergänzten Empfängeradressattribute bestimmt ist.

Im Anschluss an den Bearbeitungsschritt 4640 erfolgt ein Überprüfungsschritt 4645. In dem Überprüfungsschritt 4645 wird überprüft, ob der Versender einen Direktverkauf des Pakets autorisiert hat. In dem Fall, dass der Versender den Direktverkauf des Pakets autorisiert hat, erfolgt in dem Bearbeitungsschritt 4690 eine Übergabe des Pakets an einen Käufer des Pakets als finalen Empfänger.

Die Identifikation des finalen Empfängers beinhaltet vorzugsweise nicht nur die Identifikation von eindeutig identifizierbaren berechtigten finalen Empfängern wie in Überprüfungsschritt 4620, sondern auch von finalen Empfängern, die wenigstens eine Voraussetzung für die Übergabe des Pakets an sie erfüllen. Eine Voraussetzung oder weitere Voraussetzung für die Übergabe des Pakets ist beispielsweise die Entrichtung eines Geldbetrages. Somit ist es in Verfahrensschritt 4690 möglich, als finale Empfänger für die finale Übergabe des Pakets auch Empfänger zu berücksichtigen, die gegebenenfalls unmittelbar vor der finalen Übergabe des Pakets einen Geldbetrag entrichten oder eine Zugehörigkeit zu einer Benutzergruppe nachgewiesen haben, und ansonsten nicht identifizierbar sind.

In periodischen Abständen, z.B. am Ende jedes Tages, schließen sich die Überprüfungsschritte 4690a und 4690b an, in dem überprüft wird, ob sich das Paket aufgrund nicht erfolgter Übergabe an den finalen Empfänger noch in der Depoteinrichtung befindet und in diesem Fall Versender oder Empfänger eine Freigabe zur Zahlung eines etwaigen Entgelts erteilt haben. Ist dies der Fall, verbleibt das Paket in der Depoteinrichtung, bis es gemäß Verfahrensschritt 4690 zur Übergabe kommt. Falls keine solche Freigabe vorliegt, wird das Paket gemäß Verfahrensschritt 4690c an den Versender zurückgeschickt.

Falls in dem Überprüfungsschritt 4645 festgestellt wird, dass der Versender keinen Direktverkauf des Pakets autorisiert hat, erfolgt ein weiterer Überprüfungsschritt 4648a, in dem überprüft wird, ob der Versender eine Freigabe zur Entrichtung eines gegebenenfalls zu entrichtenden Entgelts für die Zwischenlagerung des Pakets in der Bearbeitungseinheit erteilt hat.

Falls der Versender diese Freigabe nicht erteilt, wird in einem Verfahrensschritt 4690c das Paket an den Versender zurücktransportiert.

Falls der Versender diese Freigabe erteilt, schließt sich Überprüfungsschritt 4649 an, in dem überprüft wird, ob der Versender inzwischen zuvor noch nicht vorliegende weitere Empfängeradressattribute übermittelt hat.

Falls der Versender bei Durchführung des Überprüfungsschrittes 4649 keine zuvor noch nicht vorliegenden weiteren Empfängeradressattribute übermittelt hat, wird in einem Bearbeitungsvorgang 4648 das Paket so lange in der Bearbeitungseinheit zwischengelagert, bis Versender zusätzliche Empfängeradressattribute übermittelt oder ein von dem Versender freigegebener Zeitraum für eine Zwischenlagerung des Pakets abgelaufen ist. Wiederum wird in Überprüfungsschritt 4648a überprüft, ob der Versender eine Freigabe für ein etwaiges Entgelt für die weitere Zwischenlagerung erteilt hat. Ist dies nicht der Fall, wird das Paket gemäß Verfahrensschritt 4690c zurückgeschickt.

Falls der Versender die weitere Empfängeradressattribute übermittelt hat, wird in einem Überprüfungsschritt 4650 überprüft, ob die übermittelten weiteren Empfängeradressattribute eine Identifikation des finalen Empfängers ermöglichen.

Falls die die übermittelten weiteren Empfängeradressattribute eine Identifikation des finalen Empfängers ermöglichen, erfolgt eine Verzweigung zum Überprüfungsschritt 4620.

Falls die übermittelten weiteren Empfängeradressattribute keine Identifikation des finalen Empfängers ermöglichen, erfolgt erneut der Bearbeitungsschritt 4640, der gegebenenfalls aus mehreren einzelnen Bearbeitungsschritten bestehen kann, d.h. der weitere Transport und/oder die sonstige Bearbeitung des Pakets, bis das Paket einen Knoten des Logistiksystems, insbesondere eine Bearbeitungseinheit, erreicht hat, die durch die weiteren Empfängeradressattribute bestimmt ist. Danach erfolgt eine Bearbeitung des Paketes entsprechend der bereits dargestellten Verfahrensschritte 4645 bis 4690.

Der Überprüfungsschritt 4615 verzweigt - insbesondere, wenn er in Anschluss an den Bearbeitungsvorgang 4610 erfolgt - alternativ zu dem Bearbeitungsschritt 4620 für den Fall, dass der Versender keinen finalen Empfänger festgelegt hat, zu einem weiteren Überprüfungsschritt 4635.

In dem Überprüfungsschritt 4635 wird überprüft, ob der Versender dem Paket zwar keinen finalen Empfänger, wohl aber Empfängeradressattribute zugeordnet hat.

Falls der Versender dem Paket Empfängeradressattribute zugeordnet hat, erfolgt in einem Bearbeitungsschritt 4640, der gegebenenfalls aus mehreren einzelnen Bearbeitungsschritten bestehen kann, der weitere Transport und/oder die sonstige Bearbeitung des Pakets, bis das Paket einen Knoten des Logistiksystems, insbesondere eine Bearbeitungseinheit, erreicht hat, die durch die Empfängeradressattribute bestimmt ist.

Im Anschluss an den Bearbeitungsschritt 4640 erfolgen die zuvor bereits dargestellten weiteren Verfahrensschritte.

Falls in dem Überprüfungsschritt 4635 festgestellt wird, dass der Versender dem Paket keine Empfängeradressattribute zugeordnet hat, wird in einem Bearbeitungsvorgang 4648 das Paket so lange weiter in der Bearbeitungseinheit zwischengelagert, bis der Versender zusätzliche Empfängeradressattribute übermittelt oder der von dem Versender freigegebene Zeitraum für eine Zwischenlagerung des Pakets abgelaufen ist.

Im Anschluss an den Bearbeitungsschritt 4648 erfolgen die zuvor bereits dargestellten weiteren Verfahrensschritte.

### Abbildung 47

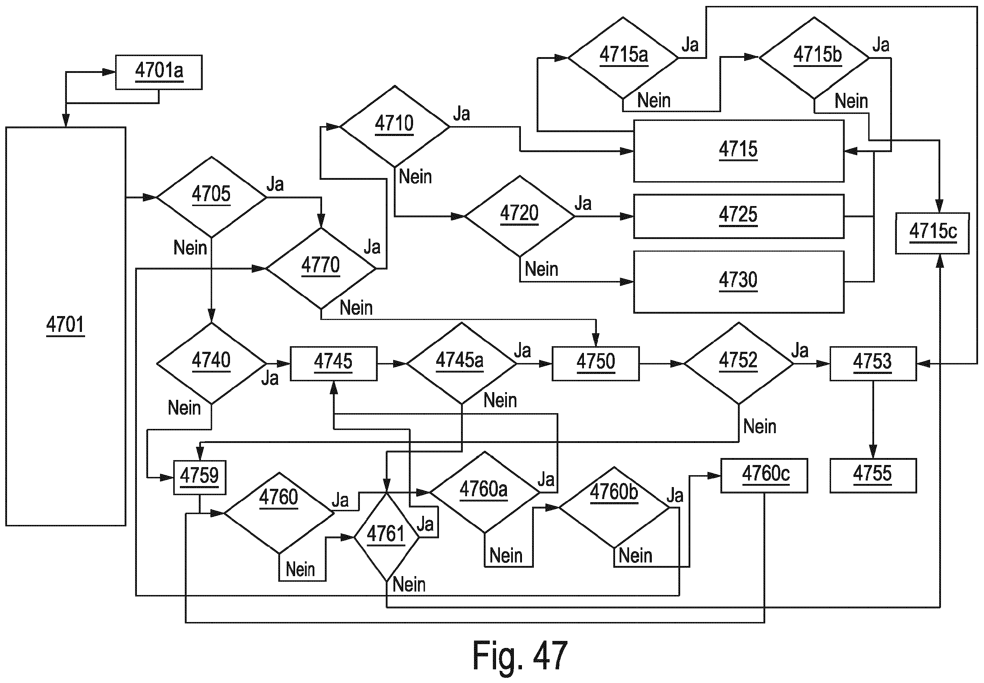

Abbildung 47 zeigt Verfahrensschritte zur Übergabe eines Pakets an einen Kunden als finalen Empfänger. Insbesondere zeigt Abbildung 47 Verfahrensschritte zur lokalen Einlieferung und Übergabe eines Pakets an einem Standort einer Depoteinrichtung oder im Einflussbereich der Depoteinrichtung. Insbesondere handelt es sich hierbei um eine Implementation einer lokalen Logistik, bei der wenigstens ein Teil der Pakete an ihrem Einlieferungsort oder in der Nähe des Einlieferungsortes an Empfänger übergeben werden. Bei den Empfängern handelt es sich insbesondere um Käufer von Waren und/oder Dienstleistungen. Die Dienstleistungen beinhalten insbesondere eine Bearbeitung der Pakete, beziehungsweise des Inhalts der Pakete, beispielsweise durch eine Reinigung oder Instandsetzung von Gegenständen.

Ebenso wie in den anderen Ausführungsformen handelt es sich bei den Paketen um unverpackte Gegenstände, verpackte Gegenstände und umverpackte Gegenstände, wobei bei verpackten und umverpackten Gegenständen das Paket die Verpackung bzw. Umverpackung und den darin verpackten Gegenstand umfasst. Ebenso ist es zweckmäßig, unverpackte Gegenstände, insbesondere Warenobjekte erfindungsgemäß zu bearbeiten. Insbesondere können die Pakete an Empfänger übergeben werden, beispielsweise als Warenobjekte verkauft werden.

Es ist möglich, dass der Einlieferer an einer Übergabeeinheit statt der Depoteinrichtung einliefert, bzw. die Übergabe an den Empfänger durch eine Übergabeeinheit erfolgt.

Auch die in Abbildung 47 beispielhaft dargestellten verschiedene Zuordnungen eines Pakets zu einem Empfänger zeigen insbesondere einen vorteilhaften Einsatz der in dieser Anmeldung offenbarten Empfängerattribute zu einer Identifikation eines jeweils vorgesehen Empfängers eines Pakets, wobei es auch in dieser Ausführungsform der Erfindung zweckmäßig ist, den jeweiligen Paketen sich verändernde Anteile von ihnen jeweils zugeordneten festen Empfängerattributen und variablen Empfängerattributen zuzuordnen, wobei einzelne, mehrere oder alle den Empfänger identifizierbaren Informationen als Empfängerattribute eingesetzt werden können, so dass verschiedene Zuordnungen eines Pakets zu einem Empfänger möglich sind, insbesondere:
- einen bei einer Einlieferung des Pakets fest vorgesehener Empfänger,
- einen nach einer Einlieferung des Pakets ausgewählten Empfänger,
- einen während eines Aufenthalts des Pakets in einer Depoteinrichtung definierbaren finaler Empfänger, insbesondere
   ∘ einen Angehörigen einer bestimmten Benutzergruppen, insbesondere einer priorisierten Benutzergruppe;
   ∘ einen Empfänger, der bereit ist ein vorgesehenes Entgelt für das Paket zu entrichten;
   ∘ einen festlegbaren Käufer und
   ∘ einen beliebigen Käufer, insbesondere bei einem Direktverkauf.

In einem Verfahrensschritt 4701 wird eine Einlieferung eines oder mehrerer Pakete vorbereitet und durchgeführt. Die Einlieferung erfolgt insbesondere direkt an der Depoteinrichtung oder beispielsweise über eine Übergabeeinheit im Einflussbereich einer Depoteinrichtung.

In dem Verfahrensschritt 4701 wird die Einlieferung des Pakets in das Logistiksystem, insbesondere in eine Depoteinrichtung des Logistiksystems vorbereitet. Die Vorbereitung der Einlieferung umfasst insbesondere eine Erfassung folgender Informationen:
- Identifikation des Einlieferers,
- Erfassung von Abmessungen des Pakets und
- Angabe einer maximalen Lagerdauer, wobei die maximale Lagerdauer insbesondere von einer Freigabe zur Zahlung eines etwaigen Entgelts für eine Lagerung des Pakets, insbesondere in einer Depoteinrichtung abhängt.

Die Lagerdauer bezeichnet insbesondere eine Zeitdauer für eine Lagerung des Pakets, so dass es sich bei der Lagerdauer auch um eine in dieser Anmeldung offenbarten Zeitdauer handelt, insbesondere um eine Zeitdauer gemäß der Darstellung zu Abbildung 46.

Eine bevorzugte Vorbereitung der Einlieferung des Pakets zeichnet sich dadurch aus, dass der Einlieferer, insbesondere der lokale Einlieferer eine Benutzer-App 4701a, 5021, 5022 vorzugsweise mit den in dem Absatz 5021, 5022 beschriebenen Merkmalen öffnet und Sendungsdaten eingibt bzw. einen Code, der beispielsweise Sendungsdaten und/oder Informationen zur Entrichtung eines Entgelts für die Einlieferung enthalten kann, erfasst. Der Einlieferer kann beispielsweise eingeben:
A) wenigstens ein Paketidentifikationsmerkmal zur Identifikation des Pakets, insbesondere ein originäres Paketidentifikationsmerkmal oder
B) mindestens zwei originäre Paketidentifikationsmerkmale zur Identifikation des Pakets oder
C) keine spezifischen Daten zu dem jeweiligen Paket.
D) einen Empfänger/Abholer des Pakets
E) ein zu entrichtendes Entgelt.

Es ist besonders vorteilhaft, wenn die Benutzer-App 4701a, 5021, 5022 eine Erfassung von Abmessungen des Pakets unterstützt. Insbesondere, wenn die Benutzer-App 4701a, 5021, 5022 auf einer mobilen Benutzereinheit, beispielsweise einem Smartphone, einer Smartwatch oder ein Smartglass installiert ist, ist es vorteilhaft, dass die mobile Benutzereinheit wenigstens eine Abmessung des Pakets erfasst und diese erfassten Abmessungen an eine Bearbeitungseinheit des Logistiksystems, insbesondere die Depoteinrichtung oder eine im Einflussbereich einer Depoteinrichtung befindliche Übergabeeinheit übermittelt.

Die Ermittlung von Paketidentifikationsmerkmalen und/oder die Festlegung eines Paketidentifikationscodes ist möglich, jedoch insbesondere in Ausführungsformen einer lokalen Logistik, bei der das Paket nicht zwischen verschiedenen Bearbeitungseinheiten transportiert wird, sondern insbesondere in einer Depoteinrichtung verbleibt, nicht notwendig.

Falls doch eine Erfassung und/oder Erstellung eines Paketidentifikationscodes erfolgen soll, insbesondere um Optionen, das Paket zu weiteren Bearbeitungseinheiten zu transportieren, zu realisieren, ist es ist vorteilhaft, dass die Benutzer-App 4701a, 5021, 5022 des Einlieferers oder eine Bearbeitungseinheit des Logistiksystems so eingerichtet ist, dass sie einen das Paket identifizierenden Paketidentifikationscode erstellen kann.

Insbesondere bei einer direkten Einlieferung des Pakets an einer Depoteinrichtung oder im Einflussbereich einer Depoteinrichtung ist es besonders vorteilhaft, wenn der Einlieferer in den Varianten A), B) und C) das jeweilige Paket scannt und Paketidentifikationsmerkmale, insbesondere den Paketidentifikationscode erfasst. Vorzugsweise wird durch das Scannen des Pakets wenigstens ein Paketidentifikationsmerkmal, insbesondere wenigstens eine Abmessung des Pakets erfasst.

Das Scannen der Pakete kann beispielsweise unter Einsatz der Benutzer-App 4701a, 5021, 5022 des Einlieferers oder über eine Scaneinrichtung der Depoteinrichtung erfolgen.

Ferner ist es möglich, einen Kaufpreis für das Paket festzulegen oder eine Berechnungsvorschrift für den Kaufpreis zu hinterlegen.

Eine optional durchführbare, jedoch nicht notwendige Weiterbildung der Erfindung zur Manipulationsvermeidung erfolgt, dadurch, dass sobald die Sendung physisch nicht mehr aus der Depoteinrichtung herausgenommen werden kann (insbesondere durch Verschließen einer Klappe der Übergabeeinrichtung), ist es zweckmäßig, dass das Paket durch eine oder mehrere geeignete Einrichtungen der Depoteinrichtung fotografiert bzw. gescannt wird, um den Gefahrenübergang zu dokumentieren. Alternativ erhält der Einlieferer nach "Kontakt" des Pakets mit der Transporteinheit oder nach Einlagerung in eine Lagerposition der Depoteinrichtung eine Bestätigung der Einlieferung und/oder Einlagerung.

Im Anschluss an den Bearbeitungsschritt 4701 wird in einem Überprüfungsschritt 4705 ermittelt, ob der Einlieferer einen finalen Empfänger, insbesondere einen finalen Käufer, angegeben hat. In dem Fall, dass der Einlieferer einen finalen Empfänger des Pakets angegeben hat, wird in einem Überprüfungsschritt 4770 überprüft, ob der finale Empfänger, insbesondere der Käufer, die Ware schon bezahlt hat. Ist dies nicht der Fall, wird das Paket entsprechend des später beschriebenen Verfahrensschritts 4750 und der daran anschließenden weiteren Verfahrensschritte bearbeitet. Ergibt der Überprüfungsschritt 4770, dass der finale Empfänger, insbesondere der Käufer die Ware bezahlt hat, überprüft die Steuerkomponente 5012 des Logistiksystems in einem nachfolgenden Überprüfungsschritt 4710, ob sich der angegebene finale Empfänger, insbesondere der Käufer der Ware in einer Empfängerdatenbank befindet.

Falls sich der angegebene finale Empfänger, insbesondere der Käufer der Ware in der Empfängerdatenbank befindet, wird das Paket in einem Verfahrensschritt 4715 zwischengelagert und für eine Übergabe an den angegebenen finalen Empfänger, insbesondere den Käufer der Ware bereitgestellt.

Die Bereitstellung des Pakets in dem Verfahrensschritt 4715 erfolgt insbesondere dadurch, dass das Paket in einer Depoteinrichtung zwischengelagert und bereitgestellt wird, wobei es sich bei der Depoteinrichtung in einer zweckmäßigen Ausführungsform um die gleiche Depoteinrichtung handelt, in welcher in der der Einlieferer zuvor das Paket eingeliefert hat.

Alternativ kann das eingestellte Paket auch von der Depoteinrichtung, an welcher der Einlieferer das Paket eingestellt hat, durch den Logistikdienstleister (manuell, oder durch eine Übergabeeinheit) zu einer anderen Depoteinrichtung transportiert werden und dann von dieser Depoteinrichtung an den finalen Empfänger übergeben werden.

Im Anschluss an Bearbeitungsschritt 4715 erfolgt ein Überprüfungsschritt 4715a: Dabei wird überprüft, ob der finale Empfänger während der maximalen Lagerdauer des Pakets eine Übergabe des Pakets initiiert, insbesondere an einer Depoteinrichtung oder im Einflussbereich der Depoteinrichtung

Initiiert der finale Empfänger während der maximalen Lagerdauer des Pakets die Übergabe des Pakets, so erfolgt ein Bearbeitungsschritt 4753: Die Übergabe an den finalen Empfänger wird autorisiert und durchgeführt.

Falls in dem Überprüfungsschritt 4715a festgestellt wird, dass während der maximalen Lagerdauer der finale Empfänger des Pakets keine Übergabe des Pakets initiiert hat, die Depoteinrichtung nicht aufgesucht hat, wird in einem Überprüfungsschritt 4715b überprüft, ob der Einlieferer oder der finale Empfänger bereit sind, ein Entgelt für eine weitere Lagerung zu entrichten oder zwischenzeitlich ein Entgelt für die weitere Lagerung des Pakets entrichtet haben.

Falls in dem Überprüfungsschritt 4715b festgestellt wird, dass niemand bereit ist, insbesondere weder der Einlieferer des Pakets noch der finale Empfänger des Pakets, ein Entgelt für eine weitere Lagerung zu entrichten oder zwischenzeitlich ein Entgelt für die weitere Lagerung des Pakets entrichtet hat, wird entsprechend Verfahrensschritt 4715c der Einlieferer des Pakets aufgefordert, das Paket zu entnehmen - insbesondere aus der Depoteinrichtung zu entnehmen. Alternativ wird das Paket, gegebenenfalls gegen ein zusätzliches Entgelt an den Einlieferer zurückgesendet.

Für den Fall, dass in dem Überprüfungsschritt 4710 festgestellt wird, dass kein dem finalen Empfänger entsprechender Eintrag in einer Empfängerdatenbank des Logistiksystems vorhanden ist, wird in einem weiteren Überprüfungsschritt 4720 überprüft, ob der Einlieferer Kontaktdaten des finalen Empfängers mitgeteilt hat.

Für den Fall, dass der Einlieferer Kontaktdaten (z.B. Mobiltelefonnummer, E-Mail-Adresse) des finalen Empfängers mitgeteilt hat, ist es zweckmäßig, dass das Logistiksystem in einem Bearbeitungsschritt 4725 einen Authentifizierungscode und/oder Autorisierungscode direkt an den finalen Empfänger schickt.

Im Anschluss an den Bearbeitungsschritt 4725 ist es zweckmäßig, dass das Logistiksystem das Paket in Verfahrensschritt 4715 in einer Lagereinheit, insbesondere einer Depoteinrichtung zwischenlagert. Die weitere Bearbeitung des Pakets erfolgt dann nach den oben dargestellten Verfahrensschritten 4715a, 4715b, 4715c und 4753.

Für den Fall, dass in dem Überprüfungsschritt 4720 festgestellt wird, dass der Einlieferer keine Kontaktdaten des finalen Empfängers mitgeteilt hat, oder dass über die mitgeteilten Kontaktdaten des finalen Empfängers keine Übermittlung des Authentifizierungscodes und/oder des Autorisierungscodes an den finalen Empfänger möglich ist, beispielsweise durch eine Unrichtigkeit der Kontaktdaten des finalen Empfängers, erfolgt in einem Verfahrensschritt 4730 eine Übermittlung des Authentifizierungscodes und/oder des Autorisierungscodes an den Einlieferer, den dieser beispielsweise an den finalen Käufer als finalen Empfänger oder an einen anderen finalen Empfänger übermitteln kann. Mit dem Authentifizierungscode und/oder dem Autorisierungscode kann der finale Empfänger in Verfahrensschritt 4753 eine Übergabe des Paketes an der Depoteinrichtung bewirken.

Falls in dem Überprüfungsschritt 4705 festgestellt wird, dass der Einlieferer keinen finalen Empfänger angegeben hat, wird in einem Überprüfungsschritt 4740 festgestellt, ob ein Verkauf des Pakets mit einem von dem Einlieferer festgelegten Preis an einen gegebenenfalls beliebigen Käufer als Direktverkauf möglich ist.

Direktverkauf bedeutet insbesondere, dass einer gelagerten Ware beziehungsweise einem gelagerten Paket noch kein finaler Empfänger zugewiesen ist und dass mit Entrichtung eines festlegbaren Verkaufspreises (Entgelt) jedermann die Ware erwerben und entnehmen kann.

Falls ein Direktverkauf des Pakets möglich ist, wird in einem Bearbeitungsschritt 4745 das zuvor eingelagerte Paket in einer Lagereinheit, insbesondere in der Depoteinrichtung, zwischengelagert.

Anschließend wird in einem Überprüfungsschritt 4745a überprüft, ob während der maximalen Lagerdauer ein potenzieller Käufer als finaler Empfänger an einem Standort einer Depoteinrichtung oder im Einflussbereich der Depoteinrichtung kommt und den Erwerb des Paketes beabsichtigt

In dem Bearbeitungsschritt 4750 wird dem potentiellen Käufer wenigstens eine Bezahlmöglichkeit zur Verfügung gestellt, beispielsweise durch Eingabe eines Codes oder einer geldwerten Information, beispielsweise mittels PayPal, Apple Pay.

Geldwerte Information werden beispielsweise aus einer Ladestelle abgerufen, wobei in einer einfachen und gleichfalls zweckmäßigen Ausführungsform in der Ladestelle eine Zufallszahl und eine Zahlungsidentifikationsnummer gebildet werden, wobei ein Verkäufer die Zeichenkette als geldwerten Betrag für eine Zahlung erhält und wobei der Verkäufer ferner die Zeichenkette zur Überprüfung ihrer Gültigkeit und zur Veranlassung einer Zahlung an ein eCommerce-Center einreicht. Die in dieser Anmeldung dargestellten Zahlungsvorgänge erfolgen beispielsweise mittels Near Field Communication (NFC), insbesondere in Kombination mit einer Wallet und/oder um Zahlungen in dafür vorgesehenen Apps oder Browsern durchzuführen. Beispielsweise kann eine zufällig generierte Pseudo-Kreditkartennummer, die in einem Sicherheitsmodul gespeichert ist, für einen Zahlungsvorgang eingesetzt werden. Es ist zweckmäßig, dass bei Zahlungsvorgängen eine Geräteidentifikationsnummer eines Gerätes auf dem einer Benutzer-App 5021, 5022 installiert ist oder einer Benutzerkomponente 5351 eines Benutzers, insbesondere des Empfängers des Pakets an den Verkäufer übermittelt wird. In einem Einzugsbereich einer Depoteinrichtung erfolgt dies vorzugsweise mittels Nahfeldkommunikation. Eine Übertragung der Geräteidentifikationsnummer und/oder der geldwerten Informationen kann jedoch auch mittels eines Intranets oder des Internets erfolgen. Der Verkäufer überträgt die geldwerte Information, beispielsweise diese Nummer an einen Zahlungsdienstleister, der überprüft, ob unter Einbeziehung dieser Informationen eine Zahlungsfreigabe erfolgen kann und übermittelt dann an den Verkäufer und/oder an das Logistiksystem die Zahlungsfreigabe. Nach Erhalt der Zahlungsfreigabe wird eine Übergabe des Pakets für das die Zahlung zu entrichten war, freigegeben und bei Anwesenheit des Empfängers autorisiert.

In Anschluss an den Bearbeitungsschritt 4750 wird in dem Überprüfungsschritt 4752 überprüft, ob die Bezahlung erfolgte. Für den Fall, dass in dem Überprüfungsschritt 4752 festgestellt wurde, dass die Zahlung erfolgte, wird in dem Durchführungsschritt 4753 eine Übergabe des Pakets an den Käufer als finalen Empfänger direkt an der Depoteinrichtung oder beispielsweise über eine Übergabeeinheit im Einflussbereich der Depoteinrichtung autorisiert, im Verfahrensschritt 4755 wird der Einlieferer informiert und er erhält das Entgelt (den Verkaufspreis), beispielsweise durch Überweisung oder durch eine Gutschrift in einem Gutschriftensystem.

Falls in dem Überprüfungsschritt 4752 festgestellt wird, dass keine Zahlung erfolgte, werden der Verfahrensschritt 4745 und die daran anschließenden weiteren Verfahrensschritte erneut durchlaufen.

Falls in dem Überprüfungsschritt 4745a festgestellt wird, dass die maximale Lagerdauer abgelaufen ist, ohne dass ein potenzieller Käufer/finaler Empfänger das Paket erworben hat, erfolgt ein Überprüfungsschritt 4761, bei dem überprüft wird, ob der Versender, beziehungsweise Einlieferer eine Freigabe zur Zahlung eines etwaigen Entgelts für eine verlängerte Lagerdauer erteilt hat. Die weitere Bearbeitung des Paketes richtet sich dann nach den unten beschriebenen Verfahrensschritten 4760, 4760a, 4760b und 4760c.

Falls in dem Überprüfungsschritt 4740 festgestellt wird, dass kein Direktverkauf des Pakets möglich ist, weil der Einlieferer keinen Betrag eingegeben hat, zu dem das Paket verkauft werden kann, wird in einem Bearbeitungsschritt 4759 das Paket zwischengelagert, insbesondere durch Lagerung in der Depoteinrichtung.

In einem Überprüfungsschritt 4760 wird in zeitlichen Intervallen während der maximalen Lagerdauer geprüft, ob der Einlieferer neue, für die weitere Bearbeitung des Paketes relevante Informationen übermittelt hat:
Falls in dem Überprüfungsschritt 4760 festgestellt wird, dass der Einlieferer während der maximalen Lagerdauer keine neuen, für die weitere Bearbeitung des Paketes relevanten Informationen an das Logistiksystem und/oder an die Depoteinrichtung übermittelt hat, erfolgt der Überprüfungsschritt 4761.

In dem Überprüfungsschritt 4761 wird überprüft ob der Einlieferer eine Freigabe zur Zahlung eines etwaigen Entgelts für eine Verlängerung der Lagerdauer des Pakets erteilt hat.

Falls der Einlieferer eine Freigabe zur Zahlung des etwaigen Entgelts für eine Verlängerung der Lagerdauer des Pakets erteilt hat, erfolgt gemäß Bearbeitungsschritt 4759 eine weitere Lagerung des Pakets.

Falls der Einlieferer nicht bereit ist, ein Entgelt für eine weitere Lagerung zu entrichten, wird der Einlieferer in einem Bearbeitungsschritt 4715c zu einer Abholung des Pakets aufgefordert oder es wird gegebenenfalls an ihn zurückgesendet. Vorzugsweise wird für eine Zurücksendung des Pakets an den Einlieferer ein zusätzliches Entgelt berechnet.

Falls in dem Überprüfungsschritt 4760 festgestellt wird, dass der Einlieferer während der maximalen Lagerdauer neue, für die weitere Bearbeitung des Paketes relevante Informationen an das Logistiksystem und/oder an die Depoteinrichtung übermittelt hat, erfolgt insbesondere unmittelbar Überprüfungsschritt 4760a. Dabei wird überprüft, ob die neuen Informationen des Einlieferers einen Direktverkauf ermöglichen. Ist dies der Fall, so richtet sich die weitere Bearbeitung des Pakets nach den oben beschriebenen Verfahrensschritten 4745, 4745a, 4750, 4752, 4753 und 4755.

Falls in dem Überprüfungsschritt 4760a festgestellt wird, dass die neuen Informationen des Einlieferers keinen Direktverkauf ermöglichen, erfolgt insbesondere unmittelbar anschließend Überprüfungsschritt 4760b. Dabei wird überprüft, ob der Einlieferer einen finalen Empfänger angegeben hat. Ist dies der Fall, so erfolgt die weitere Bearbeitung des Pakets nach dem oben beschriebenen Verfahrensschritt 4770 und den daran anschließenden weiteren Verfahrensschritten.

Falls in dem Überprüfungsschritt 4760b festgestellt wird, dass der Einlieferer keinen finalen Empfänger angegeben hat, ist vorzugsweise die neue, für die weitere Bearbeitung des Paketes relevante Information eine Information über eine verlängerte Lagerdauer beinhaltet. Nach Erhalt dieser Information in Verfahrensschritt 4760c erfolgt die weitere Bearbeitung des Paketes gemäß dem bereits beschriebenen Verfahrensschritt 4760 und den daran anschließenden weiteren Verfahrensschritte.

Die hier gezeigten Ausführungsformen stellen nur Beispiele für die vorliegende Erfindung dar und dürfen daher nicht einschränkend verstanden werden.

## Patentansprüche

1. Depoteinrichtung,
**dadurch gekennzeichnet,**
**dass** sie als mobile Depoteinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist,
**dass** die Depoteinrichtung mit einem Zuordnungsmittel für eine Zuordnung von Paketidentifikationsmerkmalen zu den Lagerpositionen verbindbar ist, dass sich in der Depoteinrichtung, die einen Mittelgang aufweist und in der an den Seiten des Mittelgangs Regale angeordnet sind, wobei sich im Mittelgang wenigstens ein Transportweg befindet und sich entlang des Transportweges wenigstens eine Transporteinheit bewegen kann, die eine höhenverstellbar und drehbar gelagerte, mit einem Transportband ausgerüstete Transferplattform aufweist, so dass sie eine Entnahme von Paketen aus einem Sendungsstrom von Paketen insbesondere anhand von Paketidentifikationsmerkmalen unterstützen kann, dass unter Einsatz der Transporteinheit ein Transport der Pakete von dem Sendungsstrom in Lagerpositionen der Depoteinrichtung ermöglicht wird, und dass der Transport der Pakete durch die Transporteinheiten innerhalb der Depoteinrichtung unter Berücksichtigung der den jeweiligen Paketen anhand der Paketidentifikationsmerkmale zugeordneten Lagerpositionen steuerbar ist.

2. Depoteinrichtung nach Anspruch 1,
**dadurch gekennzeichnet,**
**dass** die Transporteinheit so eingerichtet sind, dass ein Transport von Paketen anhand von Paketidentifikationsmerkmalen aus den zugeordneten Lagerpositionen in der Depoteinrichtung zu einer Übergabeeinrichtung ermöglicht wird.

3. Depoteinrichtung nach Anspruch 1 oder 2,
**dadurch gekennzeichnet,**
**dass** die Depoteinrichtung mindestens eine Übergabeeinrichtung für Übergaben von Paketen an gemeinsamen Übergabepunkten und mindestens eine Übergabeeinheit für Übergaben an von den gemeinsamen Übergabepunkten verschiedenen individuellen Übergabepunkten aufweist.

4. Depoteinrichtung nach einem der Ansprüche 1 bis 3,
**dadurch gekennzeichnet,**
**dass** sie mindestens eine Transporteinheit, die außerhalb der Depoteinrichtung verfahrbar ist, enthält.

5. Depoteinrichtung, nach einem der Ansprüche 3 oder 4,
**dadurch gekennzeichnet,**
**dass** die Übergabeeinrichtung und/oder eine Übergabeeinheit als eine Ausgabeeinheit für eine Ausgabe von Paketen an Empfänger und/oder als eine Annahmeeinheit für eine Annahme von Paketen eines Einlieferers ausgebildet sind.

6. Depoteinrichtung, nach einem der Ansprüche 1 bis 5,
**dadurch gekennzeichnet,**
**dass** die Transporteinheit von einem Standort der Depoteinrichtung ausgehend autonom einen Transport als Übergabeeinheit zu dem individuellen Übergabepunkt für den einzelnen Empfänger und/oder für den einzelnen Einlieferer durchführen kann und an dem individuellen Übergabepunkt die Ausgabe des Pakets an den Empfänger und/oder die Annahme des Pakets von dem Einlieferer durchführen kann.

7. Depoteinrichtung nach einem der Ansprüche 1 bis 6,
**dadurch gekennzeichnet,**
**dass** sie für eine Lagerung und Bereitstellung mehrerer Pakete ausgebildet ist und dass sie wenigstens zwei verschiedene Belademodi und/oder wenigstens zwei verschiedene Entlademodi aufweist.

8. Depoteinrichtung nach Anspruch 7,
**dadurch gekennzeichnet,**
**dass** in einem ersten Belademodus eine unterbrechungsfreie Wegstrecke zwischen einer Umgebung der Depoteinrichtung und einem Innenraum der Depoteinrichtung gebildet ist.

9. Depoteinrichtung nach einem der Ansprüche 7 oder 8,
**dadurch gekennzeichnet,**
**dass** in einem zweiten Belademodus eine individuelle Einlagerung eines Pakets unter Einsatz einer Schleuse erfolgen kann.

10. Depoteinrichtung nach Anspruch 7,
**dadurch gekennzeichnet,**
**dass** in einem ersten Entlademodus eine unterbrechungsfreie Wegstrecke zwischen einem Innenraum der Depoteinrichtung und einer Umgebung der Depoteinrichtung gebildet ist.

11. Depoteinrichtung nach einem der Ansprüche 7 oder 10,
**dadurch gekennzeichnet,**
**dass** in einem zweiten Entlademodus eine individuelle Übergabe eines Pakets an einen Empfänger unter Einsatz der Schleuse erfolgen kann.

12. Depoteinrichtung nach einem der Ansprüche 1 bis 11,
**dadurch gekennzeichnet,**
**dass** die mobile Depoteinrichtung als Logistikfahrzeug ausgebildet ist.

13. Depoteinrichtung nach einem der Ansprüchen 1 oder 12,
**dadurch gekennzeichnet,**
**dass** sie eine Tür aufweist, die so weit wie möglich die gesamte Rückseite der Depoteinrichtung einnimmt.

14. Verwendung einer Depoteinrichtung nach einem der Ansprüche 1 bis 12,
**dadurch gekennzeichnet,**
**dass** die Depoteinrichtung zur Durchführung eines Verfahrens zur Übergabe einer Vielzahl von Paketen an mehrere Empfänger und/ oder zur Entgegennahme einer Vielzahl von Paketen von mehreren Einlieferern, bereitgestellt wird, in dem für mehrere Pakete aus einer Vielzahl möglicher räumlich voneinander getrennter Übergabepunkte unter Berücksichtigung wenigstens eines Aufwandsparameters ein gemeinsamer optimierter Übergabepunkt für die Übergabe an die jeweiligen Empfänger und für die Entgegennahme von den Einlieferern innerhalb eines bestimmten Übergabezeitraums ermittelt wird, und dass die Übergabe an die Empfänger und/oder die Entgegennahme von den Einlieferern an dem zugeordneten gemeinsamen optimierten Übergabepunkt innerhalb des vorgesehenen Übergabezeitraums erfolgt.

15. Verwendung einer Depoteinrichtung nach einem der Ansprüche 1 bis 12,
**dadurch gekennzeichnet,**
**dass** die Depoteinrichtung im Bereich eines Verteilzentrums und/ oder eines Zustelldepots als Zwischenspeicher für Pakete eingesetzt wird.

16. System zur Übergabe einer Vielzahl von Paketen an mehrere Empfänger und/oder zur Entgegennahme einer Vielzahl von Paketen von mehreren Einlieferern,
**dadurch gekennzeichnet,**
**dass** es zur Durchführung eines Verfahrens zur Übergabe einer Vielzahl von Paketen an mehrere Empfänger und/oder zur Entgegennahme einer Vielzahl von Paketen von mehreren Einlieferern eingerichtet ist, dass für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und/oder für die Entgegennahme von den Einlieferern innerhalb eines bestimmten Übergabezeitraums ermittelt werden kann und dass die Übergabe an die Empfänger und die Entgegennahme von den Einlieferern an dem zugeordneten gemeinsamen optimierten Übergabepunkt innerhalb des vorgesehenen Übergabezeitraums erfolgen kann,
**dass** es mindestens eine mobile Depoteinrichtung für eine Lagerung und Bereitstellung mehrerer Pakete innerhalb eines vorgesehenen Übergabezeitraums an einem Übergabepunkt umfasst, die wenigstens eine Transporteinheit aufweist, wobei unter Einsatz der Transporteinheit ein Transport der Pakete in Lagerpositionen der Depoteinrichtung ermöglicht wird,
und **dass** das System wenigstens ein Verteilzentrum und/oder wenigstens ein Zustelldepot aufweist und dass das System im Bereich des wenigstens einen Verteilzentrums und/oder des wenigstens einen Zustelldepots wenigstens ein Mittel zum Transfer der Pakete an eine Transfereinrichtung aufweist und die Transfereinrichtung eine Vorrichtung zum Vereinzeln von Paketen aufweist, dass das System eine Steuerkomponente aufweist, wobei die Steuerkomponente so eingerichtet ist, dass die Steuerkomponente die Transfereinrichtung so steuern kann, dass die Transfereinrichtung den Transport der Pakete entsprechend Steueranweisungen der Steuerkomponente durchführen kann, wobei die Pakete im Bereich der Transfereinrichtung vereinzelt und als einzelne Pakete an eine verfahrbare Transporteinheit zur Einlagerung in eine Depoteinrichtungen übergeben werden, wobei der Transport der Pakete durch die verfahrbare Transporteinheit innerhalb der Depoteinrichtung unter Berücksichtigung der den jeweiligen Paketen anhand von Paketidentifikationsmerkmalen zugeordneten Lagerpositionen steuerbar ist.

17. System nach Anspruch 16,
**dadurch gekennzeichnet,**
**dass** es eine Vielzahl von Depoteinrichtungen aufweist, wobei wenigstens ein Teil der Depoteinrichtungen als mobile Depoteinrichtungen ausgebildet ist, und dass die Steuerkomponente ferner so eingerichtet ist, dass sie einen Transport der mobilen Depoteinrichtungen von der Transfereinrichtung zu Aufstellorten als gemeinsame optimierte Übergabepunkte für die Übergabe der Pakete steuern kann.

18. System nach Anspruch 16 oder 17,
**dadurch gekennzeichnet,**
**dass** es ein Mittel zur Auswahl eines gemeinsamen optimierten Übergabepunktes aus der Vielzahl der möglichen Übergabepunkte für die Übergabe an die jeweiligen Empfänger und/oder zur Entgegennahme von den jeweiligen Einlieferern innerhalb des vorgesehenen Übergabezeitraums aufweist und dass es eine mobile Depoteinrichtung für eine Übergabe an den Empfänger und/oder zur Entgegennahme von den jeweiligen Einlieferern an dem gemeinsamen optimierten Übergabepunkt innerhalb des vorgesehenen Übergabezeitraums aufweist.

19. System nach einem der Ansprüche 16 bis 18,
**dadurch gekennzeichnet,**
**dass** zusätzlich zu den für die Übergabe an den gemeinsamen Übergabepunkten vorgesehenen Paketen Warenobjekte in die Depoteinrichtung eingeliefert, eingelagert und als Pakete übergeben werden können.

20. System nach Anspruch 19,
**dadurch gekennzeichnet,**
**dass** mindestens ein Teil der Warenobjekte an der Depoteinrichtung, an der sie als Pakete übergeben wurden, ausgegeben werden kann.

21. System nach einem der Ansprüche 16 bis 20,
**dadurch gekennzeichnet,**
**dass** es ein Mittel zur Erfassung einer Vielzahl von möglichen Standorten für mobile Depoteinrichtungen, aufweist, und dass es ein Mittel zur Zuordnung der mobilen Depoteinrichtungen, zu den gemeinsamen optimierten Übergabepunkten als Standorte für die mobilen Depoteinrichtungen, enthält.

22. System nach Anspruch 21,
**dadurch gekennzeichnet,**
**dass** es wenigstens ein Mittel zur Steuerung von der Transfereinrichtungen aufweist, wobei die Transfereinrichtungen so gesteuert werden können, dass die für eine Ausgabe an einem Übergabepunkt, insbesondere an einem gemeinsamen optimierten Übergabepunkt vorgesehenen Pakete in die dem Übergabepunkt, insbesondere dem gemeinsamen optimierten Übergabepunkt, zugeordnete mobile Depoteinrichtung transportiert werden.

23. System nach einem der Ansprüche 21 oder 22,
**dadurch gekennzeichnet,**
**dass** es Mittel zur Übermittelung von geographischen Informationen zu den gemeinsamen optimierten Übergabepunkten an die Depoteinrichtungen und/oder ein Transportmittel zum Transport der Depoteinrichtungen enthält, so dass ein Transport der Depoteinrichtungen zu den gemeinsamen optimierten Übergabepunkten unter Berücksichtigung der geographischen Informationen erfolgen kann.

24. System nach einem der Ansprüche 16 bis 23,
**dadurch gekennzeichnet,**
**dass** es eine Benutzer-App aufweist und die Benutzer-App eingerichtet ist, Lokalisierungsinformationen eines Benutzers an eine Steuerkomponente des Systems zu übermitteln, wobei die Benutzer-App mit einem gegen unberechtigte Zugriffe besonders geschützten Speichermittel zur Speicherung von Datenschutzanforderungen des Benutzers zusammenwirken kann, dass die Datenschutzanforderungen des Benutzers eine Festlegung, welche Lokalisierungsinformationen zur Lokalisierung der Benutzerkomponente an das System übermittelt werden, beinhalten, dass der Prozessor eine Auswertung vornimmt, in welchem Umfang und/oder mit welcher Genauigkeit eine Übermittelung der Lokalisierungsinformationen den Datenschutzanforderungen des Benutzers entspricht und dass eine Übermittlung der Lokalisierungsinformationen an das System nur in dem Umfang und/oder mit der Genauigkeit erfolgt, die sowohl den Datenschutzanforderungen des Benutzers als auch dem Umfang entspricht, der erforderlich ist, eine Auswahl gemeinsamer optimierter Übergabepunkte durch Übermittelung der Lokalisierungsinformationen zu unterstützen und/oder eine Paketübergabe in unmittelbarer Nähe eines Übergabemittels zu unterstützen.

25. System nach einem der Ansprüche 16 bis 24,
**dadurch gekennzeichnet,**
**dass** die Steuerkomponente Informationen zu Paketidentifikationsmerkmalen an die Transfereinrichtung weitergibt, so dass die Einlagerung der Pakete in die Lagerpositionen der Lagereinrichtungen der Depoteinrichtungen auf Grundlage der Paketidentifikationsmerkmale erfolgen kann.

## Claims

1. A depot facility,
**characterised in that**
it is configured as a mobile depot facility for storing and providing a plurality of parcels within a specified handover period at a location as a common optimized handover point for handing over the plurality of parcels to the respective recipients and/or by depositors of the plurality of parcels, that the depot facility is connectable to assignment means for assigning parcel identification features to the storage positions, that, in the depot facility, which has a central aisle and in which shelves are arranged at the sides of the central aisle, at least one transport path is located in the central aisle and at least one transport unit is movable along the transport path, the transport unit having a vertically adjustable and rotatably mounted transfer platform equipped with a conveyor belt, such that it can support the removal of parcels from a shipment stream of parcels, in particular on the basis of parcel identification features, that transport of the parcels from the shipment stream into storage positions of the depot facility is enabled using the transport unit, and that transport of the parcels by the transport units within the depot facility is controllable taking into account the storage positions assigned to the respective parcels on the basis of the parcel identification features.

2. The depot facility according to claim 1,
**characterised in that**
the transport unit is configured such that transport of parcels on the basis of parcel identification features from the assigned storage positions in the depot facility to a handover facility is enabled.

3. The depot facility according to claim 1 or 2,
**characterised in that**
the depot facility has at least one handover facility for handovers of parcels at common handover points and at least one handover unit for handovers at individual handover points different from the common handover points.

4. The depot facility according to any one of claims 1 to 3,
**characterised in that**
it comprises at least one transport unit which is movable outside the depot facility.

5. The depot facility according to claim 3 or 4,
**characterised in that**
the handover facility and/or a handover unit are configured as a dispensing unit for dispensing parcels to recipients and/or as a receiving unit for receiving parcels from a depositor.

6. The depot facility according to any one of claims 1 to 5,
**characterised in that**
the transport unit can, starting from a location of the depot facility, autonomously carry out transport as a handover unit to the individual handover point for the individual recipient and/or for the individual depositor and, at the individual handover point, can carry out dispensing of the parcel to the recipient and/or receipt of the parcel from the depositor.

7. The depot facility according to any one of claims 1 to 6,
**characterised in that**
it is configured for storing and providing a plurality of parcels and **in that** it has at least two different loading modes and/or at least two different unloading modes.

8. The depot facility according to claim 7,
**characterised in that**
in a first loading mode, an uninterrupted route is formed between surroundings of the depot facility and an interior of the depot facility.

9. The depot facility according to claim 7 or 8,
**characterised in that**
in a second loading mode, an individual parcel can be placed into the storage using a transfer lock.

10. The depot facility according to claim 7,
**characterised in that**
in a first unloading mode, an uninterrupted route is formed between an interior of the depot facility and surroundings of the depot facility.

11. The depot facility according to claim 7 or 10,
**characterised in that**
in a second unloading mode, an individual handover of a parcel to a recipient can take place using the transfer lock.

12. The depot facility according to any one of claims 1 to 11,
**characterised in that**
the mobile depot facility is configured as a logistics vehicle.

13. The depot facility according to claim 1 or 12,
**characterised in that**
it has a door which occupies, as far as possible, the entire rear side of the depot facility.

14. Use of a depot facility according to any one of claims 1 to 12,
**characterised in that**
the depot facility is provided for carrying out a method for handing over a plurality of parcels to a plurality of recipients and/or for receiving a plurality of parcels from a plurality of depositors, in which, for a plurality of parcels, a common optimized handover point for handover to the respective recipients and for receipt from the depositors within a specified handover period is determined from a plurality of possible spatially separated handover points taking into account at least one effort parameter , and **in that** the handover to the recipients and/or the receipt from the depositors takes place at the assigned common optimized handover point within the specified handover period.

15. Use of a depot facility according to any one of claims 1 to 12,
**characterised in that**
the depot facility is used in the area of a distribution centre and/or a delivery depot as an intermediate store for parcels.

16. A system for handing over a plurality of parcels to a plurality of recipients and/or for receiving a plurality of parcels from a plurality of depositors,
**characterised in that**
it is configured to carry out a method for handing over a plurality of parcels to a plurality of recipients and/or for receiving a plurality of parcels from a plurality of depositors, **in that**, for a plurality of parcels, a respective common optimized handover point for handover to the respective recipients and/or for receipt from the depositors within a specified handover period can be determined from a plurality of possible spatially separated handover points taking into account at least one effort parameter, and **in that** the handover to the recipients and the receipt from the depositors can take place at the assigned common optimized handover point within the specified handover period,
that it comprises at least one mobile depot facility for storing and providing a plurality of parcels within a specified handover period at a handover point, the mobile depot facility having at least one transport unit, wherein transport of the parcels into storage positions of the depot facility is enabled using the transport unit,
and that the system has at least one distribution centre and/or at least one delivery depot and, in the area of the at least one distribution centre and/or the at least one delivery depot, has at least one means for transferring the parcels to a transfer apparatus, and the transfer apparatus has a device for singulating parcels, that the system has a control component, wherein the control component is configured such that the control component can control the transfer apparatus such that the transfer apparatus can carry out transport of the parcels in accordance with control instructions of the control component, wherein the parcels are singulated in the area of the transfer apparatus and are handed over as individual parcels to a movable transport unit for placement into storage in a depot facility, wherein transport of the parcels by the movable transport unit within the depot facility is controllable taking into account the storage positions assigned to the respective parcels on the basis of parcel identification features.

17. The system according to claim 16,
**characterised in that**
it has a plurality of depot facilities, wherein at least some of the depot facilities are configured as mobile depot facilities, and **in that** the control component is further configured such that it can control transport of the mobile depot facilities from the transfer apparatus to installation locations as common optimized handover points for handing over the parcels.

18. The system according to claim 16 or 17,
**characterised in that**
it has means for selecting a common optimized handover point from the plurality of possible handover points for handover to the respective recipients and/or for receipt from the respective depositors within the specified handover period, and **in that** it has a mobile depot facility for handover to the recipient and/or for receipt from the respective depositors at the common optimised handover point within the specified handover period.

19. The system according to any one of claims 16 to 18,
**characterised in that**
in addition to the parcels intended for handover at the common handover points, goods items can be deposited in the depot facility, placed into storage and handed over as parcels.

20. The system according to claim 19,
**characterised in that**
at least some of the goods items can be dispensed at the depot facility at which they were handed over as parcels.

21. The system according to any one of claims 16 to 20,
**characterised in that**
it has means for detecting a plurality of possible locations for mobile depot facilities, and **in that** it comprises means for assigning the mobile depot facilities to the common optimized handover points as locations for the mobile depot facilities.

22. The system according to claim 21,
**characterised in that**
it has at least one means for controlling the transfer apparatuses, wherein the transfer apparatuses can be controlled such that the parcels intended for dispensing at a handover point, in particular at a common optimized handover point, are transported into the mobile depot facility assigned to the handover point, in particular the common optimized handover point.

23. The system according to claim 21 or 22,
**characterised in that**
it comprises means for transmitting geographical information relating to the common optimized handover points to the depot facilities and/or a transport means for transporting the depot facilities, such that transport of the depot facilities to the common optimized handover points can take place taking into account the geographical information.

24. The system according to any one of claims 16 to 23,
**characterised in that**
it has a user app and the user app is configured to transmit location information of a user to a control component of the system, wherein the user app can cooperate with storage means particularly protected against unauthorised access for storing data protection requirements of the user, **in that** the data protection requirements of the user include a specification of which location information for locating the user component is transmitted to the system, **in that** the processor performs an evaluation as to the extent and/or accuracy with which transmission of the location information complies with the data protection requirements of the user, and **in that** the location information is transmitted to the system only to the extent and/or with the accuracy that both complies with the data protection requirements of the user and corresponds to the extent required to support selection of common optimized handover points by transmitting the location information and/or to support a parcel handover in the immediate vicinity of a handover means.

25. The system according to any one of claims 16 to 24,
**characterised in that**
the control component forwards information relating to parcel identification features to the transfer apparatus, such that the parcels can be placed into storage in the storage positions of the storage facilities of the depot facilities on the basis of the parcel identification features.

## Revendications

1. Dispositif de dépôt,
**caractérisé en ce qu'**il est conçu sous la forme d'un dispositif de dépôt mobile destiné au stockage et à la mise à disposition de plusieurs colis, pendant une période de remise prévue, sur un site constituant un point de remise commun optimisé pour la remise desdits colis aux destinataires respectifs et/ou par des déposants de la pluralité de colis,
**en ce que** le dispositif de dépôt peut être relié à un moyen d'affectation destiné à affecter des caractéristiques d'identification de colis aux positions de stockage, **en ce que**, dans le dispositif de dépôt, qui présente une allée centrale et dans lequel des rayonnages sont disposés sur les côtés de l'allée centrale, au moins une voie de transport se trouve dans l'allée centrale et au moins une unité de transport peut se déplacer le long de la voie de transport, ladite unité de transport présentant une plateforme de transfert montée de manière réglable en hauteur et rotative et équipée d'une bande transporteuse, de sorte qu'elle peut assister un prélèvement de colis dans un flux d'envois de colis, notamment sur la base de caractéristiques d'identification de colis, **en ce que** l'utilisation de l'unité de transport permet un transport des colis du flux d'envois vers des positions de stockage du dispositif de dépôt, et **en ce que** le transport des colis par les unités de transport à l'intérieur du dispositif de dépôt peut être commandé en tenant compte des positions de stockage affectées aux colis respectifs sur la base des caractéristiques d'identification de colis.

2. Dispositif de dépôt selon la revendication 1,
**caractérisé en ce que** l'unité de transport est configurée de telle sorte qu'un transport de colis, sur la base de caractéristiques d'identification de colis, depuis les positions de stockage affectées dans le dispositif de dépôt jusqu'à un dispositif de remise est rendu possible.

3. Dispositif de dépôt selon la revendication 1 ou 2,
**caractérisé en ce que** le dispositif de dépôt présente au moins un dispositif de remise destiné à des remises de colis à des points de remise communs et au moins une unité de remise destinée à des remises à des points de remise individuels différents des points de remise communs.

4. Dispositif de dépôt selon l'une des revendications 1 à 3,
**caractérisé en ce qu'**il comprend au moins une unité de transport pouvant se déplacer à l'extérieur du dispositif de dépôt.

5. Dispositif de dépôt selon l'une des revendications 3 ou 4,
**caractérisé en ce que** le dispositif de remise et/ou une unité de remise sont conçus sous la forme d'une unité de délivrance destinée à délivrer des colis à des destinataires et/ou sous la forme d'une unité de réception destinée à recevoir des colis d'un déposant.

6. Dispositif de dépôt selon l'une des revendications 1 à 5,
**caractérisé en ce que** l'unité de transport peut, à partir d'un site du dispositif de dépôt, effectuer de manière autonome, en tant qu'unité de remise, un transport jusqu'au point de remise individuel destiné au destinataire individuel et/ou au déposant individuel et peut, au point de remise individuel, effectuer la délivrance du colis au destinataire et/ou la réception du colis provenant du déposant.

7. Dispositif de dépôt selon l'une des revendications 1 à 6,
**caractérisé en ce qu'**il est conçu pour le stockage et la mise à disposition de plusieurs colis et **en ce qu'**il présente au moins deux modes de chargement différents et/ou au moins deux modes de déchargement différents.

8. Dispositif de dépôt selon la revendication 7,
**caractérisé en ce que**, dans un premier mode de chargement, un trajet ininterrompu est formé entre un environnement du dispositif de dépôt et un espace intérieur du dispositif de dépôt.

9. Dispositif de dépôt selon l'une des revendications 7 ou 8,
**caractérisé en ce que**, dans un deuxième mode de chargement, un stockage individuel d'un colis peut être effectué au moyen d'un sas.

10. Dispositif de dépôt selon la revendication 7,
**caractérisé en ce que**, dans un premier mode de déchargement, un trajet ininterrompu est formé entre un espace intérieur du dispositif de dépôt et un environnement du dispositif de dépôt.

11. Dispositif de dépôt selon l'une des revendications 7 ou 10,
**caractérisé en ce que**, dans un deuxième mode de déchargement, une remise individuelle d'un colis à un destinataire peut être effectuée au moyen du sas.

12. Dispositif de dépôt selon l'une des revendications 1 à 11,
**caractérisé en ce que** le dispositif de dépôt mobile est conçu sous la forme d'un véhicule logistique.

13. Dispositif de dépôt selon l'une des revendications 1 ou 12,
**caractérisé en ce qu'**il présente une porte qui occupe, dans toute la mesure du possible, la totalité de la face arrière du dispositif de dépôt.

14. Utilisation d'un dispositif de dépôt selon l'une des revendications 1 à 12,
**caractérisée en ce que** le dispositif de dépôt est mis à disposition pour mettre en œuvre un procédé de remise d'une pluralité de colis à plusieurs destinataires et/ou de réception d'une pluralité de colis provenant de plusieurs déposants, dans lequel, pour plusieurs colis, parmi une pluralité de points de remise possibles séparés les uns des autres dans l'espace, un point de remise commun optimisé est déterminé, en tenant compte d'au moins un paramètre d'effort, pour la remise aux destinataires respectifs et pour la réception provenant des déposants pendant une période de remise déterminée, et **en ce que** la remise aux destinataires et/ou la réception provenant des déposants a lieu au point de remise commun optimisé affecté pendant la période de remise prévue.

15. Utilisation d'un dispositif de dépôt selon l'une des revendications 1 à 12,
**caractérisée en ce que** le dispositif de dépôt est utilisé, dans la zone d'un centre de distribution et/ou d'un dépôt de livraison, en tant que stockage intermédiaire pour des colis.

16. Système destiné à la remise d'une pluralité de colis à plusieurs destinataires et/ou à la réception d'une pluralité de colis provenant de plusieurs déposants,
**caractérisé en ce qu'**il est configuré pour mettre en œuvre un procédé de remise d'une pluralité de colis à plusieurs destinataires et/ou de réception d'une pluralité de colis provenant de plusieurs déposants, **en ce que**, pour plusieurs colis, parmi une pluralité de points de remise possibles séparés les uns des autres dans l'espace, un point de remise commun optimisé peut respectivement être déterminé, en tenant compte d'au moins un paramètre d'effort, pour la remise aux destinataires respectifs et/ou pour la réception provenant des déposants pendant une période de remise déterminée, et **en ce que** la remise aux destinataires et la réception provenant des déposants peuvent avoir lieu au point de remise commun optimisé affecté pendant la période de remise prévue,
**en ce qu'**il comprend au moins un dispositif de dépôt mobile destiné au stockage et à la mise à disposition de plusieurs colis, pendant une période de remise prévue, à un point de remise, lequel dispositif présente au moins une unité de transport, l'utilisation de l'unité de transport permettant un transport des colis vers des positions de stockage du dispositif de dépôt,
et **en ce que** le système présente au moins un centre de distribution et/ou au moins un dépôt de livraison et **en ce que** le système présente, dans la zone dudit au moins un centre de distribution et/ou dudit au moins un dépôt de livraison, au moins un moyen destiné à transférer les colis vers un dispositif de transfert, et le dispositif de transfert présente un appareil destiné à individualiser des colis, **en ce que** le système présente un composant de commande, le composant de commande étant configuré de telle sorte que le composant de commande peut commander le dispositif de transfert de manière que le dispositif de transfert puisse effectuer le transport des colis conformément à des instructions de commande du composant de commande, les colis étant individualisés dans la zone du dispositif de transfert et remis, sous la forme de colis individuels, à une unité de transport mobile en vue de leur stockage dans un dispositif de dépôt, le transport des colis par l'unité de transport mobile à l'intérieur du dispositif de dépôt pouvant être commandé en tenant compte des positions de stockage affectées aux colis respectifs sur la base de caractéristiques d'identification de colis.

17. Système selon la revendication 16,
**caractérisé en ce qu'**il présente une pluralité de dispositifs de dépôt, au moins une partie des dispositifs de dépôt étant conçue sous la forme de dispositifs de dépôt mobiles, et **en ce que** le composant de commande est en outre configuré de telle sorte qu'il peut commander un transport des dispositifs de dépôt mobiles depuis le dispositif de transfert jusqu'à des lieux d'installation constituant des points de remise communs optimisés pour la remise des colis.

18. Système selon la revendication 16 ou 17,
**caractérisé en ce qu'**il présente un moyen destiné à sélectionner un point de remise commun optimisé parmi la pluralité des points de remise possibles pour la remise aux destinataires respectifs et/ou pour la réception provenant des déposants respectifs pendant la période de remise prévue, et **en ce qu'**il présente un dispositif de dépôt mobile destiné à une remise au destinataire et/ou à une réception provenant des déposants respectifs au point de remise commun optimisé pendant la période de remise prévue.

19. Système selon l'une des revendications 16 à 18,
**caractérisé en ce que**, en plus des colis prévus pour la remise aux points de remise communs, des objets de marchandise peuvent être introduits dans le dispositif de dépôt, y être stockés et être remis sous la forme de colis.

20. Système selon la revendication 19,
**caractérisé en ce qu'**au moins une partie des objets de marchandise peut être délivrée au niveau du dispositif de dépôt au niveau duquel ils ont été remis sous la forme de colis.

21. Système selon l'une des revendications 16 à 20,
**caractérisé en ce qu'**il présente un moyen destiné à recenser une pluralité de sites possibles pour des dispositifs de dépôt mobiles, et **en ce qu'**il comprend un moyen destiné à affecter les dispositifs de dépôt mobiles aux points de remise communs optimisés en tant que sites pour les dispositifs de dépôt mobiles.

22. Système selon la revendication 21,
**caractérisé en ce qu'**il présente au moins un moyen destiné à commander les dispositifs de transfert, les dispositifs de transfert pouvant être commandés de telle sorte que les colis prévus pour une délivrance à un point de remise, notamment à un point de remise commun optimisé, sont transportés dans le dispositif de dépôt mobile affecté au point de remise, notamment au point de remise commun optimisé.

23. Système selon l'une des revendications 21 ou 22,
**caractérisé en ce qu'**il comprend des moyens destinés à transmettre aux dispositifs de dépôt des informations géographiques relatives aux points de remise communs optimisés et/ou un moyen de transport destiné à transporter les dispositifs de dépôt, de sorte qu'un transport des dispositifs de dépôt jusqu'aux points de remise communs optimisés peut avoir lieu en tenant compte des informations géographiques.

24. Système selon l'une des revendications 16 à 23,
**caractérisé en ce qu'**il présente une application utilisateur et **en ce que** l'application utilisateur est configurée pour transmettre des informations de localisation d'un utilisateur à un composant de commande du système, l'application utilisateur pouvant coopérer avec un moyen de mémoire particulièrement protégé contre des accès non autorisés pour mémoriser des exigences de protection des données de l'utilisateur, **en ce que** les exigences de protection des données de l'utilisateur comprennent une définition des informations de localisation destinées à localiser le composant utilisateur qui sont transmises au système, **en ce que** le processeur effectue une évaluation afin de déterminer dans quelle mesure et/ou avec quelle précision une transmission des informations de localisation satisfait aux exigences de protection des données de l'utilisateur, et **en ce qu'**une transmission des informations de localisation au système n'a lieu que dans la mesure et/ou avec la précision qui satisfait à la fois aux exigences de protection des données de l'utilisateur et à l'étendue requise pour assister une sélection de points de remise communs optimisés par transmission des informations de localisation et/ou pour assister une remise de colis à proximité immédiate d'un moyen de remise.

25. Système selon l'une des revendications 16 à 24,
**caractérisé en ce que** le composant de commande transmet au dispositif de transfert des informations relatives à des caractéristiques d'identification de colis, de sorte que le stockage des colis dans les positions de stockage des installations de stockage des dispositifs de dépôt peut être effectué sur la base des caractéristiques d'identification de colis.
